# EUROPÄISCHE PATENTSCHRIFT

(11) **EP 3 022 687 B1**
(45) Veröffentlichungstag und Bekanntmachung des Hinweises auf die Patenterteilung: **25.10.2017**
(21) Anmeldenummer: 14742181.2
(22) Anmeldetag: 16.07.2014
(51) Int. Cl.: G06K 15/02, G06K 15/10, B41F 19/00, B41F 33/00

(54) **VERFAHREN ZUM BEDRUCKEN EINES BEDRUCKSTOFFS**
METHOD FOR PRINTING A MATERIAL TO BE PRINTED
PROCÉDÉ POUR IMPRIMER UN MATÉRIAU À IMPRIMER

(30) Priorität: 17.07.2013 DE 102013214025
(43) Veröffentlichungstag der Anmeldung: 25.05.2016
(73) Patentinhaber: Koenig & Bauer AG, 97080 Würzburg (DE)
(72) Erfinder: BLANK, Alexander, 97074 Würzburg (DE); HUPPMANN, Frank, 97299 Zell am Main (DE); JANK, Christian, 78315 Radolfzell (DE)
(74) Vertreter: Koenig & Bauer AG
(86) Internationale Anmeldenummer: PCT/EP2014/065214
(87) Internationale Veröffentlichungsnummer: WO 2015/007764

(56) Entgegenhaltungen:
- DE-A1-102011 076 899
- US-A- 5 984 446
- US-A1- 2012 081 726

## Beschreibung

Die Erfindung betrifft ein Verfahren zum Bedrucken eines Bedruckstoffs.

Es sind unterschiedliche Druckverfahren bekannt, die in Druckmaschinen zum Einsatz kommen können. Darunter sind beispielsweise solche Druckverfahren, die keine feste Druckform aufweisen. Dadurch ist es möglich, jedes einzelne Druckerzeugnis individuell zu gestalten. Dadurch können personalisierte Druckerzeugnisse hergestellt werden und/oder auf Grund der Einsparung der Druckformen kleine Auflagen von Druckerzeugnissen zu geringen Kosten hergestellt werden. Ein solches Druckverfahren ist der Tintenstrahldruck oder Ink-Jet-Druck. Dabei werden einzelne Beschichtungsmitteltropfen aus Düsen von Druckköpfen ausgestoßen und derart auf einen Bedruckstoff übertragen, dass sich auf dem Bedruckstoff ein Druckbild ergibt. Durch einzelne Ansteuerung einer Vielzahl von Düsen können so unterschiedliche Druckbilder geschaffen werden.

Eine exakte Übereinstimmung eines Druckbildes auf Vorder- und Rückseite eines beidseitig bedruckten Bedruckstoffes nennt man Register (DIN 16500-2). Im Mehrfarbendruck spricht man vom Passer (DIN 16500-2), wenn einzelne Druckbilder verschiedener Farben exakt passend zu einem Bild zusammengefügt werden. Auch im Zusammenhang mit dem Tintenstrahldruck sind geeignete Maßnahmen zu treffen, um Passer und/oder Register einzuhalten.

Durch die EP 2 202 081 A1 und die JP 2003-063707 A ist jeweils eine Druckmaschine bekannt, wobei die Druckmaschine eine erste Druckeinheit und einen Trockner aufweist, wobei die erste Druckeinheit einen Zentralzylinder mit einem eigenen, dem ersten Zentralzylinder zugeordneten Antriebsmotor und zumindest einen Tintenstrahldruckkopf aufweist.

Durch die DE 10 2011 076 899 A1 ist eine Druckmaschine bekannt, die zumindest eine Druckeinheit und zumindest einen als Tintenstrahldruckkopf ausgebildeten Druckkopf aufweist.

US 2012/081726 offenbart ein Verfahren zum Bedrucken eines bahnförmigen Bedruckstoffs.

Beim Tintenstrahldruck kommen Druckköpfe zum Einsatz, die üblicherweise jeweils mehrere Düsen aufweisen. Je nach Druckbild, beispielsweise abhängig von dessen Aufteilung in Farbauszüge, stoßen unterschiedliche Düsen dabei mehr oder weniger lang kein Beschichtungsmittel aus. Es kann vorkommen, dass nach einer längeren Pause einer Düse diese Düse bei ihrer nächsten Aktivierung zunächst nicht korrekt reagiert und beispielsweise zumindest einen angeforderten Tropfen zu spät oder gar nicht ausstößt. Mögliche Ursachen sind beispielsweise Veränderungen des Beschichtungsmittels bei Kontakt mit der Umgebungsluft im Bereich der Düse und/oder Veränderungen der Düse selbst, beispielsweise durch Veränderungen von Temperaturen oder durch Ausklingen von Schwingungen einzelner Bauteile. Es sind Verfahren bekannt, bei denen zusätzlich zu gewünschten Druckbildern in regelmäßigen Abständen vorgegebene Instandhaltungs-Druckbilder erzeugt werden, um an allen Düsen eine Instandhaltung zu erreichen, also eine dauerhafte Bereitschaft zum sofortigen Drucken auf Anforderung. Solche Instandhaltungs-Druckbilder können beispielsweise Streifen sein, die zwischen einzelne Gesamtdruckbilder gedruckt werden und gegebenenfalls in einer Nachbearbeitung vom Bedruckstoff abgeschnitten werden. Durch die EP 2 390 101 A2 ist ein Verfahren bekannt, bei dem zur Aufrechterhaltung einer Druckqualität in einem Tintenstrahldruckverfahren zusätzlich zum Druckbild weitere Tropfen ausgestoßen werden. Es ist auch bekannt, dem eigentlichen Druckbild ein weiteres Druckbild zu überlagern, für das jede Düse zumindest einmal angesteuert wird und das als fein verteiltes Punktmuster im Hintergrund des eigentlichen Druckbildes erscheint.

Unter einem Druckerzeugnis soll im Vorangegangenen und im Folgenden insbesondere ein gefertigtes Erzeugnis verstanden werden, das sowohl gedruckt als auch gegebenenfalls gefalzt und/oder zurechtgeschnitten ist. Es gibt unterschiedliche Arten von Druckerzeugnissen, beispielsweise solche, die ausschließlich aus einer Einzelseite bestehen. In diesem Fall werden beispielsweise Bedruckstoffbogen passender Größe bedruckt oder Bedruckstoffbahnen bedruckt und anschließend geschnitten. Andere Arten von Druckerzeugnissen bestehen aus einer Mehrzahl von Einzelseiten, die auf zumindest einen gemeinsamen Bedruckstoff, insbesondere zumindest eine gemeinsame Bedruckstoffbahn gedruckt werden, wobei der Bedruckstoff im Anschluss beispielsweise in zumindest einer Falzvorrichtung gefalzt und geschnitten wird. Je nach Art und/oder Ansteuerung der zumindest einen Falzvorrichtung müssen die Einzelseiten in einer bestimmten Anordnung auf den Bedruckstoff gedruckt werden, damit nach dem Falzen eine korrekte Orientierung und Reihenfolge der Einzelseiten gewährleistet ist.
Beispielsweise wird diese spezifische Anordnung von Einzelseiten Gesamtdruckbild oder Signatur genannt. Beispielsweise kann ein Gesamtdruckbild aus zwei Reihen von jeweils vier Einzelseiten bestehen, wobei beispielsweise die Einzelseiten einer ersten der beiden Reihen kopfüber orientiert sind im Vergleich zu den Einzelseiten einer zweiten der beiden Reihen. Beispielsweise wird ein erstes Gesamtdruckbild mittels einer ersten Druckeinheit auf den Bedruckstoff aufgebracht und wird ein zweites Gesamtdruckbild dazu passend mittels einer zweiten Druckeinheit auf den Bedruckstoff aufgebracht, insbesondere dazu passend auf einer Rückseite des Bedruckstoffs. Ein Gesamtdruckbild weist zusätzlich oder alternativ ein durchgehendes Druckbild oder Motiv auf, das sich über im Wesentlichen das gesamte Druckprodukt erstreckt. Dies kann auch bei bahnförmigem Bedruckstoff der Fall sein. Beispielsweise erstreckt sich ein Gesamtdruckbild über im Wesentlichen die gesamte Breite des Bedruckstoffs.

Oftmals kommt es bei einem Transport des Bedruckstoffs zwischen der ersten Druckeinheit und der zweiten Druckeinheit zu einer Verformung des Bedruckstoffs, beispielsweise zu einer Schrumpfung durch einen Feuchtigkeitsverlust infolge eines zwischengeschalteten Trocknungsvorgangs und/oder zu einer Dehnung in Folge eines Aufweichens des Bedruckstoffs durch mit dem Beschichtungsmittel eingetragenes Lösungsmittel und/oder Wasser. Eine relative Änderung der entsprechenden Abmessung des Bedruckstoffs kann beispielsweise bis zu 1% (ein Prozent) betragen. Dies kann dazu führen, dass Passer und/oder Register nicht mehr den Qualitätsanforderungen entsprechen. Solche Effekte könne sich beispielsweise je nach Ausrichtung von Papierfasern des Bedruckstoffs in unterschiedlichen Richtungen unterschiedlich stark auswirken, insbesondere in Transportrichtung des Bedruckstoffs weniger stark als in einer Richtung quer zu dieser Transportrichtung.

Durch die WO 2009/005766 A2 ist eine Druckmaschine bekannt, die zwei Druckeinheiten mit Druckköpfen aufweist, die auf eine gleiche Seite des Bedruckstoffs ausgerichtet sind.

Durch die WO 2005/031470 A1 ist ein Verfahren bekannt, bei dem Tonerbilder auf Grundlage von Bitmaps erzeugt werden und bei dem auf Grund einer zu erwartenden Schrumpfung eine Bedruckstoffs diese Bitmaps bei ihrer Generierung hinsichtlich einer Anzahl zu druckender Bildpunkte geändert werden.

Durch die DE 101 11 216 A1 ist ein Verfahren bekannt, bei dem Bilddaten verändert werden, um eine Hitzeschrumpfung auszugleichen, wobei ein Betrag einer Hitzeschrumpfung zuvor experimentell erhalten wurde und entsprechende Daten in einem Speicher gespeichert sind.

Durch die DE 10 2007 040 402 A1 ist ein Verfahren bekannt, bei dem Veränderungen einer Abmessung eines Bedruckstoffs durch eine Schrägstellung von Tintenstrahldruckköpfen kompensiert werden.

Durch die DE 10 2009 051 197 A1 ist ein Verfahren bekannt, bei dem gerasterte Bilddaten für einen Tintenstrahldruck verändert werden, um eine Bahnschrumpfung auszugleichen.

Durch die US 4 721 969 ist ein Verfahren bekannt, bei dem Bilddaten eines Thermodruckers verschoben oder gestreckt werden, um Änderungen einer Abmessung eines Bedruckstoffs auszugleichen.

Durch die US 2010 171 975 A1 ist ein Verfahren bekannt, bei dem bogenförmige Druckprodukte erzeugt werden, indem ein Druckbild auf mehrere Bogen aufgeteilt wird, weil es größer ist, als die zur Verfügung stehenden Bogen.

Durch die US 2011 304 886 A1 ist ein Verfahren bekannt, bei dem eine Ausrichten von Druckbildern auf einer Vorderseite und einer Rückseite von Bogen aufeinander abgestimmt wird.

Die US 2010 321 429 A1 zeigt ein Tintenstrahldruckverfahren bei dem unterschiedlich große Tintentropfen zum Einsatz kommen.

Der Erfindung liegt die Aufgabe zugrunde, ein Verfahren zum Bedrucken eines Bedruckstoffs zu schaffen.

Die Aufgabe wird erfindungsgemäß durch die Merkmale des Anspruches 1 gelöst.

Bevorzugt wird ein Verfahren zum Bedrucken zumindest eines ersten insbesondere bahnförmigen Bedruckstoffs mittels zumindest eines Druckwerks einer Druckmaschine, insbesondere einer Rollen-Druckmaschine, wobei bevorzugt aus gespeicherten Vorlagebilddaten zumindest eines insbesondere digital gespeicherten ersten Gesamtdruckbilds Ausgabedaten für eine Ansteuerung zumindest eines zumindest eine Form von Druckbildern festlegenden Bestandteils zumindest einer ersten Druckeinheit der Druckmaschine zur Erzeugung zumindest eines ersten gedruckten Gesamtdruckbilds erzeugt werden und wobei bevorzugt das zumindest eine insbesondere digital gespeicherte erste Gesamtdruckbild in einem primären Datenpaket festgelegt und/oder beschrieben wird und/oder ist und wobei dem zumindest einen insbesondere digital gespeicherten ersten Gesamtdruckbild in den Vorlagebilddaten und/oder in dem primären Datenpaket zumindest eine in einer Vorlagerichtung gemessene Gesamtbildabmessung zugeordnet ist und wobei bevorzugt diese zumindest eine Gesamtbildabmessung mit zumindest einem Grenzwert verglichen wird und wobei bevorzugt bei Überschreitung des zumindest einen Grenzwerts durch die zumindest eine Gesamtbildabmessung des zumindest einen insbesondere digital gespeicherten Gesamtdruckbilds das zumindest eine erste Gesamtdruckbild auf diese Vorlagerichtung bezogen in eine Mehrzahl von Abschnitten des zumindest einen insbesondere digital gespeicherten ersten Gesamtdruckbilds geteilt wird und wobei bevorzugt die Mehrzahl von Abschnitten in einer Mehrzahl von sekundären Datenpaketen festgelegt und/oder beschrieben wird und/oder ist und wobei bevorzugt durch Druckvorgänge, die mittels der zumindest einen ersten Druckeinheit bevorzugt ausgeführt werden und in denen bevorzugt jeweils auf zumindest einem der sekundären Datenpakete beruhende Ausgabedaten verarbeitet werden, bevorzugt die Mehrzahl von Abschnitten des zumindest einen insbesondere gedruckten ersten Gesamtdruckbilds auf dem zumindest einen ersten Bedruckstoff erzeugt wird.

In den sekundären Datenpakete festgelegte, insbesondere beschriebene digitale Daten legen bevorzugt je sekundärem Datenpaket ein Bild in Form eines Abschnitts desjenigen Bildes fest, das durch in dem primären Datenpaket festgelegte, insbesondere beschriebene digitale Daten festgelegt ist.

Ein Gesamtdruckbild weist beispielsweise zumindest eine oder mehrere Einzelseiten auf oder besteht beispielsweise aus nur einem Druckmotiv und/oder nur einer Einzelseite entsprechender Größe. Ein solches Gesamtdruckbild erstreckt sich beispielsweise über eine gesamte Breite eines Bedruckstoffs und mit einem bevorzugt zumindest dem Doppelten und weiter bevorzugt zumindest dem Fünffachen und noch weiter bevorzugt zumindest dem Zehnfachen der Breite des Bedruckstoffs entsprechenden Abschnitt entlang einer Transportrichtung des Bedruckstoffs und/oder einer Abarbeitungsrichtung des Gesamtdruckbilds. Eine Gesamtbildabmessung ergibt sich bevorzugt aus Seitenbeschreibungsdaten des entsprechenden Gesamtdruckbilds.

Ein Vorteil dieses bevorzugten Verfahrens besteht insbesondere darin, dass ein relativ kleiner Speicher für die sekundären Datenpakete verwendet werden kann und/oder dass besonders große Druckbilder und prinzipiell auch sich in zumindest einer Richtung endlos erstreckende gedruckte Druckbilder erstellt werden können, die aus einer digitalen Druckbildvorlage stammen. Ohne die Aufteilung der Daten wäre eine Limitierung beispielsweise durch einen Speicher gegeben, der beispielsweise Rasterdaten speichert, die dann aus diesem Speicher abgerufen und in Ausgabedaten umgewandelt werden. Durch die Aufteilung von beispielsweise für einen solchen Speicher zu großen Datenpaketen gelingen bevorzugt sehr lange gedruckte Druckbilder in hoher Qualität. Insbesondere durch bevorzugten Einsatz eines Puffers und/oder Ringspeichers und/oder Schieberegisters wird ein lückenloser Druck auch bei hohen Druckgeschwindigkeiten ermöglicht, weil weniger große Datenspeicher geleert und wieder gefüllt werden müssen. Insbesondere kann beispielsweise dadurch ein Leeren und/oder ein Füllen des entsprechenden Datenspeichers von einem Auslesen diese Datenspeichers entkoppelt werden. Wenn wie bevorzugt die Aufteilung eines primären Datenpakets in mehrere sekundäre Datenpakete nur bei Überschreiten eines Grenzwerts und/oder durch eine Maschinensteuerung und/oder Druckdatenverarbeitung und/oder einen darin hinterlegten Algorithmus ausgeführt wird, kann besonders flexibel gearbeitet werden, weil beispielsweise eine Druckerei mit unterschiedlich konfigurierten Druckmaschinen nicht vorab bestimmen muss, welche Druckmaschine zum Einsatz kommt und in welcher Art folglich die Datenpakete aufgeteilt werden sollen. Insbesondere wenn jede Druckmaschine beispielsweise ihren eigenen, konfigurationsabhängigen zumindest einen Grenzwert aufweist, kann unnötiger Aufwand in der Datenverarbeitung vermieden werden.

Insbesondere wenn das primäre Datenpaket Vorlagebilddaten oder geometrisch modifizierte Vorlagebilddaten aufweist, können daraus bevorzugt zunächst Abschnitte erstellt werden, die dann in Rasterdaten oder geometrisch modifizierte Rasterdaten umgewandelt werden können. Dadurch kann der Rastervorgang bevorzugt mit jeweils relativ kleinen Datenpaketen durchgeführt werden. Dies erleichtert die Datenhandhabung bei der Rasterung und erlaubt ein Drucken sehr großer Druckbilder.

Vorteilhafte Weiterbildungen des erfindungsgemäßen Verfahrens sind Gegenstand der abhängigen Ansprüche 2 bis 15.

In einer Weiterbildung zeichnet sich das Verfahren bevorzugt zusätzlich dadurch aus, dass die Mehrzahl von Abschnitten des zumindest einen insbesondere gedruckten Gesamtdruckbilds auf demselben Bedruckstoff erzeugt wird.

In einer alternativen oder zusätzlichen Weiterbildung zeichnet sich das Verfahren bevorzugt dadurch aus, dass sich zumindest zwei der Abschnitte eines gleichen Gesamtdruckbilds bezüglich ihrer Abschnittsabmessung in der Vorlagerichtung unterscheiden.

In einer alternativen oder zusätzlichen Weiterbildung zeichnet sich das Verfahren bevorzugt dadurch aus, dass die sekundären Datenpakte auf einen notwendigen Speicherplatz bezogen jeweils kleiner sind als das primäre Datenpaket.

In einer alternativen oder zusätzlichen Weiterbildung zeichnet sich das Verfahren bevorzugt dadurch aus, dass die zumindest ein Gesamtbildabmessung durch eine Maschinensteuerung und/oder eine Druckdatenverarbeitung der Druckmaschine selbst und/oder durch zumindest einen hinterlegten Algorithmus einer Maschinensteuerung und/oder Druckdatenverarbeitung der Druckmaschine mit dem zumindest einem Grenzwert verglichen wird.

In einer alternativen oder zusätzlichen Weiterbildung zeichnet sich das Verfahren bevorzugt dadurch aus, dass die Abschnitte jeweils Abschnittsabmessungen in der Vorlagerichtung aufweisen, die den zumindest einen Grenzwert nicht überschreiten.

In einer alternativen oder zusätzlichen Weiterbildung zeichnet sich das Verfahren bevorzugt dadurch aus, dass mehrere dabei entstehenden Abschnitte des zumindest einen insbesondere digital gespeicherten Gesamtdruckbilds Abschnittsabmessungen in der Vorlagerichtung aufweisen, die gleich sind. In einer alternativen oder zusätzlichen Weiterbildung zeichnet sich das Verfahren bevorzugt dadurch aus, dass mehrere dabei entstehende Abschnitte des zumindest einen insbesondere digital gespeicherten Gesamtdruckbilds Abschnittsabmessungen in der Vorlagerichtung aufweisen, die gleich dem Grenzwert sind.

In einer alternativen oder zusätzlichen Weiterbildung zeichnet sich das Verfahren bevorzugt dadurch aus, dass jedes sekundäre Datenpaket Daten aufweist, die genau einen Abschnitt des zumindest einen insbesondere digital gespeicherten Gesamtdruckbilds betreffen.

In einer alternativen oder zusätzlichen Weiterbildung zeichnet sich das Verfahren bevorzugt dadurch aus, dass die sekundären Datenpakete zumindest teilweise nacheinander in zumindest einen Speicher geladen werden. In einer alternativen oder zusätzlichen Weiterbildung zeichnet sich das Verfahren bevorzugt dadurch aus, dass die sekundären Datenpakete zumindest teilweise nacheinander mittels zumindest eines Rastergrafikprozessors verarbeitet werden. In einer alternativen oder zusätzlichen Weiterbildung zeichnet sich das Verfahren bevorzugt dadurch aus, dass die sekundären Datenpakete zumindest teilweise nacheinander aus zumindest einem Speicher ausgelesen werden.

In einer alternativen oder zusätzlichen Weiterbildung zeichnet sich das Verfahren bevorzugt dadurch aus, dass das zumindest eine Druckwerk ein Tintenstrahldruckwerk ist und/oder dass die Druckmaschine eine Tintenstrahldruckmaschine ist und/oder dass der zumindest eine zumindest eine Form von Druckbildern festlegende Bestandteil der zumindest einen ersten Druckeinheit zumindest ein Tintenstrahldruckkopf der zumindest einen ersten Druckeinheit Druckmaschine ist und/oder dass die jeweiligen Ausgabedaten Ansteuerdaten von jeweils einzusetzenden Düsen von Druckköpfen zumindest eines Tintenstrahldruckwerks der Druckmaschine sind und/oder dass aus den gespeicherten Vorlagebilddaten des zumindest einen insbesondere digital gespeicherten Gesamtdruckbilds Ausgabedaten für eine Ansteuerung von Düsen von Druckköpfen der zumindest einen ersten Druckeinheit der Druckmaschine erzeugt werden, gemäß denen ein Ausstoßen von Beschichtungsmittel durch diese Düsen von Druckköpfen zur Erzeugung des zumindest einen gedruckten Gesamtdruckbilds vorgenommen wird.

In einer alternativen oder zusätzlichen Weiterbildung zeichnet sich das Verfahren bevorzugt dadurch aus, dass sich zumindest zwei der Abschnitte des zumindest einen gleichen insbesondere digital gespeicherten Gesamtdruckbilds bezüglich ihrer Abschnittsabmessung in der als Abarbeitungsrichtung ausgeprägten Vorlagerichtung unterscheiden.

In einer alternativen oder zusätzlichen Weiterbildung zeichnet sich das Verfahren bevorzugt dadurch aus, dass das zumindest eine insbesondere digital gespeicherte Gesamtdruckbild aus nur einem Druckmotiv und/oder nur einer Einzelseite besteht.

In einer alternativen oder zusätzlichen Weiterbildung zeichnet sich das Verfahren bevorzugt dadurch aus, dass das primäre Datenpaket Seitenbeschreibungsdaten aufweist. In einer alternativen oder zusätzlichen Weiterbildung zeichnet sich das Verfahren bevorzugt dadurch aus, dass das primäre Datenpaket die Vorlagebilddaten des zumindest einen insbesondere digital gespeicherten Gesamtdruckbilds oder durch Streckung und/oder Verschiebung von Einzelseiten geometrisch modifizierte Vorlagebilddaten des zumindest einen insbesondere digital gespeicherten Gesamtdruckbilds enthält. In einer alternativen oder zusätzlichen Weiterbildung zeichnet sich das Verfahren bevorzugt dadurch aus, dass die Vorlagebilddaten oder geometrisch modifizierten Vorlagebilddaten in Form einer vektorbasierten Seitenbeschreibung und/oder als Seitenbeschreibungsdaten vorliegen.

In einer alternativen oder zusätzlichen Weiterbildung zeichnet sich das Verfahren bevorzugt dadurch aus, dass die zumindest eine Gesamtbildabmessung eine in der Vorlagerichtung gemessene Länge des zumindest einen insbesondere digital gespeicherten Gesamtdruckbilds ist.

In einer alternativen oder zusätzlichen Weiterbildung zeichnet sich das Verfahren bevorzugt dadurch aus, dass dem zumindest einen insbesondere digital gespeicherten Gesamtdruckbild in den Vorlagebilddaten und/oder in dem primären Datenpaket zumindest eine Länge zugeordnet ist.

In einer alternativen oder zusätzlichen Weiterbildung zeichnet sich das Verfahren bevorzugt dadurch aus, dass die Abschnitte jeweils eine Breite aufweisen, die der Bereite des zumindest einen insbesondere digital gespeicherten Gesamtdruckbilds entspricht und/oder die Abschnitte jeweils eine Länge aufweisen, die sich aus der Aufteilung in sekundäre Datenpakete und/oder aus einer maximal verarbeitbaren Größe von sekundären Datenpakete ergibt.

In einer alternativen oder zusätzlichen Weiterbildung zeichnet sich das Verfahren bevorzugt dadurch aus, dass die Vorlagerichtung als Abarbeitungsrichtung ausgeprägt ist. Die Abarbeitungsrichtung ist insbesondere eine Richtung, in der eine Reihe solcher Bildelemente innerhalb eines Bildes in den Vorlagebilddaten hintereinander angeordnet sind, die im Druckvorgang mittels ein und derselben Düse eines Druckkopfes erzeugt werden.

In einer alternativen oder zusätzlichen Weiterbildung zeichnet sich das Verfahren bevorzugt dadurch aus, dass die Abschnitte jeweils Abschnittsabmessungen in der Vorlagerichtung aufweisen, die sich nur durch Abweichungen von weniger als 5 % voneinander unterscheiden.

In einer alternativen oder zusätzlichen Weiterbildung zeichnet sich das Verfahren bevorzugt dadurch aus, dass der Grenzwert, nach dem sich die Entscheidung richtet, ob das primäre Datenpaket in sekundäre Datenpakete aufgeteilt wird und wie groß die sekundären Datenpakete maximal sind, von einer maximalen mit dem Rastergrafikprozessor auf einmal verarbeitbaren Datenmenge und der Breite des insbesondere digital gespeicherten Gesamtdruckbilds und der Auflösung in Bildelementen pro Breiteneinheit in Richtung der Breite des Bedruckstoffs und einer Auflösung in Bildelementen pro Längeneinheit in Richtung der Länge des Bedruckstoffs abhängig ist.

In einer alternativen oder zusätzlichen Weiterbildung zeichnet sich das Verfahren bevorzugt dadurch aus, dass der Grenzwert in einer Längeneinheit definiert und/oder hinterlegt ist und/oder dass die zumindest eine Gesamtbildabmessung in einer Längeneinheit definiert und/oder hinterlegt ist und/oder dass die zumindest eine Abschnittsabmessung in einer Längeneinheit definiert und/oder hinterlegt ist.

In einer alternativen oder zusätzlichen Weiterbildung zeichnet sich das Verfahren bevorzugt dadurch aus, dass durch mittels der zumindest einen ersten Druckeinheit ausgeführte Druckvorgänge, in denen jeweils auf zumindest einem der sekundären Datenpakete beruhende Ausgabedaten verarbeitet werden, die Mehrzahl von Abschnitten des zumindest einen Gesamtdruckbilds erzeugt wird.

In einer alternativen oder zusätzlichen Weiterbildung zeichnet sich das Verfahren bevorzugt dadurch aus, dass dadurch das zumindest eine gedruckte Gesamtdruckbild auf demselben Bedruckstoff erzeugt wird. In einer alternativen oder zusätzlichen Weiterbildung zeichnet sich das Verfahren bevorzugt dadurch aus, dass das zumindest eine gedruckte Gesamtdruckbild auf dem zumindest einen ersten Bedruckstoff lückenlos erzeugt wird.

In einer alternativen oder zusätzlichen Weiterbildung zeichnet sich das Verfahren bevorzugt dadurch aus, dass solche in der Vorlagerichtung direkt benachbarten Bildpunkte, die auf Grund von von einem selben sekundären Datenpaket stammenden Ausgabedaten erzeugt wurden, mit einem gleichen Abstand zueinander auf demselben Bedruckstoff erzeugt werden, wie derjenige Abstand, mit dem solche in dieser Vorlagerichtung direkt benachbarten Bildpunkte auf demselben Bedruckstoff erzeugt werden, die auf Grund von von unterschiedlichen sekundären Datenpaket stammenden Ausgabedaten erzeugt wurden.

In einer alternativen oder zusätzlichen Weiterbildung zeichnet sich das Verfahren bevorzugt dadurch aus, dass zumindest zeitweise zumindest zwei der Abschnitte des zumindest einen Gesamtdruckbilds zumindest teilweise gleichzeitig auf demselben Bedruckstoff erzeugt werden und/oder dass zumindest zeitweise auf zumindest zwei unterschiedlichen sekundären Datenpaketen beruhende Ausgabedaten gleichzeitig dazu verwendet werden, jeweils einen Teil eines der Abschnitte des insbesondere ersten Gesamtdruckbilds auf demselben Bedruckstoff zu erzeugen.

In einer alternativen oder zusätzlichen Weiterbildung zeichnet sich das Verfahren bevorzugt dadurch aus, dass die Druckbilddaten innerhalb der sekundären Datenpakete zumindest zunächst in Form jeweils zumindest einer vektorbasierten Seitenbeschreibung vorliegen und/oder dass das zumindest eine sekundäre Datenpaket Seitenbeschreibungsdaten aufweist und/oder dass die sekundären Datenpakete jeweils Vorlagebilddaten oder geometrisch modifizierte Vorlagebilddaten aufweisen und/oder dass die sekundären Datenpakte eine gleiche Art von Daten aufweisen, wie das primäre Datenpaket.

In einer alternativen oder zusätzlichen Weiterbildung zeichnet sich das Verfahren bevorzugt dadurch aus, dass die in den sekundären Datenpaketen enthaltenen Daten mittels zumindest eines Rastergrafikprozessors verarbeitet werden und weiter bevorzugt, dass aus dabei entstehenden Paketen von Rasterdaten direkt oder indirekt die Ausgabedaten erzeugt werden. In einer alternativen oder zusätzlichen Weiterbildung zeichnet sich das Verfahren bevorzugt dadurch aus, dass jeweils auf unterschiedlichen sekundären Datenpaketen beruhende Pakete von Rasterdaten zumindest teilweise nacheinander zur Erzeugung von Ausgabedaten für gedruckte Abschnitte des zumindest einen Gesamtdruckbilds eingesetzt werden. In einer alternativen oder zusätzlichen Weiterbildung zeichnet sich das Verfahren bevorzugt dadurch aus, dass die sekundären Datenpakete und/oder daraus gewonnene Rasterdaten nacheinander abgearbeitet werden, um Ausgabedaten zu erzeugen, gemäß denen das Druckbild erzeugt wird und/oder Beschichtungsmittel aus Düsen ausgestoßen wird. In einer alternativen oder zusätzlichen Weiterbildung zeichnet sich das Verfahren bevorzugt dadurch aus, dass die sekundären Datenpakete zumindest teilweise nacheinander mittels zumindest eines Rastergrafikprozessors verarbeitet werden und/oder dass die sekundären Datenpakete zumindest teilweise nacheinander zu Ausgabedaten verarbeitet werden.

In einer alternativen oder zusätzlichen Weiterbildung zeichnet sich das Verfahren bevorzugt dadurch aus, dass die sekundären Datenpakete und/oder jeweils auf unterschiedlichen sekundären Datenpakten beruhende Pakete von Rasterdaten jeweils als Ganzes in zumindest einem Speicher abgelegt werden und/oder jeweils als Ganzes aus dem zumindest einen Speicher zumindest teilweise nacheinander ausgelesen werden. Bevorzugt ist ein solcher Speicher zumindest ein Bilddatenspeicher und/oder zumindest ein Rasterdatenspeicher.

In einer alternativen oder zusätzlichen Weiterbildung zeichnet sich das Verfahren bevorzugt dadurch aus, dass sämtliche aus mehreren oder allen von einem primären Datenpaket abstammenden sekundären Datenpaketen erzeugten Rasterdaten und/oder Ausgabedaten zeitgleich in zumindest einem Speicher abgelegt werden.

In einer alternativen oder zusätzlichen Weiterbildung zeichnet sich das Verfahren bevorzugt dadurch aus, dass diese sämtlichen aus mehreren oder allen von diesem primären Datenpaket abstammenden sekundären Datenpaketen erzeugten Rasterdaten und/oder Ausgabedaten nacheinander zur Erzeugung der Abschnitte des insbesondere ersten gedruckten Gesamtdruckbilds verwendet werden.

In einer alternativen oder zusätzlichen Weiterbildung zeichnet sich das Verfahren bevorzugt dadurch aus, dass diese sämtlichen aus mehreren oder allen von diesem primären Datenpaket abstammenden sekundären Datenpaketen erzeugten Rasterdaten und/oder Ausgabedaten nacheinander in zyklischen Wiederholungen, zur Erzeugung der Abschnitte des zumindest einen gedruckten Gesamtdruckbilds verwendet werden.

In einer alternativen oder zusätzlichen Weiterbildung zeichnet sich das Verfahren bevorzugt dadurch aus, dass ein Anfang und ein Ende des zumindest einen insbesondere digital gespeicherten Gesamtdruckbilds grafisch aufeinander abgestimmt ist, um zwischen ihnen einen lückenlosen und optisch nicht erkennbaren Übergang bei einer direkten Aneinanderreihung des Anfangs und des Endes des zumindest einen Gesamtdruckbilds zu ermöglichen.

In einer alternativen oder zusätzlichen Weiterbildung zeichnet sich das Verfahren bevorzugt dadurch aus, dass die gespeicherten Vorlagebilddaten des zumindest einen insbesondere digital gespeicherten Gesamtdruckbilds zumindest Vorlagebilddaten zumindest einer ersten Einzelseite und Vorlagebilddaten zumindest einer zweiten Einzelseite aufweisen und dass die zumindest eine erste Einzelseite und die zumindest eine zweite Einzelseite innerhalb von gespeicherten Daten in Abhängigkeit von den Vorlagebilddaten und/oder in Abhängigkeit von auf einen Druckauftrag bezogenen Auftragsdaten und/oder in Abhängigkeit von in zumindest einem Korrekturspeicher hinterlegten Korrekturdaten relativ zueinander zumindest in einer Vorlagerichtung verschoben werden.

In einer alternativen oder zusätzlichen Weiterbildung zeichnet sich das Verfahren bevorzugt dadurch aus, dass die gespeicherten Vorlagebilddaten des zumindest einen insbesondere digital gespeicherten Gesamtdruckbilds zumindest Vorlagebilddaten zumindest einer ersten Einzelseite und Vorlagebilddaten zumindest einer zweiten Einzelseite aufweisen und dass die zumindest eine erste Einzelseite und die zumindest eine zweite Einzelseite innerhalb von gespeicherten Daten in Abhängigkeit von den Vorlagebilddaten und/oder in Abhängigkeit von auf einen Druckauftrag bezogenen Auftragsdaten und/oder in Abhängigkeit von in zumindest einem Korrekturspeicher hinterlegten Korrekturdaten unter Beibehaltung zumindest ihrer jeweiligen in einer ersten Vorlagerichtung gemessenen absoluten virtuellen Seitenabmessung relativ zueinander zumindest in einer Vorlagerichtung verschoben werden. In einer alternativen oder zusätzlichen Weiterbildung zeichnet sich das Verfahren bevorzugt dadurch aus, dass die gespeicherten Vorlagebilddaten zumindest des zumindest einen insbesondere digital gespeicherten Gesamtdruckbilds zumindest Vorlagebilddaten zumindest einer ersten Einzelseite aufweisen und dass zumindest die zumindest eine erste Einzelseite innerhalb von gespeicherten Daten in Abhängigkeit von den Vorlagebilddaten und/oder in Abhängigkeit von auf einen Druckauftrag bezogenen Auftragsdaten und/oder in Abhängigkeit von in zumindest einem Korrekturspeicher hinterlegten Korrekturdaten vor und/oder während der Erzeugung der Ausgabedaten zumindest in einer Vorlagerichtung mit einem Streckungsfaktor gestreckt wird. In einer alternativen oder zusätzlichen Weiterbildung zeichnet sich das Verfahren bevorzugt dadurch aus, dass diese Vorlagerichtung eine andere Vorlagerichtung ist, als diejenige Vorlagerichtung, in der das zumindest eine insbesondere digital gespeicherten Gesamtdruckbild in Abschnitte unterteilt wird.

In einer alternativen oder zusätzlichen Weiterbildung zeichnet sich das Verfahren bevorzugt dadurch aus, dass zumindest fünf unterschiedliche Beschichtungsmittel auf eine gleiche Seite des Bedruckstoffs aufgetragen werden und dass jedes dieser zumindest fünf unterschiedlichen Beschichtungsmittel jeweils mittels einer Mehrzahl von einzeln ansteuerbaren und in Abhängigkeit von Ansteuerdaten einzelne Bildpunkte von Druckbildern festlegenden Bestandteilen der zumindest einen ersten Druckeinheit und/oder zumindest einer zweiten Druckeinheit der Druckmaschine auf den Bedruckstoff aufgetragen wird und dass zumindest eines der zumindest fünf unterschiedlichen Beschichtungsmittel mittels der zumindest einen ersten Druckeinheit auf den Bedruckstoff aufgetragen wird und danach mittels zumindest eines Trockners getrocknet wird und danach zumindest ein anderes der zumindest fünf unterschiedlichen Beschichtungsmittel mittels der zumindest einen zweiten Druckeinheit der Druckmaschine auf den Bedruckstoff aufgetragen wird. Bevorzugt werden die Abschnitte und die sekundären Datenpakete bereits erzeugt, bevor Daten auf die zumindest eine erste Druckeinheit und die zumindest eine zweite Druckeinheit aufgeteilt werden.

In einer alternativen oder zusätzlichen Weiterbildung zeichnet sich das Verfahren bevorzugt dadurch aus, dass die Aufteilung des zumindest einen insbesondere digital gespeicherten Gesamtdruckbilds auf mehrere Abschnitte und die Erstellung der sekundären Datenpakete mittels zumindest eines Bilddatenrechners und/oder mittels zumindest eines Rasterdatenrechners und/oder mittels eines anderen Rechners der Druckmaschine und/oder der Maschinensteuerung und/oder der Druckdatenverarbeitung erfolgt.

In einer alternativen oder zusätzlichen Weiterbildung zeichnet sich das Verfahren bevorzugt dadurch aus, dass die Erstellung der sekundären Datenpakete mittels zumindest eines Bilddatenrechners und danach die Erstellung von Rasterdaten aus den sekundären Datenpaketen mittels zumindest eines Rasterdatenrechners erfolgt.

Ein Vorteil der Erfindung besteht bevorzugt darin, dass es bevorzugt vermieden werden kann, dass Bereiche des Druckerzeugnisses nach dem Drucken entfernt, beispielsweise abgeschnitten werden müssen. Dadurch wird bevorzugt Bedruckstoff eingespart und eine Anzahl notwendiger Vorrichtungen und Arbeitsvorgänge reduziert. Dies ergibt sich insbesondere aus einem bevorzugt zusätzlich oder alternativ anwendbaren Verfahren zum Betreiben einer Druckmaschine, wobei bevorzugt die Druckmaschine zumindest einen Druckkopf mit zumindest einer ersten Düse aufweist und wobei bevorzugt Ansteuerdaten und/oder Rasterdaten zumindest eines zu druckenden Druckbilds in Form von abzuarbeitenden Einträgen an den zumindest einen Druckkopf weitergeleitet werden und wobei bevorzugt jeder Eintrag jeweils einer der zumindest einen ersten Düse zugeordnet ist und/oder wird und entweder einen Wert aufweist, der einer Anweisung zum Pausieren entspricht, oder einen Wert aufweist, der einer Anweisung zum Ausstoßen eines Tropfens entspricht und wobei bevorzugt in Abhängigkeit von dem zumindest einen Druckbild zugeordneten Daten mittels der zumindest einen ersten Düse zumindest zwischen zwei Tropfen, die Bildpunkte eines selben zu druckenden Druckbilds repräsentieren und ebenfalls mittels dieser zumindest einen ersten Düse ausgestoßen werden, zumindest ein zusätzlicher Tropfen ausgestoßen wird, der keinen Bildpunkt dieses zu druckenden Druckbilds repräsentiert.

Dies ergibt sich bevorzugt zusätzlich oder alternativ aus einem bevorzugten Verfahren zum Betreiben einer Druckmaschine, wobei bevorzugt die Druckmaschine zumindest einen Druckkopf mit zumindest einer ersten Düse aufweist und wobei bevorzugt in zumindest einem Datenspeicher Rasterdaten und/oder Ansteuerdaten zumindest eines zu druckenden Druckbilds in Form von abzuarbeitenden Einträgen hinterlegt sind und/oder werden und wobei bevorzugt jeder Eintrag jeweils einer Düse zugeordnet ist und/oder wird und entweder einen Wert aufweist, der einer Anweisung zum Pausieren entspricht, oder einen Wert aufweist, der einer Anweisung zum Ausstoßen eines Tropfens entspricht und wobei bevorzugt zumindest eine dieser zumindest einen ersten Düse zugeordnete und/oder zuordenbare erste Folge von nacheinander abzuarbeitenden Einträgen darauf hin überprüft wird, ob sie zumindest eine Teilfolge aufweist, die ausschließlich Einträge mit Anweisungen zum Pausieren enthält und die eine vorgegebene Anzahl von Einträgen überschreitet und wobei bevorzugt bei Auffinden einer solchen Teilfolge zumindest ein Eintrag dieser zumindest einen Teilfolge derart verändert wird, dass er danach einen Wert aufweist, der einer Anweisung zum Ausstoßen eines Tropfens entspricht.

Ein weiterer Vorteil der Erfindung besteht bevorzugt darin, dass bevorzugt durch gezieltes Ansteuern von Düsen des zumindest einen Druckkopfs eine Menge an ausgestoßenem Beschichtungsmittel, beispielsweise ausgestoßener Druckfarbe gering ist im Vergleich zu einem Verfahren, bei dem alle Düsen in regelmäßigen Abständen Beschichtungsmittel ausstoßen.

Ein weiterer Vorteil besteht bevorzugt darin, dass unnötige Störungen in einem gedruckten Druckbild vermieden werden.

Bevorzugt werden Rasterdaten und/oder Ausgabedaten und/oder Ansteuerdaten, die zu aufeinanderfolgenden Druckbildern und/oder Vorlagebilddaten gehören, gemeinsam verarbeitet und auf entsprechende Folgen überprüft. Dadurch kann noch mehr Beschichtungsmittel eingespart werden und/oder eine noch besser Druckqualität erreicht werden.

Unter einer Einzelseite ist beispielsweise ein Objekt zu verstehen, das Teil eines Gesamtdruckbilds ist. Das kann beispielsweise eine einzelne Seite einer Zeitung oder eines Buches oder einer Zeitschrift sein. Eine Einzelseite kann aber auch ein Poster sein und als einziges Motiv auf einem Bogen eines fertigen Druckerzeugnisses aufgedruckt sein. Beispielsweise kann eine Einzelseite auch mehrere Objekt aufweisen, die aber gemeinsam behandelt werden, wenn es darum geht, das Gesamtdruckbild zu beschreiben. Beispielsweise kann ein Gesamtdruckbild zwei Einzelseiten aufweisen, die zwei Seiten einer Zeitung entsprechen, während zumindest eine dieser Einzelseiten als Objekte zumindest einen Textblock und zumindest eine Grafik aufweist. Bevorzugt ist zumindest in Bezug auf Verschiebungen, die innerhalb von Daten vorgenommen werden, eine Einzelseite die kleinste Einheit, die dabei in sich unverändert bleibt. Ein Gesamtdruckbild kann auch eine einzige Einzelseite aufweisen bzw. aus einer einzigen Einzelseite bestehen.

Ein Vorteil der Erfindung besteht bevorzugt darin, dass Passer und/oder Register von Druckerzeugnissen eine höhere Qualität erreichen können, insbesondere indem wie bevorzugt Veränderungen von Abmessungen eines Bedruckstoffs vor dem Auftragen eines entsprechenden Beschichtungsmittels ausgeglichen werden. Ein weiterer Vorteil besteht bevorzugt darin, dass auf einzelne Druckaufträge individuell eingegangen werden kann, wodurch die Qualität der Druckerzeugnisse weiter gesteigert werden kann, als wenn pauschale Lösungen eingesetzt werden. Ein weiterer Vorteil besteht bevorzugt in der einfachen Anwendbarkeit für Bedienpersonen der Druckmaschine, insbesondere auf Grund eines möglichen hohen Automatisierungsgrads.

Vorteilhafte Varianten eines bevorzugten Verfahrens zum Bedrucken zumindest eines Bedruckstoffs mittels zumindest eines Druckwerks einer Druckmaschine werden beschrieben, wobei bevorzugt aus insbesondere digital gespeicherten Vorlagebilddaten zumindest eines ersten Gesamtdruckbilds erste Ausgabedaten für eine Herstellung oder Ansteuerung zumindest eines zumindest eine Form von Druckbildern, insbesondere zumindest einzelne Bildpunkte von Druckbildern festlegenden Bestandteils zumindest einer ersten Druckeinheit der Druckmaschine zur Erzeugung zumindest eines ersten gedruckten Gesamtdruckbilds erzeugt werden. Beispielsweise weisen die insbesondere digital gespeicherten Vorlagebilddaten des zumindest einen ersten Gesamtdruckbilds zumindest Vorlagebilddaten zumindest einer ersten Einzelseite und beispielsweise auch Vorlagebilddaten zumindest einer zweiten Einzelseite auf. Bevorzugt wird durch einen ersten Druckvorgang mittels der zumindest einen ersten Druckeinheit gemäß den ersten Ausgabedaten das zumindest eine erste gedruckte Gesamtdruckbild auf dem zumindest einen Bedruckstoff erzeugt.

Bevorzugt werden die zumindest eine erste Einzelseite und die bevorzugte zumindest eine zweite Einzelseite innerhalb von insbesondere digital gespeicherten Daten unter Beibehaltung zumindest ihrer jeweiligen in einer ersten Vorlagerichtung gemessenen absoluten virtuellen Seitenabmessung in Abhängigkeit von auf einen Druckauftrag bezogenen Auftragsdaten und/oder in Abhängigkeit von in zumindest einem Korrekturspeicher hinterlegten Korrekturdaten relativ zueinander zumindest in dieser ersten Vorlagerichtung verschoben. Dadurch ergibt sich bevorzugt der Vorteil, dass gedruckte Einzelseiten, die aus unterschiedlichen Druckeinheiten stammen, im fertigen Druckerzeugnis passergerecht und/oder registergerecht zueinander liegen. Bevorzugt hängt ein Ausmaß der relativen Verschiebung davon ab, wie weit die Einzelseiten zuvor bereits voneinander beabstandet waren. Gedruckte Einzelseiten, die einen größeren Abstand voneinander aufweisen, werden beispielsweise durch Veränderungen von Abmessungen des Bedruckstoffs stärker relativ zueinander bewegt, was bevorzugt durch eine größere relative Verschiebung der Einzelseiten in den Vorlagebilddaten ausgeglichen wird. Bevorzugt enthalten auf einen Druckauftrag bezogene Auftragsdaten zumindest Daten zu Eigenschaften des zu bedruckenden Bedruckstoffs und/oder Daten zu zumindest einem aufzutragenden Beschichtungsmittel und/oder Daten zu Eigenschaften und/oder Einstellungen zumindest eines Trockners und/oder Daten zu zumindest einem aufzutragenden Druckbild und/oder Daten zu einer Transportgeschwindigkeit des Bedruckstoffs und/oder Daten zu einer Druckmaschine und/oder Druckeinheit mittels der das Druckerzeugnis gedruckt werden soll. Beispiele für Eigenschaften des zu bedruckenden Bedruckstoffs sind ein Material des Bedruckstoffs und/oder eine Dicke des zu bedruckenden Bedruckstoffs. Ein Beispiel für solche Daten zu zumindest einem aufzutragenden Druckbild ist eine Flächenbelegung, also eine Menge von Druckfarbe pro Fläche, die beispielsweise Einfluss auf die Veränderung der zumindest einen Abmessungen des Bedruckstoffs haben kann. Beispiele für solche Daten zu zumindest einem aufzutragenden Druckbild sind ein Format, welches das gedruckte Druckerzeugnis aufweisen soll und/oder eine Anzahl und/oder Reihenfolge von Seiten die das Druckerzeugnis aufweisen soll. Die Auftragsdaten hängen bevorzugt auch von zumindest einer Nachbearbeitungsvorrichtung ab. Unter einer virtuellen Seitenabmessung ist im Vorangegangenen und/oder im Folgenden insbesondere bevorzugt eine zugeordnete Seitenabmessung insbesondere innerhalb eines Bildes zu verstehen, das in digital gespeicherter Form in einem Datenspeicher hinterlegt ist.

Als passergerecht angeordnet werden dabei bevorzugt auch solche Einzelseiten angesehen, deren Mittelpunkte aufeinander liegen, unabhängig davon, ob sich ihre Seitenabmessungen unterschieden. Ein solcher Unterschied wird vom Betrachter als weniger störend empfunden, als vollständig zueinander verschobene Einzelseiten. Als registergerecht angeordnet werden dabei bevorzugt auch solche Einzelseiten angesehen, deren Mittelpunkte im Durchlicht des Bedruckstoffs gesehen aufeinander liegen, unabhängig davon, ob sich ihre Seitenabmessungen unterschieden. Ein solcher Unterschied wird vom Betrachter ebenfalls als weniger störend empfunden, als vollständig zueinander verschobene Einzelseiten.

Bevorzugt ist der zumindest einen ersten Einzelseite in ihren Vorlagebilddaten zumindest eine virtuelle erste Seitenabmessung in einer ersten Vorlagerichtung und ein virtueller erster Referenzpunkt zugeordnet und ist der zumindest einen zweiten Einzelseite in ihren Vorlagebilddaten zumindest ein virtueller zweiter Referenzpunkt und weiter bevorzugt auch zumindest eine virtuelle zweite Seitenabmessung in dieser ersten Vorlagerichtung zugeordnet und stehen ein in einer ersten Druckbildrichtung gemessener Referenzabstand, den der erste Referenzpunkt und der zweite Referenzpunkt zueinander auf dem zumindest einen ersten gedruckten Gesamtdruckbild aufweisen einerseits und die erste Seitenabmessung einer gedruckten ersten Einzelseite andererseits zueinander in einem Abmessungs-Druckverhältnis, das bevorzugt in Abhängigkeit von auf einen Druckauftrag bezogenen Auftragsdaten und/oder in Abhängigkeit von in zumindest einem Korrekturspeicher hinterlegten Korrekturdaten von einem Abmessungs-Vorlageverhältnis abweicht, in dem ein in der ersten Vorlagerichtung gemessener virtueller Referenzabstand, der dem virtuellen ersten Referenzpunkt und dem virtuellen zweiten Referenzpunkt zueinander in den Vorlagebilddaten des zumindest einen ersten Gesamtdruckbilds zugeordnet ist, einerseits und die virtuelle erste Seitenabmessung der zumindest einen ersten Einzelseite in den Vorlagebilddaten andererseits zueinander stehen. Dies kann beispielsweise bei einer reinen Verschiebung der Einzelseiten zueinander der Fall sein. Es ist aber auch möglich, dies durch eine Kombination aus Verschiebung von Einzelseiten und Streckung von Einzelseiten und/oder Gesamtdruckbildern zu erreichen. So lassen sich beispielsweise durch Verschiebung der Einzelseiten deren Mittelpunkte zur Deckung bringen und zusätzlich durch individuelle Streckung der Einzelseiten deren Seitenabmessungen anpassen. Unter einem virtuellen Referenzpunkt ist im Vorangegangenen und/oder im Folgenden insbesondere ein Referenzpunkt insbesondere innerhalb eines Bildes zu verstehen, das in digital gespeicherter Form in einem Datenspeicher hinterlegt ist.

Bevorzugt wird alternativ oder zusätzlich zumindest die zumindest eine erste Einzelseite innerhalb von insbesondere digital gespeicherten Daten in Abhängigkeit von den Vorlagebilddaten und in Abhängigkeit von auf den Druckauftrag bezogenen Auftragsdaten und in Abhängigkeit von in zumindest einem Korrekturspeicher hinterlegten Korrekturdaten vor und/oder während der Erzeugung der Ausgabedaten zumindest in der ersten Vorlagerichtung mit einem ersten Streckungsfaktor gestreckt. Durch Streckung zumindest einer Einzelseite und/oder Streckung beispielsweise eines Gesamtdruckbilds lassen sich bevorzugt gleichmäßige Änderungen von Abmessungen des Bedruckstoffs größtenteils oder sogar vollständig ausgleichen. Diese Variante erfordert zwar einen Eingriff in die Vorlagebilddaten der entsprechenden Einzelseiten selbst, erzielt jedoch was Passer und/oder Register angeht Ergebnisse sehr hoher Qualität.

Das bevorzugte Verfahren eignet sich bevorzugt einerseits zur Ansteuerung von Düsen von Druckköpfen zumindest einer ersten Druckeinheit der Druckmaschine, insbesondere zur Steuerung eines Ausstoßens von Beschichtungsmittel durch Düsen von Druckköpfen beispielsweise eines Tintenstrahldruckwerks. Alternativ eignet sich das Verfahren für alle Arten von digitalen Druckverfahren, insbesondere solche, bei denen einzelne gesteuerte Elemente Bildpunkte erzeugen, beispielsweise digitale Thermodruckverfahren, auf elektrischer Aufladung beruhende Druckverfahren, beispielsweise mit Einsatz eines Toners als Beschichtungsmittel oder ähnliches. Das Verfahren eignet sich bevorzugt andererseits zur Ansteuerung zumindest einer Herstellungsvorrichtung zur Erzeugung von festen Druckformen, beispielsweise zum Bebildern von Druckplatten im Offset-Druck und/oder zum Erzeugen von Druckformen für einen Hochdruck und/oder Flexodruck und/oder Tiefdruck. Dann dient das Verfahren zur Herstellung von insbesondere festen Druckformen, beispielsweise Druckplatten.

Bevorzugt ist das zumindest eine Druckwerk eine Tintenstrahldruckwerk und/oder ist die Druckmaschine eine Tintenstrahldruckmaschine und/oder werden aus den insbesondere digital gespeicherten Vorlagebilddaten des zumindest einen ersten Gesamtdruckbilds erste Ausgabedaten für eine Ansteuerung von Düsen von Druckköpfen der zumindest einen ersten Druckeinheit der Druckmaschine erzeugt, gemäß denen ein Ausstoßen von Beschichtungsmittel durch diese Düsen von Druckköpfen zur Erzeugung des zumindest einen ersten gedruckten Gesamtdruckbilds vorgenommen wird und/oder sind die jeweiligen Ausgabedaten Ansteuerdaten von jeweils einzusetzenden Düsen von Druckköpfen zumindest eines Tintenstrahldruckwerks der Druckmaschine und/oder ist der zumindest eine zumindest eine Form von Druckbildern festlegende Bestandteil der zumindest einen ersten Druckeinheit der Druckmaschine zumindest ein Tintenstrahldruckkopf.

Insbesondere im Zusammenhang mit digitalen Druckverfahren, beispielsweise Tintenstrahldruckverfahren ergibt sich bevorzugt der Vorteil, dass die Veränderung der Daten, beispielsweise die Verschiebung von Einzelseiten und/oder Streckung von Einzelseiten oder Gesamtdruckbildern verhältnismäßig spät durchgeführt werden kann, insbesondere erst dann, wenn bereits feststeht, mit welcher Druckmaschine und/oder auf welchem Bedruckstoff und/oder unter welchen klimatischen Bedingungen und/oder mit welchem Beschichtungsmittel ein Druckauftrag ausgeführt werden soll. Wird beispielsweise entgegen der Auftragsplanung ein anderer Bedruckstoff eingesetzt, beispielsweise weil eine bestimmte Bedruckstoffart nicht mehr in ausreichender Menge vorhanden ist, so kann das Verfahren direkt vor Druckbeginn angewandt werden und diese Änderungen berücksichtigen. Auch kann auf Veränderungen von Umgebungsbedingungen reagiert werden, beispielsweise veränderte Luftfeuchtigkeit. Solche Änderungen können bei digitalen Druckverfahren sogar im Lauf eines Druckauftrags angepasst werden, sei es wegen veränderter Bedingungen, bei einem fliegenden Rollenwechsel verändertem Bedruckstoff oder auf Grund von Messungen an innerhalb desselben Druckauftrags bereits gefertigten Druckerzeugnissen.

Bevorzugt hängt die Verschiebung zumindest einer Einzelseite und/oder die Streckung zumindest einer Einzelseite und/oder zumindest eines Gesamtdruckbilds und/oder zumindest eines Referenzabstands zumindest insofern von den Vorlagebilddaten ab, als die Vorlagebilddaten Informationen darüber aufweisen, an welchen Stellen des Gesamtdruckbilds jeweils Einzelseiten angeordnet sind. Eine Verschiebung einer Einzelseite wird bevorzugt umso größer ausfallen, je weiter diese Einzelseite schon zuvor von einem Bezugspunkt, beispielsweise einer Mittellinie des Gesamtdruckbilds entfernt angeordnet ist, insbesondere weil sich dann auch die Veränderung der zumindest einen Abmessung des Bedruckstoffs umso stärker auswirkt. Eine Schrumpfung einer Bedruckstoffbahn würde beispielsweise am Rand dieser Bedruckstoffbahn angeordnete Einzelseiten stärker verschieben, als solche Einzelseiten, die nahe an der Mittellinie der Bedruckstoffbahn angeordnet sind. Darum müssen zur Kompensation die am Rand angeordneten Einzelseiten zuvor stärker verschoben werden. Dies ist umso relevanter, je mehr Einzelseiten nebeneinander angeordnet sind und/oder je kleiner die Einzelseiten jeweils sind. Bei einer gleichmäßigen Streckung des Gesamtdruckbilds kann eine gleichmäßige Änderung der Abmessung des Bedruckstoffs gleichmäßig ausgeglichen werden.

Bevorzugt wird alternativ oder zusätzlich ein Verfahren zum Bedrucken zumindest eines Bedruckstoffs mittels zumindest eines Druckwerks einer Druckmaschine, wobei aus gespeicherten Vorlagebilddaten zumindest eines ersten Gesamtdruckbilds erste Ausgabedaten für eine Herstellung oder Ansteuerung zumindest eines zumindest eine Form von Druckbildern festlegenden Bestandteils zumindest einer ersten Druckeinheit der Druckmaschine zur Erzeugung zumindest eines ersten gedruckten Gesamtdruckbilds erzeugt werden und wobei die gespeicherten Vorlagebilddaten des zumindest einen ersten Gesamtdruckbilds zumindest Vorlagebilddaten zumindest einer ersten Einzelseite und Vorlagebilddaten zumindest einer zweiten Einzelseite aufweisen und wobei die zumindest eine erste Einzelseite und die zumindest eine zweite Einzelseite innerhalb von gespeicherten Daten unter Beibehaltung zumindest ihrer jeweiligen in einer ersten Vorlagerichtung gemessenen absoluten virtuellen Seitenabmessung durch eine Maschinensteuerung und/oder eine Druckdatenverarbeitung der Druckmaschine selbst und/oder durch zumindest einen hinterlegten Algorithmus der Maschinensteuerung und/oder Druckdatenverarbeitung der Druckmaschine relativ zueinander zumindest in dieser ersten Vorlagerichtung verschoben werden und wobei durch einen ersten Druckvorgang mittels der zumindest einen ersten Druckeinheit gemäß den ersten Ausgabedaten das zumindest eine erste gedruckte Gesamtdruckbild auf dem zumindest einen Bedruckstoff erzeugt wird.

Ein Vorteil eines bevorzugten, zusätzlichen oder alternativen Verfahrens zum Beschichten eines Bedruckstoffs mittels Druckwerken einer Druckmaschine, wobei der Bedruckstoff entlang eines Transportwegs mittels zumindest einer ersten Druckeinheit und bevorzugt auch zumindest einer zweiten Druckeinheit beschichtet wird und wobei zumindest sechs unterschiedliche Beschichtungsmittel auf eine gleiche erste Seite des Bedruckstoffs aufgetragen werden und wobei jedes dieser zumindest sechs unterschiedlichen Beschichtungsmittel jeweils mittels einer Mehrzahl von einzeln ansteuerbaren und in Abhängigkeit von Ausgabedaten und insbesondere Ansteuerdaten einzelne Bildpunkte von Druckbildern festlegenden Bestandteilen zumindest einer ersten Druckeinheit und/oder zumindest einer zweiten Druckeinheit der Druckmaschine auf den Bedruckstoff aufgetragen wird und wobei mittels der zumindest einen ersten Druckeinheit zumindest drei unterschiedliche Beschichtungsmittel auf die erste Seite des Bedruckstoffs aufgetragen werden und mittels der zumindest einen zweiten Druckeinheit zumindest drei unterschiedliche Beschichtungsmittel auf die erste Seite des Bedruckstoffs aufgetragen werden, besteht insbesondere darin, dass auch mittels ansteuerbarer, insbesondere digital ansteuerbarer, einzelne Bildpunkte von Druckbildern festlegenden Bestandteile zumindest eines Druckwerks qualitativ hochwertige Druckerzeugnisse erzeugt werden können, die sich beispielsweise durch ihre Vielfalt von Farben und/oder durch Lackierungen und/oder weiteres von einfacheren Druckerzeugnissen unterscheiden. Auf diese Weise können beispielsweise auch im Verpackungsdruck hochwertige und dennoch individuelle Druckbilder erzeugt werden. Dies gilt insbesondere im Zusammenhang mit Tintenstrahldruckwerken, da diese besonders einfach eine Vielzahl von unterschiedlichen Beschichtungsmitteln in variablen Druckbildern auftragen können. Insbesondere sind dann bevorzugt die einzeln ansteuerbaren und in Abhängigkeit von Ausgabedaten und insbesondere Ansteuerdaten einzelne Bildpunkte von Druckbildern festlegenden Bestandteile Düsen von Tintenstrahldruckköpfen von Druckwerken der zumindest einen ersten Druckeinheit und/oder der zumindest einen zweiten Druckeinheit der Druckmaschine.

Insbesondere gilt dies auch für eine Druckmaschine, wobei bevorzugt entlang eines für zumindest einen zu bedruckenden Bedruckstoff vorgesehenen Transportwegs durch die Druckmaschine zumindest eine erste Druckeinheit und zumindest eine zweite Druckeinheit angeordnet ist und wobei die Druckmaschine zumindest fünf, weiter bevorzugt zumindest sechs, noch weiter bevorzugt zumindest sieben und noch weiter bevorzugt zumindest acht unterschiedliche Zwischenspeicher für unterschiedliche Beschichtungsmittel aufweist und wobei jeder dieser zumindest fünf, weiter bevorzugt zumindest sechs, noch weiter bevorzugt zumindest sieben und noch weiter bevorzugt zumindest acht Zwischenspeicher mit jeweils zumindest einer Mehrzahl von einzeln ansteuerbaren Bestandteilen der zumindest einen ersten Druckeinheit oder der zumindest einen zweiten Druckeinheit der Druckmaschine verbunden und/oder verbindbar ist und wobei bevorzugt mittels jedes dieser Bauteile oder Bestandteile, insbesondere einzeln ansteuerbaren Bestandteile, in Abhängigkeit von Ausgabedaten und insbesondere Ansteuerdaten einzelne gedruckte Bildpunkte von gedruckten Druckbildern erzeugbar sind und wobei bevorzugt jedes dieser Bauteile oder Bestandteile, insbesondere einzeln ansteuerbaren Bestandteile, auf einer gleichen Seite des für den zumindest einen zu bedruckenden Bedruckstoff vorgesehenen Transportwegs durch die Druckmaschine angeordnet ist und wobei bevorzugt die zumindest eine erste Druckeinheit zumindest einen, weiter bevorzugt zumindest zwei, noch weiter bevorzugt zumindest drei und noch weiter bevorzugt zumindest vier der unterschiedlichen Zwischenspeicher für unterschiedliche Beschichtungsmittel aufweist und wobei bevorzugt die zumindest eine zweite Druckeinheit zumindest einen, weiter bevorzugt zumindest zwei, noch weiter bevorzugt zumindest drei und noch weiter bevorzugt zumindest vier der unterschiedlichen Zwischenspeicher für unterschiedliche Beschichtungsmittel aufweist.

Ein Vorteil eines bevorzugten Verfahrens, bei dem bevorzugt zusätzlich aus gespeicherten Vorlagebilddaten zumindest eines ersten Gesamtdruckbilds erste Ausgabedaten und/oder Ansteuerdaten für eine Ansteuerung des zumindest einen einzelne Bildpunkte von Druckbildern festlegenden Bestandteils der zumindest einen ersten und/oder zweiten Druckeinheit zur Erzeugung zumindest eines ersten gedruckten Gesamtdruckbilds erzeugt werden und die gespeicherten Vorlagebilddaten des zumindest einen ersten Gesamtdruckbilds bevorzugt zumindest Vorlagebilddaten zumindest einer ersten Einzelseite und bevorzugt auch Vorlagebilddaten zumindest einer zweiten Einzelseite aufweisen und die zumindest eine erste Einzelseite und die zumindest eine zweite Einzelseite bevorzugt innerhalb von gespeicherten Daten bevorzugt unter Beibehaltung zumindest ihrer jeweiligen in einer ersten Vorlagerichtung gemessenen absoluten virtuellen Seitenabmessung in Abhängigkeit von auf einen Druckauftrag bezogenen Auftragsdaten und/oder in Abhängigkeit von in zumindest einem Korrekturspeicher hinterlegten Korrekturdaten relativ zueinander zumindest in dieser ersten Vorlagerichtung verschoben werden und/oder zumindest die zumindest eine erste Einzelseite innerhalb von gespeicherten Daten in Abhängigkeit von den Vorlagebilddaten und in Abhängigkeit von auf einen Druckauftrag bezogenen Auftragsdaten und in Abhängigkeit von in zumindest einem Korrekturspeicher hinterlegten Korrekturdaten vor und/oder während der Erzeugung der Ausgabedaten zumindest in der ersten Vorlagerichtung mit einem ersten Streckungsfaktor gestreckt wird, besteht insbesondere darin, dass dadurch passerhaltig und/oder registerhaltig gedruckt werden kann, auch wenn unterschiedliche Druckeinheiten zum Einsatz kommen und/oder sich Abmessungen des Bedruckstoffs zwischen den Druckeinheiten ändern, beispielsweise auf Grund der Einwirkung eines Trockners.

Dieser Vorteil ist insbesondere dann gegeben, wenn wie bevorzugt durch die Streckung der zumindest einen ersten Einzelseite und/oder die Streckung der zumindest einen zweiten Einzelseite und/oder die Streckung des zumindest einen virtuellen Referenzabstands und/oder durch die relative Verschiebung der zumindest einen ersten Einzelseite und der zumindest einen zweiten Einzelseite zueinander in den Vorlagebilddaten zumindest eine Veränderung zumindest einer Abmessung des Bedruckstoffs zumindest teilweise kompensiert wird. Unter einem virtuellen Referenzabstand ist im Vorangegangenen und/oder im Folgenden insbesondere ein Abstand insbesondere innerhalb eines Bildes zu verstehen, das in digital gespeicherter Form in einem Datenspeicher hinterlegt ist.

Ein weiterer Vorteil ergibt sich insbesondere dann, wenn wie bevorzugt der Bedruckstoff entlang eines Transportwegs mittels der zumindest einen ersten Druckeinheit mit zumindest einem der unterschiedlichen Beschichtungsmittel beschichtet wird und danach mittels zumindest eines Trockners getrocknet wird und danach mittels der zumindest einen zweiten Druckeinheit mit zumindest einem anderen der zumindest fünf, insbesondere zumindest sechs, weiter bevorzugt zumindest sieben und noch weiter bevorzugt zumindest acht unterschiedlichen Beschichtungsmittel beschichtet wird. Insbesondere kann dann bevorzugt verhindert werden, dass ungetrocknetes Beschichtungsmittel das Druckerzeugnis und/oder die Druckmaschine verschmutzt und wird bevorzugt ein sauberes und registerhaltiges und/oder passerhaltiges Druckbild erreicht. Dafür ist bevorzugt entlang des für zumindest einen zu bedruckenden Bedruckstoff vorgesehenen Transportwegs durch die Druckmaschine zumindest eine erste Druckeinheit und zumindest ein erster Trockner und zumindest eine zweite Druckeinheit angeordnet.

Ein weiterer Vorteil ergibt sich insbesondere dann, wenn wie bevorzugt zumindest eines der zumindest fünf, insbesondere zumindest sechs, weiter bevorzugt zumindest sieben und noch weiter bevorzugt zumindest acht unterschiedlichen Beschichtungsmittel eine Druckfarbe in zumindest einer der Farben Cyan und/oder Magenta und/oder Gelb und/oder Schwarz ist und/oder eine weiße Druckfarbe ist und/oder ein durchsichtiges Beschichtungsmittel ist und/oder ein Beschichtungsmittel der Farbe Gold und/oder Silber ist und/oder Eisenoxid-Partikel und/oder eine positive oder negative magnetische Suszeptibilität und/oder ferromagnetische oder ferrimagnetische oder antiferromagnetische Eigenschaften aufweist und/oder ein wasserbasiertes Beschichtungsmittel ist und/oder zumindest ein organisches Lösungsmittel aufweist und/oder mittels UV-Licht vernetzbar ist und/oder stromleitfähig und/oder nur unter UV-Licht sichtbar ist, weil dadurch bevorzugt eine Vielzahl unterschiedlicher und/oder anspruchsvoller und/oder fälschungssicherer und/oder funktionaler Druckbilder realisierbar ist.

Wenn im Vorangegangenen und/oder im Folgenden von gespeicherten Daten die Rede ist, so sind darunter bevorzugt insbesondere Bilddaten und/oder Vorlagebilddaten und/oder geometrisch modifizierte Vorlagebilddaten und/oder Rasterdaten und/oder geometrisch modifizierte Rasterdaten und/oder Ausgabedaten und/oder Ansteuerdaten zu verstehen. Wenn im Vorangegangenen und/oder im Folgenden davon die Rede ist, dass Bilddaten und/oder Vorlagebilddaten und/oder geometrisch modifizierte Vorlagebilddaten und/oder Rasterdaten und/oder geometrisch modifizierte Rasterdaten und/oder Ausgabedaten und/oder Ansteuerdaten bewegt und/oder gestreckt und/oder verschoben und/oder geometrisch modifiziert werden, und/oder dass Einzelseiten und/oder Gesamtdruckbilder innerhalb von gespeicherten Daten bewegt und/oder gestreckt und/oder verschoben und/oder geometrisch modifiziert werden, so ist darunter insbesondere zu verstehen, dass die gespeicherten Daten, insbesondere Bilddaten und/oder Vorlagebilddaten und/oder geometrisch modifizierte Vorlagebilddaten und/oder Rasterdaten und/oder geometrisch modifizierte Rasterdaten und/oder Ausgabedaten und/oder Ansteuerdaten derart verändert werden, dass entsprechende grafische Bestandteile eines durch diese gespeicherten Daten, insbesondere Bilddaten und/oder Vorlagebilddaten und/oder geometrisch modifizierte Vorlagebilddaten und/oder Rasterdaten und/oder geometrisch modifizierte Rasterdaten und/oder Ausgabedaten und/oder Ansteuerdaten definierten Bildes nach der Veränderung als entsprechend gestreckte und/oder verschobene und/oder geometrisch modifizierte grafische Bestandteile des danach durch diese entsprechend veränderten gespeicherten Daten, insbesondere Bilddaten und/oder Vorlagebilddaten und/oder geometrisch modifizierte Vorlagebilddaten und/oder Rasterdaten und/oder geometrisch modifizierte Rasterdaten und/oder Ausgabedaten und/oder Ansteuerdaten definierten Bildes definiert sind. Insbesondere ist nicht darunter zu verstehen, dass den gespeicherten Daten, insbesondere Bilddaten und/oder Vorlagebilddaten und/oder geometrisch modifizierte Vorlagebilddaten und/oder Rasterdaten und/oder geometrisch modifizierte Rasterdaten und/oder Ausgabedaten und/oder Ansteuerdaten eine zumindest teilweise andere physikalische Speicherbelegung zugeordnet wird, wobei dennoch nicht auszuschließen ist, dass eine Veränderung der physikalischen Speicherbelegung erfolgt.

Ausführungsbeispiele der Erfindung sind in den Zeichnungen dargestellt und werden im Folgenden näher beschrieben.

Es zeigen:

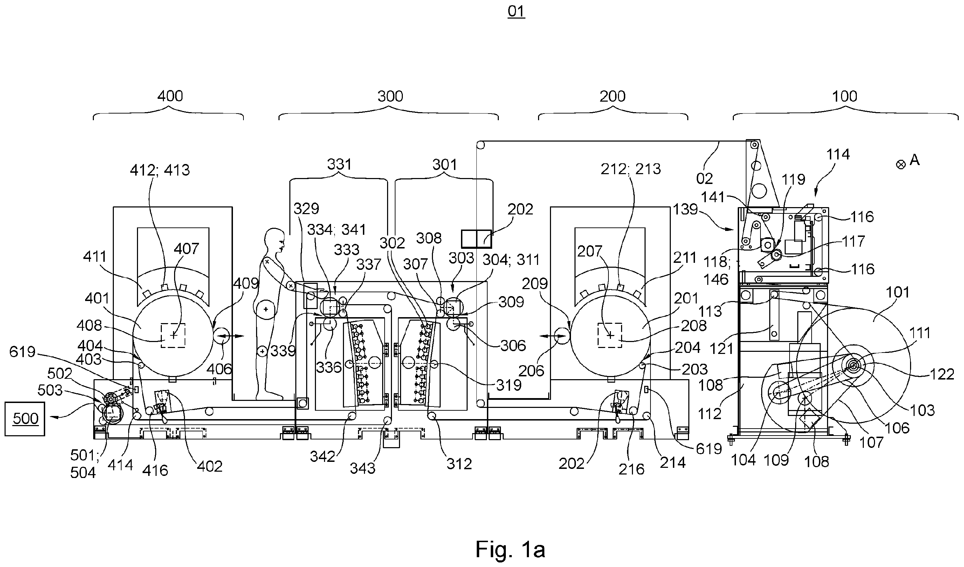

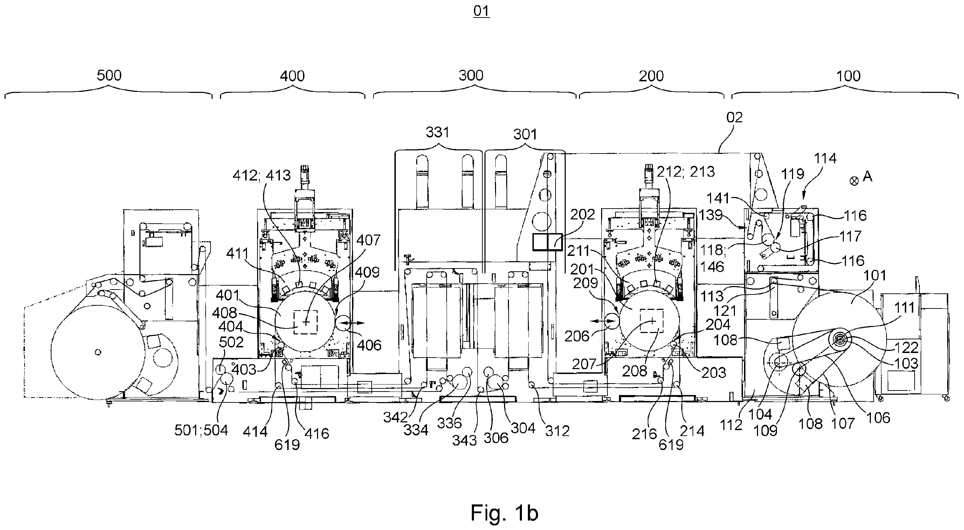

- Fig. 1 a: eine schematische Darstellung einer Druckmaschine;
- Fig. 1b: eine schematische Darstellung einer Druckmaschine mit alternativer Bahnführung;

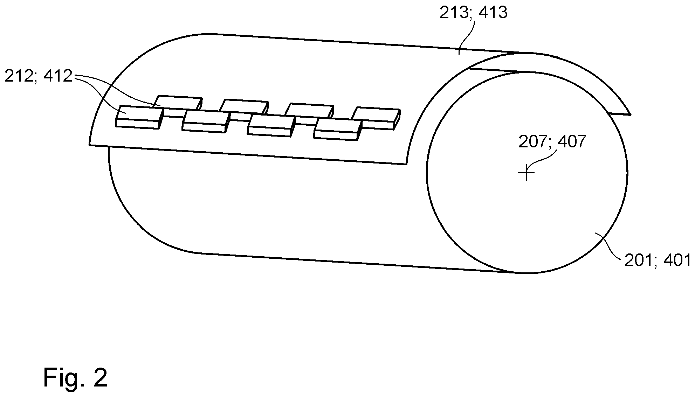

- Fig. 2: eine schematische Darstellung eines Teils einer Druckeinheit mit einer Doppelreihe von Druckköpfen;

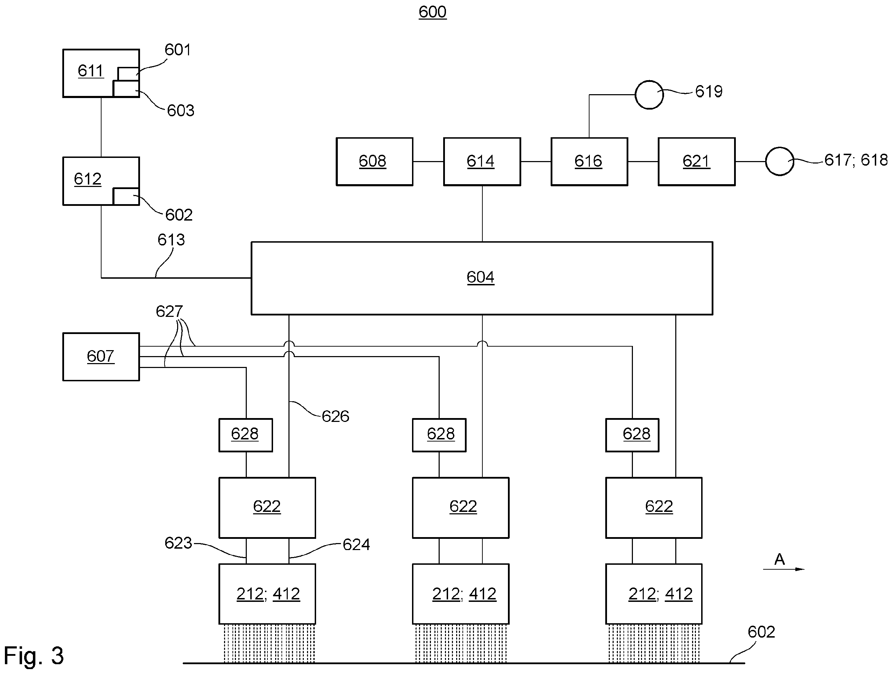

- Fig. 3: eine schematische Darstellung eines Teils einer Druckdatenverarbeitungseinrichtung;

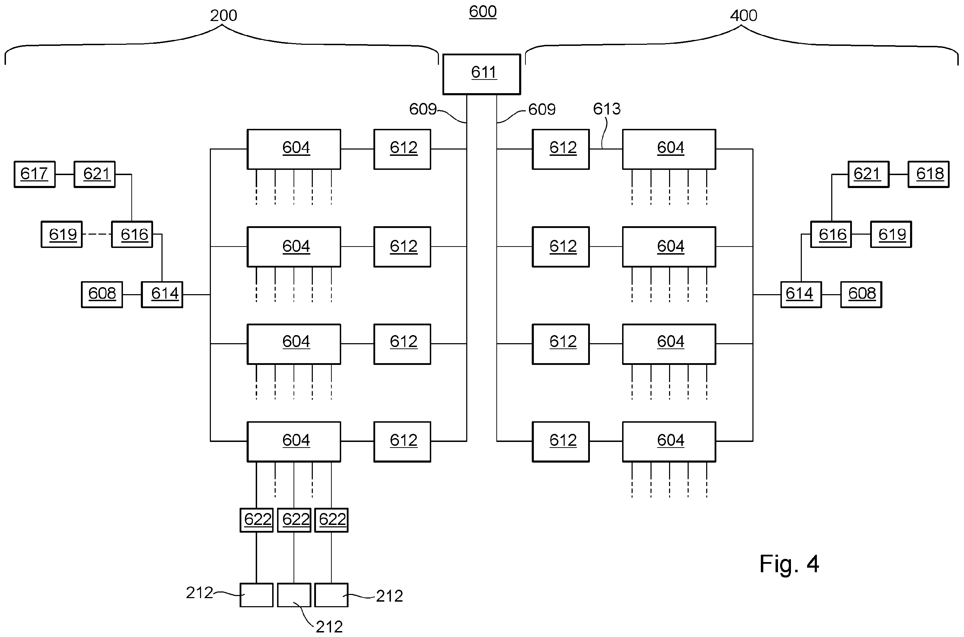

- Fig. 4: eine schematische Darstellung eines Teils einer Druckdatenverarbeitungseinrichtung, wobei unterbrochene Linien eine Vielzahl von Druckkopfsteuerungen und Druckköpfen andeuten;

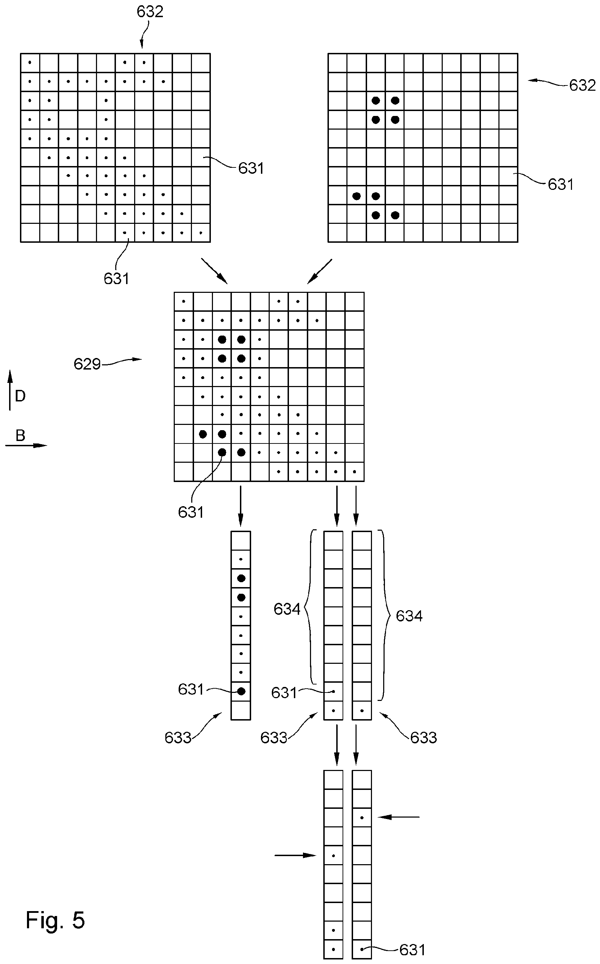

- Fig. 5: eine schematische Darstellung von Teilbilddaten, beispielsweise innerhalb von Rasterdaten, wobei zusätzliche Bildpunkte eingefügt werden;

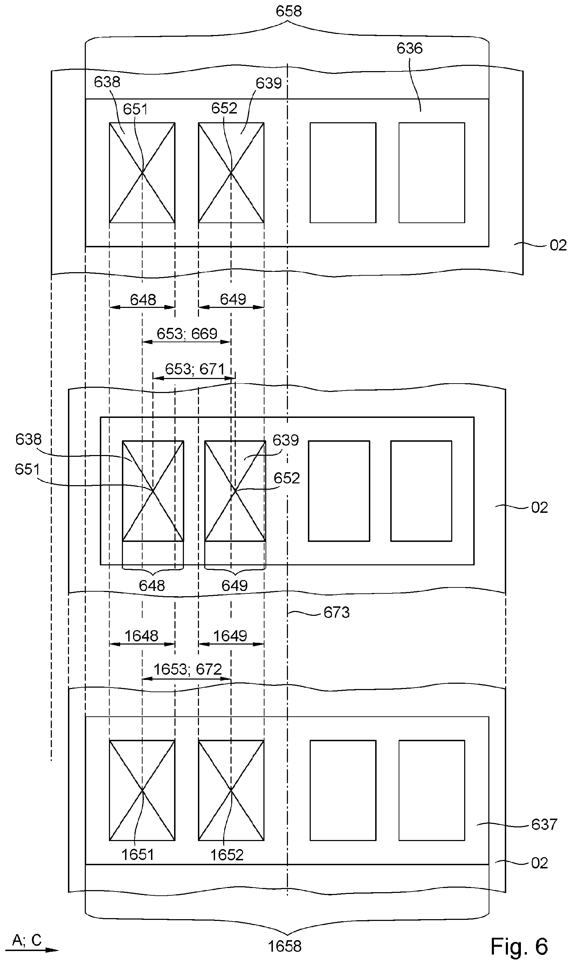

- Fig. 6: eine schematische Darstellung von bedruckten Bereichen eines Bedruckstoffs, wobei ein oberer Teil der Darstellung einen ersten Bereich des Bedruckstoffs und eine erste Signatur aufweist, die von einer ersten Druckeinheit gedruckt wurde und noch nicht getrocknet wurde und wobei ein mittlerer Teil der Darstellung den ersten Bereich nach einer Trocknung zeigt und wobei ein unterer Teil der Darstellung eine zweite Signatur zeigt, die auf den ersten Bereich des Bedruckstoffs auf einer Vorder- oder Rückseite aufgetragen wurde und wobei eine Veränderung einer Abmessung des Bedruckstoffs nicht berücksichtigt wurde;

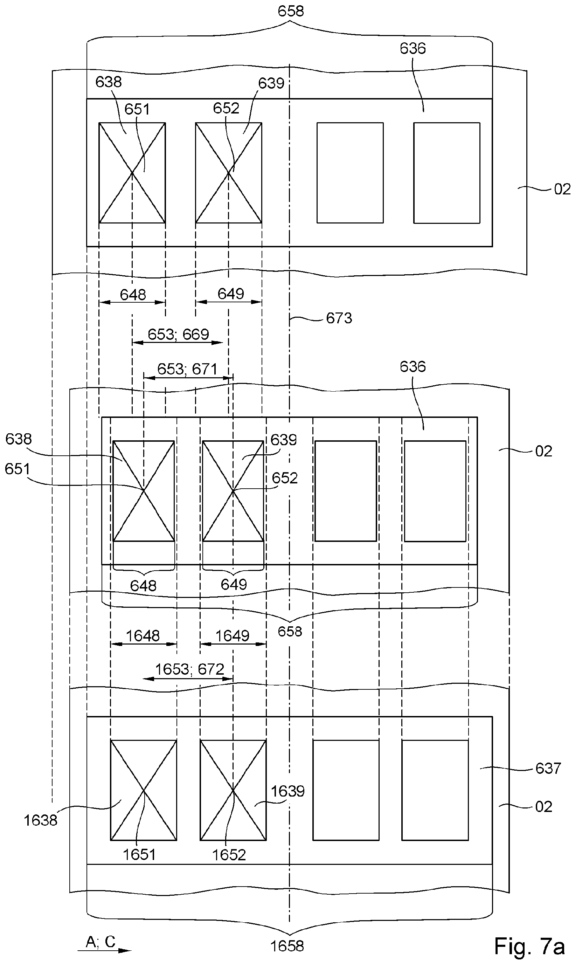

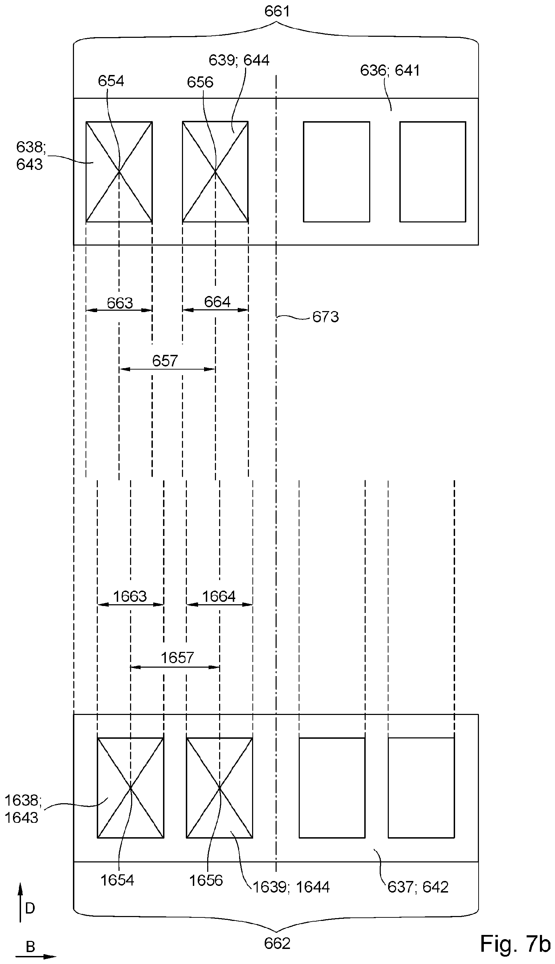

- Fig. 7a: eine schematische Darstellung von bedruckten Bereichen eines Bedruckstoffs, wobei ein oberer Teil der Darstellung einen ersten Bereich des Bedruckstoffs und eine erste Signatur aufweist, die von einer ersten Druckeinheit gedruckt wurde und noch nicht getrocknet wurde und wobei ein mittlerer Teil der Darstellung den ersten Bereich nach einer Trocknung zeigt und wobei ein unterer Teil der Darstellung eine zweite Signatur zeigt, die auf den ersten Bereich des Bedruckstoffs auf einer Vorder- oder Rückseite aufgetragen wurde und wobei eine Veränderung einer Abmessung des Bedruckstoffs durch Verschiebung von Einzelseiten berücksichtigt wurde;
- Fig. 7b: eine schematische Darstellung zweier bevorzugt mittels unterschiedlicher Druckeinheiten zu druckender Gesamtdruckbilder in ihren Vorlagebilddaten, wobei Einzelseiten des oberen Gesamtdruckbilds gegenüber Einzelseiten des unteren Gesamtdruckbilds verschoben sind;

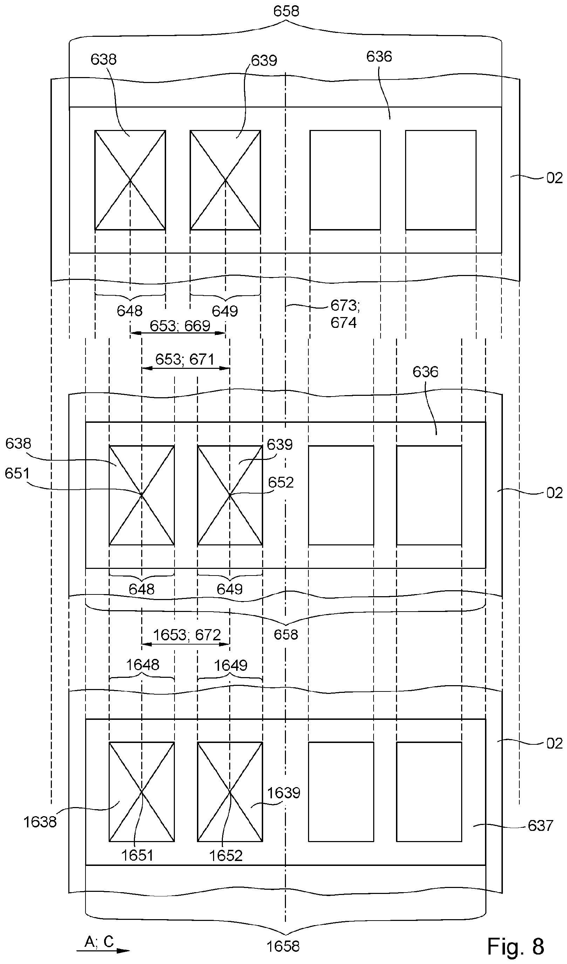

- Fig. 8: eine schematische Darstellung von bedruckten Bereichen eines Bedruckstoffs, wobei ein oberer Teil der Darstellung einen ersten Bereich des Bedruckstoffs und eine erste Signatur aufweist, die von einer ersten Druckeinheit gedruckt wurde und noch nicht getrocknet wurde und wobei ein mittlerer Teil der Darstellung den ersten Bereich nach einer Trocknung zeigt und wobei ein unterer Teil der Darstellung eine zweite Signatur zeigt, die auf den ersten Bereich des Bedruckstoffs auf einer Vorder- oder Rückseite aufgetragen wurde und wobei eine Veränderung einer Abmessung des Bedruckstoffs durch Streckung des ersten Gesamtdruckbilds berücksichtigt wurde;
- Fig. 9a: eine schematische Darstellung einer ersten Weiterverarbeitung von Korrekturdaten und/oder Auftragsdaten und/oder Vorlagebilddaten;
- Fig. 9b: eine schematische Darstellung einer alternativen zweiten Weiterverarbeitung von Korrekturdaten und/oder Auftragsdaten und/oder Vorlagebilddaten;

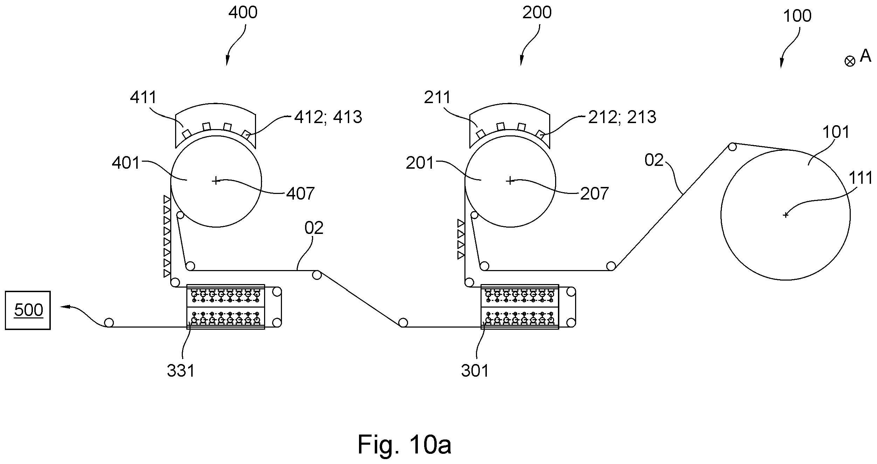

- Fig. 10a: eine schematische Darstellung einer Druckmaschine mit einer Bahnführung für einen Bedruck mittels mehrerer Druckeinheiten auf eine gleiche Seite eines Bedruckstoffs;

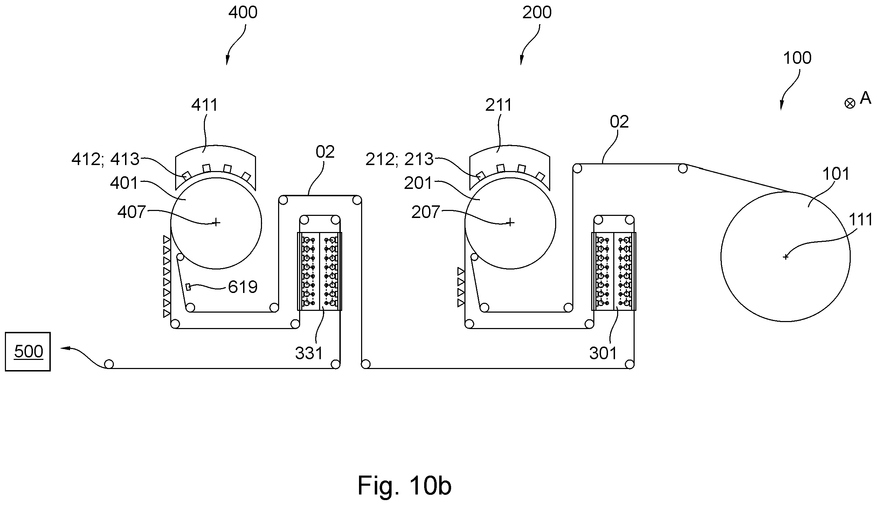

- Fig. 10b: eine schematische Darstellung einer Druckmaschine mit einer alternativen Bahnführung für einen Bedruck mittels mehrerer Druckeinheiten auf eine gleiche Seite eines Bedruckstoffs;

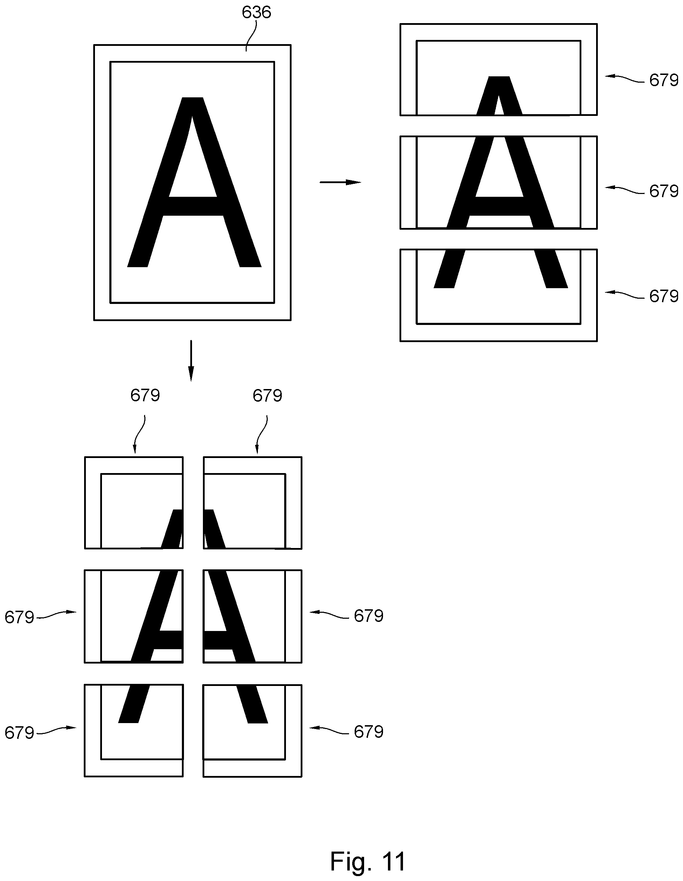

- Fig. 11: eine schematische Darstellung eines Gesamtdruckbilds und unterschiedlicher möglicher Aufteilungen in Abschnitte.

Eine Druckmaschine 01 weist zumindest eine Bedruckstoffquelle 100, zumindest eine erste Druckeinheit 200, bevorzugt zumindest einen ersten Trockner 301, bevorzugt zumindest eine zweite Druckeinheit 400 und bevorzugt zumindest einen zweiten Trockner 331 und bevorzugt zumindest eine Nachbearbeitungsvorrichtung 500 auf. Die Druckmaschine 01 ist zudem bevorzugt als Tintenstrahldruckmaschine 01 ausgebildet. Bevorzugt ist die Druckmaschine 01 als Rollen-Druckmaschine 01 ausgebildet, weiter bevorzugt als Rollen-Tintenstrahldruckmaschine 01. Die Druckmaschine 01 ist beispielsweise als Rotationsdruckmaschine 01 ausgebildet, beispielsweise als RollenRotationsdruckmaschine 01, insbesondere Rollen-Rotations-Tintenstrahldruckmaschine 01. Im Fall einer Rollen-Druckmaschine 01 ist die Bedruckstoffquelle 100 als Rollenabspulvorrichtung 100 ausgebildet. Im Fall einer Bogendruckmaschine oder Bogen-Rotationsdruckmaschine ist die Bedruckstoffquelle 100 als Bogenanleger ausgebildet. In der Bedruckstoffquelle 100 wird bevorzugt zumindest ein Bedruckstoff 02 ausgerichtet, bevorzugt bezüglich zumindest bezüglich einer Kante dieses Bedruckstoffs 02. In der Rollenabspulvorrichtung 100 einer Rollen-Druckmaschine 01 wird zumindest ein bahnförmiger Bedruckstoff 02, also eine Bedruckstoffbahn 02, beispielsweise eine Papierbahn 02 oder eine Textilbahn 02 oder eine Folie 02, beispielsweise eine Kunststofffolie 02 oder eine Metallfolie 02 von einer Bedruckstoffrolle 101 abgespult und bevorzugt bezüglich ihrer Kanten in einer axialen Richtung A ausgerichtet. Die axiale Richtung A ist bevorzugt eine Richtung A, die sich parallel zu einer Rotationsachse 111 einer Bedruckstoffrolle 101 und/oder zumindest eines Zentralzylinders 201; 401 erstreckt. Ein Transportweg des zumindest einen Bedruckstoffs 02 und insbesondere die Bedruckstoffbahn 02 verläuft im Anschluss an die zumindest eine Bedruckstoffquelle 100 bevorzugt durch die zumindest eine erste Druckeinheit 200, wo der Bedruckstoff 02 und insbesondere die Bedruckstoffbahn 02 bevorzugt mittels zumindest eines Beschichtungsmittels, insbesondere zumindest einer Druckfarbe zumindest einseitig und bevorzugt in Verbindung mit der zumindest einen zweiten Druckeinheit 400 bevorzugt zweiseitig mit einem Druckbild versehen wird.

Nach einem Passieren der zumindest einen ersten Druckeinheit 200 durchläuft der Transportweg des Bedruckstoffs 02 und insbesondere der Bedruckstoffbahn 02 bevorzugt den zumindest einen ersten Trockner 301, um die aufgetragene Druckfarbe zu trocknen. Unter Druckfarbe ist im Vorangegangenen und im Folgenden allgemein ein Beschichtungsmittel zu verstehen, insbesondere auch ein Lack. Bevorzugt ist der zumindest eine erste Trockner 301 Bestandteil einer Trocknereinheit 300. Nach dem Passieren des zumindest einen ersten Trockners 301 und bevorzugt der zumindest einen zweiten Druckeinheit 400 und/oder des zumindest einen zweiten Trockners 331 wird der Bedruckstoff 02 und insbesondere die Bedruckstoffbahn 02 bevorzugt der zumindest einen Nachbearbeitungsvorrichtung 500 zugeführt und dort weiter verarbeitet. Die zumindest eine Nachbearbeitungsvorrichtung 500 ist beispielsweise als zumindest eine Falzvorrichtung 500 und/oder als eine Aufwickelvorrichtung 500 und/oder als zumindest eine Planauslage 500 ausgebildet. In der zumindest einen Falzvorrichtung 500 wird der bevorzugt zweiseitig bedruckte Bedruckstoff 02 bevorzugt zu einzelnen Druckerzeugnissen weiterverarbeitet.

Bevorzugt ist entlang des Transportwegs des Bedruckstoffs 02 und insbesondere der Bedruckstoffbahn 02 durch die Druckmaschine 01 nach der zumindest einen ersten Druckeinheit 200 bevorzugt zumindest der erste Trockner 301 und/oder nach dem zumindest einen ersten Trockner 301 bevorzugt zumindest die zweite Druckeinheit 400 und/oder nach der zumindest einen zweiten Druckeinheit 400 bevorzugt der zumindest eine zweite Trockner 331 und/oder nach dem zumindest einen zweiten Trockner 331 bevorzugt die zumindest eine Nachbearbeitungsvorrichtung 500 angeordnet. Dadurch ist sichergestellt, dass ein beidseitiger Bedruck des Bedruckstoffs 02 und insbesondere der Bedruckstoffbahn 02 in hoher Qualität ermöglicht wird.

Im Folgenden wird eine Rollen-Druckmaschine 01 näher beschrieben. Entsprechende Einzelheiten lassen sich aber genauso auf andere Druckmaschinen 01, beispielsweise Bogen-Druckmaschinen übertragen, sofern sie dazu nicht im Widerspruch stehen. Bedruckstoffrollen 101, die bevorzugt in der Rollenabspulvorrichtung 100 zum Einsatz kommen, weisen bevorzugt jeweils eine Hülse auf, auf die der bahnförmige Bedruckstoff 02 für einen Einsatz in der Rollen-Druckmaschine 01 aufgewickelt ist. Die Bedruckstoffbahn 02 weist bevorzugt eine Breite von 700 mm bis 2000 mm auf, kann aber auch eine beliebig kleinere oder bevorzugt größere Breite aufweisen. In der Rollenabspulvorrichtung 100 ist zumindest eine Bedruckstoffrolle 101 rotierbar angeordnet. In einer bevorzugten Ausführungsform ist die Rollenabspulvorrichtung 100 für die Aufnahme einer Bedruckstoffrolle 101 geeignet ausgebildet, weist also nur eine Speicherposition für eine Bedruckstoffrolle 101 auf. In einer anderen Ausführungsform ist die Rollenabspulvorrichtung 100 als Rollenwechsler 100 ausgebildet und weist Speicherpositionen für zumindest zwei Bedruckstoffrollen 101 auf. Bevorzugt ist der Rollenwechsler 100 derart ausgebildet, dass er einen fliegenden Rollenwechsel ermöglicht, also ein Verbinden einer ersten Bedruckstoffbahn 02 einer aktuell verarbeiteten Bedruckstoffrolle 101 mit einer zweiten Bedruckstoffbahn 02 einer nachfolgend zu verarbeitenden Bedruckstoffrolle 101, während sowohl die aktuell verarbeitete Bedruckstoffrolle 101, als auch die nachfolgend zu verarbeitende Bedruckstoffrolle 101 rotieren.

Eine Arbeitsbreite der Druckmaschine 01 ist eine Abmessung, die sich bevorzugt orthogonal zu dem vorgesehenen Transportweg des Bedruckstoffs 02 durch die zumindest eine erste Druckeinheit 200 erstreckt, weiter bevorzugt in der axialen Richtung A. Die Arbeitsbreite der Druckmaschine 01 entspricht bevorzugt einer maximalen Breite, die ein Bedruckstoff aufweisen darf, um noch mit der Druckmaschine 01 verarbeitet werden zu können, also einer maximalen mit der Druckmaschine 01 verarbeitbaren Bedruckstoffbreite.

Die Rollenabspulvorrichtung 100 weist bevorzugt je Speicherposition zumindest eine Rollenhaltevorrichtung 103 auf, die beispielsweise als Spannvorrichtung 103 und/oder als Klemmvorrichtung 103 ausgebildet ist. Bevorzugt stellt die zumindest eine Rollenhaltevorrichtung 103 zumindest einen ersten motorgetriebenen Rotationskörper 103 dar. Die zumindest eine Rollenhaltevorrichtung 103 dient einer rotierbaren Befestigung zumindest einer Bedruckstoffrolle 101. Die zumindest eine Rollenhaltevorrichtung 103 weist bevorzugt zumindest einen Antriebsmotor 104 auf.

Bevorzugt weist die Rollenabspulvorrichtung 100 entlang des Transportwegs der Bedruckstoffbahn 02 nach der Rollenhaltevorrichtung 103 eine bevorzugt an einem Tänzerhebel 121 auslenkbar angeordnete Tänzerwalze 113 und/oder einen ersten Bahnkantenausrichter 114 und/oder ein, einen von einer Zugwalze 118 und einem Zugpresseur 117 gebildeten Einzugspalt 119 und eine als erste Messwalze 141, insbesondere Einzugmesswalze 141 ausgebildete erste Messeinrichtung 141 aufweisendes Einzugwerk 139 auf. Diese Zugwalze 118 weist bevorzugt einen eigenen, als Zugantriebsmotor 146 ausgebildeten Antriebsmotor 146 auf, der bevorzugt mit einer Maschinensteuerung verbunden ist. Die Zugwalze 118 stellt bevorzugt zumindest einen zweiten motorgetriebenen Rotationskörper 118 dar. Mittels der Tänzerwalze 113 ist eine Bahnspannung einstellbar und in Grenzen haltbar und/oder wird die Bahnspannung bevorzugt in Grenzen gehalten. Gegebenenfalls weist die Rollenabspulvorrichtung 100 eine Klebe- und Schneideinrichtung auf, mittels der ein Rollenwechsel fliegend, d. h. ohne Stillstand der Bedruckstoffbahn 02 von statten gehen kann.

Dem ersten Bahnkantenausrichter 114 nachfolgend ist bevorzugt das Einzugwerk 139 angeordnet. Als Bestandteil des Einzugwerks 139 ist bevorzugt die zumindest die Zugwalze 118 angeordnet, mit der bevorzugt der Zugpresseur 117 zusammen den Einzugspalt 119 bildend angeordnet ist. Der Einzugspalt 119 dient einer Regelung einer Bahnspannung und/oder einem Transport des Bedruckstoffs 02. Bevorzugt ist mittels der zumindest einen als erste Messwalze 141 ausgebildeten ersten Messeinrichtung 141 die Bahnspannung messbar. Die zumindest eine als erste Messwalze 141 ausgebildete erste Messeinrichtung 141 ist in Transportrichtung der Bedruckstoffbahn 02 bevorzugt vor dem Einzugspalt 119 angeordnet.

Eine erste Druckeinheit 200 ist der Rollenabspulvorrichtung 100 bezüglich des Transportwegs des Bedruckstoffs 02 nachgeordnet. Die erste Druckeinheit 200 weist zumindest einen ersten Druckzentralzylinder 201 oder kurz Zentralzylinder 201 auf. Wenn im Folgenden von einem Zentralzylinder 201 die Rede ist, so ist immer ein Druckzentralzylinder 201 gemeint. Der zumindest eine erste Zentralzylinder 201 stellt bevorzugt zumindest einen dritten motorgetriebenen Rotationskörper 201 dar. Die Bedruckstoffbahn 02 umschlingt im Druckbetrieb den ersten Zentralzylinder 201 zumindest teilweise. Dabei beträgt ein Umschlingungswinkel bevorzugt zumindest 180° und weiter bevorzugt zumindest 270°. Der Umschlingungswinkel ist dabei der in Umfangsrichtung gemessene Winkel einer Zylindermantelfläche des ersten Zentralzylinders 201, entlang dem der Bedruckstoff 02 und insbesondere die Bedruckstoffbahn 02 mit dem ersten Zentralzylinder 201 in Kontakt steht. Dementsprechend stehen im Druckbetrieb in Umfangsrichtung gesehen bevorzugt zumindest 50 % und weiter bevorzugt zumindest 75 % der Zylindermantelfläche des ersten Zentralzylinders 201 mit der Bedruckstoffbahn 02 in Kontakt. Das bedeutet, dass eine, als Kontaktfläche zwischen dem zumindest einen ersten Zentralzylinder 201 und dem bevorzugt als Bedruckstoffbahn 02 ausgebildeten Bedruckstoff 02 vorgesehene Teilfläche einer Zylindermantelfläche des zumindest einen ersten Zentralzylinders 201 den Umschlingungswinkel um den zumindest einen ersten Zentralzylinder 201 aufweist, der bevorzugt zumindest 180° und weiter bevorzugt zumindest 270° beträgt.

Entlang des Transportwegs der Bedruckstoffbahn 02 vor dem ersten Zentralzylinder 201 der ersten Druckeinheit 200 ist bevorzugt zumindest eine bevorzugt als zweite Messwalze 216 ausgebildete zweite Messeinrichtung 216 zur Messung der Bahnspannung angeordnet. Entlang des Transportwegs der Bedruckstoffbahn 02 vor dem ersten Zentralzylinder 201 der ersten Druckeinheit 200 ist bevorzugt zumindest eine erste Bedruckstoffvorbereitungsvorrichtung 202 oder Bahnvorbereitungsvorrichtung 202 auf die Bedruckstoffbahn 02 einwirkend und/oder auf den vorgesehenen Transportweg der Bedruckstoffbahn 02 ausgerichtet angeordnet. Die erste Bedruckstoffvorbereitungsvorrichtung 202 ist zumindest einer ersten Seite und bevorzugt beiden Seiten der Bedruckstoffbahn 02 zugeordnet und insbesondere zumindest auf diese erste Seite der Bedruckstoffbahn 02 und bevorzugt auf beide Seiten der Bedruckstoffbahn 02 einwirkend und/oder einwirkfähig ausgerichtet. Bevorzugt ist entlang des Transportwegs der Bedruckstoffbahn 02 zwischen dem ersten Bahnkantenausrichter 114 und dem zumindest einen ersten Zentralzylinder 201 der von der Zugwalze 118 und dem Zugpresseur 117 gebildete Einzugspalt 119 angeordnet.

Die zumindest eine erste Bedruckstoffvorbereitungsvorrichtung 202 ist in einer bevorzugten Ausführungsform entlang des Transportwegs der Bedruckstoffbahn 02 nach dem Einzugspalt 119 und vor dem ersten Zentralzylinder 201 auf die Bedruckstoffbahn 02 einwirkend und/oder auf den Transportweg der Bedruckstoffbahn 02 ausgerichtet angeordnet. Bevorzugt ist die zumindest eine erste Bedruckstoffvorbereitungsvorrichtung 202 als zumindest eine Bedruckstoffreinigungsvorrichtung 202 oder Bahnreinigungsvorrichtung 202 ausgebildet. Alternativ oder zusätzlich ist die zumindest eine Bedruckstoffvorbereitungsvorrichtung 202 als zumindest eine Beschichtungsvorrichtung 202 ausgebildet insbesondere für wasserbasierte Beschichtungsmittel. Eine solche Beschichtung dient beispielsweise einer Grundierung (Primer). Alternativ oder zusätzlich ist die zumindest eine Bedruckstoffvorbereitungsvorrichtung 202 als zumindest eine Korona-Vorrichtung 202 und/oder Entladungsvorrichtung 202 zur Korona-Behandlung des Bedruckstoffs 02 ausgebildet.

Bevorzugt ist eine als erste Umlenkwalze 203 ausgebildete Walze 203 der ersten Druckeinheit 200 bezüglich ihrer Rotationsachse parallel zu dem ersten Zentralzylinder 201 angeordnet. Diese erste Umlenkwalze 203 ist bevorzugt von dem ersten Zentralzylinder 201 beabstandet angeordnet. Insbesondere existiert bevorzugt ein erster Zwischenraum 204 zwischen der ersten Umlenkwalze 203 und dem ersten Zentralzylinder 201, der größer ist als eine Dicke der Bedruckstoffbahn 02. Unter der Dicke der Bedruckstoffbahn 02 ist dabei eine kleinste Abmessung der Bedruckstoffbahn 02 zu verstehen. Die Bedruckstoffbahn 02 umschlingt bevorzugt einen Teil der ersten Umlenkwalze 203 und wird von dieser derart umgelenkt, dass der Transportweg der Bedruckstoffbahn 02 in dem ersten Zwischenraum 204 sowohl tangential zu der ersten Umlenkwalze 203 als auch tangential zu dem ersten Zentralzylinder 201 verläuft. Eine Mantelfläche der Umlenkwalze 203 besteht dabei bevorzugt aus einem vergleichsweise unelastischen Material, weiter bevorzugt einem Metall, noch weiter bevorzugt Stahl oder Aluminium.

Bevorzugt ist zumindest ein, als erster Presseur 206 ausgebildeter erster Zylinder 206 in der ersten Druckeinheit 200 angeordnet. Der erste Presseur 206 weist bevorzugt eine Mantelfläche auf, die aus einem elastischen Material, beispielsweise einem Elastomer besteht. Der erste Presseur 206 ist bevorzugt mittels eines Anstellantriebs an den ersten Zentralzylinder 201 anstellbar und/oder von diesem abstellbar angeordnet. In einem an den ersten Zentralzylinder 201 angestellten Zustand bildet der erste Presseur 206 bevorzugt zusammen mit dem ersten Zentralzylinder 201 einen ersten Presseurspalt 209.

Die Bedruckstoffbahn 02 durchläuft bevorzugt im Druckbetrieb den ersten Presseurspalt 209. Durch die erste Umlenkwalze 203 und/oder bevorzugt durch den ersten Presseur 206 wird die Bedruckstoffbahn 02 bevorzugt flächig und weiter bevorzugt in eindeutiger und bekannter Lage an den ersten Zentralzylinder 201 angelegt. Bevorzugt steht abgesehen von höchstens dem ersten Presseur 206 und/oder gegebenenfalls weiteren Presseuren kein weiterer Rotationskörper, insbesondere keine weitere Walze und kein weiterer Zylinder mit dem zumindest einen ersten Zentralzylinder 201 in Kontakt. Bevorzugt ist die Rotationsachse des ersten Presseurs 206 unterhalb der Rotationsachse 207 des ersten Zentralzylinders 201 angeordnet.

Der erste Zentralzylinder 201 weist bevorzugt einen eigenen, dem ersten Zentralzylinder 201 zugeordneten ersten Antriebsmotor 208 auf, der bevorzugt als Elektromotor 208 ausgebildet ist und der weiter bevorzugt als Direktantrieb 208 und/oder Einzelantrieb 208 des ersten Zentralzylinders 201 ausgebildet ist. Unter einem Direktantrieb 208 ist dabei ein Antriebsmotor 208 zu verstehen, der ohne Zwischenschaltung weiterer mit dem Bedruckstoff 02 in Kontakt stehender Rotationskörper mit dem zumindest einen ersten Zentralzylinder 201 in Drehmoment übertragender und/oder übertragfähiger Verbindung steht. Unter einem Einzelantrieb 208 ist dabei ein Antriebsmotor 208 zu verstehen, der als Antriebsmotor 208 ausschließlich des zumindest einen ersten Zentralzylinders 201 ausgebildet ist. Der erste Antriebsmotor 208 des ersten Zentralzylinders 201 weist bevorzugt zumindest einen Permanentmagnet auf, der weiter bevorzugt Teil eines Rotors des ersten Antriebsmotors 208 des ersten Zentralzylinders 201 ist.

An dem ersten Antriebsmotor 208 des ersten Zentralzylinders 201 und/oder an dem ersten Zentralzylinder 201 selbst ist bevorzugt ein erster Drehwinkelsensor 617 angeordnet, der eine Drehwinkellage des ersten Antriebsmotors 208 und/oder des ersten Zentralzylinders 201 selbst messend und/oder messfähig und an eine übergeordnete Maschinensteuerung sendend und/oder sendefähig ausgebildet ist. Der erste Drehwinkelsensor 617 ist beispielsweise als Drehencoder 617 oder Absolutwertencoder 617 ausgebildet. Mit einem derartigen ersten Drehwinkelsensor 617 ist eine Drehstellung des ersten Antriebsmotors 208 und/oder bevorzugt eine Drehstellung des ersten Zentralzylinders 201 bevorzugt mittels der übergeordneten Maschinensteuerung absolut bestimmbar. Zusätzlich oder alternativ ist der erste Antriebsmotor 208 des ersten Zentralzylinders 201 derart schaltungstechnisch mit der Maschinensteuerung verbunden, dass die Maschinensteuerung aufgrund von von der Maschinensteuerung an den ersten Antriebsmotor 208 des ersten Zentralzylinders 201 vorgegebenen ersten Soll-Daten 617 zu einer Drehstellung des ersten Antriebsmotors 208 jederzeit über die Drehstellung des ersten Antriebsmotors 208 und damit zugleich die Drehstellung des ersten Zentralzylinders 201 informiert ist. Insbesondere ist bevorzugt ein die Drehwinkellage oder Drehstellung des ersten Zentralzylinders 201 und/oder des ersten Antriebsmotors 201 vorgebender Bereich der Maschinensteuerung direkt, insbesondere ohne zwischengeschalteten Sensor, mit einem zumindest einen Druckkopf 212 der ersten Druckeinheit 200 steuernden Bereich der Maschinensteuerung verbunden.

Innerhalb der ersten Druckeinheit 200 ist zumindest ein erstes Druckwerk 211 angeordnet. Das zumindest eine erste Druckwerk 211 ist bevorzugt in Rotationsrichtung des ersten Zentralzylinders 201 und damit entlang des Transportwegs der Bedruckstoffbahn 02 nach dem ersten Presseur 206 bevorzugt auf den zumindest einen ersten Zentralzylinder 201 einwirkend und/oder einwirkfähig und/oder ausgerichtet und/oder ausrichtbar angeordnet. Das zumindest eine erste Druckwerk 211 ist als ein erstes Tintenstrahldruckwerk 211 ausgebildet und wird auch erstes Ink-Jet-Druckwerk 211 genannt. Das erste Druckwerk 211 weist bevorzugt zumindest einen Düsenbalken 213 und bevorzugt mehrere Düsenbalken 213 auf. Das zumindest eine erste Druckwerk 211 und damit die zumindest eine erste Druckeinheit 200 weist bevorzugt den zumindest einen ersten Druckkopf 212 auf, der als Tintenstrahldruckkopf 212 ausgebildet ist. Bevorzugt weist der zumindest eine Düsenbalken 213 jeweils zumindest einen Druckkopf 212 und bevorzugt jeweils mehrere Druckköpfe 212 auf. Jeder Druckkopf 212 weist bevorzugt eine Mehrzahl von Düsen auf, aus denen Beschichtungsmitteltropfen, insbesondere Druckfarbetropfen ausgestoßen werden und/oder ausstoßbar sind. Ein Düsenbalken 213 ist dabei ein Bauteil, das sich bevorzugt über zumindest 80 % und weiter bevorzugt zumindest 100 % der Arbeitsbreite der Druckmaschine 01 erstreckt und als Träger des zumindest einen Druckkopfs 212 dient. Bevorzugt ist eine axiale Länge des Ballens des zumindest einen ersten Zentralzylinders 201 zumindest so groß wie die Arbeitsbreite der Druckmaschine 01. Dabei ist ein einziger oder sind mehrere Düsenbalken 213 je Druckwerk 211 angeordnet. Jeder Düse ist bevorzugt ein eindeutig festgelegter Zielbereich auf die Richtung A der Breite der Bedruckstoffbahn 02 und bevorzugt auf die Richtung A insbesondere der Rotationsachse 207 des zumindest einen ersten Zentralzylinders 201 bezogen zugeordnet. Bevorzugt ist jeder Zielbereich einer Düse insbesondere bezogen auf die Umfangsrichtung des zumindest einen ersten Zentralzylinders 201 zumindest in dem Druckbetrieb eindeutig festgelegt. Insbesondere ist ein Zielbereich einer Düse derjenige insbesondere im Wesentlichen geradlinige Raumbereich, der sich in einer Ausstoßrichtung dieser Düse von dieser Düse aus erstreckt.

Der zumindest eine erste Düsenbalken 213 erstreckt sich bevorzugt orthogonal zu dem Transportweg des Bedruckstoffs 02 über die Arbeitsbreite der Druckmaschine 01. Der zumindest eine Düsenbalken 213 weist bevorzugt zumindest eine Reihe von Düsen auf. Die zumindest eine Reihe von Düsen weist in der axialen Richtung A gesehen bevorzugt über die gesamte Arbeitsbreite der Druckmaschine 01 und/oder Breite des Ballens des zumindest einen ersten Zentralzylinders 201 in regelmäßigen Abständen Düsenöffnungen auf. In einer Ausführungsform ist dazu ein einziger durchgehender Druckkopf 212 angeordnet, der sich in der axialen Richtung A über die gesamte Arbeitsbreite der Druckmaschine 01 und/oder die gesamte Breite des Ballens des zumindest einen ersten Zentralzylinders 201 erstreckt. Dabei ist die zumindest eine Reihe von Düsen bevorzugt als zumindest eine lineare, sich über die ganze Breite der Bedruckstoffbahn 02 in der axialen Richtung A erstreckende Aneinanderreihung von einzelnen Düsen ausgebildet. In einer anderen, bevorzugten Ausführungsform sind in der axialen Richtung A nebeneinander mehrere Druckköpfe 212 an dem zumindest einen Düsenbalken 213 angeordnet. Da üblicherweise solche einzelnen Druckköpfe 212 nicht bis zu einem Rand ihres Gehäuses mit Düsen versehen sind, sind bevorzugt zumindest zwei und weiter bevorzugt genau zwei sich in der axialen Richtung A erstreckende Reihen von Druckköpfen 212 in Umfangsrichtung des ersten Zentralzylinders 201 versetzt zueinander angeordnet, bevorzugt so, dass in axialer Richtung A aufeinanderfolgende Druckköpfe 212 bevorzugt abwechselnd einer der zumindest zwei Reihen von Druckköpfen 212 angehören, bevorzugt immer abwechselnd einer ersten und einer zweiten von zwei Reihen von Druckköpfen 212. Zwei solche Reihen von Druckköpfen 212 bilden eine Doppelreihe von Druckköpfen 212. Die zumindest eine Reihe von Düsen ist bevorzugt nicht als eine einzige lineare Aneinanderreihung von Düsen ausgebildet, sondern ergibt sich als Summe mehrerer einzelner, weiter bevorzugt zweier, in Umfangsrichtung versetzt zueinander angeordneter Aneinanderreihungen von Düsen.

Weist ein Druckkopf 212 mehrere Düsen auf, so bilden alle Zielbereiche der Düsen dieses Druckkopfs 212 zusammen einen Arbeitsbereich dieses Druckkopfs 212. Arbeitsbereiche von Druckköpfen 212 eines Düsenbalkens 213 und insbesondere einer Doppelreihe von Druckköpfen 212 grenzen in axialer Richtung A gesehen aneinander an und/oder überlappen in der axialen Richtung A gesehen. Auf diese Weise ist auch bei in axialer Richtung A nicht durchgehendem Druckkopf 212 sichergestellt, dass in axialer Richtung A gesehen in regelmäßigen und bevorzugt periodischen Abständen Zielbereiche von Düsen des zumindest einen Düsenbalkens 213 und/oder insbesondere jeder Doppelreihe von Druckköpfen 212 liegen. In jedem Fall erstreckt sich ein gesamter Arbeitsbereich des zumindest einen Düsenbalkens 213 bevorzugt über zumindest 90 % und weiter bevorzugt 100 % der Arbeitsbreite der Druckmaschine 01 und/oder der gesamten Breite des Ballens des zumindest einen ersten Zentralzylinders 201 in der axialen Richtung A. An einer oder beiden Seiten bezüglich der axialen Richtung A kann ein schmaler Bereich der Bedruckstoffbahn 02 und/oder des Ballens des ersten Zentralzylinders 201 vorhanden sein, der nicht dem Arbeitsbereich der Düsenbalken 213 angehört. Ein gesamter Arbeitsbereich des zumindest einen Düsenbalkens 213 ist bevorzugt aus allen Arbeitsbereichen von Druckköpfen 212 dieses zumindest einen Düsenbalkens zusammengesetzt und ist bevorzugt aus allen Zielbereichen von Düsen dieser Druckköpfe 212 dieses zumindest einen Düsenbalkens 213 zusammengesetzt. Bevorzugt entspricht ein gesamter Arbeitsbereich einer Doppelreihe von Druckköpfen 212 in der axialen Richtung A gesehen dem Arbeitsbereich des zumindest einen Düsenbalkens 213.

Bevorzugt weist der zumindest eine Düsenbalken 213 in Umfangsrichtung bezüglich des zumindest einen ersten Zentralzylinders 201 mehrere Reihen von Düsen auf. Bevorzugt weist jeder Druckkopf 212 eine Vielzahl von Düsen auf, die weiter bevorzugt in einer Matrix von mehreren Zeilen in axialer Richtung A und/oder mehreren Spalten bevorzugt in Umfangsrichtung des zumindest einen ersten Zentralzylinders 201 angeordnet sind, wobei derartige Spalten weiter bevorzugt schräg zu der Umfangsrichtung verlaufend angeordnet sind, beispielsweise um eine Auflösung eines Druckbildes zu erhöhen. Bevorzugt sind in einer Richtung orthogonal zu der axialen Richtung A, insbesondere in Transportrichtung entlang des Transportwegs des Bedruckstoffs 02 und/oder in Umfangsrichtung bezogen auf den zumindest einen Zentralzylinder 201 mehrere Reihen von Druckköpfen 212, weiter bevorzugt vier Doppelreihen und noch weiter bevorzugt acht Doppelreihen von Druckköpfen 212 nacheinander angeordnet. Weiter bevorzugt sind zumindest in dem Druckbetrieb in Umfangsrichtung bezüglich des zumindest einen ersten Zentralzylinders 201 mehrere Reihen von Druckköpfen 212, weiter bevorzugt vier Doppelreihen und noch weiter bevorzugt acht Doppelreihen von Druckköpfen 212 nacheinander auf den zumindest einen ersten Zentralzylinder 201 ausgerichtet angeordnet.

Dabei sind die Druckköpfe 212 zumindest in dem Druckbetrieb bevorzugt derart ausgerichtet, dass die Düsen jedes Druckkopfs 212 im Wesentlichen in radialer Richtung auf die Zylindermantelfläche des zumindest einen ersten Zentralzylinders 201 weisen. Abweichungen von radialen Richtungen innerhalb eines Toleranzbereichs von bevorzugt höchstens 10° und weiter bevorzugt höchstens 5° sollen dabei als im Wesentlichen radiale Richtungen gelten. Das bedeutet, dass der zumindest eine auf die Mantelfläche des zumindest einen ersten Zentralzylinders 201 ausgerichtete Druckkopf 212 bezüglich der Rotationsachse 207 des zumindest einen ersten Zentralzylinders 201 in einer radialen Richtung auf die Mantelfläche des zumindest einen ersten Zentralzylinders 201 ausgerichtet ist. Diese radiale Richtung ist dabei eine auf die Rotationsachse 207 des zumindest einen ersten Zentralzylinders 201 bezogen radiale Richtung. Jeder Doppelreihe von Druckköpfen 212 ist bevorzugt eine Druckfarbe einer bestimmten Farbe zugeordnet und/oder zuordenbar, beispielsweise jeweils eine der Farben Schwarz, Cyan, Gelb und Magenta oder ein Lack, beispielsweise ein Klarlack. Das entsprechende Tintenstrahldruckwerk 211 ist bevorzugt als Vierfarbendruckwerk 211 ausgebildet und ermöglicht einen einseitigen vierfarbigen Bedruck der Bedruckstoffbahn 02. Es ist auch möglich, weniger oder mehr unterschiedliche Farben mit einem Druckwerk 211 zu verdrucken, beispielsweise zusätzliche Sonderfarben. Bevorzugt sind dann entsprechend mehr oder weniger Druckköpfe 212 und/oder Doppelreihen von Druckköpfen 212 innerhalb dieses entsprechenden Druckwerks 211 angeordnet. In einer Ausführungsform sind zumindest in dem Druckbetrieb mehrere Reihen von Druckköpfen 212, weiter bevorzugt vier Doppelreihen und noch weiter bevorzugt acht Doppelreihen von Druckköpfen 212 nacheinander auf zumindest eine Oberfläche zumindest eines Übertragungskörpers, beispielsweise zumindest eines Übertragungszylinders und/oder zumindest eines Übertragungsbands ausgerichtet angeordnet.

Der zumindest eine Druckkopf 212 arbeitet zur Erzeugung von Beschichtungsmitteltropfen bevorzugt nach dem drop-on-demand-Verfahren, bei dem Beschichtungsmitteltropfen bei Bedarf gezielt erzeugt werden. Bevorzugt kommt je Düse zumindest ein Piezoelement zum Einsatz, das bei Anlage einer Spannung ein mit Beschichtungsmittel gefülltes Volumen mit hoher Geschwindigkeit um einen bestimmten Anteil verringern kann. Dadurch wird Beschichtungsmittel verdrängt, die durch eine, mit dem mit Beschichtungsmittel gefüllten Volumen verbundene Düse ausgestoßen wird und zumindest einen Beschichtungsmitteltropfen bildet. Durch Anlage unterschiedlicher Spannungen an das Piezoelement wird auf den Stellweg des Piezoelements und damit die Verringerung des Volumens und damit die Größe der Beschichtungsmitteltropfen Einfluss genommen. Auf diese Weise sind Farbabstufungen im entstehenden Druckbild realisierbar, ohne eine zum Druckbild beitragende Tropfenanzahl zu verändern (Amplitudenmodulation). Es ist auch möglich, je Düse zumindest ein Heizelement einzusetzen, das in einem mit Beschichtungsmittel gefüllten Volumen mit hoher Geschwindigkeit durch Verdampfen von Beschichtungsmittel eine Gasblase erzeugt. Das zusätzliche Volumen der Gasblase verdrängt Beschichtungsmittel, die wiederum durch die entsprechende Düse ausgestoßen wird und zumindest einen Beschichtungsmitteltropfen bildet.

Beim drop-on-demand-Verfahren ist eine Tropfenablenkung nach deren Ausstoß aus der entsprechenden Düse nicht notwendig, da es möglich ist, eine Zielposition des jeweiligen Beschichtungsmitteltropfens auf der bewegten Bedruckstoffbahn 02 bezüglich der Umfangsrichtung des zumindest einen ersten Zentralzylinders 201 allein durch einen Emissionszeitpunkt des jeweiligen Beschichtungsmitteltropfens und eine Rotationsgeschwindigkeit des ersten Zentralzylinders 201 und/oder durch die Drehstellung des ersten Zentralzylinders 201 festzulegen. Durch einzelne Ansteuerung jeder Düse werden nur zu ausgewählten Zeitpunkten und an ausgewählten Orten Beschichtungsmitteltropfen von dem zumindest einen Druckkopf 212 auf die Bedruckstoffbahn 02 übertragen. Dies geschieht in Abhängigkeit von der Rotationsgeschwindigkeit und/oder der Drehwinkellage des zumindest einen ersten Zentralzylinders 201, einem Abstand zwischen der jeweiligen Düse und der Bedruckstoffbahn 02 sowie der Lage des Zielbereichs der jeweiligen Düse bezüglich des Umfangswinkels. Dadurch ergibt sich ein erwünschtes Druckbild, das in Abhängigkeit von der Ansteuerung aller Düsen gestaltet ist. Ein Ausstoß von Tintentropfen aus der zumindest einen Düse des zumindest einen Druckkopfs 212 erfolgt bevorzugt in Abhängigkeit von der von der Maschinensteuerung vorgegebenen Drehstellung des ersten Antriebsmotors 208. Dabei werden die von der Maschinensteuerung an den ersten Antriebsmotor 208 vorgegebene erste Soll-Daten 617 der Drehstellung des ersten Antriebsmotors 208 bevorzugt in Echtzeit in eine Berechnung von Daten zur Ansteuerung der Düsen des zumindest einen Druckkopfs 212 mit einbezogen. Ein Abgleich mit Ist-Daten der Drehstellung des ersten Antriebsmotors 208 ist bevorzugt nicht notwendig und findet bevorzugt nicht statt. Eine exakte und konstante Lage der Bedruckstoffbahn 02 relativ zu dem zumindest einen ersten Zentralzylinder 201 ist daher für ein passergerechtes und/oder registergerechtes Druckbild von großer Bedeutung.

Die Düsen des zumindest einen Druckkopfs 212 sind derart angeordnet, dass ein Abstand zwischen den Düsen und der auf der Zylindermantelfläche des zumindest einen ersten Zentralzylinders 201 angeordneten Bedruckstoffbahn 02 bevorzugt zwischen 0,5 mm und 5 mm und weiter bevorzugt zwischen 1 mm und 1,5 mm beträgt. Die hohe Winkelauflösung und/oder die hohe Abtastfrequenz des ersten Drehwinkelsensors 617 und/oder die große Genauigkeit der von der Maschinensteuerung vorgegebenen und von dem ersten Antriebsmotor 208 des ersten Zentralzylinders 201 verarbeiteten ersten Soll-Daten 617 zur Drehlage des ersten Antriebsmotors 208 des ersten Zentralzylinders 201 ermöglicht eine sehr genaue Lagebestimmung und/oder Kenntnis der Lage der Bedruckstoffbahn 02 relativ zu den Düsen und deren Zielbereichen. Eine Tropfenflugzeit zwischen den Düsen und der Bedruckstoffbahn 02 ist beispielsweise durch einen Einlernvorgang und/oder durch den bekannten Abstand zwischen den Düsen und der Bedruckstoffbahn 02 und eine bekannte Tropfengeschwindigkeit bekannt. Aus der Drehwinkellage des zumindest einen ersten Zentralzylinders 201 und/oder des ersten Antriebs 208 des zumindest einen ersten Zentralzylinders 201, der Rotationsgeschwindigkeit des zumindest einen ersten Zentralzylinders 201 und der Tropfenflugzeit wird ein idealer Zeitpunkt zum Ausstoß eines jeweiligen Tropfens bestimmt, so dass eine passergerechte und/oder registergerechte Bebilderung der Bedruckstoffbahn 02 erreicht wird.

Bevorzugt ist zumindest ein als erster Druckbildsensor ausgebildeter Sensor angeordnet, weiter bevorzugt an einer Stelle entlang des Transportwegs der Bedruckstoffbahn 02 nach dem ersten Druckwerk 211. Der zumindest eine erste Druckbildsensor ist beispielsweise als erste Zeilenkamera oder als erste Flächenkamera ausgebildet. Der zumindest eine erste Druckbildsensor ist beispielsweise als zumindest ein CCD-Sensor und/oder als zumindest ein CMOS-Sensor ausgebildet. Mittels dieses zumindest einen ersten Druckbildsensors und einer entsprechenden Auswerteeinheit, beispielsweise der übergeordneten Maschinensteuerung, wird bevorzugt eine Ansteuerung aller in Umfangsrichtung des zumindest einen ersten Zentralzylinders 201 hintereinander liegender und/oder wirkender Druckköpfe 212 und/oder Doppelreihen von Druckköpfen 212 des ersten Druckwerks 211 überwacht und geregelt. In einer ersten Ausführungsform des zumindest einen Druckbildsensors ist nur ein erster Druckbildsensor angeordnet, dessen Sensorfeld die gesamte Breite des Transportwegs der Bedruckstoffbahn 02 umfasst. In einer zweiten Ausführungsform des zumindest einen Druckbildsensors ist nur ein erster Druckbildsensor angeordnet, der in der Richtung A orthogonal zu der Richtung des Transportwegs der Bedruckstoffbahn 02 bewegbar ausgebildet ist. In einer dritten Ausführungsform des zumindest einen Druckbildsensors sind mehrere Druckbildsensoren angeordnet, deren jeweilige Sensorfelder jeweils unterschiedliche Bereiche des Transportwegs der Bedruckstoffbahn 02 umfassen. Bevorzugt sind diese Bereiche in der Richtung A orthogonal zu der Richtung des Transportwegs der Bedruckstoffbahn 02 zueinander versetzt angeordnet. Bevorzugt umfasst eine Gesamtheit der Sensorfelder der mehreren Druckbildsensoren eine gesamte Breite des Transportwegs der Bedruckstoffbahn 02.

Eine Lage von Bildpunkten, die von Beschichtungsmitteltropfen gebildet werden, die aus einem jeweils ersten Druckkopf 212 stammen, wird bevorzugt mit einer Lage von Bildpunkten verglichen, die von Beschichtungsmitteltropfen gebildet werden, die aus einem jeweils zweiten, in Umfangsrichtung des zumindest einen ersten Zentralzylinders 201 nach dem jeweils ersten Druckkopf 212 liegenden Druckkopf 212 stammen. Dies geschieht bevorzugt unabhängig davon, ob diese jeweils ersten und zweiten, in Umfangsrichtung des zumindest einen ersten Zentralzylinders 201 hintereinander liegenden und/oder wirkenden Druckköpfe 212 eine gleiche oder ein unterschiedliches Beschichtungsmittel verarbeiten. Es wird eine Abstimmung der Lagen der aus unterschiedlichen Druckköpfen 212 stammenden Druckbilder überwacht. Bei gleichen Beschichtungsmitteln wird ein registerhaltiges Zusammenfügen von Teilbildern überwacht. Bei unterschiedlichen Beschichtungsmitteln wird ein Passer oder Farbregister überwacht. Bevorzugt wird mit den Messwerten des zumindest einen Druckbildsensors auch eine Qualitätskontrolle des Druckbildes durchgeführt.

In einem regulären Druckbetrieb sind alle Druckköpfe 212 ortsfest angeordnet. Dadurch wird eine dauerhafte passergerechte und/oder registergerechte Ausrichtung aller Düsen sichergestellt. Es sind unterschiedliche Situationen denkbar, in denen eine Bewegung der Druckköpfe 212 notwendig ist. Eine erste solche Situation stellt ein fliegender Rollenwechsel oder allgemein ein Rollenwechsel mit Klebevorgang dar. Dabei wird eine Bedruckstoffbahn 02 mittels eines Klebestreifens mit einer anderen Bedruckstoffbahn 02 verbunden. Dadurch ergibt sich eine Verbindungsstelle, die den gesamten Transportweg der Bedruckstoffbahn 02 durchlaufen muss. Diese Verbindungsstelle weist ein Dicke, also eine kleinste Abmessung auf, die größer ist als eine Dicke der Bedruckstoffbahn 02. Im Wesentlichen ist die Verbindungsstelle so dick wie zwei Bedruckstoffbahnen 02 und der Klebestreifen zusammen. Dadurch können sich Schwierigkeiten ergeben, wenn die Verbindungsstelle den Zwischenraum zwischen den Düsen der Druckköpfe 212 und der Zylindermantelfläche des zumindest einen ersten Zentralzylinders 201 passiert. Der zumindest eine Düsenbalken 213 ist daher in zumindest einer Richtung relativ zu der Rotationsachse 207 des zumindest einen ersten Zentralzylinders 201 bewegbar. Auf diese Weise kann der Abstand ausreichend vergrößert werden, muss aber im Anschluss wieder entsprechend verringert werden. Eine zweite solche Situation ergibt sich beispielsweise bei einer Wartung und/oder Reinigung zumindest eines der Druckköpfe 212. Die Druckköpfe 212 sind bevorzugt einzeln an dem zumindest einen Düsenbalken 213 befestigt und einzeln von dem zumindest einen Düsenbalken 213 lösbar. Dadurch können einzelne Druckköpfe 212 gewartet und/oder gereinigt und/oder ersetzt werden.

Sind mehrere zueinander bewegbare Düsenbalken 213 angeordnet, so können bei einer Rückführung zumindest eines Düsenbalkens 213 in eine Drucklage minimale Fehlstellungen der Düsenbalken 213 untereinander auftreten. Ein Ausrichtbedarf kann also auftreten, insbesondere aller Druckköpfe 212 eines Düsenbalkens 213 zu Druckköpfen 212 anderer Düsenbalken 213. Wird ein neu und/oder wieder anzuordnender Druckkopf 212 an dem zumindest einen Düsenbalken 213 befestigt, an dem bereits zumindest ein anderer Druckkopf 212 befestigt ist, so ergibt sich nicht zwangsläufig sondern höchstens zufällig eine exakt passende Ausrichtung dieses neu und/oder wieder anzuordnenden Druckkopfs 212 zu dem zumindest einen bereits befestigten Druckkopf 212 und zwar in Umfangsrichtung und/oder in axialer Richtung A bezüglich des zumindest einen ersten Zentralzylinders 201. Auch hier kann sich also ein Ausrichtbedarf ergeben, insbesondere eines einzelnen Druckkopfs 212 zu anderen Druckköpfen 212 des gleichen Düsenbalkens 213 und/oder anderer Düsenbalken 213.

Zumindest ein Sensor erfasst eine Lage des Zielbereichs zumindest eines neu und/oder wieder angeordneten Druckkopfs 212 relativ zu einer Lage des Zielbereichs zumindest eines bereits zuvor befestigten Druckkopfs 212. Eine Einbaulage des zumindest einen neu und/oder wieder angeordneten Druckkopfs 212 in Umfangsrichtung bezüglich des zumindest einen ersten Zentralzylinders 201 lässt sich über die Ansteuerung der Düsen dieses Druckkopfs 212 ausgleichen, bevorzugt analog zu der bereits beschriebenen Anpassung von Druckköpfen 212 unterschiedlicher Doppelreihen von Druckköpfen 212. Eine Einbaulage des zumindest einen neu und/oder wieder angeordneten Druckkopfs 212 in axialer Richtung A bezüglich des zumindest einen ersten Zentralzylinders 201 wird mittels zumindest einer Einstellmechanik ausgeglichen. Bevorzugt weisen mehrere Druckköpfe 212 jeweils eine eigene Einstellmechanik auf, weiter bevorzugt weisen alle Druckköpfe 212 jeweils eine eigene Einstellmechanik auf.

Die Druckmaschine 01weist zumindest ein Versorgungssystem für Beschichtungsmittel, insbesondere Druckfarbversorgungssystem auf. Bevorzugt weisen mehrere Druckköpfe 212, beispielsweise mehrere Druckköpfe 212 eines gemeinsamen Düsenbalkens 213, insbesondere mehrere oder weiter bevorzugt alle Druckköpfe 212 jeweils einer Doppelreihe von Druckköpfen 212 ein gemeinsames Versorgungssystem für Beschichtungsmittel auf. Dieses gemeinsame Versorgungssystem weist bevorzugt zumindest einen Normalvorrat auf. Mit dem zumindest einen Normalvorrat ist jeweils zumindest eine erste Flüssigkeitsleitung oder Farbleitung je Druckkopf 212 verbunden. Bevorzugt ist der zumindest eine Normalvorrat über zumindest eine Zuleitung und zumindest eine Ableitung mit zumindest einem und bevorzugt zumindest einem gleichen Zwischenspeicher verbunden.

Der Normalvorrat weist bevorzugt zumindest in einem Druckbetrieb und weiter bevorzugt dauerhaft einen bis auf in einem engen Toleranzbereich liegende Abweichungen konstanten Füllstand auf. Dieser konstante Füllstand ist beispielsweise durch einen bevorzugt passiven Überlaufabfluss und einen Zustrom von Beschichtungsmittel realisierbar. Bevorzugt weist der zumindest einen Normalvorrat und/oder die zumindest eine Ableitung zumindest einen bevorzugt passiven Überlaufabfluss auf, dessen Abflussseite bevorzugt mit dem zumindest einen Zwischenspeicher verbunden und/oder verbindbar angeordnet ist. Bevorzugt ist innerhalb der zumindest einen Zuleitung und/oder innerhalb der zumindest einen Ableitung jeweils zumindest ein bevorzugt als Sperrventil ausgebildetes Ventil angeordnet. Bevorzugt ist in der zumindest einen Zuleitung zumindest eine erste Flüssigkeitspumpe angeordnet. Bevorzugt herrscht in dem Normalvorrat ein gesteuerter und/oder geregelter Normaldruck, der weiter bevorzugt relativ zu einem Umgebungsdruck gesteuert und/oder geregelt wird. Bevorzugt liegt in dem Normalvorrat ein Unterdruck gegenüber dem Umgebungsdruck vor.

Bevorzugt wird durch zumindest eine Pumpe Beschichtungsmittel aus dem Zwischenspeicher in den Normalvorrat gepumpt. Bevorzugt ist in dem zumindest einen Normalvorrat zumindest ein als erster Gasraum vorgesehenes Volumen angeordnet. Der zumindest eine erste Gasraum ist bevorzugt über zumindest eine erste Gasleitung mit zumindest einer ersten Gaspumpe verbunden. Bevorzugt herrscht in einem zweiten Gasraum des Zwischenspeichers ein gleicher Druck, wie in dem zumindest einen ersten Gasraum des zumindest einen Normalvorrats. Bevorzugt ist der zumindest eine Zwischenspeicher mit zumindest einem Pufferspeicher verbunden, weiter bevorzugt über zumindest eine Saugleitung. Bevorzugt herrscht in dem Pufferspeicher Umgebungsdruck. Bevorzugt wird Beschichtungsmittel durch den relativen Unterdruck aus dem Pufferspeicher in dem Zwischenspeicher gefördert.

Bevorzugt weisen mehrere Druckköpfe 212, beispielsweise mehrere Druckköpfe 212 eines gemeinsamen Düsenbalkens 213, insbesondere mehrere oder weiter bevorzugt alle Druckköpfe 212 jeweils einer Doppelreihe von Druckköpfen 212 ein gemeinsames Spannungsversorgungssystem 606 auf. Bevorzugt erstreckt sich zumindest eine gemeinsame Stromleitung der Spannungsversorgung innerhalb des jeweiligen zumindest einen Düsenbalkens über zumindest 50 %, weiter bevorzugt zumindest 75 % und noch weiter bevorzugt zumindest 90 % einer Breite des Arbeitsbereichs des jeweiligen zumindest einen Düsenbalkens 213 in der axialen Richtung A und/oder der Arbeitsbreite der Druckmaschine 01. Bevorzugt weist jeder Druckkopf 212 dieses jeweiligen zumindest einen Düsenbalkens 213 jeweils zumindest eine eigene Spannungsleitung 627 auf, die mit dieser gemeinsamen Stromleitung der Spannungsversorgung verbunden ist. Bevorzugt weist jeder Druckkopf 212 dieses jeweiligen zumindest einen Düsenbalkens 213 jeweils zumindest eine eigene Datenleitung auf, die mit einer Recheneinheit verbunden ist, die bezüglich der axialen Richtung A außerhalb des Arbeitsbereichs des jeweiligen zumindest einen Düsenbalkens 213 und/oder bezüglich der axialen Richtung A außerhalb jedes für Bedruckstoff 02 vorgesehenen Transportwegs der Druckmaschine 01 angeordnet ist. Somit verlaufen also zumindest entlang eines sich in der axialen Richtung A erstreckenden Abschnitts des Düsenbalkens 213 zumindest eine Datenleitung je Druckkopf 212 dieses zumindest einen Düsenbalkens 213 parallel zueinander.

Bevorzugt ist zumindest eine Düsenreinigungsvorrichtung angeordnet, die zumindest eine Reihe von Waschdüsen und/oder Bürsten und/oder Abziehern aufweist.

Nachdem die Bedruckstoffbahn 02 die zumindest eine erste Druckeinheit 200 passiert hat, wird die Bedruckstoffbahn 02 entlang ihres Transportwegs weiter transportiert und bevorzugt dem zumindest einen ersten Trockner 301 der zumindest einen Trocknereinheit 300 zugeführt. Bevorzugt steht die erste, von der zumindest einen ersten Druckeinheit 200 bedruckte Seite der Bedruckstoffbahn 02 zwischen einer letzten Berührstelle der Bedruckstoffbahn 02 mit dem zumindest einen ersten Zentralzylinder 201 der zumindest einen ersten Druckeinheit 200 und einem Einwirkbereich des zumindest einen ersten Trockners 301 mit keinem Bestandteil der Rollen-Druckmaschine 01 in Kontakt. Bevorzugt steht die zweite, insbesondere von der ersten Druckeinheit 200 nicht bedruckte, den zumindest einen ersten Zentralzylinder 201 der zumindest einen ersten Druckeinheit 200 berührende Seite der Bedruckstoffbahn 02 zwischen der letzten Berührstelle der Bedruckstoffbahn 02 mit dem ersten Zentralzylinder 201 der zumindest einen ersten Druckeinheit 200 und dem Einwirkbereich des zumindest einen ersten Trockners 301 mit zumindest einer Umlenkwalze 214 der zumindest einen ersten Druckeinheit 200 und/oder mit zumindest einer Umlenkwalze 312 des zumindest einen ersten Trockners 301 in Kontakt. Bevorzugt ist zumindest eine, weiter bevorzugt als dritte Messwalze 214 ausgebildete dritte Messeinrichtung 214 angeordnet. Diese dritte Messeinrichtung 214 dient der Messung der Bahnspannung. Weiter bevorzugt ist die zumindest eine Umlenkwalze 214 der ersten Druckeinheit 200 mit der als dritte Messwalze 214 ausgebildeten dritten Messeinrichtung 214 identisch.

Der zumindest eine erste Trockner 301 ist bevorzugt als ein Infrarotstrahlungstrockner 301 ausgebildet. Der zumindest eine erste Trockner 301 weist bevorzugt zumindest eine Strahlungsquelle 302 auf, die bevorzugt als Infrarotstrahlungsquelle 302 ausgebildet ist.

Eine Strahlungsquelle 302, bevorzugt Infrarotstrahlungsquelle 302 ist dabei eine Vorrichtung, mittels der gezielt elektrische Energie in Strahlung, bevorzugt Infrarotstrahlung umgewandelt wird und/oder umwandelbar ist und auf die Bedruckstoffbahn 02 gerichtet wird und/oder richtbar ist. Die zumindest eine Strahlungsquelle 302 weist bevorzugt einen definierten Einwirkbereich auf. Insbesondere ist der Einwirkbereich einer Strahlungsquelle 302 jeweils der Bereich, der alle Punkte enthält, die insbesondere ohne Unterbrechung geradlinig direkt oder über Reflektoren mit der Strahlungsquelle 302 verbunden werden können. Der Einwirkbereich des zumindest einen ersten Trockners 301 setzt sich aus den Einwirkbereichen aller Strahlungsquellen 302 des zumindest einen ersten Trockners 301 zusammen. Der Einwirkbereich des zumindest einen ersten Trockners 301 weist bevorzugt von der zumindest einen Strahlungsquelle 302 zu einem der zumindest einen Strahlungsquelle 302 nächstgelegenen Teil des Transportwegs der Bedruckstoffbahn 02. Durch zumindest eine Belüftungsöffnung wird Luft in den Innenraum des zumindest einen ersten Trockners 301 eingeleitet. Im Inneren des ersten Trockners 301 wird durch die Infrarotstrahlung aus der Bedruckstoffbahn 02 zu entfernendes Wasser und/oder Lösungsmittel der Beschichtungsmittel entfernt und von der eingeleiteten Luft aufgenommen. Diese Luft wird dann durch zumindest eine Entlüftungsöffnung aus dem zumindest einen ersten Trockner 301 abgeführt.

In einer bevorzugten Ausführungsform weist der vorgesehene Transportweg für Bedruckstoff 02 durch den zumindest einen ersten Trockner 301 zumindest zwei Teilstücke auf, die jeweils in Richtungen mit vertikalen Komponenten verlaufen, weiter bevorzugt mit größeren vertikalen als gegebenenfalls vorhandenen horizontalen Komponenten. Bevorzugt verläuft der vorgesehene Transportweg des Bedruckstoffs entlang des einen Teilstücks zumindest mit einer Komponente in vertikaler Richtung nach oben. Bevorzugt verläuft der vorgesehene Transportweg des Bedruckstoffs entlang des anderen Teilstücks zumindest mit einer Komponente in vertikaler Richtung nach unten. Bevorzugt sind das eine Teilstück und das andere Teilstück des vorgesehenen Transportwegs durch zumindest ein vorgesehenes Verbindungsstück des vorgesehenen Transportwegs miteinander verbunden. Bevorzugt verläuft das zumindest eine Verbindungsstück in einer Richtung mit horizontaler Komponente, weiter bevorzugt mit größerer horizontaler als gegebenenfalls vorhandener vertikaler Komponente. Dadurch kann der zumindest eine Trockner 301 bevorzugt besonders kompakt aufgebaut werden.

In Transportrichtung der Bedruckstoffbahn 02 nach dem Einwirkbereich der zumindest einen Strahlungsquelle 302 des zumindest einen ersten Trockners 301 ist bevorzugt zumindest eine erste Kühleinrichtung 303 angeordnet. Die zumindest eine erste Kühleinrichtung 303 weist bevorzugt zumindest eine erste Kühlwalze 304 und bevorzugt einen ersten, an die zumindest eine erste Kühlwalze 304 anstellbaren und/oder angestellten Kühlwalzenpresseur 306 und bevorzugt zumindest eine, an die zumindest eine erste Kühlwalze 304 anstellbare und/oder angestellte Anlenkwalze 307; 308 auf. Ein der zumindest einen ersten Kühlwalze 304 zugeordneter erster, als erster Kühlwalzenantriebsmotor 311 ausgebildeter Antriebsmotor 311 und der erste Kühlwalzenpresseur 306 sind bevorzugt Teil einer Bahnspannungsregelung, also die Bahnspannung regelnd angeordnet und bevorzugt zu diesem Zweck zumindest teilweise und/oder zeitweise mit der übergeordneten Maschinensteuerung verbunden. Die zumindest eine erste Kühlwalze 304 stellt bevorzugt zumindest einen vierten motorgetriebenen Rotationskörper 304 dar. Die Bedruckstoffbahn 02 umschlingt und berührt bevorzugt entlang ihres Transportwegs die zumindest eine erste Kühlwalze 304 mit einem Umschlingungswinkel von bevorzugt zumindest 180° und weiter bevorzugt zumindest 270°. Der erste Kühlwalzenpresseur 306 bildet bevorzugt mit der zumindest einen ersten Kühlwalze 304 einen ersten Kühlwalzenspalt 309, in dem bevorzugt die Bedruckstoffbahn 02 angeordnet ist und/oder den bevorzugt die Bedruckstoffbahn 02 durchläuft. Dabei wird die Bedruckstoffbahn 02 von dem Kühlwalzenpresseur 306 an die zumindest eine erste Kühlwalze 304 angepresst. Die zumindest eine erste Kühlwalze 304 der zumindest einen ersten Kühleinrichtung 303 ist bevorzugt als von einem Kühlmittel durchströmte Kühlwalze 304 ausgebildet.

Entlang des Transportwegs der Bedruckstoffbahn 02 nach der zumindest einen ersten Kühleinrichtung 303 ist bevorzugt zumindest eine zweite Druckeinheit 400 angeordnet. Bevorzugt ist entlang des Transportwegs der Bedruckstoffbahn 02 bevorzugt unmittelbar vor der zumindest einen zweiten Druckeinheit 400 und bevorzugt nach dem zumindest einen ersten Trockner 301 und insbesondere nach der zumindest einen ersten Druckeinheit 200 zumindest ein zweiter Bahnkantenausrichter angeordnet, der bevorzugt manuell oder angetrieben steuerbar und/oder regelbar ausgebildet ist. Die zumindest eine zweite Druckeinheit 400 ist analog zu der ersten Druckeinheit 200 aufgebaut. Insbesondere weist die zweite Druckeinheit 400 einen zweiten Druckzentralzylinder 401 oder kurz Zentralzylinder 401 auf, der im Druckbetrieb von der Bedruckstoffbahn 02 umschlungen wird, und zwar ebenfalls mit einem Umschlingungswinkel von bevorzugt zumindest 180° und weiter bevorzugt zumindest 270°. Der zweite Zentralzylinder 401 stellt bevorzugt einen fünften motorgetriebenen Rotationskörper 401 dar. Der zweite Zentralzylinder 401 der zweiten Druckeinheit 400 weist bevorzugt eine Rotationsrichtung auf, die einer Rotationsrichtung des zumindest einen ersten Zentralzylinders 201 entgegengesetzt ist. Entlang des Transportwegs der Bedruckstoffbahn 02 vor dem zweiten Zentralzylinder 401 der zweiten Druckeinheit 400 ist bevorzugt eine zweite Bedruckstoffreinigungsvorrichtung 402 oder Bahnreinigungsvorrichtung 402 auf die Bedruckstoffbahn 02 einwirkend angeordnet.

Der Transportweg der Bedruckstoffbahn 02 durch die zumindest eine zweite Druckeinheit 400 verläuft analog zu dem Transportweg durch die zumindest eine erste Druckeinheit 200. Insbesondere umschlingt die Bedruckstoffbahn 02 bevorzugt einen Teil einer zweiten Umlenkwalze 403 und wird von dieser derart umgelenkt, dass der Transportweg der Bedruckstoffbahn 02 in dem zweiten Zwischenraum 404 sowohl tangential zu der zweiten Umlenkwalze 403 als auch tangential zu dem zweiten Zentralzylinder 401 verläuft. Bevorzugt ist zumindest ein als zweiter Presseur 406 ausgebildeter Zylinder 406 in der zweiten Druckeinheit 400 angeordnet. Der zweite Presseur 406 ist bevorzugt analog zu dem ersten Presseur 206 aufgebaut und angeordnet, insbesondere bezüglich seiner Bewegbarkeit und eines zweiten Presseurspalts 409. Der zweite Zentralzylinder 401 ist bevorzugt analog zu dem ersten Zentralzylinder 201 angeordnet und aufgebaut, insbesondere bezüglich eines zweiten Antriebsmotors 408 des zweiten Zentralzylinders 401 und eines entsprechenden bevorzugt angeordneten zweiten Drehwinkelsensors 618, der eine Drehwinkellage des zweiten Antriebsmotors 408 und/oder des zweiten Zentralzylinders 401 selbst messend und/oder messfähig und an die übergeordnete Maschinensteuerung sendend und/oder sendefähig ausgebildet ist.

Zusätzlich oder alternativ ist der zweite Antriebsmotor 408 des zweiten Zentralzylinders 401 derart schaltungstechnisch mit der Maschinensteuerung verbunden, dass die Maschinensteuerung aufgrund von von der Maschinensteuerung an den zweiten Antriebsmotor 408 des zweiten Zentralzylinders 401 vorgegebenen zweiten Soll-Daten 618 zu einer Drehstellung des zweiten Antriebsmotors 408 jederzeit über die Drehstellung des zweiten Antriebsmotors 408 und damit zugleich die Drehstellung des zweiten Zentralzylinders 401 informiert ist.

Innerhalb der zweiten Druckeinheit 400 ist bevorzugt zumindest ein zweites, als Tintenstrahldruckwerk 411 oder Ink-Jet-Druckwerk 411 ausgebildetes Druckwerk 411 in Rotationsrichtung des zweiten Zentralzylinders 401 und damit entlang des Transportwegs der Bedruckstoffbahn 02 nach dem zweiten Presseur 406 auf den zweiten Zentralzylinder 401 ausgerichtet angeordnet. Das zumindest eine zweite Druckwerk 411 der zumindest einen zweiten Druckeinheit 400 ist bevorzugt identisch mit dem zumindest einen ersten Druckwerk 211 der zumindest einen ersten Druckeinheit 200, insbesondere bezüglich zumindest eines Düsenbalkens 413, zumindest eines, als Tintenstrahldruckkopf 412 ausgebildeten Druckkopfs 412 und deren Anordnung in Doppelreihen, des Ausführung und Auflösung des Druckverfahrens, der Anordnung, Ausrichtung und Ansteuerung der Düsen und der Bewegbarkeit und Einstellbarkeit des zumindest einen Düsenbalkens 413 und des zumindest einen Druckkopfs 412 mittel zumindest einer Einstellmechanik mit entsprechendem Elektromotor. Auch eine analoge Schutzabdeckung und/oder Reinigungsvorrichtung ist bevorzugt angeordnet. Auch eine korrekte Ausrichtung der Druckköpfe 412 der zumindest einen zweiten Druckeinheit 400 wird bevorzugt dadurch überprüft, dass zumindest ein Sensor ein gedrucktes Druckbild erfasst und die Maschinensteuerung dieses Druckbild auswertet. Dieser zumindest eine Sensor ist bevorzugt zumindest ein zweiter Druckbildsensor, der analog zu dem zumindest einen ersten Druckbildsensor ausgebildet ist. Bevorzugt ist das zumindest eine zweite Druckwerk 411 als Vierfarbendruckwerk 411 ausgebildet.

Bezüglich des Transportwegs der Bedruckstoffbahn 02 ist nach der zumindest einen zweiten Druckeinheit 400 zumindest ein zweiter Trockner 331 angeordnet. Nachdem die Bedruckstoffbahn 02 die zumindest eine zweite Druckeinheit 400 passiert hat, wird die Bedruckstoffbahn 02 entlang ihres Transportwegs weiter transportiert und bevorzugt dem zumindest einem zweiten Trockner 331 der zumindest einen Trocknereinheit 300 zugeführt. Der zumindest eine zweite Trockner 331 ist bevorzugt analog zu dem zumindest einen ersten Trockner 301 aufgebaut. Der zumindest eine erste Trockner 301 und der zumindest eine zweite Trockner 331 sind Bestandteile der zumindest einen Trocknereinheit 300. Bevorzugt steht die zweite, von der zumindest einen zweiten Druckeinheit 400 bedruckte Seite der Bedruckstoffbahn 02 zwischen einer letzten Berührstelle der Bedruckstoffbahn 02 mit dem zweiten Zentralzylinder 401 der zumindest einen zweiten Druckeinheit 400 und einem Einwirkbereich des zumindest einen zweiten Trockners 301 mit keinem Bestandteil der Rollen-Druckmaschine 01 in Kontakt. Bevorzugt ist zumindest eine Umlenkwalze 414 der zweiten Druckeinheit 400 angeordnet. Bevorzugt ist diese zumindest eine Umlenkwalze 414 als fünfte Messeinrichtung 414, insbesondere fünfte Messwalze 414 ausgebildet.

Der Aufbau des zumindest einen zweiten Trockners 331 gleicht dem Aufbau des zumindest einen ersten Trockners 301, insbesondere im Hinblick auf einen für Bedruckstoff vorgesehenen Transportweg und/oder eine Ausbildung als Strömungstrockner 331 und/oder Strahlungstrockner 331 und/oder Heißlufttrockner 331 und/oder Infrarotstrahlungstrockner 331 und/oder UV-Strahlungstrockner 331. Insbesondere weist der zumindest eine zweite Trockner 331 bevorzugt zumindest eine zweite Kühlwalze 334 auf, die weiter bevorzugt zumindest einen sechsten motorgetriebenen Rotationskörper 334 darstellt. Bevorzugt ist die zweite Kühlwalze 334 mittels eines zweiten Kühlwalzenantriebs 341 angetrieben und/oder antreibbar. Bevorzugt ist der zumindest eine zweite Trockner 331 bezüglich der beschriebenen Bauteile im Wesentlichen und weiter bevorzugt vollständig symmetrisch zu dem zumindest einen ersten Trockner 301 aufgebaut. Der zumindest eine zweite Trockner 331 ist bevorzugt Teil der gleichen Trocknereinheit 300 wie der zumindest eine erste Trockner 301 und ist weiter bevorzugt in einem gleichen Gehäuse 329 angeordnet. Bezüglich einer räumlichen Anordnung ist die Trocknereinheit 300 und sind damit bevorzugt der zumindest eine erste Trockner 301 und der zumindest eine zweite Trockner 331 bevorzugt zwischen der zumindest einen ersten Druckeinheit 200 und der zumindest einen zweiten Druckeinheit 400 angeordnet.

Entlang des Transportwegs der Bedruckstoffbahn 02 nach dem zumindest einen zweiten Trockner 331 ist zumindest eine Auszugwalze 501 angeordnet. Die zumindest eine Auszugwalze 501 weist bevorzugt einen eigenen, als Auszugwalzenantrieb 504 ausgebildeten Antriebsmotor 504 auf. Die zumindest eine Auszugwalze 504 stellt bevorzugt zumindest einen siebten motorgetriebenen Rotationskörper 504 dar. Die zumindest eine Auszugwalze 501 bildet bevorzugt zusammen mit einem an die zumindest eine Auszugwalze 501 angestellten und/oder anstellbaren Auszugpresseur 502 einen Auszugspalt 503, in dem die Bedruckstoffbahn 02 eingeklemmt ist und durch den die Bedruckstoffbahn 02 gefördert wird. Der Auszugspalt 503 dient bevorzugt der Regelung einer Bahnspannung und/oder einem Transport der Bedruckstoffbahn 02.

Bezüglich des Transportwegs der Bedruckstoffbahn 02 vor und/oder nach der Auszugwalze 501, jedoch insbesondere entlang des Transportwegs des Bedruckstoffs 02 nach dem zumindest einen ersten Trockner 301, ist bevorzugt zumindest eine Wiederbefeuchtungseinrichtung angeordnet, die bevorzugt einen zu großen Feuchtigkeitsverlust der Bedruckstoffbahn 02 auf Grund der Behandlung durch die Trocknereinheit 300 ausgleicht.

Entlang des Transportwegs der Bedruckstoffbahn 02 nach dem Auszugspalt 503 und/oder nach der Wiederbefeuchtungseinrichtung ist zumindest eine Nachbearbeitungsvorrichtung 500 angeordnet, die bevorzugt als Falzvorrichtung 500 ausgebildet ist und/oder einen Bogenschneider 500 und/oder eine Planauslage 500 aufweist oder als Aufwickelvorrichtung 500 ausgebildet ist. In dieser und/oder durch diese Nachbearbeitungsvorrichtung 500 wird die Bedruckstoffbahn 02 bevorzugt gefalzt und/oder geschnitten und/oder geheftet und/oder sortiert und/oder kuvertiert und/oder versandt und/oder aufgewickelt.

In zumindest einer Variante der Druckmaschine ist die Druckmaschine 01 als Rollen-Rotations-Tintenstrahldruckmaschine 01 ausgebildet und ist zumindest ein Übertragungskörper mit dem zumindest einen ersten Druckzentralzylinder 201 einen Übertragungsspalt bildend angeordnet. Dann ist bevorzugt der zumindest eine Druckkopf 212 auf den zumindest einen Übertragungskörper ausgerichtet.

Bevorzugt weist die Druckmaschine 01 zumindest eine Druckdatenverarbeitungseinrichtung 600 oder kurz Druckdatenverarbeitung 600 auf. Die zumindest eine Druckdatenverarbeitung 600 ist bevorzugt Teil der Maschinensteuerung der Druckmaschine 01 und/oder mit der Maschinensteuerung der Druckmaschine 01 verbunden und/oder verbindbar. Bevorzugt weist die zumindest eine Druckdatenverarbeitung 600 zumindest einen als Bilddatenspeicher 601 ausgebildeten ersten Datenspeicher 601 auf. Der zumindest eine Bilddatenspeicher 601 dient bevorzugt zumindest einer Speicherung von Bilddaten, insbesondere in Form von Vorlagebilddaten 641; 642; 643; 644; 1643; 1644 und/oder geometrisch modifizierten Bilddaten, insbesondere geometrisch modifizierten Vorlagebilddaten 641; 642; 643; 644; 1643; 1644. Dabei sind unter Bilddaten solche Daten zu verstehen, die zumindest ein zu druckendes Druckbild in elektronisch gespeicherter Form enthalten. Solche Bilddaten können in unterschiedlichen Formen vorliegen. Eine solche Form stellt eine Matrix aus Bildpunkten dar, beispielsweise eine Bitmap. Eine andere Form stellt eine Seitenbeschreibung dar, beispielsweise in vektorieller Form, beispielsweise in Form zumindest einer pdf-Datei ("portable document format"-Datei). Es sind aber ebenso auch andere Dateiformate verwendbar, um die Bilddaten zu speichern. Insbesondere können also Vorlagebilddaten 641; 642; 643; 644; 1643; 1644 in Form zumindest einer Matrix aus Bildpunkten und/oder bevorzugt in Form zumindest einer Seitenbeschreibung vorliegen. Insbesondere sei darauf verwiesen, dass Bilddaten und/oder Vorlagebilddaten 641; 642; 643; 644; 1643; 1644 Druckbilder, also Informationen betreffen, die auch beispielsweise zumindest teilweise oder ausschließlich aus Texten und/oder Symbolen bestehen können und nicht zwangsläufig graphische Elemente wie Fotographien oder Zeichnungen aufweisen müssen.

Unter Vorlagebilddaten 641; 642; 643; 644; 1643; 1644 sind dabei bevorzugt solche Bilddaten zu verstehen, die in ihren Motiven und deren Anordnungen dem Druckbild entsprechen, das ein fertiges Druckerzeugnis idealerweise am Ende des Herstellungsprozesses aufweisen würde. Vorlagebilddaten 641; 642; 643; 644; 1643; 1644 sind bevorzugt Daten, die der Druckmaschine 01 zur Verfügung stehen und/oder die in die Druckmaschine 01 eingespeist werden und/oder wurden und/oder die in einem Datenspeicher der Druckmaschine 01 gespeichert sind, beispielsweise in dem zumindest einen Bilddatenspeicher 601. Eine Bedienperson hat bevorzugt keinen direkten Einfluss mehr auf Änderungen der Bilddaten, die gegebenenfalls nach einem Erstellen der Vorlagebilddaten 641; 642; 643; 644; 1643; 1644 vorgenommen werden. Zumindest ist ein solcher Einfluss bevorzugt nicht notwendig. Somit wird eine Bedienung der Druckmaschine vereinfacht. Auf Grund technischer Aspekte wird jedoch bevorzugt zumindest eine solche Änderung vorgenommen, weiter bevorzugt mittels der zumindest einen Druckdatenverarbeitung 600 und/oder der Maschinensteuerung der Druckmaschine 01. Unter geometrisch modifizierten Bilddaten sind dabei bevorzugt geometrisch modifizierte Vorlagebilddaten 641; 642; 643; 644; 1643; 1644 und/oder geometrisch modifizierte Rasterdaten 647 zu verstehen. Dabei sind geometrisch modifizierte Vorlagebilddaten 641; 642; 643; 644; 1643; 1644 bevorzugt solche Bilddaten, die entstehen, wenn Teile der Vorlagebilddaten 641; 642; 643; 644; 1643; 1644 gegenüber anderen Teilen der Vorlagebilddaten 641; 642; 643; 644; 1643; 1644 bewegt, insbesondere verschoben werden und/oder wenn Vorlagebilddaten 641; 642; 643; 644; 1643; 1644 teilweise oder vollständig gestreckt werden. Dabei sind geometrisch modifizierte Rasterdaten 647 bevorzugt solche Bilddaten, die entstehen, wenn Teile von Rasterdaten 647 gegenüber anderen Teilen von Rasterdaten 647 bewegt, insbesondere verschoben werden und/oder wenn Rasterdaten 647 teilweise oder vollständig gestreckt werden.

Wenn im Vorangegangenen und/oder im Folgenden davon die Rede ist, dass Bilddaten und/oder Vorlagebilddaten 641; 642; 643; 644 und/oder geometrisch modifizierte Vorlagebilddaten 641; 642; 643; 644 und/oder Rasterdaten 647 und/oder geometrisch modifizierte Rasterdaten 647 und/oder Ausgabedaten 646 und/oder Ansteuerdaten 646 bewegt und/oder gestreckt und/oder verschoben und/oder geometrisch modifiziert werden, und/oder dass Einzelseiten 638; 639 und/oder Gesamtdruckbilder 636; 637 innerhalb von gespeicherten Daten bewegt und/oder gestreckt und/oder verschoben und/oder geometrisch modifiziert werden, so ist darunter insbesondere zu verstehen, dass die gespeicherten Daten, insbesondere Bilddaten und/oder Vorlagebilddaten 641; 642; 643; 644 und/oder geometrisch modifizierte Vorlagebilddaten 641; 642; 643; 644 und/oder Rasterdaten 647 und/oder geometrisch modifizierte Rasterdaten 647 und/oder Ausgabedaten 646 und/oder Ansteuerdaten 646 derart verändert werden, dass entsprechende grafische Bestandteile eines durch diese gespeicherten Daten, insbesondere Bilddaten und/oder Vorlagebilddaten 641; 642; 643; 644 und/oder geometrisch modifizierte Vorlagebilddaten 641; 642; 643; 644 und/oder Rasterdaten 647 und/oder geometrisch modifizierte Rasterdaten 647 und/oder Ausgabedaten 646 und/oder Ansteuerdaten 646 definierten Bildes nach der Veränderung als entsprechend gestreckte und/oder verschobene und/oder geometrisch modifizierte grafische Bestandteile des danach durch diese entsprechend veränderten gespeicherten Daten, insbesondere Bilddaten und/oder Vorlagebilddaten 641; 642; 643; 644 und/oder geometrisch modifizierte Vorlagebilddaten 641; 642; 643; 644 und/oder Rasterdaten 647 und/oder geometrisch modifizierte Rasterdaten 647 und/oder Ausgabedaten 646 und/oder Ansteuerdaten 646 definierten Bildes definiert sind. Insbesondere ist nicht darunter zu verstehen, dass den gespeicherten Daten, insbesondere Bilddaten und/oder Vorlagebilddaten 641; 642; 643; 644 und/oder geometrisch modifizierte Vorlagebilddaten 641; 642; 643; 644 und/oder Rasterdaten 647 und/oder geometrisch modifizierte Rasterdaten 647 und/oder Ausgabedaten 646 und/oder Ansteuerdaten 646 eine zumindest teilweise andere physikalische Speicherbelegung zugeordnet wird, wobei dennoch nicht auszuschließen ist, dass eine Veränderung der physikalischen Speicherbelegung erfolgt.

Bevorzugt weist die zumindest eine Druckdatenverarbeitung 600 zumindest einen Rastergrafikprozessor 603 auf. Der zumindest eine Rastergrafikprozessor 603 dient bevorzugt einer Rasterung von Bilddaten, insbesondere Vorlagebilddaten 641; 642; 643; 644; 1643; 1644 und/oder geometrisch modifizierten Vorlagebilddaten 641; 642; 643; 644; 1643; 1644 und einer Erzeugung von Rasterdaten 647 daraus. Bevorzugt sind der zumindest eine Bilddatenspeicher 601 und der zumindest eine Rastergrafikprozessor 603 Bestandteile zumindest eines bevorzugt als Bilddatenrechner 611 ausgebildeten Rechners 611. Bevorzugt weist die zumindest eine Druckdatenverarbeitung 600 zumindest einen als Rasterdatenspeicher 602 ausgebildeten zweiten Datenspeicher 602 auf. Der zumindest eine Rasterdatenspeicher 602 dient bevorzugt zumindest einer Speicherung von Rasterdaten 647. Rasterdaten 647 sind bevorzugt gerasterte Vorlagebilddaten 641; 642; 643; 644; 1643; 1644 und/oder gerasterte geometrisch modifizierte Vorlagebilddaten 641; 642; 643; 644; 1643; 1644. Bevorzugt ist der zumindest eine Rasterdatenspeicher 602 Bestandteil zumindest eines bevorzugt als Rasterdatenrechner 612 ausgebildeten Rechners 612. Bevorzugt ist der zumindest eine Rasterdatenrechner 612 über zumindest eine erste Datenleitung 609, beispielsweise zumindest eine erste Ethernet-Leitung 609 mit dem zumindest einen Bilddatenrechner 611 verbunden und/oder verbindbar angeordnet. Weiter bevorzugt weist die Druckdatenverarbeitung 600 zumindest einen Rasterdatenspeicher 602 und/oder zumindest einen Rasterdatenrechner 612 je Druckeinheit 200; 400 auf, also bevorzugt zumindest zwei Rasterdatenspeicher 602 und/oder zumindest zwei Rasterdatenrechner 612 bei zwei Druckeinheiten 200; 400. Noch weiter bevorzugt weist die Druckdatenverarbeitung 600 zumindest einen Rasterdatenspeicher 602 und/oder zumindest einen Rasterdatenrechner 612 je Druckfarbe und je Druckeinheit 200; 400 auf, also bevorzugt zumindest acht Rasterdatenspeicher 602 und/oder zumindest acht Rasterdatenrechner 612 bei zwei Druckeinheiten und jeweils vier Druckfarben.

Unter einem Teilbild ist bevorzugt ein Teil eines Bildes zu verstehen, das zusammen mit anderen Teilbildern ein Gesamtbild ergibt. Ein Teilbild ist beispielsweise ein Farbauszug eines Druckbilds. Ein mehrfarbiges Druckbild lässt sich beispielsweise aus einer Überlagerung von vier Teilbildern der Farben Cyan, Gelb, Magenta und Schwarz erzeugen, wobei auch andere Farben zum Einsatz kommen können. Rasterdaten 647 stellen bevorzugt zumindest eine Bildmatrix von Bildelementen dar, weiter bevorzugt zumindest eine Teilbildmatrix 629 von Teilbildelementen. Bildelemente sind beispielsweise Bildpunkte. Teilbildelemente sind beispielsweise Teilbildpunkte. Ein Bildelement entspricht dabei bevorzugt einem minimalen Ausschnitt des Druckbilds, insbesondere einem vorhandenen oder eben nicht vorhandenen Bildpunkt. Durch Anordnung aller Bildelemente an ihrer jeweiligen vorgesehenen Position innerhalb der Bildmatrix entsteht das Druckbild. Diese vorgesehene Position ist bevorzugt durch eine eindeutig zugeordnete Zeilenangabe und eine eindeutig zugeordnete Spaltenangabe festgelegt. Ein Teilbildelement entspricht dementsprechend bevorzugt einem minimalen Ausschnitt eines Teilbilds des Druckbilds, beispielsweise einem minimalen Ausschnitt eines Farbauszugs des Druckbilds. Durch Anordnung aller Teilbildelemente an ihrer jeweiligen vorgesehenen Position innerhalb der dem Teilbild entsprechenden Teilbildmatrix 629 entsteht das Teilbild. Diese vorgesehene Position ist wiederum bevorzugt durch eine eindeutig zugeordnete Zeilenangabe und eine eindeutig zugeordnete Spaltenangabe festgelegt.

Bevorzugt weist die zumindest eine Druckdatenverarbeitung 600 zumindest eine Datenzuordnung 604, insbesondere Bilddatenzuordnung 604 auf, die weiter bevorzugt als zumindest eine Rasterdatenzuordnung 604 ausgebildet ist. Weiter bevorzugt weist die Druckdatenverarbeitung 600 zumindest eine Datenzuordnung 604 je Druckeinheit 200; 400 auf, also bevorzugt zumindest zwei Datenzuordnungen 604 bei zwei Druckeinheiten 200; 400. Noch weiter bevorzugt weist die Druckdatenverarbeitung 600 zumindest eine Datenzuordnung 604 je Druckfarbe und je Druckeinheit 200; 400 auf, also bevorzugt zumindest acht Datenzuordnungen 604 bei zwei Druckeinheiten 200; 400 und jeweils vier Druckfarben. Bevorzugt ist die zumindest eine Datenzuordnung 604 mittels zumindest einer zweiten Datenleitung 613 mit dem zumindest einen Bilddatenrechner 611 und/oder weiter bevorzugt mit dem zumindest einen Rasterdatenspeicher 602 und/oder dem zumindest einen Rasterdatenrechner 612 verbunden und/oder verbindbar angeordnet.

Bevorzugt weist die zumindest eine Druckdatenverarbeitung 600 zumindest ein erstes Eingabegerät 608 auf. Weiter bevorzugt weist die zumindest eine Druckdatenverarbeitung 600 zumindest ein erstes Eingabegerät 608 je Druckeinheit 200; 400 auf, also bevorzugt zumindest zwei erste Eingabegeräte 608 bei zwei Druckeinheiten 200; 400. Das zumindest eine erste Eingabegerät 608 weist beispielsweise zumindest eine insbesondere berührungsempfindliche Bedieneinrichtung, beispielsweise einen Touchscreen auf und/oder weist zumindest eine Anzeigeeinrichtung auf und/oder weist beispielsweise zumindest einen Datenspeicher auf und/oder weist beispielsweise zumindest eine Datenverarbeitungseinrichtung auf, beispielsweise einen Computerprozessor.

Bevorzugt weist die zumindest eine Druckdatenverarbeitung 600 zumindest eine Signalquelle 617; 618 zur Charakterisierung einer Drehwinkellage insbesondere zumindest eines Zentralzylinders 201; 401 auf. Die zumindest eine Signalquelle 617; 618 zur Charakterisierung einer Drehwinkellage ist beispielsweise als der zumindest eine erste Drehwinkelsensor 617 insbesondere des ersten Zentralzylinders 201 und/oder als der zumindest eine zweite Drehwinkelsensor 618 insbesondere des zweiten Zentralzylinders 401 und/oder als erste Soll-Daten 617 zu der Drehstellung des ersten Antriebsmotors 208 und/oder als zweite Soll-Daten 618 zu der Drehstellung des zweiten Antriebsmotors 408 ausgebildet.

Bevorzugt weist die zumindest eine Druckdatenverarbeitung 600 zumindest einen Registersensor 619 auf und/oder ist die zumindest eine Druckdatenverarbeitung 600 mit zumindest einem Registersensor 619 schaltungstechnisch verbunden und/oder verbindbar angeordnet. Der zumindest eine Registersensor 619 dient bevorzugt einer Erfassung zumindest eines ersten, bevorzugt auf den Bedruckstoff 02 aufgetragenen Druckbildes, beispielsweise zumindest einer Registermarke. Der zumindest eine Registersensor 619 erfasst bevorzugt eine Lage zumindest eines und weiter bevorzugt jedes ersten, von dem zumindest einen ersten Druckwerk 211 auf die erste Seite der Bedruckstoffbahn 02 aufgetragenen Druckbildes. Als das zumindest eine Druckbild, das von dem Registersensor 619 erfasst wird, kann beispielsweise ein Barcode eingesetzt werden, der für diesen Zweck in der ersten Druckeinheit 200 auf die Bedruckstoffbahn 02 aufgetragen wird. Ein solcher Barcode kann Informationen über den Inhalt und/oder über Bildabmessungen eines von der ersten Druckeinheit 200 auf die Bedruckstoffbahn 02 aufgetragenen Druckbildes enthalten. Als das zumindest eine Druckbild, das von dem Registersensor 619 erfasst wird, kann aber beispielsweise auch ein einfaches Symbol, beispielsweise eine Strich eingesetzt werden. Als das zumindest eine Druckbild, das von dem Registersensor 619 erfasst wird, kann aber beispielsweise auch zumindest ein gesamtes erstes Gesamtdruckbild 636 eingesetzt werden. Als das zumindest eine Druckbild, das von dem Registersensor 619 erfasst wird, kann beispielsweise auch zumindest ein Instandhaltungs-Druckbild sein, das beispielsweise zusätzlich zu gewünschten Druckbildern in regelmäßigen Abständen erzeugt wird, um an allen Düsen eine Instandhaltung zu erreichen, also eine dauerhafte Bereitschaft zum sofortigen Drucken auf Anforderung, insbesondere beispielsweise Streifen, die zwischen einzelne Gesamtdruckbilder gedruckt werden und gegebenenfalls in einer Nachbearbeitung vom Bedruckstoff abgeschnitten werden.

Durch das Erfassen des Druckbilds wird bevorzugt ein Erreichen einer hohen Qualität eines Registers und/oder eines Passers eines noch aufzutragenden Druckbilds relativ zu einem bereits aufgetragenen Druckbild erleichtert, insbesondere eines noch aufzutragenden zweiten Gesamtdruckbilds 637 relativ zu einem bereits aufgetragenen ersten Gesamtdruckbild 636, selbst wenn beispielsweise eine Abschnittslänge, also eine Länge von aufgetragenen Druckbildern in Richtung des Transportwegs der Bedruckstoffbahn 02 verändert wird. Die zumindest eine Registermarke ist bevorzugt zumindest ein zu diesem Zweck erstelltes Druckbild oder ein Teil eines zum eigentlichen Druckauftrag gehörenden Druckbildes, beispielsweise des ersten Gesamtdruckbilds 636. Bevorzugt wird mittels der zumindest einen ersten Druckeinheit 200 und/oder mittels einer zusätzlichen Druckeinheit zumindest eine Registermarke und weiter bevorzugt in regelmäßigen Abständen eine Reihe von Registermarken auf eine erste Seite des Bedruckstoffs 02 gedruckt. Eine solche zusätzliche Druckeinheit ist beispielsweise eine Offsetdruckeinheit, mittels der der Bedruckstoff 02 bedruckt wird und/oder bedruckt wurde, noch bevor er der zumindest einen ersten Druckeinheit 200 zugeführt wird.

Bevorzugt wird an der zumindest einen zweiten Druckeinheit 400 mittels des zumindest einen Registersensors 619 ein von der zumindest einen ersten Druckeinheit 200 gedrucktes Druckbild und/oder eine von der zumindest einen ersten Druckeinheit 200 gedruckte Registermarke erfasst. Die übergeordnete Maschinensteuerung und insbesondere die zumindest eine Druckdatenverarbeitung 600 errechnet bevorzugt aus der Lage dieses gedruckten Druckbildes und/oder dieser Registermarke einen idealen Zeitraum zur Ansteuerung der Düsen der Druckköpfe 412 des zumindest einen zweiten Druckwerks 411 der zumindest einen zweiten Druckeinheit 400. Auf diese Weise ist eine registergerechte und/oder passergerechte Ausrichtung des von der ersten Druckeinheit 200 erstellten Druckbildes und des von der zweiten Druckeinheit 400 erstellten Druckbildes erreichbar, insbesondere des zumindest einen zweiten Gesamtdruckbilds 637 relativ zu dem zumindest einen ersten Gesamtdruckbild 636. Insbesondere ist im Fall eines beidseitigen Bedruckens eine registergerechte Ausrichtung von erstem Druckbild oder erstem Gesamtdruckbild 636 auf der ersten Seite des Bedruckstoffbahn 02 zu zweitem Druckbild oder zweitem Gesamtdruckbild 637 auf der zweiten Seite der Bedruckstoffbahn 02 erreichbar.

Bevorzugt wird an der zumindest einen ersten Druckeinheit 200 mittels zumindest eines Registersensors 619 ein von zumindest einer zusätzlichen Druckeinheit und/oder einer anderen Druckmaschine gedrucktes Druckbild und/oder eine von der zumindest einen zusätzlichen Druckeinheit und/oder anderen Druckmaschine gedruckte Registermarke erfasst. Die übergeordnete Maschinensteuerung und insbesondere die zumindest eine Druckdatenverarbeitung 600 errechnet bevorzugt aus der Lage dieses Druckbildes und/oder dieser Registermarke den idealen Zeitraum zur Ansteuerung der Düsen der Druckköpfe 212 des zumindest einen ersten Druckwerks 211 der zumindest einen ersten Druckeinheit 200. Auf diese Weise ist eine registergerechte und/oder passergerechte Ausrichtung des von der ersten Druckeinheit 200 erstellten Druckbildes und des von der zusätzlichen Druckeinheit und/oder anderen Druckmaschine erstellten Druckbildes erreichbar.

In dem Fall, in dem der zumindest eine Registersensor 619 der zumindest einen zweiten Druckeinheit 400 zugeordnet ist, ist der zumindest eine Registersensor 619 bezogen auf den Transportweg der Bedruckstoffbahn 02 bevorzugt näher an dem zweiten Zentralzylinder 401 und/oder Übertragungskörper angeordnet als an dem ersten Zentralzylinder 201 und/oder Übertragungskörper. Auf diese Weise können möglichst viele Einflüsse berücksichtigt werden, der die Bedruckstoffbahn 02 entlang ihres Transportwegs zwischen dem zumindest einen ersten Druckwerk 211 und dem zumindest einen zweiten Druckwerk 411 ausgesetzt ist, beispielsweise Dehnungen der Bedruckstoffbahn 02 entlang des Transportwegs. Bevorzugt ist der zumindest eine Registersensor 619 als zumindest eine Flächenkamera 619 ausgebildet. Eine solche Flächenkamera weist bevorzugt ein ausreichend hohes Auflösungsvermögen auf, um Registerfehler und/oder Passerfehler erkennen zu können, beispielsweise ein besseres Auflösungsvermögen als 0,05 mm. Bevorzugt ist der zumindest eine Registersensor 619 mit dem zumindest einen ersten Druckbildsensor identisch, mit dem die Ansteuerung aller insbesondere in Umfangsrichtung des ersten Zentralzylinders 201 hintereinander liegenden und/oder wirkenden Druckköpfe 212 und/oder Doppelreihen von Druckköpfen 212 des ersten Druckwerks 211 überwacht und geregelt wird.

Bevorzugt ist der zumindest eine Registersensor 619 direkt oder über zumindest eine weitere zwischengeschaltete Schalteinrichtung 614; 616 mit der zumindest einen Datenzuordnung 604 verbunden und/oder verbindbar angeordnet. Bevorzugt ist die zumindest eine Signalquelle 617; 618 zur Charakterisierung einer Drehwinkellage direkt oder über zumindest eine weitere zwischengeschaltete Schalteinrichtung 614; 616; 621 mit der zumindest einen Datenzuordnung 604 verbunden und/oder verbindbar angeordnet. Bevorzugt ist das zumindest eine Eingabegerät 608 direkt oder über zumindest eine weitere zwischengeschaltete Schalteinrichtung 614 mit der zumindest einen Datenzuordnung 604 verbunden und/oder verbindbar angeordnet.

Bevorzugt weist die zumindest eine Druckdatenverarbeitung 600 zumindest eine als Synchronisierungseinrichtung 614 ausgebildete Schalteinrichtung 614 auf, weiter bevorzugt jeweils zumindest eine Synchronisierungseinrichtung 614 je Druckeinheit 200; 400, insbesondere zumindest zwei Synchronisierungseinrichtungen 614 bei zwei Druckeinheiten 200; 400. Bevorzugt ist die zumindest eine Datenzuordnung 604 mit der zumindest einen Synchronisierungseinrichtung 614 verbunden und/oder verbindbar angeordnet. Bevorzugt ist das zumindest eine erste Eingabegerät 608 mit der zumindest einen Synchronisierungseinrichtung 614 verbunden und/oder verbindbar angeordnet. Bevorzugt ist das zumindest eine erste Eingabegerät 608 über die als zumindest eine Synchronisierungseinrichtung 614 ausgebildete Schalteinrichtung 614 mit der zumindest einen Datenzuordnung 604 verbunden und/oder verbindbar angeordnet. Die zumindest eine Synchronisierungseinrichtung 614 dient bevorzugt dazu, eingehende Signale zeitlich aufeinander abgestimmt weiterzureichen.

Bevorzugt weist die zumindest eine Druckdatenverarbeitung 600 zumindest eine als Datenaufbereitung 616, insbesondere Datensynchronisierung 616 ausgebildete Schalteinrichtung 616 auf, weiter bevorzugt zumindest eine Datenaufbereitung 616 je Druckeinheit 200; 400, insbesondere zumindest zwei Datenaufbereitungen 616 bei zwei Druckeinheiten 200; 400. Die zumindest eine Datenaufbereitung 616 dient bevorzugt dazu, eingehende Daten in zumindest ein Format umzuwandeln, das von nachfolgenden Einrichtungen verarbeitet werden kann, beispielsweise von der Synchronisierungseinrichtung 614. Bevorzugt ist der zumindest eine Registersensor 619 mit der zumindest einen Datenaufbereitung 616 verbunden und/oder verbindbar angeordnet. Bevorzugt ist die zumindest eine Datenaufbereitung 616 mit der zumindest einen Synchronisierungseinrichtung 614 verbunden und/oder verbindbar angeordnet. Insbesondere dadurch ist der zumindest eine Registersensor 619 zumindest über die zumindest eine Datenaufbereitung 616 und/oder zumindest über die zumindest eine Synchronisierungseinrichtung 614 mit der zumindest einen Datenzuordnung 604 verbunden und/oder verbindbar angeordnet.

Bevorzugt weist die zumindest eine Druckdatenverarbeitung 600 zumindest eine als zumindest ein Signalwandler 621 für Drehwinkellagen ausgebildete Schalteinrichtung 621 auf, insbesondere für Drehwinkellagen des zumindest einen ersten Zentralzylinders 201 und/oder Drehwinkellagen des zumindest einen zweiten Zentralzylinders 401 und/oder Drehwinkellagen des zumindest einen ersten Antriebsmotors 208 des zumindest einen ersten Zentralzylinders 201 und/oder Drehwinkellagen des zumindest einen zweiten Antriebsmotors 408 des zumindest einen zweiten Zentralzylinders 401. Der zumindest eine Signalwandler 621 ist bevorzugt mit der zumindest einen Datenaufbereitung 616 verbunden und/oder verbindbar angeordnet. Der zumindest eine Signalwandler 621 ist damit bevorzugt zumindest indirekt mit der zumindest einen Synchronisierungseinrichtung 614 und/oder mit der zumindest einen Datenzuordnung 604 verbunden und/oder verbindbar angeordnet.

Bevorzugt ist die zumindest eine Druckdatenverarbeitung 600 mit dem zumindest einen gemeinsame Spannungsversorgungssystem 606 der Druckmaschine 01 verbunden und/oder verbindbar angeordnet. Bevorzugt weist die Druckmaschine 01 zumindest ein gemeinsames Spannungsversorgungssystem 606 je Druckeinheit 200; 400 auf, weiter bevorzugt je ein gemeinsames Spannungsversorgungssystem 606 je Doppelreihe von Druckköpfen 212; 412. Das zumindest eine gemeinsame Spannungsversorgungssystem 606 weist bevorzugt zumindest eine Spannungsquelle 607 auf, die weiter bevorzugt zumindest eine elektrische Spannung zur Verfügung stellt, die beispielsweise 12 V und/oder 24 V und/oder 26 V beträgt.

Bevorzugt weist der zumindest eine Druckkopf 212; 412 zumindest eine Druckkopfsteuerung 622 auf. Weiter bevorzugt weist jeder Druckkopf 212; 412 zumindest eine eigene und bevorzugt genau eine eigene Druckkopfsteuerung 622 auf. Bevorzugt ist jede Druckkopfsteuerung 622 über zumindest eine eigene Spannungsleitung 627 mit der zumindest einen Spannungsquelle 607 verbunden und/oder verbindbar angeordnet. Bevorzugt ist entlang dieser eigenen Spannungsleitung 627 zumindest ein Spannungs- und Sicherungsanschluss 628 angeordnet. Durch diesen wird beispielsweise eine Verbindung zwischen der Druckkopfsteuerung 622 und der Spannungsquelle 607 und/oder eine Absicherung gegen zu hohe Stromstärken oder Ähnliches sichergestellt. Bevorzugt ist jeder Druckkopf 212; 412 direkt und/oder über die zumindest eine ihm zugeordnete Druckkopfsteuerung 622 mit der zumindest einen Spannungsquelle 607 verbunden und/oder verbindbar angeordnet. Bevorzugt erstreckt sich zwischen jedem Druckkopf 212; 412 und der ihm zugeordneten Druckkopfsteuerung 622 zumindest eine Datenleitung 623 und zumindest eine davon verschiedene Spannungsversorgungsleitung 624. Alternativ erstreckt sich zwischen jedem Druckkopf 212; 412 und der ihm zugeordneten Druckkopfsteuerung 622 zumindest eine gemeinsame Leitung, die sowohl als Datenleitung als auch als Spannungsversorgungsleitung ausgebildet ist. Bevorzugt ist jede Druckkopfsteuerung 622 über zumindest eine Steuerleitung 626 mit der zumindest einen Datenzuordnung 604 verbunden und/oder verbindbar angeordnet. Alternativ wäre es auch möglich, mehrere oder alle Druckkopfsteuerungen 622 in Reihe zu schalten und lediglich wenige oder nur eine Druckkopfsteuerung 622 direkt mit der zumindest einen Datenzuordnung 604 zu verbinden.

Bevorzugt mittels des zumindest einen Rastergrafikprozessors 603 werden bevorzugt aus einer bevorzugt in dem zumindest einen Bilddatenspeicher 601 gespeicherten Bildvorlage, beispielsweise in Form von Vorlagebilddaten 641; 642; 643; 644; 1643; 1644 und/oder geometrisch modifizierten Vorlagebilddaten 641; 642; 643; 644; 1643; 1644 und/oder Abschnitten von Vorlagebilddaten 641; 642; 643; 644; 1643; 1644 Teilbilder beispielsweise in Form von Farbauszügen 629 erzeugt und weiter bevorzugt in dem zumindest einen Rasterdatenspeicher 602 abgelegt. Dieser Vorgang wird beispielsweise Rasterung genannt. Bevorzugt wird für jede zu verdruckende Druckfarbe je Druckeinheit 200; 400 jeweils zumindest ein Teilbild in Form zumindest eines Farbauszugs erzeugt. Weiter bevorzugt werden für jede zu verdruckende Druckfarbe zunächst jeweils mehrere Teilbildebenen 632 in Form von mehreren unterschiedlichen Farbauszügen 629 zueinander unterschiedlicher, innerhalb jeweiliger Farbauszüge gleicher Druckfarbe erzeugt, wobei eine Anzahl n dieser Teilbildebenen 632 je Druckfarbe bevorzugt gleich einer Anzahl n der unterschiedlichen Tropfengrößen ist, die mittels jedes Druckkopfs 212; 412 erzeugbar sind. Bevorzugt ist diese Anzahl n zumindest drei. Jede Teilbildebene 632 enthält dann Informationen über genau die Positionen, an denen jeweils ein Bildpunkt der jeweiligen Farbe und der jeweiligen Größe gedruckt werden soll. Beispielsweise durch Überlagerung der Teilbildebenen 632 einer Druckfarbe wird der Farbauszug und/oder das Teilbild dieser Druckfarbe erzeugt. Durch Überlagerung aller Farbauszüge 629 und/oder Teilbilder ergibt sich das gesamte Druckbild. Bevorzugt werden die Teilbildebenen 632 einer Druckfarbe zunächst zusammengefasst und dann als ein Teilbild dieser Druckfarbe gespeichert. Die Teilbilder und die Teilbildebenen 632 werden auch Rasterdaten 647 genannt.

Bei der Rasterung entsteht bevorzugt für jede Druckfarbe aus jedem Druckbild zumindest ein und weiter bevorzugt genau ein Teilbild in Form zumindest einer Teilbildmatrix 629. Diese zumindest eine Teilbildmatrix 629 weist bevorzugt Zeilen und Spalten 633 auf. Bevorzugt entsprechen Zeilen der zumindest einen Teilbildmatrix 629 Linien des gedruckten Druckbilds, die orthogonal zu der Transportrichtung des Bedruckstoffs 02 orientiert sind und/oder entsprechen Spalten 633 der zumindest einen Teilbildmatrix 629 Linien des gedruckten Druckbilds, die parallel zu der Transportrichtung des Bedruckstoffs 02 liegen. Jeder Position der entsprechenden Teilbildmatrix 629, also jeder eindeutigen Kombination aus einer festgelegten Zeile und einer festgelegten Spalte 633 ist bevorzug zumindest ein und weiter bevorzugt genau ein Eintrag 631 zugeordnet. Jeder Eintrag 631 kann jeweils einen Wert aus einer Anzahl von n+1 (n plus eins) Vorgabewerten annehmen. Bevorzugt weist jeder Eintrag 631 entweder einen Wert auf, der einer Anweisung zum Pausieren entspricht, oder einen Wert, der einer Anweisung zum Ausstoßen eines Tropfens und weiter bevorzugt einer diesem Tropfen zugeordneten Tropfengröße entspricht. Jeder dieser n+1 (n plus eins) Vorgabewerte entspricht bevorzugt jeweils einer Tropfengröße oder der Information, dass an dieser Stelle kein Bildpunkt zu erzeugen, also keine Druckfarbe auszustoßen ist. So können diese Vorgabewerte beispielsweise in einer Zwei-Bit-Darstellung "00" für "keine Druckfarbe" oder "01" für einen "kleinen" Bildpunkt bzw. Tropfen oder "10" für einen "mittleren" Bildpunkt bzw. Tropfen oder "11" für einen "großen" Bildpunkt bzw. Tropfen lauten. Jede derartige Spalte 633 enthält bevorzugt zumindest eine erste Folge 633 aus mehreren Einträgen 631, wobei zunächst jeder Eintrag 631 dieser zumindest einen ersten Folge 633 entweder einen Wert aufweist, der einer Anweisung zum Pausieren entspricht, oder einen Wert aufweist, der einer Anweisung zum Ausstoßen eines Tropfens und einer diesem Tropfen zugeordneten Tropfengröße entspricht.

Bevorzugt ist jede Teilbildmatrix 629 jeder Druckfarbe derart gespeichert und/oder verarbeitbar, dass jeder Düse der dieser Druckfarbe zugeordneten Druckköpfe 212; 412 bevorzugt genau eine Spalte 633 des Teilbilds zugeordnet ist und/oder wird. Diese Spalte 633 enthält dann in unterschiedlichen Zeilen Einträge 631, die jeweils einen der entsprechenden Vorgabewerte aufweisen und somit die entsprechende Düse zu relevanten Zeitpunkten zum Ausstoßen von Druckfarbe veranlassen. Durch zeitlich abgeglichenes Abarbeiten von ganzen Zeilen der entsprechenden Teilbildmatrix 629 durch die Düsen des entsprechenden zumindest einen Druckkopfs 212; 412 entsteht auf dem Bedruckstoff 02 bevorzugt das zu erzeugende Druckbild in Form von überlagerten matrixartigen Mustern aus Bildpunkten bevorzugt unterschiedlicher Druckfarben. Unter einem zeitlich abgeglichenen Abarbeiten soll dabei insbesondere auch der Fall verstanden werden, in dem die Düsen an unterschiedlichen Stellen bezüglich des Transportweg des Bedruckstoffs 02 angeordnet sind und daher beispielsweise nicht gleichzeitig Druckfarbe ausstoßen, wenn eine gerade Linie erzeugt werden soll, die orthogonal zu der Transportrichtung orientiert ist.

Die bevorzugt in zumindest einem Datenspeicher 601; 602 und weiter bevorzugt in dem zumindest einen Rasterdatenspeicher 602 hinterlegten Teilbilder, insbesondere Teilbildmatrizen 629 und/oder Rasterdaten 647 werden bevorzugt über die zumindest eine zweite Datenleitung 613 an die zumindest eine Datenzuordnung 604 übermittelt. Die zumindest eine Datenzuordnung 604 ist bevorzugt mit einer Anzahl von Druckköpfen 212; 412 verbunden, die zusammengenommen eine Mehrzahl von Düsen aufweisen. Beispielsweise ist die zumindest eine Datenzuordnung 604 mit allen Druckköpfen 212; 412 der jeweiligen Druckeinheit 200; 400 verbunden, die einer bestimmten Druckfarbe zugeordnet sind und/oder für den Ausstoß der Druckfarbe für einen gesamten Farbauszug 629 vorgesehen sind. Die zumindest eine Datenzuordnung 604 ordnet bevorzugt jede Spalte 633 des ihm vorliegenden Farbauszugs 629, also insbesondere der ihm vorliegenden Teilbildmatrix 629 der Rasterdaten 647 zumindest einer und weiter bevorzugt genau einer Düse eines Druckkopfs 212; 412 zu. Auf diese Weise ist eine Lage eines zu druckenden Druckbilds auf dem Bedruckstoff 02 bezüglich einer Richtung A quer zum vorgesehenen Transportweg des Bedruckstoffs 02 und/oder bezüglich der axialen Richtung A festgelegt. Soll das zu druckende Druckbild bezüglich dieser Richtung A in seiner Position verändert werden, so wird dies beispielsweise durch eine Verschiebung von Zuordnungen zwischen den Spalten 633 der Teilbildmatrizen 629 zu den Düsen der Druckköpfe 212; 412 realisiert. Bevorzugt sind und/oder werden die Rasterdaten 647 also in Form von abzuarbeitenden Einträgen 631 hinterlegt, insbesondere in Form von Folgen von Einträgen 631, die mit jeweiligen Düsen abzuarbeiten sind. Die zumindest eine Datenzuordnung 604 ordnet bevorzugt jeder Düse eine von ihr abzuarbeitende Folge von Einträgen 631 zu.

Im Druckbetrieb werden Zeitpunkte, zu denen jeweilige Zeilen der das Teilbild repräsentierenden Teilbildmatrix 629 abgearbeitet werden, bevorzugt im Zusammenspiel mit der Rotationsgeschwindigkeit und der Drehwinkellage des jeweiligen Zentralzylinders 201; 401 und/oder des jeweiligen Antriebsmotors 208; 408 ermittelt, mit dem der dieses Teilbild druckende Druckkopf 212; 412 zusammenwirkt. Sowohl die Lage als auch die Bildabmessung des zu erzeugenden und/oder des gedruckten Druckbilds auf dem Bedruckstoff 02 in einer Richtung parallel zu dem vorgesehenen Transportweg des Bedruckstoffs 02 und/oder in Umfangsrichtung des zumindest einen Zentralzylinders 201; 401 sind beeinflusst und/oder beeinflussbar durch die jeweiligen Zeitpunkte, zu denen die entsprechenden Düsen ihre Beschichtungsmitteltropfen ausstoßen und durch die Drehwinkellage und/oder Rotationsgeschwindigkeit des entsprechenden Zentralzylinders 201; 401 zu diesem Zeitpunkt und/oder durch eine relative Lage des Bedruckstoffs 02 auf dem entsprechenden Zentralzylinder 201; 401 zu diesem Zeitpunkt. Deshalb verarbeitet die zumindest eine Datenzuordnung 604 bevorzugt sowohl die jeweiligen Rasterdaten 647, als auch die von der zumindest einen Signalquelle 617; 618 zur Charakterisierung einer Drehwinkellage insbesondere zumindest eines Zentralzylinders 201; 401 zur Verfügung gestellten Daten bei einer Berechnung von Konditionen, insbesondere Zeitpunkten, zu denen die Düsen der an diese zumindest eine Datenzuordnung 604 angeschlossenen Druckköpfe 212; 412 Beschichtungsmittel auszustoßen haben. Zumindest die zumindest eine Datenzuordnung 604 der zumindest einen zweiten Druckeinheit 400 und weiter bevorzugt auch die zumindest eine Datenzuordnung 604 der zumindest einen ersten Druckeinheit 200 verarbeitet bevorzugt zusätzlich die von dem zumindest einen Registersensor 619 direkt oder indirekt zur Verfügung gestellten Informationen, um einen registerhaltigen und/oder passerhaltigen Druck zu ermöglichen, beispielsweise bei Bedrucken der Vorderseite des Bedruckstoffs 02 mittels der ersten Druckeinheit 200 und Bedrucken der Rückseite des Bedruckstoffs 02 mittels der zweiten Druckeinheit 400 oder bei Bedrucken einer gleichen Seite des Bedruckstoffs 02 sowohl mit der ersten Druckeinheit 200 als auch mit der zweiten Druckeinheit 400.

Beispielsweise in einem Fall, in dem je Druckeinheit 200; 400 mehrere Reihen und insbesondere mehrere Doppelreihen von Druckköpfen 212; 412 je Druckfarbe zum Einsatz kommen, werden bevorzugt von der zumindest einen Datenzuordnung 604 die Spalten 633 der jeweiligen Farbauszüge 629 und insbesondere der Teilbildmatrizen 629 insbesondere auf die axiale Richtung A bezogen der Reihe nach den Düsen der Druckköpfe 212; 412 zugeordnet, unabhängig von der Anordnung der Düsen bezüglich der Transportrichtung des Bedruckstoffs 02 und/oder der Umfangsrichtung des jeweiligen Zentralzylinders 201; 401. Diese Anordnung spielt lediglich wiederum bei der Bestimmung des richtigen Zeitpunkts des Ausstoßens des Beschichtungsmittels eine Rolle. Insbesondere im Fall von zwei Doppelreihen von Druckköpfen 212; 412 je Druckeinheit 200; 400 und je Druckfarbe werden die Spalten 633 der jeweiligen Teilbildmatrix 629 bevorzugt abwechselnd einer entsprechenden Düse eines Druckkopfs 212; 412 einer ersten der zwei Doppelreihen von Druckköpfen 212; 412 und einer entsprechenden Düse eines Druckkopfs 212; 412 einer zweiten der zwei Doppelreihen von Druckköpfen 212; 412 zugeordnet. Diese Zuordnung kann beispielsweise alternativ zu der zumindest einen Datenzuordnung 604 auch mittels des zumindest einen Rasterdatenrechners 612 erfolgen. Das Teildruckbild bzw. der Farbauszug wird also spaltenweise auf zwei Doppelreihen von Druckköpfen 212; 412 aufgeteilt und erst durch das Auftragen von Druckfarbe auf dem Bedruckstoff 02 wieder zusammengesetzt.

Bevorzugt erlaubt das zumindest eine Eingabegerät 608 durch eine Bedienperson eine direkte Beeinflussung eines Ausstoßes von Beschichtungsmittel durch die Düsen solcher Druckköpfe 212; 412, die an die gleiche Datenzuordnung 604 angeschlossen sind, wie das zumindest eine Eingabegerät 608. Beispielsweise kann die Bedienperson damit einen Ausdruck eines Testbilds erzwingen. Vorlagebilddaten und/oder Rasterdaten zumindest eines solchen Testbilds sind bevorzugt in dem zumindest einen Datenspeicher des zumindest einen Eingabegeräts 608 hinterlegt und/oder hinterlegbar und stehen bevorzugt unabhängig von dem zumindest einen Rasterdatenspeicher 602 zur Verfügung.

Bevorzugt zeichnet sich die Druckmaschine 01 dadurch aus, dass die Druckmaschine 01 zumindest einen Druckkopf 212; 412 mit zumindest einer ersten Düse aufweist und dass die Druckmaschine 01 bevorzugt die zumindest eine Druckdatenverarbeitung 600 aufweist und die zumindest eine Druckdatenverarbeitung 600 den zumindest einen Datenspeicher 601; 602, insbesondere den zumindest einen Rasterdatenspeicher 602 aufweist, in dem zumindest eine dieser zumindest einen ersten Düse zugeordnete und/oder zuordenbare erste Folge 633 von nacheinander abzuarbeitenden Einträgen 631 speicherbar und/oder gespeichert ist. Bevorzugt weist jeder Eintrag 631 entweder einen Wert auf, der einer Anweisung zum Pausieren entspricht, oder einen Wert, der einer Anweisung zum Ausstoßen eines Tropfens und weiter bevorzugt auch einer Anweisung zu einer diesem Tropfen zugeordnete Tropfengröße entspricht. Bevorzugt weist zumindest eine Druckdatenverarbeitung 600 zumindest einen hinterlegten Füllungsalgorithmus auf. Bevorzugt ist mittels des zumindest einen Füllungsalgorithmus eine Überprüfung der zumindest einen weiter bevorzugt in dem zumindest einen Rasterdatenspeicher 602 gespeicherten ersten, bevorzugt einem Teilbild entsprechende Folge 633 von Einträgen 631 darauf hin durchführbar, ob sie zumindest eine Teilfolge 634 aufweist, die ausschließlich Einträge 631 mit Anweisungen zum Pausieren enthält und die eine vorgegebene Anzahl von Einträgen 631 überschreitet. Bevorzugt ist mittels des zumindest einen Füllungsalgorithmus und weiter bevorzugt auf Grund dieser Überprüfung zumindest ein Eintrag 631 dieser zumindest einen Teilfolge 634 derart veränderbar, dass er danach einen Wert aufweist, der einer Anweisung zum Ausstoßen eines Tropfens entspricht und der weiter bevorzugt zusätzlich einer diesem Tropfen zugeordnete Tropfengröße entspricht. Bevorzugt entspricht diese Tropfengröße einer kleinsten Tropfengröße, die mit der zumindest einen ersten Düse ausstoßbar ist und/oder einer kleinsten Tropfengröße, die überhaupt in Einträgen der zumindest einen Teilbildmatrix vorgesehen ist.

Bevorzugt zeichnet sich die Druckmaschine 01 dadurch aus, dass die Druckmaschine 01 zumindest eine Druckdatenverarbeitung 600 aufweist, die zumindest einen Rastergrafikprozessor 603 aufweist, mittels dem aus Vorlagebilddaten 641; 642; 643; 644; 1643; 1644 und/oder geometrisch modifizierten Vorlagebilddaten 641; 642; 643; 644; 1643; 1644 zumindest die zumindest eine erste Folge 633 von Einträgen 631 erstellbar ist und/oder dass die Druckmaschine 01 zumindest eine Druckdatenverarbeitung 600 aufweist, die zumindest einen Rasterdatenspeicher 602 aufweist, in dem zumindest eine dieser zumindest einen ersten Düse zugeordnete und/oder zuordenbare erste Folge 633 von nacheinander abzuarbeitenden Einträgen 631 speicherbar und/oder gespeichert ist und/oder dass die Druckdatenverarbeitung 600 zumindest einen Bilddatenrechner 611 und/oder zumindest einen Rasterdatenrechner 612 aufweist, mittels dem der zumindest eine Füllungsalgorithmus ausführbar ist. Bevorzugt zeichnet sich die Druckmaschine 01 dadurch aus, dass die Druckdatenverarbeitung 600 zumindest einen Datenspeicher aufweist, in dem der zumindest eine Füllungsalgorithmus hinterlegt ist, wobei dieser zumindest eine Datenspeicher beispielsweise der zumindest eine Bilddatenspeicher 601 und/oder der zumindest eine Rasterdatenspeicher 602 und/oder der zumindest eine Datenspeicher des zumindest einen ersten Eingabegeräts 608 und/oder ein anderer Datenspeicher ist. Bevorzugt ist die Druckmaschine 01 zur Durchführung zumindest eines im Folgenden beschriebenen bevorzugten Verfahrens zum Betreiben einer Druckmaschine 01 geeignet.

Bevorzugt beziehen sich die Folgen 633 und Teilfolgen 634 von Einträgen 631 immer nur auf solche Einträge 631, die entweder einen Wert aufweisen, der einer Anweisung zum Pausieren entspricht, oder einen Wert aufweisen, der einer Anweisung zum Ausstoßen eines Tropfens entspricht. Andere in der Teilbildmatrix enthaltene Informationen und/oder Zeichen und/oder Kombinationen von Zeichen sollen dabei außer Acht gelassen werden, beispielsweise Platzhalter, die einzelne Einträge 631 voneinander trennen oder ähnliches.

Bevorzugt werden Rasterdaten 647 derart angepasst, dass die Düsen der Druckköpfe 212; 412 regelmäßig aktiviert werden, um eine erwünschte Druckqualität aufrecht zu erhalten. Dazu findet bevorzugt ein Verfahren zum Betreiben einer Druckmaschine 01 Anwendung, wobei bevorzugt die Druckmaschine 01 zumindest einen Druckkopf 212; 412 mit zumindest einer ersten Düse aufweist und wobei bevorzugt Ansteuerdaten 646 und/oder Rasterdaten 647 zumindest eines zu druckenden Druckbilds in Form von abzuarbeitenden Einträgen 631 an den zumindest einen Druckkopf 212; 412 weitergeleitet werden und wobei bevorzugt jeder Eintrag 631 jeweils einer der zumindest einen ersten Düse zugeordnet ist und/oder wird und entweder einen Wert aufweist, der einer Anweisung zum Pausieren entspricht, oder einen Wert aufweist, der einer Anweisung zum Ausstoßen eines Tropfens entspricht und wobei bevorzugt insbesondere während eines Druckvorgangs des zumindest einen Druckbilds in Abhängigkeit von dem zumindest einen Druckbild zugeordneten Daten, beispielsweise Rasterdaten 647 oder Vorlagebilddaten 641; 642; 643; 644; 1643; 1644, mittels der zumindest einen ersten Düse bevorzugt zumindest zwischen zwei Tropfen, die Bildpunkte eines selben zu druckenden Druckbilds repräsentieren und ebenfalls mittels dieser zumindest einen ersten Düse ausgestoßen werden, zumindest ein zusätzlicher Tropfen ausgestoßen wird, der keinen Bildpunkt dieses zu druckenden Druckbilds repräsentiert.

Bevorzugt findet zusätzlich oder alternativ ein Verfahren zum Betreiben der Druckmaschine 01 Anwendung, wobei bevorzugt die Druckmaschine 01 zumindest einen Druckkopf 212; 412 mit zumindest einer ersten Düse aufweist und wobei bevorzugt in zumindest einem Datenspeicher 601; 602, weiter bevorzugt in dem zumindest einen Rasterdatenspeicher 602 der Druckmaschine 01 Rasterdaten 647 zumindest eines zu druckenden Druckbilds in Form von abzuarbeitenden Einträgen 631 hinterlegt sind und/oder werden, die bevorzugt zuvor bevorzugt mittels des zumindest einen Rastergrafikprozessors 603 aus Bilddaten, insbesondere Vorlagebilddaten 641; 642; 643; 644; 1643; 1644 und/oder geometrisch modifizierten Vorlagebilddaten 641; 642; 643; 644; 1643; 1644 des zu druckenden Druckbilds erstellt werden und/oder wurden und wobei bevorzugt jeder Eintrag 631 jeweils einer Düse zugeordnet ist und/oder wird und entweder einen Wert aufweist, der einer Anweisung zum Pausieren entspricht, oder einen Wert aufweist, der einer Anweisung zum Ausstoßen eines Tropfens und weiter bevorzugt auch einer Anweisung zu einer diesem Tropfen zugeordneten Tropfengröße entspricht. Bevorzugt mittels des zumindest einen Füllungsalgorithmus wird bevorzugt zumindest eine dieser zumindest einen ersten Düse zugeordnete und/oder zuordenbare, weiter bevorzugt in dem zumindest einen Rasterdatenspeicher 602 gespeicherte erste, bevorzugt einer Spalte eines Teilbilds entsprechende Folge 633 von bevorzugt mit dieser zumindest einen ersten Düse nacheinander abzuarbeitenden Einträgen 631 darauf hin überprüft, ob sie zumindest eine bevorzugt zusammenhängende Teilfolge 634 aufweist, die ausschließlich Einträge 631 mit Anweisungen zum Pausieren enthält und die eine vorgegebene Anzahl von Einträgen 631 überschreitet. Bevorzugt wird bei Auffinden einer solchen Teilfolge 634 weiter bevorzugt mittels des zumindest einen Füllungsalgorithmus zumindest ein Eintrag 631 dieser zumindest einen Teilfolge 634 derart verändert, dass er danach einen Wert aufweist, der einer Anweisung zum Ausstoßen eines Tropfens und weiter bevorzugt auch einer Anweisung zu einer diesem Tropfen zugeordneten Tropfengröße entspricht.

Bevorzugt zeichnet sich das Verfahren dadurch aus, dass eine Anzahl von Einträgen 631 innerhalb der zumindest einen ersten Folge 633, die verändert werden und/oder eine Lage des zumindest einen Eintrags 631 innerhalb der zumindest einen ersten Folge 633, der verändert wird, derart bestimmt wird, dass die zumindest eine Folge 633 danach keine Teilfolge 634 mehr aufweist, die ausschließlich Einträge 631 mit Anweisungen zum Pausieren enthält und die die vorgegebene Anzahl von Einträgen 631 überschreitet. Dies wird beispielsweise dadurch erreicht, dass schon beim der Auswahl des zumindest einen zu verändernden Eintrags 631 darauf geachtet wird, dass keine zu großen Teilfolgen 634 mehr übrig bleiben. Alternativ kann dies auch durch ein iteratives Verfahren sichergestellt werden, bei dem so lange Überprüfungen erfolgen und Einträge 631 verändert werden, bis eine nachfolgende Überprüfung keine derartige Teilfolge 634 mehr aufdeckt.

Bevorzugt zeichnet sich das Verfahren dadurch aus, dass eine Lage desjenigen zumindest einen Eintrags 631 innerhalb der zumindest einen ersten Folge 633, der verändert wird, zumindest teilweise durch zumindest eine Zufallszahl bestimmt wird. Beispielsweise kann der zumindest eine zu verändernde Eintrag 631 dadurch bestimmt werden, dass eine Zufallszahl zwischen Null und Eins erzeugt wird und mit der Länge der gefundenen Teilfolge 634 multipliziert wird und dadurch die Lage des zumindest einen zu verändernden Eintrags 631 innerhalb der entsprechenden Teilfolge 634 festgelegt wird. Alternativ wird durch die Zufallszahl eines von einer Mehrzahl vorgegebener Muster ausgewählt, durch das die zumindest eine Teilfolge 631 ersetzt wird. Ein solches Muster erstreckt sich beispielsweise nur über eine Spalte 633 der Teilbildmatrix 629 oder bevorzugt über mehrere benachbarte Spalten 633 der Teilbildmatrix 629, die jeweils Teilfolgen 634 aufweisen, die ausschließlich Einträge 631 mit Anweisungen zum Pausieren enthalten und die eine vorgegebene Anzahl von Einträgen 631 überschreiten.

Bevorzugt zeichnet sich das Verfahren dadurch aus, dass eine Lage des zu verändernden zumindest einen Eintrags 631 innerhalb der zumindest einen ersten Folge 633 derart gewählt wird, dass dadurch zumindest und weiter bevorzugt genau eine vorgegebene Anzahl von Einträgen 631 zwischen einem Beginn und/oder einem Ende dieser zumindest einen ersten Folge 633 und dem zu verändernden zumindest einen Eintrag 631 liegt. Dadurch wird verhindert, dass zu nahe am zu druckenden Teil des Farbauszugs 629 zusätzliche Bildpunkte gedruckt werden, die dann das Druckbild stören könnten, beispielsweise weil das Druckbild ausgefranst aussehen könnte. Unter einem Beginn und/oder einem Ende dieser zumindest einen ersten Folge 633 ist ein Eintrag 631 zu verstehen, der einen benachbarten Eintrag 631 aufweist, der einer Anweisung zum Ausstoßen eines Tropfens entspricht. Die vorgegebene Anzahl kann beispielsweise empirisch derart ermittelt werden, dass ein optischer Eindruck des Druckbilds nur minimal oder gar nicht gestört wird.

Bevorzugt zeichnet sich das Verfahren dadurch aus, dass mehrere Folgen 633 von nacheinander abzuarbeitenden Einträgen 631 auf derartige Teilfolgen 634 hin überprüft und in Abhängigkeit von einem Ergebnis der Überprüfung gegebenenfalls verändert werden und dass jede dieser mehreren Folgen 622 jeweils einer eigenen Düse des zumindest einen Druckkopfs 212; 412 zugeordnet wird. Weiter bevorzugt wird jede Folge 622 des Farbauszugs 629 von nacheinander abzuarbeitenden Einträgen 631 auf derartige Teilfolgen 634 hin überprüft und in Abhängigkeit von einem Ergebnis der Überprüfung gegebenenfalls verändert. Weiter bevorzugt zeichnet sich das Verfahren dadurch aus, dass die mehreren Folgen 633 von Einträgen 631 einander benachbarten Düsen von Druckköpfen 212; 412 zugeordnet sind und/oder werden. Benachbarte Düsen sind dabei solche Düsen, zwischen denen orthogonal zu einer vorgesehenen Transportrichtung des Bedruckstoffs 02 und/oder in der axialen Richtung A gesehen keine derselben Druckfarbe und derselben Druckeinheit 200; 400 zugeordnete Düsen angeordnet sind. Weiter bevorzugt wird und/oder werden eine Anzahl der Einträge 631 innerhalb der mehreren Folgen 633, die verändert werden und/oder Lagen der Einträge 631 innerhalb der jeweiligen der mehreren Folgen 633, die verändert werden, derart bestimmt, dass die Lagen der veränderten Einträge 631 über eine Gesamtheit der mehreren, insbesondere einander benachbarten Düsen von Druckköpfen 212; 412 zugeordneten Folgen 633 von Einträgen 631 hinweg in einer zuvor vorgegebenen Relation zueinander stehen, insbesondere auf das Druckbild bezogen räumlichen Relation. Das bedeutet, dass beispielsweise die veränderten Einträge 631 in dem Farbauszug 629 und/oder in dem Druckbild ein vorgegebenes Muster darstellen. Diese Vorgabe ist bevorzugt eine für alle Düsen einer Druckfarbe und weiter bevorzugt für alle Düsen aller Druckfarben verbindliche Vorgabe. Auf diese Weise kann ein festgelegtes und erprobtes Muster verwendet werden, von dem bekannt ist, dass es einen optischen Gesamteindruck eines Druckbilds nicht oder nur minimal stören kann.

Bevorzugt werden auch solche zweiten Folgen 633 von Einträgen 631 berücksichtigt, die den zu verändernde Folgen 631 benachbart sind oder zumindest in deren Nähe angeordnet sind, unabhängig davon, ob diese zweiten Folgen selbst durch den Füllungsalgorithmus verändert werden oder nicht. Dadurch wird auch in seitlicher Richtung des Druckbilds verhindert, dass das Druckbild ausgefranst aussieht. Bevorzugt zeichnet sich das Verfahren dadurch aus, dass eine Veränderung einer Lage desjenigen zumindest einen Eintrags 631 innerhalb der zumindest einen ersten Folge 633 in Abstimmung mit zumindest einer zweiten Folge 633 von Einträgen 631 erfolgt, wobei diese zweite Folge 633 von Einträgen 631 aus Einträgen 631 besteht, die mittels zumindest einer zweiten Düse nacheinander abzuarbeiten sind. Insbesondere fließen bevorzugt die Positionen der Einträge 631 dieser zweiten Folgen 633 in die Auswahl der zu verändernden ersten Einträge 631 der zumindest einen ersten Folge 633 mit ein. Diese zumindest eine zweite Düse ist dabei bevorzugt eine zu der ersten Düse benachbarte Düse und/oder zumindest eine solche Düse, die dadurch ausgezeichnet ist, dass zwischen ihr und der ersten Düse orthogonal zu der vorgesehenen Transportrichtung des Bedruckstoffs 02 und/oder in der axialen Richtung A gesehen höchstens zehn, weiter bevorzugt höchstens fünf und noch weiter bevorzugt höchstens zwei derselben Druckfarbe und derselben Druckeinheit 200; 400 zugeordnete Düsen angeordnet sind.

Bevorzugt ist wie beschrieben die zumindest eine Folge 633 nacheinander abzuarbeitender Einträge 631 Teil zumindest einer und weiter bevorzugt genau einer Teilbildmatrix 629 und ist und/oder wird bevorzugt jede Spalte 633 der zumindest einen und weiter bevorzugt genau einen Teilbildmatrix 629 einer Düse eines Druckkopfs 212; 412 zugeordnet. Bevorzugt werden benachbarte Spalten 633 der zumindest einen Teilbildmatrix 629 benachbarten Düsen des zumindest einen Druckkopfs 212; 412 zugeordnet. Bevorzugt entspricht jede Spalte 633 der zumindest einen Teilbildmatrix 629 genau einer Folge 633 von Einträgen 631, die weiter bevorzugt jeweils einer Düse eines Druckkopfs 212; 412 zugeordnet ist. Bevorzugt stellt die zumindest eine Teilbildmatrix 629 einen Farbauszug 629 des zumindest einen, weiter bevorzugt mehrfarbigen zu druckenden Druckbilds dar.

Bevorzugt werden bei einem Festlegen der vorgegebenen Anzahl von Einträgen 631 eine Transportgeschwindigkeit des Bedruckstoffs 02 und/oder eine Auflösung der Rasterdaten 647 und/oder mit der zumindest einen ersten Düse ausstoßbare Tropfengrößen und/oder Temperaturen des Druckkopfs 212; 412 und/oder der Beschichtungsmittel und/oder physikalische Eigenschaften der Beschichtungsmittel wie beispielsweise deren Viskosität berücksichtigt.

In dem Fall, in dem zur Erstellung einer Teilbildmatrix 629 mehrere Teilbildebenen 632 addiert werden, wird bevorzugt entweder der jeweilige zumindest eine Eintrag 631 direkt in dem zusammengesetzten Teilbild 629 geändert oder der jeweilige zumindest eine Eintrag 631 wird in einer Teilbildebene 632 geändert, beispielsweise der Teilbildebene 632, die die kleinsten Bildpunkte festlegt, und im Anschluss wird das Teilbild aus den zumindest teilweise geänderten Teilbildebenen 632 erneut zusammengesetzt. Es ist auch möglich, eine zusätzliche Teilbildebene 632 zu erstellen, die ausschließlich die Bildpunkte repräsentiert, die zusätzlich zum eigentlichen Druckbild eingetragen werden, und danach das entsprechende Teilbild 629 erneut aus den vorherigen und der neuen Teilbildebene 632 zusammenzusetzen.

Bevorzugt werden Rasterdaten 647 und/oder Ausgabedaten 646 und/oder Ansteuerdaten 646, die zu aufeinanderfolgenden Druckbildern und/oder Vorlagebilddaten 641; 642; 643; 644; 1643; 1644 gehören, gemeinsam verarbeitet und auf entsprechende Folgen überprüft. Dadurch kann noch mehr Beschichtungsmittel eingespart werden und/oder eine noch besser Druckqualität erreicht werden.

Unter einem Druckerzeugnis soll im Vorangegangenen und im Folgenden insbesondere ein gefertigtes Erzeugnis verstanden werden, das sowohl gedruckt als auch gegebenenfalls gefalzt und/oder zurechtgeschnitten ist. Bevorzugt weist ein zu druckendes Druckerzeugnis zumindest ein Gesamtdruckbild 636; 637 auf und/oder weist das zumindest eine zu druckende Druckerzeugnis oder das zumindest eine Gesamtdruckbild 636; 637 eine Mehrzahl von Einzelseiten 638; 639; 1638; 1639 auf, die auf zumindest einen gemeinsamen Bedruckstoff 02, insbesondere zumindest eine gemeinsame Bedruckstoffbahn 02 gedruckt werden. Dementsprechend weist auch das gedruckte Druckerzeugnis bevorzugt das zumindest eine Gesamtdruckbild 636; 637 und/oder diese Mehrzahl von Einzelseiten 638; 639; 1638; 1639 auf. Weiter bevorzugt wird der Bedruckstoff 02 im Anschluss beispielsweise in der zumindest einen Nachbearbeitungsvorrichtung 500, insbesondere zumindest einer Falzvorrichtung 500 gefalzt und/oder geschnitten. Je nach Art und/oder Ansteuerung der zumindest einen Nachbearbeitungsvorrichtung 500 müssen die Einzelseiten 638; 639; 1638; 1639 in einer bestimmten Anordnung auf den Bedruckstoff 02 gedruckt werden, damit nach der Nachbearbeitung, insbesondere nach dem Falzen eine korrekte Orientierung und Reihenfolge und relative Lage der Einzelseiten 638; 639; 1638; 1639 gewährleistet ist. Beispielsweise eine solche spezifische Anordnung von Einzelseiten 638; 639; 1638; 1639 wird bevorzugt Gesamtdruckbild 636; 637 genannt. Beispielsweise weist zumindest ein Gesamtdruckbild 636; 637 zumindest eine Reihe von zumindest zwei, beispielsweise vier nebeneinander angeordneten Einzelseiten 638; 639; 1638; 1639 auf. Die Einzelseiten 638; 639; 1638; 1639 sind also bevorzugt jeweils Bestandteil jeweils eines Gesamtdruckbilds 636; 637. Bevorzugt wird zumindest ein erstes Gesamtdruckbild 636 mittels der zumindest einen ersten Druckeinheit 200 auf den Bedruckstoff 02 aufgebracht und wird zumindest ein zweites Gesamtdruckbild 637 insbesondere dazu passend mittels der zumindest einen zweiten Druckeinheit 400 auf den Bedruckstoff 02 aufgebracht. Beispielsweise wird das zumindest eine erste Gesamtdruckbild 636 auf einer Vorderseite des Bedruckstoffs 02 aufgebracht und wird das zumindest eine zweite Gesamtdruckbild 637 dazu passend auf einer Rückseite des Bedruckstoffs 02 aufgebracht oder wird das zumindest eine erste Gesamtdruckbild 636 und das zumindest eine zweite Gesamtdruckbild 637 dazu passend auf einer gleichen Seite des Bedruckstoffs 02 aufgebracht.

Bevorzugt wird im Laufe eines Druckauftrags eine Mehrzahl von Gesamtdruckbildern 636; 637 nacheinander an unterschiedlichen, bevorzugt aneinander anschließenden Stellen auf den Bedruckstoff 02 aufgetragen. Diese Gesamtdruckbilder 636; 637 sind bevorzugt aber nicht zwangsläufig bezüglich Anzahl und/oder Anordnung von Einzelseiten gleich aufgebaut, weiter bevorzugt jedoch inhaltlich zumindest teilweise unterschiedlich.

Im Folgenden wird ein bevorzugtes Verfahren beschrieben, mit dem eine Druckqualität hinsichtlich Passer und/oder Register erhöht werden kann, indem beispielsweise auf Trocknung und/oder Druckvorgängen beruhende Veränderungen des Bedruckstoffs 02 ausgeglichen werden. Das Verfahren beruht bevorzugt darauf, Daten zumindest eines ersten Gesamtdruckbilder 636, die mittels der ersten Druckeinheit 200 gedruckt werden und/oder Einzelseiten 638; 639 innerhalb zumindest eines solchen ersten Gesamtdruckbilds 636, bevorzugt mittels der Druckdatenverarbeitung 600 der Druckmaschine 01 vor ihrem Druck derart zu verändern und/oder anzupassen, dass Veränderungen des Bedruckstoffs 02 ausgeglichen werden, die beispielsweise durch den Druck mittels der ersten Druckeinheit 200 bedingt sind und/oder daran anschließend und vor einem Bedrucken durch die zweite Druckeinheit 400 auftreten. Das Verfahren beruht alternativ oder zusätzlich darauf, Daten zumindest eines Gesamtdruckbilds 637, die mittels der zweiten Druckeinheit 400 gedruckt werden und/oder Einzelseiten 638; 639 innerhalb zumindest eines solchen Gesamtdruckbilds 637, bevorzugt mittels der Druckdatenverarbeitung 600 der Druckmaschine 01 vor ihrem Druck derart zu verändern und/oder anzupassen, dass Veränderungen des Bedruckstoffs 02 ausgeglichen werden, die durch den Druck mittels der ersten Druckeinheit 200 bedingt sind und/oder daran anschließend und vor einem Bedrucken durch die zweite Druckeinheit 400 auftreten.

Es handelt sich bevorzugt um ein Verfahren zum Bedrucken zumindest eines ersten Bedruckstoffs 02 mittels zumindest eines Druckwerks 211; 411 einer Druckmaschine 01, wobei aus gespeicherten Vorlagebilddaten 641; 642; 643; 644 zumindest eines ersten Gesamtdruckbilds 636 erste Ausgabedaten 646 für eine Herstellung oder Ansteuerung zumindest eines zumindest eine Form von Druckbildern, insbesondere zumindest einzelne Bildpunkte von Druckbildern festlegenden Bestandteils zumindest einer ersten Druckeinheit 200 der Druckmaschine 01 zur Erzeugung zumindest eines ersten gedruckten Gesamtdruckbilds 636 erzeugt werden und wobei die gespeicherten Vorlagebilddaten 641; 642; 643; 644 zumindest des zumindest einen ersten Gesamtdruckbilds 636 zumindest Vorlagebilddaten 643 zumindest einer ersten Einzelseite 638 und bevorzugt auch zumindest einer zweiten Einzelseite 639 aufweisen und wobei zumindest die zumindest eine erste Einzelseite 638 innerhalb von gespeicherten Daten bevorzugt vor und/oder während der Erzeugung der Ausgabedaten 646 gestreckt und/oder verschoben wird.

Bevorzugt wird der zumindest eine Bedruckstoff 02 zumindest in einer ersten Druckeinheit 200 bedruckt und wird der zumindest eine Bedruckstoff 02 danach zumindest in einer zweiten Druckeinheit 400 der Druckmaschine 01 bedruckt und wird die zumindest eine gedruckte erste Einzelseite 638 von der ersten Druckeinheit 200 erzeugt. Alternativ wäre es auch möglich, die zumindest eine gedruckte erste Einzelseite 1638 mittels der zweiten Druckeinheit 400 zu erzeugen. Weiter bevorzugt wird die zumindest eine gedruckte zweite Einzelseite 639 von der ersten Druckeinheit 200 erzeugt und/oder wird das zumindest eine gedruckte erste Gesamtdruckbild 636 von der ersten Druckeinheit 200 erzeugt und/oder wird zumindest ein gedrucktes zweites Gesamtdruckbild 637 von der zweiten Druckeinheit 400 erzeugt. Insbesondere zeichnet sich das Verfahren bevorzugt dadurch aus, dass in der ersten Druckeinheit 200 der Druckmaschine 01 und insbesondere der Tintenstrahldruckmaschine 01 das zumindest eine die zumindest eine erste Einzelseite 638 aufweisende erste Gesamtdruckbild 636 auf den zumindest einen Bedruckstoff 02 gedruckt wird. Bevorzugt verändert sich währenddessen und/oder danach zumindest eine Abmessung des Bedruckstoffs 02 zumindest in einer ersten Druckbildrichtung C und/oder in der axialen Richtung A, beispielsweise auf Grund einer Trocknung und/oder eines Aufweichens und/oder einer Schrumpfung und/oder einer Dehnung des Bedruckstoffs 02. Bevorzugt wird nach dieser Veränderung der zumindest einen Abmessung des Bedruckstoffs 02 von zumindest einer zweiten Druckeinheit 400 der Druckmaschine 01 und insbesondere der Tintenstrahldruckmaschine 01 zumindest ein zweites Gesamtdruckbild 637 auf den zumindest einen Bedruckstoff 02 gedruckt, beispielsweise auf die gleiche oder eine andere Seite des Bedruckstoffs 02.

Die Veränderung der zumindest einen Abmessung des Bedruckstoffs 02 erfolgt bevorzugt quer zu der Transportrichtung des Bedruckstoffs 02, also insbesondere in der axialen Richtung A. Es ist aber möglich, dass die Veränderung der zumindest eine Abmessung des Bedruckstoffs 02 alternativ oder zusätzlich entlang der Transportrichtung erfolgt, beispielsweise in einem gleichen Ausmaß oder bevorzugt in geringerem Ausmaß.

Bevorzugt zeichnet sich das Verfahren dadurch aus, dass das zumindest eine erste Gesamtdruckbild 636 vollständig mittels der zumindest einen ersten Druckeinheit 200 auf den Bedruckstoff 02 gedruckt wird und/oder dass die zumindest eine erste Einzelseite 638 zumindest teilweise gleichzeitig mit der zumindest einen zweiten Einzelseite 639 mittels der zumindest einen ersten Druckeinheit 200 auf den Bedruckstoff 02 gedruckt wird.

Das Verfahren eignet sich bevorzugt einerseits zur Ansteuerung von Düsen von Druckköpfen 212; 412 zumindest einer ersten Druckeinheit 200 der Druckmaschine 01, insbesondere zur Steuerung eines Ausstoßens von Beschichtungsmittel durch Düsen von Druckköpfen 212; 412 des zumindest einen Tintenstrahldruckwerks 211; 411 der Druckmaschine 01. Dann sind diese Düsen der Druckköpfe 212; 412 als der zumindest eine zumindest eine Form von Druckbildern festlegenden Bestandteil der entsprechenden Druckeinheit 200; 400 anzusehen. Bevorzugt wird dann durch einen ersten Druckvorgang mittels der zumindest einen ersten Druckeinheit 200 und weiter bevorzugt durch das Ausstoßen insbesondere von Beschichtungsmittel durch Düsen von Druckköpfen 212; 412 des zumindest einen Tintenstrahldruckwerks 211; 411 der Druckmaschine 01 gemäß den ersten Ausgabedaten 646 das zumindest eine erste gedruckte Gesamtdruckbild 636 auf dem zumindest einen Bedruckstoff 02 erzeugt. Alternativ eignet sich das Verfahren für alle Arten von digitalen Druckverfahren, insbesondere solche, bei denen einzelne gesteuerte Elemente Bildpunkte erzeugen, beispielsweise digitale Thermodruckverfahren, auf elektrischer Aufladung beruhende Druckverfahren, beispielsweise mit Einsatz eines Toners als Beschichtungsmittel oder ähnliches. Das Verfahren eignet sich bevorzugt andererseits zur Ansteuerung zumindest einer Herstellungsvorrichtung zur Erzeugung von festen Druckformen, beispielsweise zum Bebildern von Druckplatten im Offset-Druck oder Erzeugung von Druckformen für einen Hochdruck und/oder einen Flexodruck und/oder einen Tiefdruck. Dann dient das Verfahren zur Herstellung von insbesondere festen Druckformen, beispielsweise Druckplatten. Somit ist dann zumindest eine Druckform als der zumindest eine zumindest eine Form von Druckbildern, insbesondere zumindest einzelne Bildpunkte von Druckbildern festlegenden Bestandteil der entsprechenden Druckeinheit 200; 400 anzusehen. Eine solche Bebilderung kann beispielsweise mittels eines steuerbaren Lasers erfolgen.

Bevorzugt werden insbesondere vor dem Beginn eines Druckprozesses in einem Vorgang zur Auftragserstellung bevorzugt zumindest teilweise auf Grundlage von zu einem Druckauftrag gehörenden Vorlagebilddaten 641; 642; 643; 644; 1643; 1644 Auftragsdaten festgelegt, beispielsweise mittels eines Auftragseditors 676. Die Vorlagebilddaten 641; 642; 643; 644; 1643; 1644 des Druckauftrags stellen insbesondere einen auf dem zu druckenden Druckerzeugnis darzustellenden Inhalt, also zumindest ein gewünschtes gedrucktes Druckbild dar. Die Auftragsdaten können beispielsweise in einem jdf-Datenformat ("job definition format") definiert sein.

Bevorzugt enthalten auf einen Druckauftrag bezogene Auftragsdaten zumindest Daten zu Eigenschaften des zu bedruckenden Bedruckstoffs 02 und/oder Daten zu zumindest einem aufzutragenden Beschichtungsmittel und/oder Daten zu Eigenschaften und/oder Einstellungen zumindest eines Trockners 301; 331 und/oder Daten zu zumindest einem aufzutragenden Druckbild und/oder Daten zu einer Transportgeschwindigkeit des Bedruckstoffs 02 und/oder Daten zu einer Druckmaschine 01 und/oder Druckeinheit 200; 400 mittels der das Druckerzeugnis gedruckt werden soll. Beispiele für Eigenschaften des zu bedruckenden Bedruckstoffs 02 sind das Material des Bedruckstoffs 02 und/oder die Dicke des zu bedruckenden Bedruckstoffs 02. Ein Beispiel für solche Daten zu zumindest einem aufzutragenden Druckbild ist eine Flächenbelegung, also eine Menge von Druckfarbe pro Fläche, die beispielsweise Einfluss auf die Veränderung der zumindest einen Abmessungen des Bedruckstoffs 02 haben kann. Beispiele für solche Daten zu zumindest einem aufzutragenden Druckbild sind ein Format, welches das gedruckte Druckerzeugnis aufweisen soll und/oder eine Anzahl und/oder Reihenfolge von Seiten die das Druckerzeugnis aufweisen soll.

Die Auftragsdaten hängen bevorzugt auch von der zumindest einen Nachbearbeitungsvorrichtung 500 ab, insbesondere weil dadurch bestimmte Randbedingungen festgelegt sind, wie beispielsweise die Reihenfolge der Einzelseiten 638; 639; 1638; 1639 innerhalb des Gesamtdruckbilds 636; 637. Bevorzugt unter Berücksichtigung beispielsweise dieser Randbedingungen wird bevorzugt zumindest eine Dokumentenvorlage abgerufen und/oder erstellt, beispielsweise mittels zumindest eines Geometriemoduls 678. Diese zumindest eine Dokumentenvorlage stellt zumindest ein Grundgerüst dar, das Positionen von Einzelseiten 638; 639; 1638; 1639 zueinander definiert. An diesen Positionen sind bevorzugt zunächst Seiten-Platzhalter für die Einzelseiten 638; 639; 1638; 1639 angeordnet, die noch keine Informationen der eigentlichen Druckbilder der Einzelseiten 638; 639; 1638; 1639 tragen. Etwaige Veränderungen der Abmessung des Bedruckstoffs 02 sind dabei bevorzugt noch nicht berücksichtigt. Dieses zumindest eine Grundgerüst repräsentiert bevorzugt zumindest teilweise die Vorlagebilddaten 641; 642 des jeweiligen Gesamtdruckbilds 636; 637. Zu einem späteren Zeitpunkt werden die Seiten-Platzhalter durch die Informationen der eigentlichen Druckbilder der Einzelseiten 638; 639; 1638; 1639 ergänzt und/oder ersetzt. Bevorzugt liegt dieses zumindest eine Grundgerüst in Form einer vektorbasierten Seitenbeschreibung vor.

Es sind bevorzugt zumindest zwei Möglichkeiten gegeben, das bevorzugte Verfahren zum Bedrucken des zumindest eines ersten Bedruckstoffs 02 vor einer Erzeugung von Rasterdaten 647 anzuwenden, mittels dem auf die Veränderungen der Abmessung des Bedruckstoffs 02 reagiert wird. Einerseits können Verschiebungen und/oder Streckungen der Seiten-Platzhalter vorgenommen werden, bevor diese durch die Informationen der eigentlichen Druckbilder der Einzelseiten 638; 639; 1638; 1639 ergänzt und/oder ersetzt wurden. Andererseits können Verschiebungen und/oder Streckungen der Einzelseiten 638; 639; 1638; 1639 vorgenommen werden, nachdem mit diesen die Seiten-Platzhalter ergänzt und/oder ersetzt wurden. Mischungen sind ebenfalls möglich, beispielsweise eine Verschiebung der Seiten-Platzhalter in Kombination mit einer Streckung bereits durch die Informationen der eigentlichen Druckbilder der Einzelseiten 638; 639; 1638; 1639 ergänzter und/oder ersetzter Einzelseiten 638; 639; 1638; 1639. Es ist ebenfalls möglich, das Verfahren erst auf die bereits erzeugten Rasterdaten 647 anzuwenden, die in Form von Matrizen von Bildpunkten vorliegen.

Die Auftragsdaten werden bevorzugt weiterverarbeitet, beispielsweise mittels zumindest einer Kontrollinstanz 677 und bevorzugt zumindest teilweise gemeinsam mit den Vorlagebilddaten 641; 642; 643; 644; 1643; 1644 des Druckauftrags. Die zumindest eine Kontrollinstanz greift 677 bevorzugt auf zumindest einen Korrekturspeicher 666 zu, in dem Korrekturdaten hinterlegt sind. Solche Korrekturdaten betreffen beispielsweise empirisch erzeugte Ausgleichsanweisungen, die in Abhängigkeit von den Auftragsdaten jeweils passend zu einer größtmöglichen Kompensation von zu erwartenden Änderungen von Abmessungen des Bedruckstoffs 02 führen.

Bevorzugt weist der zumindest eine Korrekturspeicher 666 zumindest eine Datenbank auf, in der insbesondere unterschiedliche Korrekturdaten für unterschiedliche Bedruckstoffe 02 und/oder für unterschiedliche Beschichtungsmittel und/oder für unterschiedliche Einstellungen zumindest eines Trockners 301; 331 und/oder für unterschiedlichen Flächenbelegungen von aufzutragenden Druckbildern und/oder für unterschiedlichen Transportgeschwindigkeit des Bedruckstoffs 02 und/oder für unterschiedlichen Kombinationen dieser Parameter hinterlegt sind. Korrekturdaten beziehen sich beispielweise bevorzugt auf ein Schrumpfungsverhalten unterschiedlicher Bedruckstoffe 02. Bevorzugt ist in dem zumindest einen Korrekturspeicher 666 zumindest eine Umrechnungsformel und/oder zumindest eine Vergleichstabelle hinterlegt und/oder weisen die Korrekturdaten bevorzugt zumindest eine Umrechnungsformel und/oder zumindest eine Vergleichstabelle auf. Bevorzugt ist der zumindest eine Korrekturspeicher 666 ein Datenspeicher der Druckmaschine 01. Ein Algorithmus zur tatsächlichen Bewegung und/oder Streckung und/oder Verschiebung und/oder geometrischen Modifizierung von Einzelseiten und/oder Gesamtdruckbildern ist bevorzugt von den Korrekturdaten zu unterscheiden und wird beispielsweise unter Einbeziehung von Korrekturdaten ausgeführt.

Bevorzugt werden diese Korrekturdaten zumindest teilweise gemeinsam mit den Auftragsdaten weiterverarbeitet, weiter bevorzugt auch zumindest teilweise gemeinsam mit den Vorlagebilddaten 641; 642; 643; 644; 1643; 1644 des Druckauftrags. Weiter bevorzugt werden diese Korrekturdaten zumindest teilweise gemeinsam mit den Auftragsdaten an das zumindest eine Geometriemodul 678 weitergeleitet und/oder von dem zumindest einen Geometriemodul 678 verarbeitet, noch weiter bevorzugt auch zumindest teilweise gemeinsam mit den Vorlagebilddaten 641; 642; 643; 644; 1643; 1644 des Druckauftrags.

Bei dieser bevorzugten zumindest teilweise gemeinsamen Weiterverarbeitung der Korrekturdaten und/oder der Auftragsdaten und/oder bevorzugt auch zumindest teilweise der Vorlagebilddaten 641; 642; 643; 644; 1643; 1644 des Druckauftrags, insbesondere mittels des zumindest einen Geometriemoduls 678, werden die Positionen und Formen festgelegt, in denen die Einzelseiten 638; 639; 1638; 1639 innerhalb der Gesamtdruckbilder 636; 637 angeordnet sind, insbesondere in den Ausgabedaten 646. Insbesondere wird bevorzugt die Verschiebung und/oder Streckung der Einzelseiten 638; 639; 1638; 1639 mittels des zumindest einen Geometriemoduls 678 durchgeführt. Bevorzugt werden dabei zunächst geometrisch modifizierte Vorlagebilddaten 641; 642; 643; 644; 1643; 1644 erzeugt, die im weiteren Verlauf die Grundlage für eine Herstellung von Rasterdaten 647 und/oder Ausgabedaten 646, insbesondere Ansteuerdaten 646 bilden.

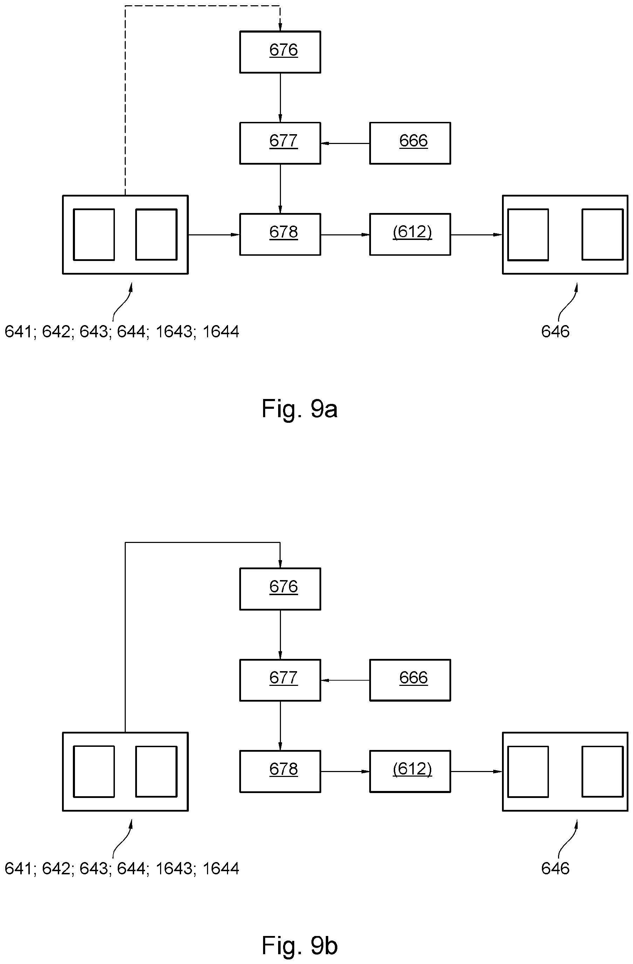

In einer ersten bevorzugten derartigen Weiterverarbeitung insbesondere mittels des zumindest einen Geometriemoduls 678 werden, wie bevorzugt, zunächst die Einzelseiten 638; 639; 1638; 1639 in Gestalt von Seiten-Platzhaltern innerhalb der Dokumentenvorlage und/oder des Grundgerüsts des jeweiligen Gesamtdruckbilds 636; 637 erzeugt und/oder behandelt und/oder auf Grundlage der Auftragsdaten und der Korrekturdaten Position und Form dieser Seiten-Platzhalter innerhalb der Dokumentenvorlage und/oder des Grundgerüsts des jeweiligen Gesamtdruckbilds 636; 637 festgelegt und dann diese Seiten-Platzhalter mit Informationen, insbesondere Druckbilddaten der eigentlichen Druckbilder der Einzelseiten 638; 639; 1638; 1639 gefüllt, die das jeweilige Druckbild der Einzelseiten 638; 639; 1638; 1639 repräsentieren. Für die Zwecke dieses Verfahrens stellen somit bevorzugt zunächst diese Seiten-Platzhalter die jeweiligen Einzelseiten 638; 639; 1638; 1639 dar und stellen somit bevorzugt diese Dokumentenvorlage und/oder dieses Grundgerüst des jeweiligen Gesamtdruckbilds 636; 637 mit den darin angeordneten Seiten-Platzhaltern die gespeicherten Daten, insbesondere Vorlagebilddaten 641; 642 des jeweiligen Gesamtdruckbilds 636; 637 dar. Ein solcher Seiten-Platzhalter kann beispielsweise eine Form eines leeren Rechtecks aufweisen. Beispielsweise werden Positionen festgelegt, an denen vektorbasierte Druckbilddaten, beispielsweise in Form von pdf-Daten, in die entsprechende Dokumentenvorlage und/oder das entsprechende Grundgerüsts des jeweiligen Gesamtdruckbilds 636; 637 eingefügt werden sollen und/oder werden die jeweiligen Formen festgelegt, in denen sie eingefügt werden sollen und/oder werden nach Abschluss dieser Festlegungen diese vektorbasierten Druckbilddaten, insbesondere pdf-Daten an entsprechenden Positionen und/oder in entsprechenden Formen eingefügt, beispielsweise um ein vektorbasiertes Gesamtdruckbild, beispielsweise in Form von pdf-Daten zu erzeugen. (Fig. 9a.)

In einer alternativen zweiten bevorzugten derartigen Weiterverarbeitung insbesondere mittels des zumindest einen Geometriemoduls 678 werden alternativ die das jeweilige Druckbild der Einzelseiten 638; 639; 1638; 1639 repräsentierenden Druckbilddaten in die Dokumentenvorlage und/oder das Grundgerüsts des jeweiligen Gesamtdruckbilds 636; 637 eingefügt und danach durch Verschiebung und/oder Streckung dieser das jeweilige Druckbild der Einzelseiten 638; 639; 1638; 1639 repräsentierenden Druckbilddaten die endgültige Position und Form der Einzelseiten 638; 639; 1638; 1639 innerhalb des jeweiligen Gesamtdruckbilds 636; 637 festgelegt, insbesondere auf Grundlage der Auftragsdaten und der Korrekturdaten. Für die Zwecke dieses Verfahrens stellen dann bevorzugt diese das jeweilige Druckbild der Einzelseiten 638; 639; 1638; 1639 repräsentierenden Druckbilddaten die jeweiligen Einzelseiten 638; 639; 1638; 1639 dar und stellen dann bevorzugt diese Dokumentenvorlage und/oder das Grundgerüsts des jeweiligen Gesamtdruckbilds 636; 637 mit den darin enthaltenen Druckbilddaten der Einzelseiten 638; 639; 1638; 1639 die gespeicherten Daten, insbesondere Vorlagebilddaten 641; 642 der Gesamtdruckbilder 636; 637 dar. Beispielsweise werden vektorbasierte Druckbilddaten, beispielsweise in Form von pdf-Daten an bestimmten Positionen in ihren ursprünglichen Formen in diese Dokumentenvorlage und/oder das Grundgerüsts des jeweiligen Gesamtdruckbilds 636; 637 eingefügt und werden erst danach Positionen endgültig festgelegt, an denen diese vektorbasierten Druckbilddaten, insbesondere pdf-Daten, positioniert werden sollen und/oder werden die jeweiligen Formen festgelegt, in denen sie positioniert werden sollen. Dadurch entsteht beispielsweise ein vektorbasiertes Gesamtdruckbild, beispielsweise in Form von pdf-Daten. Dann werden bevorzugt nach Abschluss dieser Festlegungen diese vektorbasierten Druckbilddaten der Einzelseiten an entsprechende Positionen verschoben und/oder in entsprechende Formen gestreckt, wobei insbesondere das vektorbasierte Gesamtdruckbild, beispielsweise in Form von pdf-Daten verändert wird. (Fig. 9b)

In einer optionalen, alternativ oder zusätzlich möglichen dritten Weiterverarbeitung erfolgt eine Verschiebung und/oder Streckung von Einzelseiten 638; 639; 1638; 1639 erst nach der Erzeugung von Rasterdaten 647, insbesondere innerhalb der Rasterdaten 647. Für eine Verschiebung von Einzelseiten 638; 639; 1638; 1639 innerhalb der Rasterdaten 647 werden dabei beispielsweise alle dieser Einzelseite entsprechenden Spalten der jeweiligen Bildmatrix oder Teilbildmatrix zumindest teilweise verschoben und/oder es werden an zumindest einer Stelle Spalten gelöscht und/oder an zumindest einer anderen Stelle Spalten eingefügt. Für eine Streckung von Einzelseiten 638; 639; 1638; 1639 innerhalb der Rasterdaten 647 werden zusätzliche Spalten erzeugt und beispielsweise durch Interpolation mit Informationen in Form von Bildpunkten gefüllt und/oder Spalten gelöscht und in umliegenden Spalten enthaltene Informationen in Form von Bildpunkten bevorzugt gegebenenfalls angepasst. Für die Zwecke dieses Verfahrens stellen somit bevorzugt zunächst diese den jeweiligen Einzelseiten 638; 639; 1638; 1639 zugeordneten Bildpunkte die jeweiligen Einzelseiten 638; 639; 1638; 1639 dar und stellen somit bevorzugt die gesamten Rasterdaten 647 und/oder Teilbildmatrizen die gespeicherten Daten, insbesondere Rasterdaten 647 des jeweiligen Gesamtdruckbilds 636; 637 dar.

Insbesondere unabhängig von der ersten, zweiten oder dritten Weiterverarbeitung ist der zumindest eine Auftragseditor 676 bevorzugt Teil der Druckdatenverarbeitung 600 der Druckmaschine 01. Beispielsweise ist der zumindest eine Auftragseditor 676 Teil des zumindest einen Bilddatenrechners 611 und/oder mit dem zumindest einen Bilddatenrechnet 611 direkt oder indirekt verbunden. Bevorzugt ist die zumindest eine Kontrollinstanz 677 Teil der Druckdatenverarbeitung 600 der Druckmaschine 01. Beispielsweise ist die zumindest eine Kontrollinstanz 677 Teil des zumindest einen Bilddatenrechners 611 und/oder mit dem zumindest einen Bilddatenrechnet 611 direkt oder indirekt verbunden. Bevorzugt ist der zumindest eine Korrekturspeicher 666 Teil der Druckdatenverarbeitung 600 der Druckmaschine 01. Beispielsweise ist der zumindest eine Korrekturspeicher 666 Teil des zumindest einen Bilddatenrechners 611 und/oder mit dem zumindest einen Bilddatenrechner 611 direkt oder indirekt verbunden. Bevorzugt ist das zumindest eine Geometriemodul 678 Teil der Druckdatenverarbeitung 600 der Druckmaschine 01. Beispielsweise ist das zumindest eine Geometriemodul 678 Teil des zumindest einen Bilddatenrechners 611 und/oder mit dem zumindest einen Bilddatenrechnet 611 direkt oder indirekt verbunden.

Bevorzugt ist ein Inhalt des zumindest einen Korrekturspeichers 666 erweiterbar und/oder veränderbar, beispielsweise mit Daten, die auf Erfahrungen von Druckvorgängen mittels dieser Druckmaschine 01 und/oder zumindest einer anderen Druckmaschine beruhen und/oder Daten, die von einer Bedienperson eingegeben werden und/oder Daten, die von zumindest einem Sensor erfasst werden, insbesondere zumindest ein Sensor, der mit der Maschinensteuerung und/oder Druckdatenverarbeitung 600 der Druckmaschine verbunden und/oder verbindbar ist.

Die Druckmaschine 01 weist in einer Ausführungsform zumindest ein Druckwerk auf, das nicht nach einem Tintenstrahl-Druckprinzip arbeitet, sondern weiter bevorzugt zumindest eine hinsichtlich des zu übertragenden Druckbilds feste Druckform aufweist, wie beispielsweise zumindest eine Offset-Druckwerk und/oder zumindest ein Flachdruckwerk und/oder zumindest ein Hochdruckwerk, insbesondere Flexodruckwerk und/oder zumindest ein Tiefdruckwerk. Das zumindest eine Tintenstrahldruckwerk 211; 411 wird in einem solchen Fall beispielsweise als Eindruckwerk verwendet.

Bevorzugt zeichnet sich das Verfahren dadurch aus, dass aus den Vorlagebilddaten 643 des zumindest einen ersten Gesamtdruckbilds 636 direkt oder über zumindest einen Zwischenvorgang, beispielsweise eine Rasterung und/oder eine Verschiebung von Einzelseiten 638; 639 und/oder eine Skalierung von Einzelseiten 638; 639 und/oder des zumindest einen Gesamtdruckbilds 636; 637 und/oder ein Aufteilen des zumindest einen Gesamtdruckbilds 636; 637 in Abschnitte 679 die ersten Ausgabedaten 646 für das Ausstoßen von Beschichtungsmittel durch Düsen von Druckköpfen 212; 412 des zumindest einen Tintenstrahldruckwerks 211; 411 der Druckmaschine 01 zur Erzeugung des zumindest einen gedruckten ersten Gesamtdruckbilds 636 erzeugt werden.

Bevorzugt ist das zumindest eine Druckwerk 211; 411 ein Tintenstrahldruckwerk 211; 411 und/oder ist die Druckmaschine 01 eine Tintenstrahldruckmaschine 01 und/oder werden aus den gespeicherten Vorlagebilddaten 641; 642; 643; 644 des zumindest einen ersten Gesamtdruckbilds 636 erste Ausgabedaten 646 für eine Ansteuerung von Düsen von Druckköpfen 212; 412 der zumindest einen ersten Druckeinheit 200 der Druckmaschine 01 erzeugt, gemäß denen ein Ausstoßen von Beschichtungsmittel durch diese Düsen von Druckköpfen 212; 412 zur Erzeugung des zumindest einen ersten gedruckten Gesamtdruckbilds 636 vorgenommen wird und/oder sind die jeweiligen Ausgabedaten 646 Ansteuerdaten 646 von jeweils einzusetzenden Düsen von Druckköpfen 212; 412 zumindest eines Tintenstrahldruckwerks 211; 411 der Druckmaschine 01 und/oder ist der zumindest eine zumindest eine Form von Druckbildern festlegende Bestandteil der zumindest einen ersten Druckeinheit 200 der Druckmaschine 01 zumindest ein Tintenstrahldruckkopf 212; 412. Bevorzugt sind die gespeicherten Daten in einem Datenspeicher der Druckmaschine 01 gespeichert, beispielsweise dem zumindest einen Bilddatenspeicher 601 und/oder dem zumindest einen Rasterdatenspeicher 602.

Bevorzugt erfolgt eine relative Verschiebung und/oder Streckung in zumindest einer ersten virtuellen Richtung B, die bevorzugt auch als erste Vorlagerichtung B bezeichnet wird. Eine virtuelle Richtung ist bevorzugt ein Richtung insbesondere innerhalb eines Bildes, das in digital gespeicherter Form in einem Datenspeicher hinterlegt ist. Der ersten Vorlagerichtung B in den Vorlagebilddaten 641; 642; 643; 644; 1643; 1644 entspricht bevorzugt eine Druckbildrichtung C, die in einem gedruckten Druckbild festgelegt ist. Das bedeutet bevorzugt, dass eine Vorlagerichtung B, die in den Vorlagebilddaten 641; 642; 643; 644; 1643; 1644 parallel zu einem Seitenrand und/oder einem Rand eines Gesamtdruckbilds 636; 637 orientiert ist, einer Druckbildrichtung C entspricht, die auf einer gedruckten Einzelseite 638; 639; 1638; 1639 und/oder eines gedruckten Gesamtdruckbilds 636; 637 parallel zu einem Seitenrand und/oder einem Rand des Gesamtdruckbilds 636; 637 orientiert ist. Bevorzugt ist die Druckbildrichtung C parallel zu der axialen Richtung A orientiert. Bevorzugt zeichnet sich das Verfahren dadurch aus, dass die erste Druckbildrichtung C orthogonal zu einer Transportrichtung des Bedruckstoffs 02 durch die zumindest eine Druckeinheit 200; 400 der Druckmaschine 01 orientiert ist und/oder parallel zu einer Rotationsachse 207; 407 zumindest eines Zentralzylinders 201; 401 und/oder Übertragungskörpers und/oder Bedruckstoffleitelements orientiert ist und/oder dass die erste Vorlagerichtung B orthogonal zu einer zweiten virtuellen Vorlagerichtung D, insbesondere Abarbeitungsrichtung D orientiert ist, in der eine Reihe solcher Bildelemente innerhalb des Bildes in den Vorlagebilddaten 641; 642; 643; 644; 1643; 1644 hintereinander angeordnet sind, die im Druckvorgang mittels ein und derselben Düse eines Druckkopfes 212; 412 erzeugt werden. Die Abarbeitungsrichtung D ist bevorzugt eine zweite Vorlagerichtung D, insbesondere da sie ebenfalls in den Vorlagebilddaten 641; 642; 643; 644; 1643; 1644 definiert ist und somit insbesondere eine virtuelle Richtung D. Bevorzugt wird eine zu der ersten Vorlagerichtung B parallele virtuelle Seitenabmessung 643; 644 zumindest einer Einzelseite 638; 639 in den Vorlagebilddaten 641; 642; 643; 644 als zu der ersten Druckbildrichtung C parallele Seitenabmessung 648; 649 dieser zumindest einen gedruckten Einzelseite 638; 639 wiedergegeben.

Unter einer Seitenabmessung 648; 649; 1648; 1649 einer gedruckten Einzelseite 638; 639; 1638; 1639 in der Druckrichtung C ist bevorzugt eine maximale mögliche Entfernung zweier zu dieser jeweiligen Einzelseite 638; 639; 1638; 1639 gehörender gedruckter Bildelemente zu verstehen. Unter einer virtuellen Seitenabmessung 663; 664 1663; 1664 insbesondere einer Einzelseite 638; 639; 1638; 1639 in einer Vorlagerichtung B; D in den Vorlagebilddaten 641; 642; 643; 644; 1643; 1644 ist bevorzugt eine maximale mögliche zuordenbare Entfernung zweier zu dieser jeweiligen Einzelseite 638; 639; 1638; 1639 gehörender Bildelemente der Vorlagebilddaten 641; 642; 643; 644; 1643; 1644 in der Vorlagerichtung B; D zu verstehen. Bevorzugt weisen die gespeicherten Daten, insbesondere Vorlagebilddaten 641; 642; 643; 644; 1643; 1644 des zumindest einen ersten Gesamtdruckbilds 636 zumindest Vorlagebilddaten 643 zumindest einer ersten Einzelseite 638 und Vorlagebilddaten 644 zumindest einer zweiten Einzelseite 639 auf.

Bevorzugt weist zumindest eine gedruckte erste Einzelseite 638 des zumindest einen ersten gedruckten Gesamtdruckbilds 636 zumindest einen ersten Referenzpunkt 651 auf. Bevorzugt weist zumindest eine gedruckte zweite Einzelseite 639 des zumindest einen ersten gedruckten Gesamtdruckbilds 636 zumindest einen zweiten Referenzpunkt 652 auf. Bevorzugt weisen der erste Referenzpunkt 651 und der zweite Referenzpunkt 652 zueinander auf dem zumindest einen ersten gedruckten Gesamtdruckbild 636 einen Referenzabstand 653 auf.

Bevorzugt ist der zumindest einen ersten Einzelseite 638 in den Vorlagebilddaten 641; 642; 643; 644 zumindest eine virtuelle erste Seitenabmessung 663 insbesondere in der ersten Vorlagerichtung B zugeordnet. Bevorzugt ist zumindest einen zweiten Einzelseite 639 in den Vorlagebilddaten 641; 642; 643; 644 zumindest eine virtuelle zweite Seitenabmessung 664 insbesondere in der ersten Vorlagerichtung B zugeordnet.

Bevorzugt ist und/oder wird der zumindest einen ersten Einzelseite 638 in den Vorlagebilddaten 641; 642; 643; 644 zumindest ein virtueller erster Referenzpunkt 654 zugeordnet. Diese Zuordnung geschieht weiter bevorzugt mittels des zumindest einen Auftragseditors 676 und/oder mittels der zumindest einen Kontrollinstanz 677 und/oder mittels des zumindest einen Bilddatenrechners 611 und/oder mittels des zumindest einen Geometriemoduls 678. Bevorzugt ist und/oder wird der zumindest einen zweiten Einzelseite 639 in den Vorlagebilddaten 641; 642; 643; 644 zumindest ein virtueller zweiter Referenzpunkt 656 zugeordnet. Diese Zuordnung geschieht weiter bevorzugt mittels des zumindest einen Auftragseditors 676 und/oder mittels der zumindest einen Kontrollinstanz 677 und/oder mittels des zumindest einen Bilddatenrechners 611 und/oder mittels des zumindest einen Geometriemoduls 678. Bevorzugt ist und/oder wird dem virtuellen ersten Referenzpunkt 654 und dem virtuellen zweiten Referenzpunkt 656 zueinander in den Vorlagebilddaten 641 des zumindest einen ersten Gesamtdruckbilds 636 ein virtueller Referenzabstand 657 zugeordnet. Diese Zuordnung geschieht weiter bevorzugt mittels des zumindest einen Auftragseditors 676 und/oder mittels der zumindest einen Kontrollinstanz 677 und/oder mittels des zumindest einen Bilddatenrechners 611 und/oder mittels des zumindest einen Geometriemoduls 678.

Bevorzugt entspricht der zumindest eine erste virtuelle Referenzpunkt 654 der ersten Einzelseite 638 in den Vorlagebilddaten 641; 642; 643; 644; 1643; 1644 dem zumindest einen ersten Referenzpunkt 651 der zumindest einen gedruckten ersten Einzelseite 638. Insbesondere wird bevorzugt gemäß den Vorlagebilddaten 641; 642; 643; 644; 1643; 1644 des zumindest einen virtuellen ersten Referenzpunkts 654 der zumindest eine erste Referenzpunkt 651 der zumindest einen gedruckten ersten Einzelseite 638 erstellt. Bevorzugt entspricht der zumindest eine zweite virtuelle Referenzpunkt 656 der zweiten Einzelseite 639 in den Vorlagebilddaten 641; 642; 643; 644; 1643; 1644 dem zumindest einen zweiten Referenzpunkt 652 der zumindest einen gedruckten zweiten Einzelseite 639. Insbesondere wird bevorzugt gemäß den Vorlagebilddaten 641; 642; 643; 644; 1643; 1644 des zumindest einen virtuellen zweiten Referenzpunkts 656 der zumindest eine zweite Referenzpunkt 652 der zumindest einen gedruckten zweiten Einzelseite 639 erstellt.

Das zumindest eine erste Gesamtdruckbild 636 und/oder das zumindest eine zweite Gesamtdruckbild 637 weisen bevorzugt jeweils zumindest zwei Einzelseiten 638; 639; 1638; 1639 auf, die jeweils in den bevorzugt digitalen Vorlagebilddaten 641; 642; 643; 644; 1643; 1644 in der zumindest einen ersten Vorlagerichtung B zumindest teilweise versetzt zueinander angeordnet sind und die jeweils in dem gedruckten Druckbild in der zumindest einen ersten Druckbildrichtung C zumindest teilweise versetzt zueinander auf dem zumindest einen Bedruckstoff 02 angeordnet sind und/oder werden. Die Referenzabstände 653; 657; 1653; 1657 sind insbesondere durch diese versetzten Anordnungen festgelegt. Insbesondere weisen die Vorlagebilddaten der Einzelseiten 1638; 1639 des zumindest einen zweiten Gesamtdruckbilds 637 ebenfalls virtuelle Referenzpunkte 1651; 1652 auf, die zueinander einen virtuellen Referenzabstand 1657 aufweisen.

Bevorzugt ist der erste Referenzpunkt 651; 1651 Bestandteil der zumindest einen ersten gedruckten Einzelseite 638; 1638 und/oder ist der zweite Referenzpunkt 652; 1652 Bestandteil der zumindest einen zweiten gedruckten Einzelseite 639; 1639. Weiter bevorzugt ist der erste Referenzpunkt 651; 1651 ein Bildpunkt der zumindest einen ersten gedruckten Einzelseite 638; 1638 und/oder ist der zweite Referenzpunkt 652; 1652 ein Bildpunkt der zumindest einen zweiten gedruckten Einzelseite 639; 1639. Besonders bevorzugt ist der erste Referenzpunkt 651; 1651 ein Mittelpunkt und/oder Schwerpunkt der ersten gedruckten Einzelseite 638; 1638 und/oder ist der zweite Referenzpunkt 652; 1652 ein Mittelpunkt und/oder Schwerpunkt der zweiten gedruckten Einzelseite 639; 1639. Bevorzugt ist der virtuelle erste Referenzpunkt 654; 1654 Bestandteil und weiter bevorzugt Bildpunkt der zumindest einen ersten Einzelseite 638; 1638 in den Vorlagebilddaten 641; 642; 643; 644; 1643; 1644 und/oder ist der zweite virtuelle Referenzpunkt 656; 1656 Bestandteil und weiter bevorzugt Bildpunkt der zumindest einen zweiten Einzelseite 639; 1639 in den Vorlagebilddaten 641; 642; 643; 644; 1643; 1644. Besonders bevorzugt ist der erste virtuelle Referenzpunkt 656; 1656 ein Mittelpunkt und/oder Schwerpunkt der ersten Einzelseite 638; 1638 in den Vorlagebilddaten 641; 642; 643; 644; 1643; 1644 und/oder ist der zweite virtuelle Referenzpunkt 656; 1656 ein Mittelpunkt und/oder Schwerpunkt der zweiten Einzelseite 639; 1639 in den Vorlagebilddaten 641; 642; 643; 644; 1643; 1644.

In einer ersten Variante des Verfahrens werden bevorzugt Einzelseiten 638; 639 des zumindest einen ersten Gesamtdruckbilds 636 bevorzugt in gespeicherter Form innerhalb dieses zumindest einen ersten Gesamtdruckbilds 636 zueinander verschoben. Dies geschieht bevorzugt erst nach einer Fertigstellung von Vorlagebilddaten 641; 642; 643; 644; 1643; 1644, also erst nachdem keine Bedienperson mehr unmittelbaren Zugriff auf die Bilddaten hat.

Die erste Variante des Verfahrens, mit dem die Druckqualität hinsichtlich Passer und/oder Register erhöht werden kann, betrifft bevorzugt einerseits ein Verfahren zum Bedrucken zumindest eines Bedruckstoffs 02, insbesondere zumindest einer Bedruckstoffbahn 02, mittels zumindest eines Druckwerks 211; 411 der Druckmaschine 01, wobei aus, insbesondere in digitaler Form gespeicherten Vorlagebilddaten 641; 642; 643; 644 zumindest eines ersten Gesamtdruckbilds 636 erste Ausgabedaten 646 für eine Herstellung oder Ansteuerung zumindest eines zumindest eine Form von Druckbildern, insbesondere zumindest einzelne Bildpunkte von Druckbildern festlegenden Bestandteils zumindest einer ersten Druckeinheit 200 der Druckmaschine 01 zur Erzeugung zumindest eines ersten gedruckten Gesamtdruckbilds 636 erzeugt werden und wobei die gespeicherten Vorlagebilddaten 641; 642 des zumindest einen ersten Gesamtdruckbilds 636 zumindest Vorlagebilddaten 643 zumindest einer ersten Einzelseite 638 und Vorlagebilddaten 644 zumindest einer zweiten Einzelseite 639 aufweisen und wobei die zumindest eine erste Einzelseite 638 und die zumindest eine zweite Einzelseite 639 innerhalb von gespeicherten Daten unter Beibehaltung zumindest ihrer jeweiligen in einer Vorlagerichtung B; D, insbesondere der ersten Vorlagerichtung B gemessenen absoluten virtuellen Seitenabmessung 663; 664 bevorzugt in Abhängigkeit von auf einen Druckauftrag bezogenen Auftragsdaten und/oder bevorzugt in Abhängigkeit von in zumindest einem Korrekturspeicher 666 hinterlegten Korrekturdaten relativ zueinander zumindest in dieser Vorlagerichtung B; D, insbesondere ersten Vorlagerichtung B verschoben werden und wobei durch einen ersten Druckvorgang mittels der zumindest einen ersten Druckeinheit 200 gemäß den ersten Ausgabedaten 646 das zumindest eine erste gedruckte Gesamtdruckbild 636 auf dem zumindest einen Bedruckstoff 02 erzeugt wird.

Die erste Variante des Verfahrens, mit dem die Druckqualität hinsichtlich Passer und/oder Register erhöht werden kann, betrifft bevorzugt alternativ oder zusätzlich das Verfahren zum Bedrucken zumindest eines Bedruckstoffs 02 mittels zumindest eines Druckwerks 211; 411 der Druckmaschine 01, wobei aus gespeicherten Vorlagebilddaten 641; 642; 643; 644 zumindest eines ersten Gesamtdruckbilds 636 erste Ausgabedaten 646 für eine Herstellung oder Ansteuerung zumindest eines zumindest eine Form von Druckbildern, insbesondere zumindest einzelne Bildpunkte von Druckbildern festlegenden Bestandteils zumindest einer ersten Druckeinheit 200 der Druckmaschine 01 zur Erzeugung zumindest eines ersten gedruckten Gesamtdruckbilds 636 erzeugt werden und wobei die gespeicherten Vorlagebilddaten 641; 642 des zumindest einen ersten Gesamtdruckbilds 636 zumindest Vorlagebilddaten 643 zumindest einer ersten Einzelseite 638 und Vorlagebilddaten 644 zumindest einer zweiten Einzelseite 639 aufweisen und wobei durch einen ersten Druckvorgang mittels der zumindest einen ersten Druckeinheit 200 gemäß den ersten Ausgabedaten 646 das zumindest eine erste gedruckte Gesamtdruckbild 636 auf dem zumindest einen Bedruckstoff 02 erzeugt wird und wobei bevorzugt der zumindest einen ersten Einzelseite 638 in ihren Vorlagebilddaten 643 zumindest eine virtuelle erste Seitenabmessung 663 in einer Vorlagerichtung B; D, insbesondere der ersten Vorlagerichtung B und der virtuelle erste Referenzpunkt 654 zugeordnet ist und wobei bevorzugt der zumindest einen zweiten Einzelseite 639 in ihren Vorlagebilddaten 644 zumindest der virtuelle zweite Referenzpunkt 656 und/oder weiter bevorzugt eine virtuelle zweite Seitenabmessung 664 in dieser Vorlagerichtung B; D, insbesondere ersten Vorlagerichtung B zugeordnet ist und wobei bevorzugt ein in der ersten Druckbildrichtung C gemessener Referenzabstand 653, den der erste Referenzpunkt 651 und der zweite Referenzpunkt 652 zueinander auf dem zumindest einen ersten gedruckten Gesamtdruckbild 636 aufweisen einerseits und die erste Seitenabmessung 648 einer gedruckten ersten Einzelseite 638 und/oder die zweite Seitenabmessung 664 zumindest einer gedruckten zweiten Einzelseite 639 andererseits zueinander in einem Abmessungs-Druckverhältnis stehen, das bevorzugt in Abhängigkeit von auf einen Druckauftrag bezogenen Auftragsdaten und/oder bevorzugt in Abhängigkeit von in dem zumindest einen Korrekturspeicher 666 hinterlegten Korrekturdaten bevorzugt von einem Abmessungs-Vorlageverhältnis abweicht, in dem der in der Vorlagerichtung B; D, insbesondere ersten Vorlagerichtung B gemessene virtuelle Referenzabstand 657, der dem virtuellen ersten Referenzpunkt 654 und dem virtuellen zweiten Referenzpunkt 656 zueinander in den Vorlagebilddaten 641 des zumindest einen ersten Gesamtdruckbilds 636 zugeordnet ist, einerseits und die virtuelle erste Seitenabmessung 663 der zumindest einen ersten Einzelseite 639 und/oder die virtuelle zweite Seitenabmessung 664 der zumindest einen zweiten Einzelseite 639 in den Vorlagebilddaten 643 andererseits bevorzugt zueinander stehen.

Insbesondere betrifft dies einen Fall, in dem ein jeweiliger innerer Rand von zumindest einer Einzelseite 638; 639 als Streckungszentrum 674 verwendet und festgehalten wird und durch Skalierung und/oder Streckung der zumindest einen Einzelseite 638; 639 eine Veränderung der Größe der Einzelseite 638; 639 in den Vorlagebilddaten 641; 642; 643; 644; 1643; 1644 erfolgt, wobei eine nachfolgende, durch Veränderung des Bedruckstoffs 02 bedingte Größenänderung und gleichzeitige Verschiebung zum gewünschten Ergebnis führt, weil dadurch beispielsweise Mittelpunkte der Einzelseiten 638; 639; 1638; 1639 des zumindest einen ersten Gesamtdruckbilds 636 und des zumindest einen zweiten Gesamtdruckbilds 637 aufeinander zu liegen kommen.

Bevorzugt weicht das Abmessungs-Druckverhältnis von dem Abmessungs-Vorlageverhältnis um zumindest 0,1 %, weiter bevorzugt zumindest 0,2 %, noch weiter bevorzugt zumindest 0,5 % und noch weiter bevorzugt zumindest 1 % ab.

Bevorzugt werden die zumindest eine erste Einzelseite 638 und die zumindest eine zweite Einzelseite 639 innerhalb der Vorlagebilddaten 641; 643; 644 und/oder innerhalb von Rasterdaten 647 des zumindest einen ersten Gesamtdruckbilds 636 unter Beibehaltung zumindest ihrer in der Vorlagerichtung B; D, insbesondere ersten Vorlagerichtung B gemessenen absoluten virtuellen Seitenabmessung 663; 664 relativ zueinander zumindest in dieser Vorlagerichtung B; D, insbesondere ersten Vorlagerichtung B verschoben.

Bevorzugt zeichnet sich das Verfahren dadurch aus, dass die gespeicherten Daten, innerhalb derer die Einzelseiten 638; 639 verschoben werden, Vorlagebilddaten 641 und/oder Rasterdaten 647 des zumindest einen ersten Gesamtdruckbilds 636 sind, insbesondere also dadurch, dass die zumindest eine erste Einzelseite 638 und die zumindest eine zweite Einzelseite 639 innerhalb der Vorlagebilddaten 641; 643; 644 und/oder innerhalb von Rasterdaten 647 des zumindest einen ersten Gesamtdruckbilds 636 unter Beibehaltung zumindest ihrer in der Vorlagerichtung B; D, insbesondere ersten Vorlagerichtung B gemessenen absoluten virtuellen Seitenabmessung 663; 664 relativ zueinander zumindest in dieser Vorlagerichtung, insbesondere ersten Vorlagerichtung B verschoben werden.

Bevorzugt werden die zumindest eine erste Einzelseite 638 und die zumindest eine zweite Einzelseite 639 innerhalb der gespeicherten Daten in dieser Vorlagerichtung B; D, insbesondere ersten Vorlagerichtung B verschoben, bevor und/oder während aus den Vorlagebilddaten 641; 642; 643; 644 die ersten Ausgabedaten 646 erzeugt werden, beispielsweise vor und/oder während der Erzeugung von Rasterdaten 647 und/oder nachdem die Vorlagebilddaten 641; 642; 643; 644 in einem Datenspeicher der Druckmaschine 01 abgelegt wurden, weiter bevorzugt unabhängig davon, ob zuerst Rasterdaten 647 erzeugt werden oder ob zuerst die Verschiebung stattfindet.

Bevorzugt werden die zumindest eine erste Einzelseite 638 und die zumindest eine zweite Einzelseite 639 in Abhängigkeit von den auf den Druckauftrag bezogenen Auftragsdaten und in Abhängigkeit von den in dem zumindest einen Korrekturspeicher 666 hinterlegten Korrekturdaten innerhalb der gespeicherten Daten in dieser Vorlagerichtung B; D, insbesondere ersten Vorlagerichtung B verschoben.

Bevorzugt wird die Verschiebung der zumindest einen ersten Einzelseite 638 und der zumindest einen zweiten Einzelseite 639 zueinander durch eine Maschinensteuerung und/oder Druckdatenverarbeitung 600 der Druckmaschine 01 selbst und/oder durch zumindest einen hinterlegten Algorithmus einer Maschinensteuerung und/oder Druckdatenverarbeitung 600 der Druckmaschine 01 selbst gesteuert und/oder geregelt.

Bevorzugt zeichnet sich das Verfahren dadurch aus, dass die relative Verschiebung der ersten Einzelseite 638 und der zweiten Einzelseite 639 zueinander mittels der Druckdatenverarbeitung 600 der Druckmaschine 01 vorgenommen wird und/oder dass die relative Verschiebung der ersten Einzelseite 638 und der zweiten Einzelseite 639 zueinander zu einem Zeitpunkt vorgenommen wird, zu dem sich der mit dem zumindest einen ersten Gesamtdruckbild 636 zu bedruckende Bedruckstoff bereits in der Druckmaschine 01 befindet, insbesondere in der Bedruckstoffquelle 100, insbesondere Rollenabspulvorrichtung 100.

Bevorzugt wird durch die relative Verschiebung der zumindest einen ersten Einzelseite 638 und der zumindest einen zweiten Einzelseite 639 zueinander in den Vorlagebilddaten 641; 642; 643; 644 eine Veränderung einer Abmessung des Bedruckstoffs 02 zumindest teilweise kompensiert.

Bevorzugt ist die Verschiebung der Einzelseiten 638; 639 des zumindest einen ersten Gesamtdruckbilds 636 so auf eine Veränderung zumindest einer Abmessung des Bedruckstoffs 02 abgestimmt, dass nach einem Aufbringen des zumindest einen ersten Gesamtdruckbilds 636 mittels einer ersten Druckeinheit 200 und nach einer Veränderung der zumindest einen Abmessung des Bedruckstoffs 02 und nach einem anschließenden Aufbringen zumindest eines zweiten Gesamtdruckbilds 637 mittels einer zweiten Druckeinheit 400 der zumindest eine Referenzpunkt 651; 652 der dem gedruckten ersten Gesamtdruckbild 636 angehörenden gedruckten Einzelseite 638; 639 passergerecht und/oder registergerecht zu zumindest einem Referenzpunkt 1651; 1652 einer dem gedruckten zweiten Gesamtdruckbild 637 angehörenden Einzelseite 1638; 1639 angeordnet ist.

Bevorzugt ist die Verschiebung der Einzelseiten 638; 639 des zumindest einen ersten Gesamtdruckbilds 636 so auf eine Veränderung zumindest einer Abmessung des Bedruckstoffs 02 abgestimmt, dass nach dem Aufbringen des zumindest einen ersten Gesamtdruckbilds 636 mittels einer ersten Druckeinheit 200 und nach einer Veränderung der zumindest einen Abmessung des Bedruckstoffs 02 und nach dem anschließenden Aufbringen des zumindest einen zweiten Gesamtdruckbilds 637 mittels der zweiten Druckeinheit 400 zumindest eine dem ersten Gesamtdruckbild 636 angehörende Einzelseite 638; 639 passergerecht und/oder registergerecht zu jeweils einer von der zweiten Druckeinheit 411 gedruckten und/oder dem zumindest einen zweiten Gesamtdruckbild 637 angehörenden Einzelseite 1638; 1639 auf dem Bedruckstoff 02 angeordnet ist.

Bevorzugt wird beispielsweise zusätzlich zu der Verschiebung zumindest die zumindest eine erste Einzelseite 638 innerhalb der gespeicherten Daten in Abhängigkeit von den Vorlagebilddaten 641; 642; 643; 644 und/oder in Abhängigkeit von den auf den Druckauftrag bezogenen Auftragsdaten und/oder in Abhängigkeit von den in dem zumindest einen Korrekturspeicher 666 hinterlegten Korrekturdaten vor und/oder während der Erzeugung der Ausgabedaten 646 zumindest in der ersten Vorlagerichtung B mit einem ersten Streckungsfaktor gestreckt.

Bevorzugt zeichnet sich das Verfahren dadurch aus, dass durch die relative Verschiebung der zumindest einen ersten Einzelseite 638 und der zumindest einen zweiten Einzelseite 639 zueinander in den Vorlagebilddaten 641; 642; 643; 644; 1643; 1644 eine insbesondere während und/oder nach dem Erzeugen der zumindest einen gedruckten ersten Einzelseite 638 und/oder der zumindest einen gedruckten zweiten Einzelseite 639 erfolgende Veränderung einer Abmessung des Bedruckstoffs 02 insbesondere in der ersten Druckbildrichtung C und/oder der axialen Richtung A zumindest teilweise kompensiert wird, weiter bevorzugt indem die zumindest eine erste Einzelseite 638 und die zumindest eine zweite Einzelseite 639 in ihrer Lage an eine zu erwartende Lage von mit zumindest einer zweiten Druckeinheit 400 zu druckenden Einzelseiten 1638; 1639 und/oder Gesamtdruckbilder 637 angepasst werden.

Bevorzugt werden zunächst die zumindest eine erste Einzelseite 638 und die zumindest eine zweite Einzelseite 639 innerhalb der gespeicherten Daten relativ zueinander bevorzugt zumindest in dieser ersten Vorlagerichtung B verschoben. Bevorzugt wird dann durch Ausstoßen von Beschichtungsmittel durch Düsen von Druckköpfen 212; 412 des zumindest einen Tintenstrahldruckwerks 211; 411 insbesondere der ersten Druckeinheit 200 der Druckmaschine 01 das zumindest eine gedruckte erste Gesamtdruckbild 636 erzeugt. Bevorzugt erfolgt danach eine Veränderung einer Abmessung des Bedruckstoffs 02, beispielsweise durch ein Einwirken zumindest eines Trockners 301 auf den Bedruckstoff 02. Bevorzugt wird danach durch Ausstoßen von Beschichtungsmittel durch Düsen von Druckköpfen 212; 412 zumindest eines weiteren Druckwerks 211; 411 insbesondere Tintenstrahldruckwerks 411 der zweiten Druckeinheit 400 der Druckmaschine 01 das zumindest eine gedruckte zweite Gesamtdruckbild 637 erzeugt. Bevorzugt ist dabei die Verschiebung der Einzelseiten 638; 639 des zumindest einen ersten Gesamtdruckbilds 636 so auf die insbesondere zu erwartende oder gegebenenfalls auch bereits erfolgte Veränderung der zumindest einen Abmessung des Bedruckstoffs 02 abgestimmt, dass nach dem Aufbringen des zumindest einen ersten Gesamtdruckbilds 636 mittels der ersten Druckeinheit 200 und nach der Veränderung der zumindest einen Abmessung des Bedruckstoffs 02 und nach dem Aufbringen des zumindest einen zweiten Gesamtdruckbilds 637 mittels der zweiten Druckeinheit 400 zumindest eine und bevorzugt jede dem ersten Gesamtdruckbild 636 angehörende Einzelseite 638; 639 passergerecht und/oder registergerecht zu jeweils einer von der zweiten Druckeinheit 411 gedruckten Einzelseite 1638; 1639 auf dem Bedruckstoff 02 angeordnet ist. Eine solche passergerechte und/oder registergerechte Anordnung ist insbesondere in dem Fall gegeben, in dem die zumindest eine und bevorzugt jede dem ersten Gesamtdruckbild 636 angehörende Einzelseite 638; 639 mit ihrem Mittelpunkt auf einem Mittelpunkt einer anderen, auf der anderen oder einer gleichen Seite des Bedruckstoffs angeordneten Einzelseite 1638; 1639 liegt, die dem zweiten Gesamtdruckbild 637 angehört.

Durch die Änderung der zumindest einen Abmessung des Bedruckstoffs 02 ändert sich auch zumindest eine Seitenabmessung 648; 649 der bereits gedruckten Einzelseiten 638; 639. Bevorzugt stimmen die virtuellen Seitenabmessungen 663; 664 der Einzelseiten 638; 639 des ersten Gesamtdruckbilds 636 mit den virtuellen Seitenabmessungen 1663; 1664 der Einzelseiten 1638; 1639 des zweiten Gesamtdruckbilds 637 überein. Daraus ergibt sich für die erste Variante des Verfahrens zwangsläufig die Situation, dass Seitenabmessungen 648; 649 der gedruckten Einzelseiten 638; 639 des ersten Gesamtdruckbilds 636 von Seitenabmessungen 1648; 1649 von gedruckten Einzelseiten 1638; 1639 des zweiten Gesamtdruckbilds 637 abweichen, insbesondere bedingt durch die Änderung der zumindest einen Abmessung des Bedruckstoffs 02. Dies ist aber zulässig und weniger störend, als eine Verschiebung der gedruckten Seiten zueinander, also ein Passerfehler und/oder ein Registerfehler. Diese Abweichung kann beispielsweise hingenommen werden, wenn dafür darauf verzichtet wird, in die Vorlagebilddaten 643; 644; 1643; 1644 der Einzelseiten 638; 639; 1638; 1639 zu stark einzugreifen. Zum einen wird dadurch Rechenaufwand gespart, zum anderen bleiben die Vorlagebilddaten der 643; 644; 1643; 1644 der Einzelseiten 638; 639; 1638; 1639 bis auf ihre Verschiebungen originalgetreu erhalten.

Bevorzugt weisen die virtuellen Referenzpunkte 654; 656 in den Vorlagebilddaten 641 des ersten Gesamtdruckbilds 636 vor der Verschiebung zunächst einen insbesondere virtuellen Vorlageversatz 667 auf, also einen Vorlageversatz 667 insbesondere innerhalb eines Bildes, das in digital gespeicherter Form in einem Datenspeicher hinterlegt ist. Durch die Verschiebung weisen die virtuellen Referenzpunkte 654; 656 danach einen insbesondere virtuellen Ausgabeversatz 668 auf, der weiterhin eine virtuelle Länge ist und beispielsweise in den Rasterdaten 647 vorhanden ist. Der virtuelle Ausgabeversatz 668 ist bevorzugt ein Versatz insbesondere innerhalb eines Bildes, das in digital gespeicherter Form in einem Datenspeicher hinterlegt ist. Direkt nach dem Druck durch die erste Druckeinheit weisen die entsprechenden Referenzpunkte 651; 652 der gedruckten Einzelseiten 638; 639 einen ersten, insbesondere nassen Druckversatz 669 in der entsprechenden Druckbildrichtung C auf. Dieser erste Druckversatz 669 wird beispielsweise nach der Trocknung verändert, insbesondere verkleinert zu einem zweiten, insbesondere trockenen Druckversatz 671. Im Anschluss wird das zweite Gesamtdruckbild 637 durch die zweite Druckeinheit 400 aufgetragen, wobei deren Einzelseiten 1638; 1639 und insbesondere Referenzpunkte 1651; 1652 direkt nach dem Auftragen einen dritten, insbesondere ebenfalls nassen Druckversatz 672 aufweisen, der bevorzugt genauso groß ist, wie der zweite, trockene Druckversatz 671 der Referenzpunkte 651; 652 der gedruckten Einzelseiten 638; 639 des ersten Gesamtdruckbilds 636. Nachfolgende mögliche Änderungen der zumindest einen Abmessungen des Bedruckstoffs 02 betreffen das erste Gesamtdruckbild 636 und das zweite Gesamtdruckbild 637 in gleichem Maße und haben daher keinen Einfluss auf Passer und/oder Register.

Bevorzugt werden bei der Umwandlung der Vorlagebilddaten 641; 642; 643; 644; 1643; 1644 in Ausgabedaten 646 zumindest zwei Vorgänge abgearbeitet. Einer dieser zumindest zwei bevorzugten Vorgänge ist die Verschiebung der Einzelseiten 638; 639 des ersten Gesamtdruckbilds 636 zueinander. Ein anderer dieser zumindest zwei bevorzugten Vorgänge ist die Erstellung von Rasterdaten 647. Bevorzugt erfolgt zunächst die Verschiebung der Einzelseiten 638; 639 des ersten Gesamtdruckbild 636 zueinander, wobei geometrisch modifizierte Vorlagebilddaten 641; 642; 643; 644; 1643; 1644 entstehen und erfolgt danach die Erstellung von Rasterdaten 647 aus den geometrisch modifizierten Vorlagebilddaten 641; 642; 643; 644; 1643; 1644. Die Rasterdaten 647 sind dann die Grundlage der Ausgabedaten 646 oder identisch mit den Ausgabedaten 646. Alternativ erfolgt zunächst die Erstellung von Rasterdaten 647 aus den Vorlagebilddaten 641; 642; 643; 644; 1643; 1644 und erfolgt danach die Verschiebung der Einzelseiten 638; 639 des ersten Gesamtdruckbilds 636 zueinander innerhalb der Rasterdaten 647, wobei geometrisch modifizierte Rasterdaten 647 entstehen. Die geometrisch modifizierten Rasterdaten 647 sind dann die Grundlage der Ausgabedaten 646 oder identisch mit den Ausgabedaten 646, je nachdem, ob die Rasterdaten 647 direkt weiterverarbeitet werden können oder für die Ansteuerung der Düsen eine weitere Modifikation der Rasterdaten 647 notwendig und/oder erwünscht ist. Alterativ oder zusätzlich erfolgt die Verschiebung der Einzelseiten 638; 639 des ersten Gesamtdruckbilds 636 zueinander und die Erstellung von Rasterdaten 647 zumindest teilweise gleichzeitig und/oder abwechselnd, beispielsweise durch zeilenweise und/oder spaltenweise Erstellung von Rasterdaten 647 und dazwischen erfolgende Verschiebung von Teilen der Einzelseiten 638; 639.

In einer zweiten Variante des Verfahrens, mit dem die Druckqualität hinsichtlich Passer und/oder Register erhöht werden kann, wird bevorzugt das zumindest eine erste Gesamtdruckbild 636 derart verändert, dass die zumindest eine erste Einzelseite 638 und die zumindest eine zweite Einzelseite 639 bevorzugt in gespeicherter Form innerhalb dieses zumindest einen ersten Gesamtdruckbilds 636 zumindest in einer ersten Vorlagerichtung B gestreckt werden. Bevorzugt werden die zumindest eine erste Einzelseite 638 und die zumindest eine zweite Einzelseite 639 in der ersten Vorlagerichtung B einer eindimensionalen zentrischen Streckung unterzogen, weiter bevorzugt mit einem gemeinsamen Streckungszentrum 674. Das insbesondere gemeinsame Streckungszentrum 674 liegt beispielsweise in einer Mittellinie 673 des zumindest einen ersten Gesamtdruckbilds 636. Es ist auch möglich, andere Streckungszentren zu verwenden, aus Symmetriegründen wird jedoch die Mittelinie 673 bevorzugt. Bei entsprechender Streckung des zumindest einen ersten Gesamtdruckbilds 636 und/oder der Einzelseiten 638; 639 innerhalb des zumindest einen ersten Gesamtdruckbilds 636 noch vor dem Auftragen dieses zumindest einen ersten Gesamtdruckbilds 636 auf den Bedruckstoff 02 636 kann eine auf den Druckvorgang folgende Änderung der zumindest einen Abmessung des Bedruckstoffs 02 bevorzugt vollständig ausgeglichen werden. Somit kann beispielsweise eine Schrumpfung des Bedruckstoffs 02 auf Grund eines Trocknungsvorgangs bereits vor dem Auftragen des Druckbildes ausgeglichen werden. Das fertige Druckerzeugnis weist gedruckte Einzelseiten 638; 639 in der beabsichtigten Größe auf. Die zumindest eine Streckung geschieht bevorzugt erst nach einer Fertigstellung von Vorlagebilddaten 641; 642; 643; 644; 1643; 1644, also erst nachdem keine Bedienperson mehr unmittelbaren Zugriff auf die Bilddaten hat.

Unter einer Streckung ist bevorzugt eine Streckung im mathematischen Sinne zu verstehen, die zu einer Vergrößerung oder insbesondere bei einem Streckungsfaktor zwischen null und eins zu einer Verkleinerung führen kann. Im Vorangegangenen und im Folgenden wird daher für diese Streckung im mathematischen Sinne auch der Begriff der Skalierung verwendet, um die Möglichkeit der Vergrößerung und Verkleinerung weiter zu verdeutlichen.

Die zweite Variante betrifft ein Verfahren zum Bedrucken zumindest eines Bedruckstoffs 02, insbesondere zumindest einer Bedruckstoffbahn 02, mittels zumindest eines Druckwerks 211; 411 der Druckmaschine 01, wobei aus insbesondere in digitaler Form gespeicherten Vorlagebilddaten 641; 642; 643; 644 zumindest eines ersten Gesamtdruckbilds 636 erste Ausgabedaten 646 für eine Herstellung oder Ansteuerung zumindest eines zumindest eine Form von Druckbildern, insbesondere zumindest einzelne Bildpunkte von Druckbildern festlegenden Bestandteils zumindest einer ersten Druckeinheit 200 der Druckmaschine 01 zur Erzeugung zumindest eines ersten gedruckten Gesamtdruckbilds 636 erzeugt werden und wobei die gespeicherten Vorlagebilddaten 641; 642; 643; 644 zumindest des zumindest einen ersten Gesamtdruckbilds 636 zumindest Vorlagebilddaten 643 zumindest einer ersten Einzelseite 638 aufweisen und wobei zumindest die zumindest eine erste Einzelseite 638 innerhalb von gespeicherten Daten in Abhängigkeit von den Vorlagebilddaten 641; 642; 643; 644 und/oder in Abhängigkeit von auf einen Druckauftrag bezogenen Auftragsdaten und/oder in Abhängigkeit von in zumindest einem Korrekturspeicher 666 hinterlegten Korrekturdaten vor und/oder während der Erzeugung der Ausgabedaten 646 zumindest in einer Vorlagerichtung B; D, insbesondere der ersten Vorlagerichtung B mit einem Streckungsfaktor, insbesondere einem ersten Streckungsfaktor gestreckt wird und wobei durch einen ersten Druckvorgang mittels der zumindest einen ersten Druckeinheit 200 gemäß den ersten Ausgabedaten 646 das zumindest eine erste gedruckte Gesamtdruckbild 636 auf dem zumindest einen Bedruckstoff 02 erzeugt wird.

Bezüglich dieses zumindest einen weiteren Bestandteils der zumindest einen zweiten Druckeinheit 400 gilt bevorzugt analog das zu dem zumindest einen Bestandteil der ersten Druckeinheit 200 Ausgeführte.

Bevorzugt wird der erste Streckungsfaktor in Abhängigkeit von den Vorlagebilddaten 641; 642; 643; 644 und/oder in Abhängigkeit von den auf den Druckauftrag bezogenen Auftragsdaten und/oder in Abhängigkeit von den in dem zumindest einen Korrekturspeicher 666 hinterlegten Korrekturdaten festgelegt. Beispielsweise werden die Vorlagebilddaten 636 eines ersten Gesamtdruckbilds 636 auf ein Vorhandensein von Einzelseiten 638; 639 hin untersucht und wird jeder Einzelseite 638; 639 ein Referenzpunkt 651; 652 zugeordnet und wird aus den Auftragsdaten eine Bedruckstoffart ausgelesen und wird anhand der Korrekturdaten ein zu dieser Bedruckstoffart passender Streckungsfaktor festgelegt und wird ein Abstand des jeweiligen Referenzpunkts 651; 652 zu einem Streckungszentrum 647 mit dem Streckungsfaktor multipliziert.

Bevorzugt wird die zumindest eine zweite Einzelseite 639 innerhalb der gespeicherten Daten in Abhängigkeit von den Vorlagebilddaten 641; 642; 643; 644 und/oder in Abhängigkeit von den auf den Druckauftrag bezogenen Auftragsdaten und/oder in Abhängigkeit von in dem zumindest einen Korrekturspeicher 666 hinterlegten Korrekturdaten vor und/oder während der Erzeugung der Ausgabedaten 646 zumindest in der Vorlagerichtung B; D, insbesondere der ersten Vorlagerichtung B gestreckt, weiter bevorzugt mit dem gleichen ersten Streckungsfaktor wie die zumindest eine erste Einzelseite 638.

Bevorzugt wird der virtuelle Referenzabstand 657 innerhalb der gespeicherten Daten in Abhängigkeit von den Vorlagebilddaten 641; 642; 643; 644 und/oder in Abhängigkeit von den auf den Druckauftrag bezogenen Auftragsdaten und/oder in Abhängigkeit von in dem zumindest einen Korrekturspeicher 666 hinterlegten Korrekturdaten vor und/oder während der Erzeugung der Ausgabedaten 646 zumindest in der Vorlagerichtung B; D, insbesondere der ersten Vorlagerichtung B gestreckt, weiter bevorzugt mit dem gleichen ersten Streckungsfaktor wie die zumindest eine erste Einzelseite 638.

Bevorzugt wird das zumindest eine erste Gesamtdruckbild 636 innerhalb der gespeicherten Daten in Abhängigkeit von den Vorlagebilddaten 641; 642; 643; 644 und/oder in Abhängigkeit von den auf den Druckauftrag bezogenen Auftragsdaten und/oder in Abhängigkeit von in dem zumindest einen Korrekturspeicher 666 hinterlegten Korrekturdaten vor und/oder während der Erzeugung der Ausgabedaten 646 zumindest in der Vorlagerichtung B; D, insbesondere der ersten Vorlagerichtung B gestreckt, weiter bevorzugt mit dem gleichen ersten Streckungsfaktor wie die zumindest eine erste Einzelseite 638.

Bevorzugt stehen der Referenzabstand 653 einerseits und die erste Seitenabmessung 648 der zumindest einen gedruckten ersten Einzelseite 638 und/oder die zweite Seitenabmessung 649 der zumindest einen gedruckten zweiten Einzelseite 639 andererseits, in einem gleichen Verhältnis zueinander, wie der virtuelle Referenzabstand 657 einerseits und die virtuelle erste Seitenabmessung 663 der zumindest einen ersten Einzelseite 639 in den Vorlagebilddaten 641; 642; 643; 644 und/oder die virtuelle zweite Seitenabmessung 664 der zumindest einen zweiten Einzelseite 639 in den Vorlagebilddaten 641; 642; 643; 644 andererseits zueinander.

Bevorzugt wird bei der Streckung der zumindest einen ersten Einzelseite 638 in den gespeicherten Daten zumindest die virtuelle erste Seitenabmessung 663 innerhalb der gespeicherten Daten unter Beibehaltung aller Verhältnisse von auf die erste Vorlagerichtung B bezogenen Abmessungen in Abhängigkeit von den Vorlagebilddaten 641; 642; 643; 644 und/oder in Abhängigkeit von auf einen Druckauftrag bezogenen Auftragsdaten und/oder in Abhängigkeit von in zumindest einem Korrekturspeicher 666 hinterlegten Korrekturdaten in der Vorlagerichtung B; D, insbesondere der ersten Vorlagerichtung B gestreckt.

Bevorzugt wird zumindest eine direkt nach dem ersten Druckvorgang in der ersten Druckbildrichtung C gemessene erste Bildabmessung 658 des zumindest einen ersten gedruckten Gesamtdruckbilds 636 in Abhängigkeit von den Vorlagebilddaten 641; 642; 643; 644 und/oder in Abhängigkeit von den auf den Druckauftrag bezogenen Auftragsdaten und/oder in Abhängigkeit von den in dem zumindest einem Korrekturspeicher 666 hinterlegten Korrekturdaten gezielt festgelegt.

Bevorzugt werden aus Vorlagebilddaten 641; 642; 643; 644 zumindest eines zweiten Gesamtdruckbilds 637 zweite Ausgabedaten 646 für eine Herstellung oder Ansteuerung zumindest eines zumindest eine Form von Druckbildern, insbesondere zumindest einzelne Bildpunkte von Druckbildern festlegenden Bestandteils zumindest einer zweiten Druckeinheit 400 der Druckmaschine 01 zur Erzeugung zumindest eines zweiten gedruckten Gesamtdruckbilds 637 erzeugt. Bevorzugt wird durch einen zweiten Druckvorgang mittels der zumindest einen zweiten Druckeinheit 400 gemäß den zweiten Ausgabedaten 646 zumindest ein zweites gedrucktes Gesamtdruckbild 637 auf dem zumindest einen Bedruckstoff 02 erzeugt.

Bevorzugt stehen zumindest eine direkt nach dem ersten Druckvorgang in einer ersten Druckbildrichtung C gemessene erste Bildabmessung 658 des zumindest einen ersten gedruckten Gesamtdruckbilds 636 und zumindest eine direkt nach dem zweiten Druckvorgang in dieser ersten Druckbildrichtung C gemessene zweite Bildabmessung 659 des zumindest einen zweiten gedruckten Gesamtdruckbilds 637 in einem Gesamtdruckbild-Druckverhältnis zueinander. Bevorzugt stehen die virtuelle erste Bildabmessung 661 des zumindest einen ersten Gesamtdruckbilds 636 in den Vorlagebilddaten 641 und die virtuelle zweite Bildabmessung 662 des zumindest einen zweiten Gesamtdruckbilds 637 in den Vorlagebilddaten 642 zueinander in einem Gesamtdruckbild-Vorlageverhältnis. Bevorzugt ist das Gesamtdruckbild-Druckverhältnis anders, als das Gesamtdruckbild-Vorlageverhältnis. Weiter bevorzugt unterscheidet sich das Gesamtdruckbild-Druckverhältnis von dem Gesamtdruckbild-Vorlageverhältnis um zumindest 0,1 %, bevorzugt zumindest 0,2 %, weiter bevorzugt zumindest 0,5 % und noch weiter bevorzugt zumindest 1 % ab. Dabei sei erneut darauf verwiesen, dass die Ausgabedaten 646 aus den Vorlagebilddaten 641; 642; 643; 644 erzeugt werden und daher höchstens in Ausnahmefällen mit den Vorlagebilddaten 641; 642; 643; 644 identisch sind. Bevorzugt wird der Unterschied zwischen dem Gesamtdruckbild-Druckverhältnis und dem Gesamtdruckbild-Vorlageverhältnis in Abhängigkeit von den auf den Druckauftrag bezogenen Auftragsdaten und von in dem zumindest einen Korrekturspeicher 666 hinterlegten Korrekturdaten vor dem Erzeugen des zumindest einen ersten gedruckten Gesamtdruckbilds 636 gezielt festgelegt. Eine virtuelle Bildabmessung ist bevorzugt ein Abmessung insbesondere innerhalb eines Bildes, das in digital gespeicherter Form in einem Datenspeicher hinterlegt ist.

Bevorzugt wird insbesondere zur gezielten Festlegung der ersten Bildabmessung 658 des zumindest einen ersten Gesamtdruckbilds 636 das zumindest eine erste Gesamtdruckbild 636 innerhalb von gespeicherten Daten insbesondere unter Beibehaltung aller Verhältnisse von auf die erste Vorlagerichtung B bezogenen Abmessungen in der ersten Vorlagerichtung B gestreckt. Bevorzugt sind diese auf die erste Vorlagerichtung B bezogenen Abmessungen in der ersten Vorlagerichtung B die zumindest eine virtuelle Seitenabmessung 663 der zumindest einen ersten Einzelseite 638 und die zumindest eine virtuelle Seitenabmessung 664 der zumindest einen zweiten Einzelseite 639. Sollte das zumindest eine erste Gesamtdruckbild 636 dabei in der Vorlagerichtung B größer werden, so wird beispielsweise ein Randbereich des vergrößerten Gesamtdruckbilds 636 entfernt, um die ursprüngliche Bildabmessung 658; 659 des zumindest einen Gesamtdruckbilds 636; 637 wiederherzustellen. Sollte das zumindest eine erste Gesamtdruckbild 636 dabei in der Vorlagerichtung B kleiner werden, so wird beispielsweise an einem Randbereich des verkleinerten Gesamtdruckbilds 636 ein eine Leerfläche darstellender Bereich hinzugefügt, um die ursprüngliche Bildabmessung 658; 659 des zumindest einen Gesamtdruckbilds 636; 637 wiederherzustellen. Eine solche Entfernung oder Hinzufügung geschieht beispielsweise nach Abschluss der Streckung des zumindest einen ersten Gesamtdruckbilds 636 und/oder sukzessive während der Streckung des zumindest einen ersten Gesamtdruckbilds 636.

Bevorzugt wird die zumindest eine erste Einzelseite 638 und/oder die zumindest eine zweite Einzelseite 639 und/oder das zumindest eine erste Gesamtdruckbild 636 und/oder das zumindest eine zweite Gesamtdruckbild 637 innerhalb von gespeicherten Daten unter Beibehaltung aller Verhältnisse von auf die erste Vorlagerichtung B bezogenen Abmessungen zusätzlich mit zumindest einem zweiten Streckungsfaktor in einer zweiten Vorlagerichtung gestreckt, die weiter bevorzugt orthogonal zu der ersten Vorlagerichtung B orientiert ist. Weiter bevorzugt unterscheidet der erste, auf die erste Vorlagerichtung B bezogener Streckungsfaktor von dem zweiten, auf die zweite Vorlagerichtung bezogenen Streckungsfaktor. Weiter bevorzugt wird der zweite Streckungsfaktor in Abhängigkeit von den Vorlagebilddaten 641; 642; 643; 644 und/oder in Abhängigkeit von auf einen Druckauftrag bezogenen Auftragsdaten und/oder in Abhängigkeit von in zumindest einem Korrekturspeicher 666 hinterlegten Korrekturdaten festgelegt.

Bevorzugt wird durch die Streckung der zumindest einen ersten Einzelseite 638 insbesondere innerhalb der gespeicherten Daten und/oder die Streckung der zumindest einen zweiten Einzelseite 639 insbesondere innerhalb der gespeicherten Daten und/oder die Streckung des zumindest einen ersten Gesamtdruckbilds 637 insbesondere innerhalb der gespeicherten Daten und/oder die Streckung des zumindest einen virtuellen Referenzabstands 657 insbesondere innerhalb der gespeicherten Daten und/oder das gezielte Festlegen der zumindest einen direkt nach dem ersten Druckvorgang in einer ersten Druckbildrichtung C gemessenen ersten Bildabmessung 658 des zumindest einen ersten gedruckten Gesamtdruckbilds 636 zumindest eine Veränderung einer Abmessung des Bedruckstoffs 02 zumindest teilweise kompensiert, weiter bevorzugt noch bevor die Veränderung der zumindest einen Abmessung des Bedruckstoffs 02 stattgefunden hat.

Bevorzugt erfolgt die Streckung der zumindest einen ersten Einzelseite 638 insbesondere innerhalb der gespeicherten Daten und/oder die Streckung der zumindest einen zweiten Einzelseite 639 insbesondere innerhalb der gespeicherten Daten und/oder die Streckung des zumindest einen ersten Gesamtdruckbilds 637 insbesondere innerhalb der gespeicherten Daten und/oder die Streckung des zumindest einen virtuellen Referenzabstands 657 insbesondere innerhalb der gespeicherten Daten und/oder das gezielte Festlegen der zumindest einen direkt nach dem ersten Druckvorgang in einer ersten Druckbildrichtung C gemessenen ersten Bildabmessung 658 des zumindest einen ersten gedruckten Gesamtdruckbilds 636, bevor und/oder während aus den Vorlagebilddaten 641; 642; 643; 644 die ersten Ausgabedaten 646 erzeugt werden und/oder nachdem die Vorlagebilddaten 641; 642; 643; 644 in einem Datenspeicher der Druckmaschine 01 abgelegt wurden und/oder bevor das zumindest eine erste gedruckte Gesamtdruckbild 636 erzeugt wird.

Bevorzugt wird die Streckung der zumindest einen ersten Einzelseite 638 insbesondere innerhalb der gespeicherten Daten und/oder die Streckung der zumindest einen zweiten Einzelseite 639 insbesondere innerhalb der gespeicherten Daten und/oder die Streckung des zumindest einen ersten Gesamtdruckbilds 637 insbesondere innerhalb der gespeicherten Daten und/oder die Streckung des zumindest einen virtuellen Referenzabstands 657 insbesondere innerhalb der gespeicherten Daten und/oder das gezielte Festlegen der zumindest einen direkt nach dem ersten Druckvorgang in einer ersten Druckbildrichtung C gemessenen ersten Bildabmessung 658 des zumindest einen ersten gedruckten Gesamtdruckbilds 636 durch eine Maschinensteuerung und/oder Druckdatenverarbeitung 600 der Druckmaschine 01 selbst und/oder durch zumindest einen hinterlegten Algorithmus einer Maschinensteuerung und/oder Druckdatenverarbeitung 600 der Druckmaschine 01 selbst gesteuert und/oder geregelt.

Bevorzugt ist die Streckung der Einzelseiten 638; 639 und/oder des zumindest einen ersten Gesamtdruckbilds 636 so auf eine Veränderung zumindest einer Abmessung des Bedruckstoffs 02 abgestimmt, dass nach einem Aufbringen des zumindest einen ersten Gesamtdruckbilds 636 mittels einer ersten Druckeinheit 200 und nach einer Veränderung der zumindest einen Abmessung des Bedruckstoffs 02 und nach einem anschließenden Aufbringen zumindest eines zweiten Gesamtdruckbilds 637 mittels einer zweiten Druckeinheit 400 zumindest ein Referenzpunkt 654; 656 einer dem gedruckten ersten Gesamtdruckbild 636 angehörenden gedruckten Einzelseite 638; 639 passergerecht und/oder registergerecht zu zumindest einem Referenzpunkt einer dem gedruckten zweiten Gesamtdruckbild 637 angehörenden Einzelseite 1638; 1639 angeordnet ist und/oder so, dass nach einem Aufbringen des zumindest einen ersten Gesamtdruckbilds 636 mittels einer ersten Druckeinheit 200 und nach einer Veränderung der zumindest einen Abmessung des Bedruckstoffs 02 und nach einem anschließenden Aufbringen zumindest eines zweiten Gesamtdruckbilds 637 mittels einer zweiten Druckeinheit 400 zumindest eine dem ersten Gesamtdruckbild 636 angehörende Einzelseite 638; 639 passergerecht und/oder registergerecht zu jeweils einer von der zweiten Druckeinheit 411 gedruckten und/oder dem zumindest einen zweiten Gesamtdruckbild 637 angehörenden Einzelseite 1638; 1639 auf dem Bedruckstoff 02 angeordnet ist.

Bevorzugt wird der Unterschied zwischen dem Gesamtdruckbild-Druckverhältnis und dem Gesamtdruckbild-Vorlageverhältnis wiederum durch eine Maschinensteuerung und/oder Druckdatenverarbeitung 600 der Druckmaschine 01 selbst und/oder durch zumindest einen hinterlegten Algorithmus einer Maschinensteuerung und/oder Druckdatenverarbeitung 600 der Druckmaschine 01 selbst vor dem Erzeugen des zumindest einen ersten gedruckten Gesamtdruckbilds 636 gezielt festgelegt.

Ein Abstand, den der erste Referenzpunkt 651 und der zweite Referenzpunkt 652 zueinander auf dem zumindest einen ersten gedruckten Gesamtdruckbild 636 aufweisen einerseits und eine erste Seitenabmessung 648 einer gedruckten ersten Einzelseite 638 und/oder eine zweite Seitenabmessung 649 einer gedruckten zweiten Einzelseite 639 andererseits stehen bevorzugt in einem gleichen Verhältnis, insbesondere Abmessungsverhältnis zueinander, wie ein Abstand, der dem virtuellen ersten Referenzpunkt 654 und dem virtuellen zweiten Referenzpunkt 656 zueinander in den Vorlagebilddaten 641 des zumindest einen ersten Gesamtdruckbilds 636 zugeordnet ist einerseits und die virtuelle erste Seitenabmessung 663 der zumindest einen ersten Einzelseite 639 in den Vorlagebilddaten 641; 642; 643; 644; 1643; 1644, insbesondere der zumindest einen ersten Einzelseite 638, und/oder die virtuelle zweite Seitenabmessung 664 der zumindest einen zweiten Einzelseite 639 in den Vorlagebilddaten 641; 642; 643; 644; 1643; 1644, insbesondere der zumindest einen zweiten Einzelseite 639, andererseits zueinander stehen.

Das bedeutet, dass ein Abmessungs-Vorlageverhältnis gleich einem Abmessungs-Druckverhältnis ist. Dabei ist bevorzugt das Abmessungs-Vorlageverhältnis dasjenige Abmessungsverhältnis, in dem der virtuelle Referenzabstand 657, der dem virtuellen ersten Referenzpunkt 654 und dem virtuellen zweiten Referenzpunkt 656 zueinander in den Vorlagebilddaten 641 des zumindest einen ersten Gesamtdruckbilds 636 zugeordnet ist, einerseits und die virtuelle erste Seitenabmessung 663 der zumindest einen ersten Einzelseite 639 in den Vorlagebilddaten 641; 642; 643; 644; 1643; 1644 und/oder die virtuelle zweite Seitenabmessung 664 der zumindest einen zweiten Einzelseite 639 in den Vorlagebilddaten 641; 642; 643; 644; 1643; 1644 andererseits zueinander stehen. Dabei ist bevorzugt das Abmessungs-Druckverhältnis dasjenige Abmessungsverhältnis, in dem der Referenzabstand 653, den der erste Referenzpunkt 651 und der zweite Referenzpunkt 652 zueinander auf dem zumindest einen ersten gedruckten Gesamtdruckbild 636 aufweisen, einerseits und eine erste Seitenabmessung 648 einer gedruckten ersten Einzelseite 638 und/oder eine zweite Seitenabmessung 649 einer gedruckten zweiten Einzelseite 639 andererseits stehen.

Bevorzugt werden bei der Umwandlung der Vorlagebilddaten 641; 642; 643; 644; 1643; 1644 in Ausgabedaten 646 zumindest zwei Vorgänge abgearbeitet. Einer dieser zumindest zwei bevorzugten Vorgänge ist die Streckung der Einzelseiten 638; 639 und/oder des ersten Gesamtdruckbilds 636. Ein anderer dieser zumindest zwei bevorzugten Vorgänge ist die Erstellung von Rasterdaten 647. Bevorzugt erfolgt zunächst die Streckung der Einzelseiten 638; 639 und/oder des ersten Gesamtdruckbild 636, wobei geometrisch modifizierte Vorlagebilddaten 641; 642; 643; 644; 1643; 1644 entstehen und erfolgt danach die Erstellung von Rasterdaten 647 aus den geometrisch modifizierten Vorlagebilddaten 641; 642; 643; 644; 1643; 1644. Die Rasterdaten 647 sind dann die Grundlage der Ausgabedaten 646 oder identisch mit den Ausgabedaten 646. Alternativ erfolgt zunächst die Erstellung von Rasterdaten 647 aus den Vorlagebilddaten 641; 642; 643; 644; 1643; 1644 und erfolgt danach die Streckung der Einzelseiten 638; 639 und/oder des ersten Gesamtdruckbilds 636 innerhalb der Rasterdaten 647, wobei geometrisch modifizierte Rasterdaten 647 entstehen. Die geometrisch modifizierten Rasterdaten 647 sind dann die Grundlage der Ausgabedaten 646 oder identisch mit den Ausgabedaten 646, je nachdem, ob die Rasterdaten 647 direkt weiterverarbeitet werden können oder für die Ansteuerung der Düsen eine weitere Modifikation der Rasterdaten 647 notwendig und/oder erwünscht ist. Alterativ oder zusätzlich erfolgt die Streckung der Einzelseiten 638; 639 und/oder des ersten Gesamtdruckbilds 636 und die Erstellung von Rasterdaten 647 zumindest teilweise gleichzeitig und/oder abwechselnd, beispielsweise durch zeilenweise und/oder spaltenweise Erstellung von Rasterdaten 647 und dazwischen erfolgende Streckung von Teilen der Einzelseiten 638; 639 und/oder des ersten Gesamtdruckbilds 636.

Bevorzugt werden die Einzelseiten 638; 639 und/oder das zumindest eine erste Gesamtdruckbild 636 bevorzugt in gespeicherter Form innerhalb dieses zumindest einen ersten Gesamtdruckbilds 636 gestreckt. Dies geschieht bevorzugt erst nach einer Fertigstellung von Vorlagebilddaten 641; 642; 643; 644; 1643; 1644, also erst nachdem keine Bedienperson mehr unmittelbaren Zugriff auf die Bilddaten hat.

Eine bevorzugte dritte Variante des bevorzugten Verfahrens stellt eine Kombination der ersten Variante des Verfahrens und der zweiten Variante des Verfahrens dar. Insbesondere enthält die bevorzugte dritte Variante des Verfahrens also alle Merkmale der ersten Variante des Verfahrens und alle Merkmale der zweiten Variante des Verfahrens, soweit sich daraus keine Widersprüche ergeben. Dabei werden beispielsweise die Einzelseiten 638; 639 innerhalb der Vorlagebilddaten 641; 642; 643; 644 zueinander verschoben und jeweils von einem eigenen Streckungszentrum 374 aus zentrisch gestreckt, welches bevorzugt auf einer Mittellinie der jeweiligen verschobenen Einzelseite 638; 639 liegt oder es werden beispielsweise die Einzelseiten 638; 639 gemeinsam gestreckt und danach zueinander verschoben. Die dritte Variante ist beispielsweise dann von Interesse, wenn der Bedruckstoff 02 an unterschiedlichen Stellen unterschiedlich stark in seiner Abmessung geändert wird, beispielsweise weil im Bereich der Einzelseiten 638; 639 durch Auftragen von Beschichtungsmittel andere Veränderungen der zumindest einen Abmessung auftreten, als im Bereich außerhalb der Einzelseiten 638; 639, insbesondere in Randbereichen und/oder Zwischenräumen. Bevorzugt werden dann die zumindest eine erste Einzelseite 638 und die zumindest eine zweite Einzelseite 639 vor und/oder nach der Streckung innerhalb von gespeicherten Daten unter Beibehaltung zumindest ihrer jeweiligen in einer ersten Vorlagerichtung B gemessenen absoluten virtuellen Seitenabmessung 648; 649 relativ zueinander zumindest in dieser ersten Vorlagerichtung B verschoben.

Verhältnisse, insbesondere das Abmessungsverhältnis und/oder das Abmessungs-Druckverhältnis und/oder das Abmessungs-Vorlageverhältnis und/oder das Gesamtdruckbild-Druckverhältnis und/oder das Gesamtdruckbild-Vorlageverhältnis sind bevorzugt als Verhältnisse im mathematischen Sinne zu verstehen.

Seitenbeschreibungsdaten sind bevorzugt vektorbasierte Daten. Eine Verschiebung einer Einzelseite 638; 639; 1638; 1639 innerhalb von Seitenbeschreibungsdaten kann beispielsweise dadurch ausgeführt werden, dass sämtliche zu dieser Einzelseite gehörenden Objekte unverändert bleiben, mit Ausnahme eines Positionsvektors, der ihre Position festlegt, insbesondere ihre Position auf dem Gesamtdruckbild 636; 637. Eine Streckung einer Einzelseite 638; 639; 1638; 1639 und/oder eines Gesamtdruckbilds 636; 637 kann beispielsweise dadurch ausgeführt werden, dass sämtliche Objekte dieser Einzelseite 638; 639; 1638; 1639 und/oder sämtliche Objekte und/oder Einzelseiten 638; 639; 1638; 1639 dieses Gesamtdruckbilds 636; 637 sowohl in sich gestreckt werden, als auch eine Streckung des jeweiligen Positionsvektors erfahren, der ihre Position festlegt.

Mittels der zumindest einen zweiten Druckeinheit 400 der Druckmaschine 01 wird bevorzugt eine andere Seite des Bedruckstoffs 02 bedruckt, als mittels der zumindest einen ersten Druckeinheit 200 der Druckmaschine 01. Alternativ und weiter bevorzugt wird jedoch mittels der zumindest einen zweiten Druckeinheit 400 der Druckmaschine 01 eine gleiche Seite des Bedruckstoffs 02 bedruckt, wie mittels der zumindest einen ersten Druckeinheit 200. Dadurch kann eine größere Anzahl unterschiedlicher Beschichtungsmittel, insbesondere Druckfarben, auf eine gleiche Seite des Bedruckstoffs 02 aufgetragen werden. Bevorzugt zumindest eines und weiter bevorzugt mehrere solcher Beschichtungsmittel sind beispielsweise Druckfarben in den Farben Cyan und/oder Magenta und/oder Gelb und/oder Schwarz und/oder sind beispielsweise Druckfarben in Sonderfarben, beispielsweise Blau und/oder Orange und/oder Grün und/oder Rot und/oder Violett und/oder Weiß. Bevorzugt zumindest eines und weiter bevorzugt mehrere solcher Beschichtungsmittel sind beispielsweise Lacke und/oder Sonderfarben wie Gold und/oder Silber. Bevorzugt zumindest eines und weiter bevorzugt mehrere solcher Beschichtungsmittel weisen beispielsweise Eisenoxid-Partikel und/oder besondere magnetische Eigenschaften auf, beispielsweise eine positive oder negative magnetische Suszeptibilität und/oder ferromagnetische oder ferrimagnetische oder antiferromagnetische Eigenschaften. Bevorzugt zumindest eines und weiter bevorzugt mehrere solcher Beschichtungsmittel sind beispielsweise wasserbasierte Beschichtungsmittel und/oder weisen zumindest ein organisches Lösungsmittel auf. Bevorzugt zumindest eines und weiter bevorzugt mehrere solcher Beschichtungsmittel sind beispielsweise mittels UV-Licht vernetzbar und/oder stromleitfähig und/oder nur unter UV-Licht sichtbar.

Bevorzugt wird also zusätzlich oder alternativ ein Verfahren zum Beschichten, insbesondere zum Bedrucken eines Bedruckstoffs 02 mittels zumindest eines Druckwerks 211; 411 und bevorzugt mehrerer Druckwerke 211; 411 der Druckmaschine 01, wobei bevorzugt der Bedruckstoff 02 entlang eines Transportwegs mittels insbesondere zumindest eines Druckwerks 221 zumindest einer ersten Druckeinheit 200 und/oder insbesondere zumindest eines Druckwerks 411 zumindest einer zweiten Druckeinheit 400 beschichtet wird und wobei bevorzugt zumindest fünf, weiter bevorzugt zumindest sechs, noch weiter bevorzugt zumindest sieben und noch weiter bevorzugt zumindest acht unterschiedliche Beschichtungsmittel auf eine gleiche erste Seite des Bedruckstoffs 02 aufgetragen werden.

Bevorzugt wird jedes dieser bevorzugt zumindest fünf, weiter bevorzugt zumindest sechs, noch weiter bevorzugt zumindest sieben und noch weiter bevorzugt zumindest acht unterschiedlichen Beschichtungsmittel jeweils mittels einer Mehrzahl von einzeln ansteuerbaren und in Abhängigkeit von Ausgabedaten 646 und insbesondere Ansteuerdaten 646 bevorzugt Formen von gedruckten Druckbildern, insbesondere einzelne Bildpunkte von Druckbildern festlegenden, insbesondere erzeugenden und/oder druckenden Bestandteilen bevorzugt zumindest eines Druckwerks 211 zumindest einer ersten Druckeinheit 200 und/oder bevorzugt zumindest eines Druckwerks 211 zumindest einer zweiten Druckeinheit 400 der Druckmaschine 01 insbesondere zur Erzeugung zumindest eines ersten gedruckten Gesamtdruckbilds 636 auf den Bedruckstoff 02 aufgetragen. Bevorzugt legt jeder dieser Bildpunkte festlegenden Bestandteile jeweils eine Vielzahl von Bildpunkten fest, beispielsweise indem er Folgen von Einträgen 631 der Rasterdaten 647 abarbeitet.

Bevorzugt werden mittels insbesondere des zumindest einen Druckwerks 211 der zumindest einen ersten Druckeinheit 200 zumindest ein, weiter bevorzugt zumindest zwei, noch weiter bevorzugt zumindest drei und noch weiter bevorzugt zumindest vier unterschiedliche Beschichtungsmittel auf die erste Seite des Bedruckstoffs 02 aufgetragen. Bevorzugt werden mittels insbesondere des zumindest einen Druckwerks 411 der zumindest einen zweiten Druckeinheit 400 zumindest ein, weiter bevorzugt zumindest zwei, noch weiter bevorzugt zumindest drei und noch weiter bevorzugt zumindest vier insbesondere untereinander unterschiedliche und jeweils zu den Beschichtungsmitteln der ersten Druckeinheit 200 unterschiedliche Beschichtungsmittel auf die erste Seite des Bedruckstoffs 02 aufgetragen.

Bevorzugt wird der Bedruckstoff 02 entlang eines Transportwegs mittels beispielsweise des zumindest einen Druckwerks 211 der zumindest einen ersten Druckeinheit 200 mit zumindest einem, weiter bevorzugt zumindest zwei, noch weiter bevorzugt zumindest drei und noch weiter bevorzugt zumindest vier der zumindest fünf, weiter bevorzugt zumindest sechs, noch weiter bevorzugt zumindest sieben und noch weiter bevorzugt zumindest acht unterschiedlichen Beschichtungsmittel beschichtet und danach bevorzugt mittels des zumindest einen ersten insbesondere auf den Bedruckstoff 02 einwirkenden Trockners 301 getrocknet und danach bevorzugt mittels beispielsweise des zumindest einen Druckwerks 411 der zumindest einen zweiten Druckeinheit 400 mit zumindest einem, weiter bevorzugt zumindest zwei, noch weiter bevorzugt zumindest drei und noch weiter bevorzugt zumindest vier anderen der zumindest fünf, weiter bevorzugt zumindest sechs, noch weiter bevorzugt zumindest sieben und noch weiter bevorzugt zumindest acht unterschiedlichen Beschichtungsmittel beschichtet und danach bevorzugt mittels des zumindest einen insbesondere auf den Bedruckstoff 02 einwirkenden zweiten Trockners 331 getrocknet.

Bevorzugt ist wie beschrieben das zumindest eine Druckwerk 211; 411 zumindest teilweise als Tintenstrahldruckwerk 211; 411 ausgebildet und/oder sind die einzeln ansteuerbaren und in Abhängigkeit von Ausgabedaten 646, insbesondere Ansteuerdaten 646 einzelne Bildpunkte von Druckbildern festlegenden Bestandteile Düsen von Tintenstrahldruckköpfen 212; 412 von Druckwerken 211; 411 der zumindest einen ersten Druckeinheit 200 und/oder der zumindest einen zweiten Druckeinheit 400 der Druckmaschine 01.

Insbesondere bei einem Beschichten einer gleichen Seite des Bedruckstoffs 02 mittels mehrerer Druckeinheiten 200; 400 und/oder deren Druckwerken 211; 411 ist es wichtig, dass ein Passer von hoher Qualität erreicht wird. So ist insbesondere bevorzugt, dass in der zumindest einen ersten Druckeinheit 200 der Druckmaschine 01 das zumindest eine erste Gesamtdruckbild 636 auf den Bedruckstoff 02 gedruckt wird und sich währenddessen und/oder danach zumindest eine Abmessung des Bedruckstoffs 02 zumindest in einer ersten Druckbildrichtung C verändert und nach dieser Veränderung der zumindest einen Abmessung des Bedruckstoffs 02 von zumindest einer zweiten Druckeinheit 400 der Druckmaschine 01 zumindest ein zweites Gesamtdruckbild 637 auf den Bedruckstoff 02 gedruckt wird.

Deshalb werden besonders bevorzugt Verfahrensvorgänge eingesetzt, die Veränderungen von Abmessungen des Bedruckstoffs 02 kompensieren können. Insbesondere ist also auch in diesem Zusammenhang bevorzugt, dass aus den gespeicherten Vorlagebilddaten 641; 642; 643; 644 des zumindest einen ersten Gesamtdruckbilds 636 erste Ausgabedaten 646 und/oder Ansteuerdaten 646 für eine Ansteuerung des zumindest einen einzelne Bildpunkte von Druckbildern festlegenden Bestandteils der zumindest einen ersten und/oder zweiten Druckeinheit 200; 400 zur Erzeugung zumindest eines ersten gedruckten Gesamtdruckbilds 636 erzeugt werden und dass die gespeicherten Vorlagebilddaten 641; 642 des zumindest einen ersten Gesamtdruckbilds 636 zumindest Vorlagebilddaten 643 zumindest einer ersten Einzelseite 638 und Vorlagebilddaten 644 zumindest einer zweiten Einzelseite 639 aufweisen und dass die zumindest eine erste Einzelseite 638 und die zumindest eine zweite Einzelseite 639 innerhalb von gespeicherten Daten unter Beibehaltung zumindest ihrer jeweiligen in einer ersten Vorlagerichtung B gemessenen absoluten virtuellen Seitenabmessung 663; 664 in Abhängigkeit von auf einen Druckauftrag bezogenen Auftragsdaten und/oder in Abhängigkeit von in zumindest einem Korrekturspeicher 666 hinterlegten Korrekturdaten relativ zueinander zumindest in dieser ersten Vorlagerichtung B verschoben werden. Dabei wird diese Verschiebung bevorzugt in Bezug auf Einzelseiten 638; 639 zumindest eines Gesamtdruckbilds 636 vorgenommen, das mittels der zumindest einen ersten Druckeinheit 200 aufgetragen wird. Alternativ oder zusätzlich wird diese Verschiebung bevorzugt in Bezug auf Einzelseiten 1638; 1639 zumindest eines Gesamtdruckbilds 637 vorgenommen, das mittels der zumindest einen zweiten Druckeinheit 400 aufgetragen wird.

Insbesondere ist also auch in diesem Zusammenhang zusätzlich oder alternativ bevorzugt, dass aus den gespeicherten Vorlagebilddaten 641; 642; 643; 644 zumindest eines ersten Gesamtdruckbilds 636 erste Ausgabedaten 646 und/oder Ansteuerdaten 646 für eine Ansteuerung des zumindest einen einzelne Bildpunkte von Druckbildern festlegenden Bestandteils der zumindest einen ersten und/oder zweiten Druckeinheit 200; 400 zur Erzeugung zumindest eines ersten gedruckten Gesamtdruckbilds 636 erzeugt werden und dass die gespeicherten Vorlagebilddaten 641; 642; 643; 644 zumindest des zumindest einen ersten Gesamtdruckbilds 636 zumindest Vorlagebilddaten 643 zumindest einer ersten Einzelseite 638 aufweisen und dass zumindest die zumindest eine erste Einzelseite 638 innerhalb von gespeicherten Daten in Abhängigkeit von den Vorlagebilddaten 641; 642; 643; 644 und in Abhängigkeit von auf einen Druckauftrag bezogenen Auftragsdaten und in Abhängigkeit von in zumindest einem Korrekturspeicher 666 hinterlegten Korrekturdaten vor und/oder während der Erzeugung der Ausgabedaten 646 zumindest in der ersten Vorlagerichtung B mit einem ersten Streckungsfaktor gestreckt wird.

Bevorzugt wird wiederum durch die Streckung der zumindest einen ersten Einzelseite 638 und/oder die Streckung der zumindest einen zweiten Einzelseite 639 und/oder die Streckung des zumindest einen virtuellen Referenzabstands 657 und/oder durch die relative Verschiebung der zumindest einen ersten Einzelseite 638 und der zumindest einen zweiten Einzelseite 639 zueinander in den Vorlagebilddaten 641; 642; 643; 644 zumindest eine Veränderung zumindest einer Abmessung des Bedruckstoffs 02 zumindest teilweise kompensiert.

Insbesondere um den Bedruckstoff 02 mittels mehrerer Druckeinheiten 200; 400 auf einer gleichen Seite bedrucken zu können, wird eine modifizierte Ausführung der Druckmaschine 01 bevorzugt.

Bevorzugt ist entlang eines für zumindest einen zu bedruckenden Bedruckstoff 02 vorgesehenen Transportwegs durch die Druckmaschine 01 zumindest eine erste Druckeinheit 200 insbesondere auf den vorgesehenen Transportweg ausgerichtet und/oder einwirkend und bevorzugt der zumindest eine erste Trockner 301 und bevorzugt zumindest eine zweite Druckeinheit 400 insbesondere auf den vorgesehenen Transportweg ausgerichtet und/oder einwirkend angeordnet. Dabei weist die Druckmaschine 01 bevorzugt zumindest fünf, weiter bevorzugt zumindest sechs, noch weiter bevorzugt zumindest sieben und noch weiter bevorzugt zumindest acht unterschiedliche Zwischenspeicher für unterschiedliche Beschichtungsmittel auf. Bevorzugt ist jeder dieser zumindest fünf, weiter bevorzugt zumindest sechs, noch weiter bevorzugt zumindest sieben und noch weiter bevorzugt zumindest acht Zwischenspeicher mit jeweils zumindest einer bevorzugt ausschließlich ihm zugeordneten Mehrzahl von einzeln ansteuerbaren Bestandteilen der zumindest einen ersten Druckeinheit 200 oder der zumindest einen zweiten Druckeinheit 400 der Druckmaschine 01 verbunden und/oder verbindbar, weiter bevorzugt über jeweils zumindest eine Zuleitung, insbesondere zumindest eine Zuleitung je Zwischenspeicher.

Bevorzugt sind wiederum mittels jedes dieser Bauteile oder Bestandteile, insbesondere einzeln ansteuerbaren Bestandteile, in Abhängigkeit von Ausgabedaten 646 und insbesondere Ansteuerdaten 646 insbesondere Formen von gedruckten Druckbildern, insbesondere einzelne gedruckte Bildpunkte von gedruckten Druckbildern erzeugbar. Bevorzugt ist jedes dieser Bauteile oder Bestandteile, insbesondere einzeln ansteuerbaren Bestandteil, auf einer gleichen Seite des für den zumindest einen zu bedruckenden Bedruckstoff 02 vorgesehenen Transportwegs durch die Druckmaschine 01 angeordnet und/oder weiter bevorzugt dazu ausgebildet, auf eine gleiche Seite des zu bedruckenden Bedruckstoffs 02 einzuwirken, insbesondere Beschichtungsmittel aufzutragen. Bevorzugt weist die zumindest eine erste Druckeinheit 200 zumindest einen, weiter bevorzugt zumindest zwei, noch weiter bevorzugt zumindest drei und noch weiter bevorzugt zumindest vier der unterschiedlichen Zwischenspeicher für unterschiedliche Beschichtungsmittel auf. Bevorzugt weist die zumindest eine zweite Druckeinheit 400 zumindest einen, weiter bevorzugt zumindest zwei, noch weiter bevorzugt zumindest drei und noch weiter bevorzugt zumindest vier der unterschiedlichen Zwischenspeicher für insbesondere untereinander und jeweils zu den Beschichtungsmitteln der ersten Druckeinheit 200 unterschiedliche Beschichtungsmittel auf. Es ist auch möglich, dass eine einzige Druckeinheit 200; 400 zumindest fünf der unterschiedlichen Zwischenspeicher aufweist. Bevorzugt weist die zumindest eine erste Druckeinheit 200 und/oder die zumindest einer zweite Druckeinheit 400 zumindest ein als Tintenstrahldruckwerk 211; 411 ausgebildetes Druckwerk 211; 411 auf.

Bevorzugt weisen der erste Zentralzylinder 201 und der zweite Zentralzylinder 401 in diesem Fall eine gleiche Rotationsrichtung auf und/oder weisen ein Übertragungskörper der zumindest einen ersten Druckeinheit 200 und ein Übertragungskörper der zumindest einen zweiten Druckeinheit 400 in diesem Fall eine gleiche Rotationsrichtung auf. Bevorzugt sind die zumindest eine erste Druckeinheit 200 und die zumindest eine zweite Druckeinheit 400 in diesem Fall im Wesentlichen gleich aufgebaut, insbesondere bezüglich Rotationskörpern und Druckwerken 211; 411.

Bevorzugt um Druckbilder mit großen Ausdehnungen insbesondere lückenlos und schnell drucken zu können, wird zusätzlich oder alternativ ein Verfahren zum Bedrucken zumindest eines ersten Bedruckstoffs 02, insbesondere zumindest eines bahnförmigen ersten Bedruckstoffs 02 mittels zumindest eines Druckwerks 211; 411 einer Druckmaschine 01, insbesondere einer Rollen-Druckmaschine 01 bevorzugt, wobei aus insbesondere digital gespeicherten Vorlagebilddaten 641; 642; 643; 644 zumindest eines Gesamtdruckbilds 636; 637, insbesondere zumindest eines ersten Gesamtdruckbilds 636 Ausgabedaten 646 für eine Ansteuerung zumindest eines zumindest eine Form von Druckbildern festlegenden Bestandteils zumindest einer ersten Druckeinheit 200 der Druckmaschine 01 zur Erzeugung zumindest eines gedruckten Gesamtdruckbilds 636; 637, insbesondere zumindest eines ersten gedruckten Gesamtdruckbilds 636 erzeugt werden. Ein solches Gesamtdruckbild 636; 637 kann beispielsweise Einzelseiten 638; 639; 1638; 1639 aufweisen oder besteht beispielsweise aus nur einem Druckmotiv und/oder nur einer Einzelseite 638; 639; 1638; 1639 entsprechender Größe. Das Verfahren kann als eigenständiges Verfahren oder als Ergänzung zu vorhergehend beschriebenen Verfahrensvorgängen eingesetzt werden. Mittels des Verfahrens sind besonders große Druckbilder und/oder durch periodische Wiederholung selbst unendlich lange Druckbilder mit vergleichsweise geringem Aufwand bei hoher Druckbildqualität realisierbar.

Bevorzugt wird und/oder ist das zumindest eine Gesamtdruckbild 636, 637, insbesondere erste Gesamtdruckbild 636 in einem primären Datenpaket festgelegt und/oder beschrieben. Ein solches primäres Datenpaket sind beispielsweise die Vorlagebilddaten 641; 642 des zumindest einen Gesamtdruckbilds 636; 637, insbesondere ersten Gesamtdruckbilds 636 oder die insbesondere durch Streckung und/oder Verschiebung von Einzelseiten 638; 639; 1638; 1639 geometrisch modifizierten Vorlagebilddaten 641; 642 des zumindest einen Gesamtdruckbilds 636; 637, insbesondere ersten Gesamtdruckbilds 636. Solche Vorlagebilddaten 641; 642 oder geometrisch modifizierten Vorlagebilddaten 641; 642 liegen beispielsweise in Form einer vektorbasierten Seitenbeschreibung vor, beispielsweise als Seitenbeschreibungsdaten, insbesondere pdf-Daten. Insbesondere weist also das zumindest eine primäre Datenpaket bevorzugt Seitenbeschreibungsdaten, insbesondere pdf-Daten auf. Ein solches primäres Datenpaket sind alternativ beispielsweise Rasterdaten 647, die aus den Vorlagebilddaten 641; 642 des zumindest einen Gesamtdruckbilds 636; 637, insbesondere ersten Gesamtdruckbilds 636 erstellt wurden oder daraus durch Streckung und/oder Verschiebung hervorgegangene geometrisch modifizierte Rasterdaten 647 des zumindest einen Gesamtdruckbilds 636; insbesondere ersten Gesamtdruckbilds 636; 637. Solche Rasterdaten 647 oder geometrisch modifizierte Rasterdaten 647 liegen beispielsweise in Form einer Bildpunktmatrix oder Teilbildpunktmatrix vor, beispielsweise als Bildpunktmatrixdaten, insbesondere bitmap-Daten. Insbesondere weist also das zumindest eine primäre Datenpaket alternativ Bildpunktmatrixdaten, insbesondere bitmap-Daten auf.

Bevorzugt ist dem zumindest einen Gesamtdruckbild 636; 637, insbesondere ersten Gesamtdruckbild 636 in den Vorlagebilddaten 641; 642 und/oder in dem primären Datenpaket zumindest eine Gesamtbildabmessung zugeordnet. Die zumindest eine Gesamtbildabmessung ist beispielsweise eine in der ersten Vorlagerichtung B gemessene erste Gesamtbildabmessung, insbesondere eine Breite des zumindest einen Gesamtdruckbilds 636; 637, insbesondere ersten Gesamtdruckbilds 636. Die zumindest eine Gesamtbildabmessung ist bevorzugt eine in der zweiten Vorlagerichtung D, insbesondere Abarbeitungsrichtung D gemessene zweite Gesamtbildabmessung, insbesondere eine Länge des zumindest einen Gesamtdruckbilds 636; 637, insbesondere ersten Gesamtdruckbilds 636. Weiter bevorzugt sind dem zumindest einen Gesamtdruckbild 636; 637, insbesondere ersten Gesamtdruckbild 636 in den Vorlagebilddaten 641; 642 und/oder in dem primären Datenpaket zumindest diese Länge und diese Breite zugeordnet.

Beispielsweise wird die zumindest eine insbesondere erste Gesamtbildabmessung und/oder Breite des zumindest einen ersten Gesamtdruckbilds 636 mit zumindest einem Grenzwert verglichen, der bevorzugt ein erster Grenzwert ist. Bevorzugt wird die zumindest eine insbesondere zweite Gesamtbildabmessung und/oder Länge des zumindest einen Gesamtdruckbilds 636; 637, insbesondere ersten Gesamtdruckbilds 636 mit zumindest einem Grenzwert verglichen, der bevorzugt ein zweiter Grenzwert ist. Beispielsweise wird die zumindest eine erste Gesamtbildabmessung durch die Maschinensteuerung und/oder die Druckdatenverarbeitung 600 der Druckmaschine 01 selbst und/oder durch zumindest einen hinterlegten Algorithmus der Maschinensteuerung und/oder Druckdatenverarbeitung 600 der Druckmaschine 01 mit dem zumindest einen ersten Grenzwert verglichen. Bevorzugt wird die zumindest eine zweite Gesamtbildabmessung durch die Maschinensteuerung und/oder die Druckdatenverarbeitung 600 der Druckmaschine 01 selbst und/oder durch zumindest einen hinterlegten Algorithmus der Maschinensteuerung und/oder Druckdatenverarbeitung 600 der Druckmaschine 01 mit dem zumindest einen zweiten Grenzwert verglichen.

Beispielsweise wird bei Überschreitung des zumindest einen Grenzwerts durch die zumindest eine Gesamtbildabmessung des zumindest einen Gesamtdruckbilds 636; 637, insbesondere ersten Gesamtdruckbilds 636 das zumindest eine Gesamtdruckbild 636; 637, insbesondere erste Gesamtdruckbild 636 insbesondere auf die Vorlagerichtung B, D bezogen in eine Mehrzahl von Abschnitten 679 des zumindest einen Gesamtdruckbilds 636; 637, insbesondere ersten Gesamtdruckbilds 63 geteilt. Insbesondere wird bevorzugt bei Überschreitung des zumindest einen zweiten Grenzwerts durch die zumindest eine zweite Gesamtbildabmessung, insbesondere Länge des zumindest einen Gesamtdruckbilds 636; 637, insbesondere ersten Gesamtdruckbilds 636 das zumindest eine Gesamtdruckbild 636; 637, insbesondere erste Gesamtdruckbild 636 auf diese zweite Vorlagerichtung D oder Abarbeitungsrichtung D bezogen in eine Mehrzahl von Abschnitten 679 des zumindest einen Gesamtdruckbilds 636; 637, insbesondere ersten Gesamtdruckbilds 63 geteilt. Die Abschnitte 679 weisen dann bevorzugt jeweils Abschnittsabmessungen in der insbesondere zweiten Vorlagerichtung D auf, die den insbesondere zweiten Grenzwert nicht überschreiten. Die Abschnitte 679 weisen bevorzugt gegebenenfalls Abschnittsabmessungen in der ersten Vorlagerichtung B auf, die den ersten Grenzwert nicht überschreiten.

Beispielsweise weisen mehrere dabei entstehende Abschnitte 679 des zumindest einen Gesamtdruckbilds 636; 637, insbesondere ersten Gesamtdruckbilds 636 Abschnittsabmessungen in der Vorlagerichtung B, D, insbesondere Abschnittsabmessungen in der ersten Vorlagerichtung B und/oder Abschnittsabmessungen in der zweiten Vorlagerichtung D auf, die untereinander gleich sind, weiter bevorzugt gleich dem jeweiligen, insbesondere dem ersten und/oder dem zweiten Grenzwert. Beispielsweise weisen alle Abschnitte 679 in der ersten Vorlagerichtung B oder der zweiten Vorlagerichtung D gleiche Abschnittsabmessungen auf, bis auf einen in der jeweiligen Vorlagerichtung B; D betrachtet ersten und/oder einen in der jeweiligen Vorlagerichtung B; D betrachtet letzten Abschnitt 679, dessen Abschnittsabmessung sich durch einen bei der Aufteilung übrig bleibenden Rest ergibt. Bevorzugt weisen die Abschnitte 679 jeweils eine Breite auf, die der Bereite des zumindest einen Gesamtdruckbilds 636; 637 entspricht und/oder weisen die Abschnitte 679 jeweils eine Länge auf, die sich aus der Aufteilung in sekundäre Datenpakete und/oder aus einer maximal verarbeitbaren Größe von sekundären Datenpakete ergibt. Bevorzugt unterscheiden sich zumindest zwei der Abschnitte 679 eines gleichen Gesamtdruckbilds 636; 637 bezüglich ihrer Abschnittsabmessung in der bevorzugt als Abarbeitungsrichtung D ausgeprägten Vorlagerichtung D. Beispielsweise weisen die Abschnitte 679 jeweils Abschnittsabmessungen in der zweiten Vorlagerichtung D auf, die im Wesentlichen alle gleich groß sind und sich nur durch Abweichungen von weniger als 5 %, weiter bevorzugt weniger als 1 % voneinander unterscheiden.

Der insbesondere zweite Grenzwert, nach dem sich die Entscheidung richtet, ob das primäre Datenpaket in sekundäre Datenpakete aufgeteilt wird und wie groß die sekundären Datenpakete maximal sind, richtet sich bevorzugt nach einer maximalen mit dem Rastergrafikprozessor auf einmal verarbeitbaren Datenmenge. Aus dieser Datenmenge ergibt sich eine maximale Gesamtanzahl von Bildelementen oder Pixeln, die ein Paket aus Rasterdaten enthalten darf, das aus einem einzelnen sekundären Datenpaket erzeugt wird oder wurde. Eine Queranzahl von Bildelementen oder Pixeln in Richtung der Breite des Bedruckstoffs 02 ergibt sich aus der Breite des Gesamtdruckbilds 636; 637 und der Auflösung in Bildelementen oder Pixeln pro Breiteneinheit in Richtung der Breite des Bedruckstoffs 02. Die Richtung der Breite des Bedruckstoffs 02 entspricht der axialen Richtung A. Aus dieser maximalen Gesamtanzahl von Bildelementen oder Pixeln, die ein Paket aus Rasterdaten enthalten darf, und der Queranzahl von Bildelementen oder Pixeln in Richtung der Breite des Bedruckstoffs 02 ergibt sich eine maximale Längsanzahl von Bildelementen oder Pixeln in Richtung der Länge des Bedruckstoffs 02 und/oder des Gesamtdruckbilds 636; 637. Die Richtung der Länge des Bedruckstoffs 02 ist bevorzugt orthogonal zu der axialen Richtung A und verläuft bevorzugt parallel zu dem Transportweg des Bedruckstoffs 02. Aus dieser maximalen Längsanzahl von Bildelementen oder Pixeln in Richtung der Länge des Bedruckstoffs 02 und einer Auflösung in Bildelementen oder Pixeln pro Längeneinheit in Richtung der Länge des Bedruckstoffs 02 ergibt sich eine maximale Länge, die das in dem sekundären Datenpaket beschriebene Bild in Richtung der Länge des Bedruckstoffs 02 und damit auch in der Vorlagerichtung D oder Abarbeitungsrichtung D je sekundärem Datenpaket haben darf. Somit ist bevorzugt der maximale Wert für den insbesondere zweiten Grenzwert festgelegt.

Bevorzugt ist der insbesondere zweite Grenzwert in einer Längeneinheit definiert und/oder hinterlegt, beispielsweise in Metern oder Zoll. Alternativ ist der insbesondere zweite Grenzwert in einer Rastermaßeinheit definiert und/oder hinterlegt, beispielsweise in Bildelementen oder Pixeln. Bevorzugt ist die zumindest eine insbesondere zweite Gesamtbildabmessung in einer Längeneinheit definiert und/oder hinterlegt, beispielsweise in Metern oder Zoll. Alternativ ist die zumindest eine insbesondere zweite Gesamtbildabmessung in einer Rastermaßeinheit definiert und/oder hinterlegt, beispielsweise in Bildelementen oder Pixeln. Bevorzugt ist die zumindest eine insbesondere zweite Abschnittsabmessung in einer Längeneinheit definiert und/oder hinterlegt, beispielsweise in Metern oder Zoll. Alternativ ist die zumindest eine insbesondere zweite Abschnittsabmessung in einer Rastermaßeinheit definiert und/oder hinterlegt, beispielsweise in Bildelementen oder Pixeln.

Bevorzugt wird und/oder ist die Mehrzahl von Abschnitten 679 in einer Mehrzahl von sekundären, insbesondere separaten und/oder unterschiedlichen Datenpaketen festgelegt und/oder beschrieben. Bevorzugt sind die jeweiligen sekundären Datenpakete kleiner als das primäre Datenpaket, insbesondere auf einen notwendigen Speicherplatz bezogen. Dadurch können die sekundären Datenpakete mit relativ begrenzten Ressourcen weiter verarbeitet werden, auch wenn diese Ressourcen nicht in der Lage wären, das primäre Datenpaket auf einmal weiter zu verarbeiten. Bevorzugt weist jedes sekundäre Datenpaket insbesondere nur Daten auf, die genau einen Abschnitt 679 des zumindest einen Gesamtdruckbilds 636; 637, insbesondere ersten Gesamtdruckbilds 636 betreffen. Bevorzugt sind sämtliche einen Abschnitt 679 des zumindest einen Gesamtdruckbilds 636; 637, insbesondere ersten Gesamtdruckbilds 636 betreffenden Daten in genau einem sekundären Datenpaket enthalten. Weiter bevorzugt entspricht also jedes sekundäre Datenpaket jeweils genau einem Abschnitt 679 des zumindest einen Gesamtdruckbilds 636; 637, insbesondere ersten Gesamtdruckbilds 636.

Bevorzugt wird durch mittels der zumindest einen ersten Druckeinheit 200 ausgeführte Druckvorgänge, in denen jeweils auf zumindest einem der sekundären Datenpakete beruhende Ausgabedaten 646 verarbeitet werden, die Mehrzahl von Abschnitten 679 des zumindest einen Gesamtdruckbilds 636; 637, insbesondere ersten Gesamtdruckbilds 636 und bevorzugt dadurch das zumindest eine gedruckte Gesamtdruckbild 636; 637, insbesondere erste gedruckte Gesamtdruckbild 636 auf dem zumindest einen ersten Bedruckstoff 02 erzeugt, weiter bevorzugt lückenlos erzeugt. Bevorzugt werden in den Druckvorgängen jeweils auf zumindest einem und weiter bevorzugt auf genau einem der sekundären Datenpakete beruhende Ausgabedaten 646 verarbeitet. Bevorzugt werden diese Druckvorgänge zumindest teilweise nacheinander mittels der zumindest einen ersten Druckeinheit 200 ausgeführt. Darunter ist insbesondere zu verstehen, dass bevorzugt zuerst beginnende Druckvorgänge auch zuerst beendet werden. Beispielsweise kommt es jedoch zu Überschneidungen, insbesondere wenn Düsen von Druckköpfen 212 an unterschiedlichen Stellen entlang des Transportwegs des Bedruckstoffs 02 angeordnet sind und bezüglich des Transportwegs weiter vorne angeordnete Düsen bereits einen nachfolgenden Abschnitt 679 drucken, während bezüglich des Transportwegs weiter hinten angeordnete Düsen noch einen vorhergehenden Abschnitt 679 drucken. Insbesondere dann zeichnet sich das Verfahren bevorzugt dadurch aus, dass zumindest zeitweise zumindest zwei der Abschnitte 679 des insbesondere ersten Gesamtdruckbilds 636; 637 zumindest teilweise gleichzeitig auf demselben Bedruckstoff 02 erzeugt werden und/oder dass zumindest zeitweise auf zumindest zwei unterschiedlichen sekundären Datenpaketen beruhende Ausgabedaten 646 gleichzeitig dazu verwendet werden, jeweils einen Teil eines der Abschnitte des insbesondere ersten Gesamtdruckbilds 636; 637 auf insbesondere demselben Bedruckstoff 02 zu erzeugen.

Unter einer lückenlosen Erzeugung ist dabei bevorzugt zu verstehen, dass dem gedruckten Gesamtdruckbild 636; 637, insbesondere ersten gedruckten Gesamtdruckbild 636 nicht entnehmbar ist, an welcher Stelle gedruckte Abschnitte 679 des Gesamtdruckbilds 636; 637 aneinander angrenzen. Insbesondere werden bevorzugt solche insbesondere in der Vorlagerichtung B; D direkt benachbarten Bildpunkte, die auf Grund von von einem selben sekundären Datenpaket stammenden Ausgabedaten 646 erzeugt wurden, mit einem gleichen Abstand zueinander auf demselben Bedruckstoff 02 erzeugt, wie derjenige Abstand, mit dem solche in dieser Vorlagerichtung B; D direkt benachbarten Bildpunkte auf demselben Bedruckstoff 02 erzeugt werden, die auf Grund von von unterschiedlichen sekundären Datenpaket stammenden Ausgabedaten 646 erzeugt wurden.

Je nachdem, ob die Aufteilung in sekundäre Datenpakete erfolgt, bevor oder nachdem Druckbilddaten gerastert und/oder gestreckt und/oder verschoben wurden, liegen die Druckbilddaten innerhalb der sekundären Datenpakete bevorzugt zumindest zunächst beispielsweise in Form jeweils zumindest einer vektorbasierten Seitenbeschreibung vor, beispielsweise als pdf-Daten oder in Form jeweils zumindest einer Bildpunktmatrix oder Teilbildpunktmatrix vor, beispielsweise als Rasterdaten, beispielsweise bitmap-Daten. Insbesondere weist also das zumindest eine sekundäre Datenpaket bevorzugt Seitenbeschreibungsdaten, beispielsweise pdf-Daten oder Bildpunktmatrixdaten, beispielweise bitmap-Daten auf.

Bevorzugt weist das primäre Datenpaket die Vorlagebilddaten 641; 642; 643; 644 oder geometrisch modifizierte Vorlagebilddaten 641; 642; 643; 644 auf. Alternativ weist das primäre Datenpaket die Rasterdaten 647 oder geometrisch modifizierte Rasterdaten 647 auf. Bevorzugt weisen die sekundären Datenpakete jeweils Vorlagebilddaten 641; 642; 643; 644; 1643; 1644 oder geometrisch modifizierte Vorlagebilddaten 641; 642; 643; 644 auf. Alternativ weisen die sekundären Datenpakete jeweils Rasterdaten 647 oder geometrisch modifizierte Rasterdaten 647 auf. Weiter bevorzugt weisen die sekundären Datenpakte eine gleiche Art von Daten auf, wie das primäre Datenpaket, noch weiter bevorzugt jeweils Seitenbeschreibungsdaten und/oder Vorlagebilddaten 641; 642; 643; 644 oder geometrisch modifizierte Vorlagebilddaten 641; 642; 643; 644.

Bevorzugt werden die in den sekundären Datenpaketen enthaltenen Daten mittels zumindest eines Rastergrafikprozessors 603 verarbeitet. Bevorzugt werden aus dabei entstehenden Paketen von Rasterdaten 647 direkt oder indirekt, beispielsweise über zumindest eine geometrische Modifikation, insbesondere Streckung und/oder Verschiebung, die Ausgabedaten 646 erzeugt. Insbesondere werden bevorzugt jeweils auf unterschiedlichen sekundären Datenpaketen beruhende Pakete von Rasterdaten 647 zumindest teilweise nacheinander zur Erzeugung von Ausgabedaten 646 für gedruckte Abschnitte 679 des zumindest einen Gesamtdruckbilds 636; 637, insbesondere ersten Gesamtdruckbilds 637 eingesetzt. Bevorzugt werden die sekundären Datenpakete und/oder daraus gewonnene Rasterdaten 647 nacheinander abgearbeitet, um Ausgabedaten 646 zu erzeugen, gemäß denen das Druckbild erzeugt, weiter bevorzugt gemäß denen Beschichtungsmittel aus Düsen ausgestoßen wird. Dazu werden die Ausgabedaten 646 wie beschrieben bevorzugt auf die Einrichtungen zur Ansteuerung der Düsen der Druckköpfe 212; 412 verteilt. Alternativ ist es auch möglich, zunächst das die Vorlagebilddaten 641; 642; 643; 644; 1643; 1644 gegebenenfalls einer Verschiebung und/der Streckung zu unterziehen und jedenfalls zunächst in Rasterdaten 647 umzuwandeln und die Aufteilung in Abschnitte erst Anhand der Rasterdaten vorzunehmen 647. Dies erfordert jedoch höhere Rechenkapazitäten und/oder Speicherkapazitäten im Zusammenhang mit dem zumindest einen Rastergrafikprozessor 603.

Bevorzugt werden die sekundären Datenpakete zumindest teilweise nacheinander in zumindest einen Speicher, weiter bevorzugt weniger Speicher als Abschnitte 679 und noch weiter bevorzugt genau einen Speicher geladen. Ein solcher Speicher ist beispielsweise der zumindest eine Bilddatenspeicher 601 und/oder der zumindest eine Rasterdatenspeicher 602. Bevorzugt werden die sekundären Datenpakete zumindest teilweise nacheinander mittels zumindest eines Rastergrafikprozessors 603 verarbeitet. Bevorzugt werden die sekundären Datenpakete zumindest teilweise nacheinander aus zumindest einem Speicher, weiter bevorzugt weniger Speichern als Abschnitte 679 und noch weiter bevorzugt genau einem Speicher ausgelesen. Ein solcher Speicher ist wiederum beispielsweise der zumindest eine Bilddatenspeicher 601 und/oder der zumindest eine Rasterdatenspeicher 602. Bevorzugt werden die sekundären Datenpakete zumindest teilweise nacheinander zu Ausgabedaten 646 verarbeitet. In diesen Zusammenhängen bedeutet "zumindest teilweise nacheinander" bevorzugt, dass eine entsprechende Behandlung eines ersten sekundären Datenpakets bereits abgeschlossen wurde, bevor eine gleiche entsprechende Behandlung eines letzten, von einem gleichen primären Datenpaket stammenden sekundären Datenpakets begonnen wird.

Bevorzugt werden die sekundären Datenpakete und/oder jeweils auf unterschiedlichen sekundären Datenpakten beruhende Pakete von Rasterdaten 647 jeweils als Ganzes in zumindest einem Speicher, insbesondere einem Puffer und/oder Ringspeicher und/oder Schieberegister abgelegt und weiter bevorzugt von dort zumindest teilweise nacheinander ausgelesen. Beispielsweise wird zumindest ein zweites sekundäres Datenpaket bereits in dem zumindest einen Speicher gespeichert, während zumindest ein vorheriges erstes sekundäres Datenpaket noch ausgelesen wird. Beispielsweise wird zumindest ein drittes sekundäres Datenpaket bereits in dem zumindest einen Speicher gespeichert, während das zumindest eine vorherige zweite sekundäre Datenpaket noch ausgelesen wird oder noch nicht ausgelesen wurde. Auf diese Weise ist bevorzugt sichergestellt, dass ein kontinuierlicher Fluss von Ausgabedaten 646 aus Rasterdaten 647 erstellt werden kann, auch wenn der Speicher nicht ausreichend wäre, um die Rasterdaten 647 zu speichern, wenn das gesamte primäre Datenpaket auf einmal gespeichert und/oder abgearbeitet werden sollte. Insbesondere ist bevorzugt auf diese Weise sichergestellt, dass ein kontinuierlicher Fluss von Ausgabedaten 646 aus Rasterdaten 647 erstellt werden kann, auch wenn die Rasterdaten 647 paketweise in den entsprechenden Speicher geladen und wieder daraus gelöscht werden. Ein solcher Speicher ist beispielsweise der zumindest eine Bilddatenspeicher 601 und/oder der zumindest eine Rasterdatenspeicher 602.

Alternativ werden und/oder sind bevorzugt sämtliche aus mehreren oder allen von einem primären Datenpaket abstammenden sekundären Datenpaketen erzeugten Rasterdaten 647 und/oder Ausgabedaten 646 zeitgleich in zumindest einem Speicher abgelegt. Diese sämtlichen aus mehreren oder allen von diesem primären Datenpaket abstammenden sekundären Datenpaketen erzeugten Rasterdaten 647 und/oder Ausgabedaten 646 werden bevorzugt nacheinander, beispielsweise in zyklischen Wiederholungen, zur Erzeugung der Abschnitte 679 des insbesondere ersten Gesamtdruckbilds 636; 637 verwendet. Beispielsweise wird damit ein beliebig langes durchgehendes und lückenloses Druckbild auf einem selben insbesondere bahnförmigen Bedruckstoff 02 erzeugt. Weiter bevorzugt ist ein Anfang und ein Ende des insbesondere ersten Gesamtdruckbilds 636; 637 grafisch aufeinander abgestimmt, um zwischen ihnen einen lückenlosen und optisch nicht erkennbaren Übergang zu ermöglichen.

Das Verfahren zeichnet sich bevorzugt dadurch aus, dass die gespeicherten Vorlagebilddaten 641; 642; 643; 644 zumindest des zumindest einen Gesamtdruckbilds 636; 637, insbesondere ersten Gesamtdruckbilds 636 zumindest Vorlagebilddaten 643 zumindest einer ersten Einzelseite 638 aufweisen und dass zumindest die zumindest eine erste Einzelseite 638 innerhalb von gespeicherten Daten, insbesondere innerhalb von Daten der sekundären Datenpakete, in Abhängigkeit von den Vorlagebilddaten 641; 642; 643; 644 und/oder in Abhängigkeit von auf einen Druckauftrag bezogenen Auftragsdaten und/oder in Abhängigkeit von in zumindest einem Korrekturspeicher 666 hinterlegten Korrekturdaten vor und/oder während der Erzeugung der Ausgabedaten 646 zumindest in einer Vorlagerichtung B, D mit einem Streckungsfaktor gestreckt wird. Diese Vorlagerichtung B ist bevorzugt eine andere Vorlagerichtung B, als diejenige Vorlagerichtung D, in der das zumindest eine Gesamtdruckbild 636; 637, insbesondere erste Gesamtdruckbild 636 in Abschnitte 679 unterteilt wird.

Das Verfahren zeichnet sich bevorzugt alternativ oder zusätzlich dadurch aus, dass die gespeicherten Vorlagebilddaten 641; 642 des zumindest einen Gesamtdruckbilds 636; 637, insbesondere ersten Gesamtdruckbilds 636 zumindest Vorlagebilddaten 643 zumindest einer ersten Einzelseite 638 und Vorlagebilddaten 644 zumindest einer zweiten Einzelseite 639 aufweisen und dass die zumindest eine erste Einzelseite 638 und die zumindest eine zweite Einzelseite 639 innerhalb von gespeicherten Daten, insbesondere innerhalb von Daten der sekundären Datenpakete, bevorzugt unter Beibehaltung zumindest ihrer jeweiligen in einer ersten Vorlagerichtung B gemessenen absoluten virtuellen Seitenabmessung 663; 664 in Abhängigkeit von den Vorlagebilddaten 641; 642; 643; 644 und/oder in Abhängigkeit von auf einen Druckauftrag bezogenen Auftragsdaten und/oder in Abhängigkeit von in zumindest einem Korrekturspeicher 666 hinterlegten Korrekturdaten relativ zueinander zumindest in dieser ersten Vorlagerichtung B verschoben werden. Diese Vorlagerichtung B ist bevorzugt eine andere Vorlagerichtung B, als diejenige Vorlagerichtung D, in der das zumindest eine Gesamtdruckbild 636; 637, insbesondere erste Gesamtdruckbild 636 in Abschnitte 679 unterteilt wird.

Bevorzugt zeichnet sich das Verfahren alternativ oder zusätzlich dadurch aus, dass das zumindest eine Druckwerk 211; 411 ein Tintenstrahldruckwerk 211; 411 ist und/oder dass die Druckmaschine 01 eine Tintenstrahldruckmaschine 01 ist und/oder dass aus den gespeicherten Vorlagebilddaten 641; 642; 643; 644 des zumindest einen Gesamtdruckbilds 636; 637, insbesondere ersten Gesamtdruckbilds 636 Ausgabedaten 646 für eine Ansteuerung von Düsen von Druckköpfen 212; 412 der zumindest einen ersten Druckeinheit 200 der Druckmaschine 01 erzeugt werden, gemäß denen ein Ausstoßen von Beschichtungsmittel durch diese Düsen von Druckköpfen 212; 412 zur Erzeugung des zumindest einen gedruckten Gesamtdruckbilds 636; 637, insbesondere ersten gedruckten Gesamtdruckbilds 636 vorgenommen wird und/oder dass die jeweiligen Ausgabedaten 646 Ansteuerdaten 646 von jeweils einzusetzenden Düsen von Druckköpfen 212; 412 zumindest eines Tintenstrahldruckwerks 211; 411 der Druckmaschine 01 sind.

Bevorzugt zeichnet sich das Verfahren alternativ oder zusätzlich dadurch aus, dass zumindest fünf unterschiedliche Beschichtungsmittel auf eine gleiche Seite des Bedruckstoffs 02 aufgetragen werden und dass jedes dieser zumindest fünf unterschiedlichen Beschichtungsmittel jeweils mittels einer Mehrzahl von einzeln ansteuerbaren und in Abhängigkeit von Ausgabedaten 646 und insbesondere Ansteuerdaten 646 einzelne Bildpunkte von Druckbildern festlegenden Bestandteilen der zumindest einen ersten Druckeinheit 200 und/oder zumindest einer zweiten Druckeinheit 400 der Druckmaschine 01 auf den Bedruckstoff 02 aufgetragen wird und dass zumindest eines der zumindest fünf unterschiedlichen Beschichtungsmittel mittels der zumindest einen ersten Druckeinheit 200 auf den Bedruckstoff 02 aufgetragen wird und danach mittels zumindest eines Trockners 301 getrocknet wird und danach zumindest ein anderes der zumindest fünf unterschiedlichen Beschichtungsmittel mittels der zumindest einen zweiten Druckeinheit 400 der Druckmaschine 01 auf den Bedruckstoff 02 aufgetragen wird. Bevorzugt werden die Abschnitte 679 und damit auch die sekundären Datenpakete bereits erzeugt, bevor Daten auf die zumindest eine erste Druckeinheit 200 und die zumindest eine zweite Druckeinheit 400 aufgeteilt werden. Bei einem Einsatz von zwei Druckeinheiten 200; 400 wird bevorzugt in regelmäßigen oder unregelmäßigen Abständen eine Synchronisierung vorgenommen, weiter bevorzugt nur zwischen solchen Ausgangsdaten 646, die auf sekundären Datenpaketen unterschiedlicher primärer Datenpakete beruhen. Eine Abarbeitung von Ausgangsdaten 646, die auf sekundären Datenpaketen eines gleichen primären Datenpakets beruhen, wird bevorzugt nicht für Synchronisierungen beeinflusst und/oder unterbrochen.

Die Aufteilung des zumindest einen Gesamtdruckbilds 636; 637, insbesondere ersten Gesamtdruckbilds 636 auf mehrere Abschnitte und damit die Erstellung der sekundären Datenpakete erfolgt bevorzugt mittels des zumindest einen Bilddatenrechners 611 und/oder mittels des zumindest einen Rasterdatenrechners 612 und/oder mittels eines anderen Rechners, beispielsweise eines anderen Rechners der Druckmaschine 01 und/oder der Maschinensteuerung 600 und/oder der Druckdatenverarbeitung 600. Weiter bevorzugt erfolgt die Erstellung der sekundären Datenpakete mittels des zumindest einen Bilddatenrechners 611 und danach die Erstellung von Rasterdaten 647 aus den sekundären Datenpaketen mittels des zumindest einen Rasterdatenrechners 612. Alle Speicher, in denen die sekundären Datenpakete oder auf den sekundären Datenpaketen beruhende Daten, beispielsweise Rasterdaten 647 und/oder Ausgabedaten 646 gespeichert werden, können bevorzugt vergleichsweise kleine Speicherkapazitäten aufweisen, beispielsweise Speicherkapazitäten, die kleiner sind als das primäre Datenpaket.

### Bezugszeichenliste

- 01: Druckmaschine, Tintenstrahldruckmaschine, Rollen-Druckmaschine, Rollen-Tintenstrahldruckmaschine, Rotationsdruckmaschine, Rollen-Rotationsdruckmaschine, Rollen-Rotations-Tintenstrahldruckmaschine
- 02: Bedruckstoff, Bedruckstoffbahn, Papierbahn, Textilbahn, Folie, Kunststofffolie, Metallfolie

- 100: Bedruckstoffquelle, Rollenabspulvorrichtung, Rollenwechsler
- 101: Bedruckstoffrolle
- 102: -
- 103: Rollenhaltevorrichtung, Klemmvorrichtung, Klemmdorn, Klemmkonus, Spannvorrichtung, Spanndorn, Spannkonus, Spannwelle; Rotationskörper, erster
- 104: Antriebsmotor, Elektromotor (103)

- 107: Tragarm (101)
- 108: Achse, Träger, Tragrahmen (107)
- 109: Schwenkachse (108)
- 110: -
- 111: Rotationsachse (101; 103)
- 112: Gestell
- 113: Tänzerwalze
- 114: Bahnkantenausrichter, erster
- 115: -
- 116: Ausrichtwalze
- 117: Zugpresseur
- 118: Zugwalze; Rotationskörper, zweiter
- 119: Einzugspalt
- 120: -
- 121: Tänzerhebel

- 139: Einzugwerk
- 140: -
- 141: Messwalze, Einzugmesswalze, Messeinrichtung, erste

- 146: Antriebsmotor, Zugantriebsmotor (118)

- 200: Druckeinheit, erste
- 201: Druckzentralzylinder, Zentralzylinder, erster; Rotationskörper, dritter
- 202: Bedruckstoffvorbereitungsvorrichtung, Bahnvorbereitungsvorrichtung, Beschichtungsvorrichtung, Korona-Vorrichtung, Entladungsvorrichtung, Bedruckstoffreinigungsvorrichtung, Bahnreinigungsvorrichtung, Entstaubungsvorrichtung, erste
- 203: Walze, Umlenkwalze
- 204: Zwischenraum (201; 203)
- 205: -
- 206: Zylinder, Presseur, erster
- 207: Rotationsachse (201)
- 208: Antriebsmotor, Elektromotor, Direktantrieb, Einzelantrieb, Synchronmotor
- 209: Presseurspalt, erster
- 210: -
- 211: Druckwerk, Tintenstrahldruckwerk, Ink-Jet-Druckwerk, Vierfarbendruckwerk, erstes
- 212: Druckkopf, Tintenstrahldruckkopf, erster
- 213: Düsenbalken, erster
- 214: Umlenkwalze, Messwalze, Messeinrichtung, dritte
- 215: -
- 216: Messwalze, Messeinrichtung, zweite
- 300: Trocknereinheit
- 301: Trockner, Infrarotstrahlungstrockner, Strahlungstrockner, Strömungstrockner, UV-Strahlungstrockner, Heißlufttrockner, erster
- 302: Strahlungsquelle, Infrarotstrahlungsquelle
- 303: Kühleinrichtung, erste
- 304: Kühlwalze, erste; Rotationskörper, vierter
- 305: -
- 306: Kühlwalzenpresseur
- 307: Anlenkwalze, erste
- 308: Anlenkwalze, zweite
- 309: Kühlwalzenspalt, erster
- 310: -
- 311: Antriebsmotor, Kühlwalzenantriebsmotor (304), erster
- 312: Umlenkwalze

- 329: Gehäuse (300)
- 330: -
- 331: Trockner, Infrarotstrahlungstrockner, Strömungstrockner, Strahlungstrockner, Heißlufttrockner, UV-Strahlungstrockner, zweiter
- 332: -
- 333: Kühleinrichtung, zweite
- 334: Kühlwalze, zweite; Rotationskörper, sechster
- 335: -
- 336: Kühlwalzenpresseur, zweiter

- 339: Kühlwalzenspalt, zweiter
- 340: -
- 341: Antriebsmotor, Kühlwalzenantriebsmotor (334), zweiter
- 342: -
- 343: Messwalze, Messeinrichtung, sechste

- 400: Druckeinheit, zweite
- 401: Druckzentralzylinder, Zentralzylinder, zweiter; Rotationskörper, fünfter
- 402: Bedruckstoffreinigungsvorrichtung, Bahnreinigungsvorrichtung, Entstaubungsvorrichtung, zweite
- 403: Walze, Umlenkwalze
- 404: Zwischenraum (401; 403)
- 405: -
- 406: Zylinder, Presseur, zweiter
- 407: Rotationsachse (401)
- 408: Antriebsmotor, Direktantrieb, Elektromotor, Einzelantrieb, Synchronmotor
- 409: Presseurspalt, zweiter
- 410: -
- 411: Druckwerk, Tintenstrahldruckwerk, Ink-Jet-Druckwerk, Vierfarbendruckwerk, zweites
- 412: Druckkopf, Tintenstrahldruckkopf, zweiter
- 413: Düsenbalken, zweiter
- 414: Umlenkwalze, Messwalze, fünfte
- 415: -
- 416: Messwalze, Messeinrichtung, vierte

- 500: Nachbearbeitungsvorrichtung, Falzvorrichtung, Aufwickelvorrichtung, Bogenschneider, Planauslage
- 501: Auszugwalze, Rotationskörper, siebter
- 502: Auszugpresseur
- 503: Auszugspalt
- 504: Antriebsmotor, Auszugwalzenantrieb (501)
- 505: -

- 600: Druckdatenverarbeitungseinrichtung, Druckdatenverarbeitung
- 601: Bilddatenspeicher, Datenspeicher, erster
- 602: Rasterdatenspeicher, Datenspeicher, zweiter
- 603: Rastergrafikprozessor
- 604: Datenzuordnung 604, Bilddatenzuordnung 604, Rasterdatenzuordnung 604
- 605: -
- 606: Spannungsversorgungssystem
- 607: Spannungsquelle
- 608: Eingabegerät
- 609: Datenleitung, Ethernet-Leitung, erste
- 610: -
- 611: Rechner, Bilddatenrechner
- 612: Rechner, Rasterdatenrechner
- 613: Datenleitung, zweite
- 614: Schalteinrichtung, Synchronisierungseinrichtung
- 615: -
- 616: Schalteinrichtung, Datenaufbereitung, Datensynchronisierung
- 617: Signalquelle, Drehwinkelsensor, Drehencoder, Absolutwertencoder, Soll-Daten, erste
- 618: Signalquelle, Drehwinkelsensor, Soll-Daten, zweite
- 619: Registersensor
- 620: -
- 621: Schalteinrichtung, Signalwandler (619)
- 622: Druckkopfsteuerung (212; 412)
- 623: Datenleitung
- 624: Spannungsversorgungsleitung
- 625: -
- 626: Steuerleitung
- 627: Spannungsleitung
- 628: Spannungs- und Sicherungsanschluss
- 629: Teilbildmatrix, Farbauszug
- 630: -
- 631: Eintrag
- 632: Teilbildebene
- 633: Spalte, Folge
- 634: Teilfolge
- 635: -
- 636: Gesamtdruckbild, erstes
- 637: Gesamtdruckbild, zweites
- 638: Einzelseite, erste
- 639: Einzelseite, zweite
- 640: -
- 641: Vorlagebilddaten (636)
- 642: Vorlagebilddaten (637)
- 643: Vorlagebilddaten (638)
- 644: Vorlagebilddaten (639)
- 645: -
- 646: Ausgabedaten, Ansteuerdaten
- 647: Rasterdaten (636)
- 648: Seitenabmessung, erste (638)
- 649: Seitenabmessung, zweite (639)
- 650: -
- 651: Referenzpunkt, erster (638)
- 652: Referenzpunkt, zweiter (639)
- 653: Referenzabstand (651; 652)
- 654: Referenzpunkt, virtueller, erster (643)
- 655: -
- 656: Referenzpunkt, virtueller, zweiter (644)
- 657: Referenzabstand, virtueller (654; 656)
- 658: Bildabmessung, erste (636)
- 659: Bildabmessung, zweite (637)
- 660: -
- 661: Bildabmessung, virtuelle, erste (641)
- 662: Bildabmessung, virtuelle, zweite (642)
- 663: Seitenabmessung, virtuelle, erste (643)
- 664: Seitenabmessung, virtuelle, zweite (644)
- 665: -
- 666: Korrekturspeicher; Datenbank
- 667: Vorlageversatz
- 668: Ausgabeversatz
- 669: Druckversatz, erster
- 670: -
- 671: Druckversatz, zweiter
- 672: Druckversatz, dritter
- 673: Mittellinie (636; 637)
- 674: Streckungszentrum
- 675: -
- 676: Auftragseditor
- 677: Kontrollinstanz
- 678: Geometriemodul
- 679: Abschnitt (636)

- 1638: Einzelseite, erste (636)
- 1639: Einzelseite, zweite (636
- 1640: -
- 1641: -
- 1642: -
- 1643: Vorlagebilddaten (1638)
- 1644: Vorlagebilddaten (1639)
- 1645: -
- 1646: -
- 1647: -
- 1648: Seitenabmessung, erste (1638)
- 1649: Seitenabmessung, zweite (1639)
- 1650: -
- 1651: Referenzpunkt, erster (1638)
- 1652: Referenzpunkt, zweiter (1639)
- 1653: Referenzabstand (1651; 1652)
- 1654: Referenzpunkt, virtueller, erster (1643)
- 1655: -
- 1656: Referenzpunkt, virtueller, zweiter (1644)
- 1657: Referenzabstand, virtueller (1654; 1656)
- 1658: -
- 1659: -
- 1660: -
- 1661: -
- 1662: -
- 1663: Seitenabmessung, virtuelle, erste (1643)
- 1664: Seitenabmessung, virtuelle, zweite (1644)

- A: Richtung, axial
- B: Richtung, Vorlagerichtung, virtuelle
- C: Druckbildrichtung
- D: Richtung, Abarbeitungsrichtung, Vorlagerichtung, virtuelle

## Patentansprüche

1. Verfahren zum Bedrucken eines bahnförmigen Bedruckstoffs (02) mittels zumindest eines Druckwerks (211) einer Rollen-Druckmaschine (01), wobei aus gespeicherten Vorlagebilddaten (641; 642; 643; 644) zumindest eines Gesamtdruckbilds (636) Ausgabedaten (646) für eine Ansteuerung zumindest eines zumindest eine Form von Druckbildern festlegenden Bestandteils zumindest einer ersten Druckeinheit (200) der Druckmaschine (01) zur Erzeugung zumindest eines gedruckten Gesamtdruckbilds (636) erzeugt werden und wobei das zumindest eine Gesamtdruckbild (636) in einem primären Datenpaket festgelegt und/oder beschrieben wird und/oder ist und wobei dem zumindest einen Gesamtdruckbild (636) in den Vorlagebilddaten (641; 642; 643; 644) und/oder in dem primären Datenpaket zumindest eine in einer Vorlagerichtung (B; D) gemessene Gesamtbildabmessung zugeordnet ist, **dadurch gekennzeichnet, dass** diese zumindest eine Gesamtbildabmessung mit zumindest einem Grenzwert verglichen wird, und dass bei Überschreitung des zumindest einen Grenzwerts durch die zumindest eine Gesamtbildabmessung des zumindest einen Gesamtdruckbilds (636) das zumindest eine Gesamtdruckbild (636) auf diese Vorlagerichtung (B; D) bezogen in eine Mehrzahl von Abschnitten (679) des zumindest einen Gesamtdruckbilds (636) geteilt wird, und dass die Mehrzahl von Abschnitten (679) in einer Mehrzahl von sekundären Datenpaketen festgelegt und/oder beschrieben wird und/oder ist, und dass durch Druckvorgänge, die mittels der zumindest einen ersten Druckeinheit (200) ausgeführt werden und in denen jeweils auf zumindest einem der sekundären Datenpakete beruhende Ausgabedaten (646) verarbeitet werden, die Mehrzahl von Abschnitten (679) des zumindest einen Gesamtdruckbilds (636) auf dem Bedruckstoff (02) erzeugt wird.

2. Verfahren nach Anspruch 1, **dadurch gekennzeichnet, dass** die Mehrzahl von Abschnitten (679) des zumindest einen Gesamtdruckbilds (636) auf demselben Bedruckstoff (02) erzeugt wird.

3. Verfahren nach Anspruch 1 und/oder 2, **dadurch gekennzeichnet, dass** die zumindest ein Gesamtbildabmessung durch eine Maschinensteuerung (600) und/oder eine Druckdatenverarbeitung (600) der Druckmaschine (01) selbst und/oder durch zumindest einen hinterlegten Algorithmus einer Maschinensteuerung (600) und/oder Druckdatenverarbeitung (600) der Druckmaschine (01) mit dem zumindest einem Grenzwert verglichen wird.

4. Verfahren nach Anspruch 1 und/oder 2 und/oder 3, **dadurch gekennzeichnet, dass** sämtliche aus mehreren oder allen von einem primären Datenpaket abstammenden sekundären Datenpaketen erzeugten Rasterdaten (647) und/oder Ausgabedaten (646) zeitgleich in zumindest einem Speicher abgelegt werden.

5. Verfahren nach Anspruch 4, **dadurch gekennzeichnet, dass** diese sämtlichen aus mehreren oder allen von diesem primären Datenpaket abstammenden sekundären Datenpaketen erzeugten Rasterdaten (647) und/oder Ausgabedaten (646) nacheinander zur Erzeugung der Abschnitte (679) des zumindest einen gedruckten Gesamtdruckbilds (636; 637) verwendet werden und/oder dass diese sämtlichen aus mehreren oder allen von diesem primären Datenpaket abstammenden sekundären Datenpaketen erzeugten Rasterdaten (647) und/oder Ausgabedaten (646) nacheinander in zyklischen Wiederholungen, zur Erzeugung der Abschnitte (679) des zumindest einen gedruckten Gesamtdruckbilds (636; 637) verwendet werden.

6. Verfahren nach Anspruch 1 und/oder 2 und/oder 3 und/oder 4 und/oder 5, **dadurch gekennzeichnet, dass** jedes sekundäre Datenpaket Daten aufweist, die genau einen Abschnitt (679) des zumindest einen Gesamtdruckbilds (636) betreffen und/oder dass sämtliche einen Abschnitt (679) des zumindest einen Gesamtdruckbilds (636) betreffenden Daten in genau einem sekundären Datenpaket enthalten sind.

7. Verfahren nach Anspruch 1 und/oder 2 und/oder 3 und/oder 4 und/oder 5 und/oder 6, **dadurch gekennzeichnet, dass** die sekundären Datenpakete zumindest teilweise nacheinander in zumindest einen Speicher geladen werden und/oder dass die sekundären Datenpakete zumindest teilweise nacheinander mittels zumindest eines Rastergrafikprozessors (603) verarbeitet werden und/oder dass die sekundären Datenpakete zumindest teilweise nacheinander aus zumindest einem Speicher ausgelesen werden.

8. Verfahren nach Anspruch 1 und/oder 2 und/oder 3 und/oder 4 und/oder 5 und/oder 6 und/oder 7, **dadurch gekennzeichnet, dass** das primäre Datenpaket Seitenbeschreibungsdaten aufweist und/oder dass die Druckbilddaten innerhalb der sekundären Datenpakete zumindest zunächst in Form jeweils zumindest einer vektorbasierten Seitenbeschreibung vorliegen.

9. Verfahren nach Anspruch 1 und/oder 2 und/oder 3 und/oder 4 und/oder 5 und/oder 6 und/oder 7 und/oder 8, **dadurch gekennzeichnet, dass** die Abschnitte (679) jeweils eine Breite aufweisen, die der Breite des zumindest einen Gesamtdruckbilds (636; 637) entspricht und/oder die Abschnitte (679) jeweils eine Länge aufweisen, die sich aus der Aufteilung in sekundäre Datenpakete und/oder aus einer maximal verarbeitbaren Größe von sekundären Datenpakete ergibt.

10. Verfahren nach Anspruch 1 und/oder 2 und/oder 3 und/oder 4 und/oder 5 und/oder 6 und/oder 7 und/oder 8 und/oder 9, **dadurch gekennzeichnet, dass** zumindest zeitweise zumindest zwei der Abschnitte (679) des zumindest einen Gesamtdruckbilds (636; 637) zumindest teilweise gleichzeitig auf demselben Bedruckstoff (02) erzeugt werden und/oder dass zumindest zeitweise auf zumindest zwei unterschiedlichen sekundären Datenpaketen beruhende Ausgabedaten (646) gleichzeitig dazu verwendet werden, jeweils einen Teil eines der Abschnitte des Gesamtdruckbilds (636; 637) auf demselben Bedruckstoff (02) zu erzeugen.

11. Verfahren nach Anspruch 1 und/oder 2 und/oder 3 und/oder 4 und/oder 5 und/oder 6 und/oder 7 und/oder 8 und/oder 9 und/oder 10, **dadurch gekennzeichnet, dass** die sekundären Datenpakte eine gleiche Art von Daten aufweisen, wie das primäre Datenpaket.

12. Verfahren nach Anspruch 1 und/oder 2 und/oder 3 und/oder 4 und/oder 5 und/oder 6 und/oder 7 und/oder 8 und/oder 9 und/oder 10 und/oder 11, **dadurch gekennzeichnet, dass** die sekundären Datenpakete und/oder daraus gewonnene Rasterdaten (647) nacheinander abgearbeitet werden, um Ausgabedaten (646) zu erzeugen, gemäß denen das Druckbild erzeugt wird und/oder dass die sekundären Datenpakete und/oder daraus gewonnene Rasterdaten (647) nacheinander abgearbeitet werden, um Ausgabedaten (646) zu erzeugen, gemäß denen Beschichtungsmittel aus Düsen ausgestoßen wird.

13. Verfahren nach Anspruch 1 und/oder 2 und/oder 3 und/oder 4 und/oder 5 und/oder 6 und/oder 7 und/oder 8 und/oder 9 und/oder 10 und/oder 11 und/oder 12, **dadurch gekennzeichnet, dass** die sekundären Datenpakete und/oder jeweils auf unterschiedlichen sekundären Datenpakten beruhende Pakete von Rasterdaten (647) jeweils als Ganzes in zumindest einem Speicher abgelegt werden und/oder dass die sekundären Datenpakete und/oder jeweils auf unterschiedlichen sekundären Datenpakten beruhende Pakete von Rasterdaten (647) jeweils als Ganzes aus dem zumindest einen Speicher zumindest teilweise nacheinander ausgelesen werden.

14. Verfahren nach Anspruch 1 und/oder 2 und/oder 3 und/oder 4 und/oder 5 und/oder 6 und/oder 7 und/oder 8 und/oder 9 und/oder 10 und/oder 11 und/oder 12 und/oder 13, **dadurch gekennzeichnet, dass** das zumindest eine Druckwerk (211) ein Tintenstrahldruckwerk (211) ist und/oder dass die Druckmaschine (01) eine Tintenstrahldruckmaschine (01) ist und/oder dass der zumindest eine zumindest eine Form von Druckbildern festlegende Bestandteil der zumindest einen ersten Druckeinheit (200) zumindest ein Tintenstrahldruckkopf (212) der zumindest einen ersten Druckeinheit (212) Druckmaschine (01) ist und/oder dass die jeweiligen Ausgabedaten (646) Ansteuerdaten von jeweils einzusetzenden Düsen von Druckköpfen (212) zumindest eines Tintenstrahldruckwerks (211) der Druckmaschine (01) sind und/oder dass aus den gespeicherten Vorlagebilddaten (641; 642; 643; 644) des zumindest einen Gesamtdruckbilds (636) Ausgabedaten (646) für eine Ansteuerung von Düsen von Druckköpfen (212) der zumindest einen ersten Druckeinheit (200) der Druckmaschine (01) erzeugt werden, gemäß denen ein Ausstoßen von Beschichtungsmittel durch diese Düsen von Druckköpfen (212) zur Erzeugung des zumindest einen gedruckten Gesamtdruckbilds (636) vorgenommen wird.

15. Verfahren nach Anspruch 1 und/oder 2 und/oder 3 und/oder 4 und/oder 5 und/oder 6 und/oder 7 und/oder 8 und/oder 9 und/oder 10 und/oder 11 und/oder 12 und/oder 13 und/oder 14, **dadurch gekennzeichnet, dass** die Erstellung der sekundären Datenpakete mittels zumindest eines Bilddatenrechners (611) und danach die Erstellung von Rasterdaten (647) aus den sekundären Datenpaketen mittels zumindest eines Rasterdatenrechners (612) erfolgt.

## Claims

1. A method for printing a web-shaped printing material (02) by means of at least one printing unit (211) of a web-fed press (01), wherein output data (646) for actuating at least one component determining a shape of printed images of at least a first printing unit (200) of the press (01) for generating at least one printed complete printed image (636) are generated from saved template image data (641; 642; 643; 644) of at least one complete printed image (636) and wherein the at least one complete printed image (636) is determined and/or described in a primary data packet and wherein at least one dimension of the complete image measured in a template direction (B; D) is assigned to the at least one complete printed image (636) in the template image data (641;642; 643; 644) and/or in the primary data packet, **characterized in that** this at least one complete image dimension is compared to at least one threshold, and that in the case of the exceeding of this at least one threshold by the at least one complete image dimension of the at least one complete printed image (636) the at least one complete printed image (636) is divided into a plurality of sections (679) of the at least one complete printed image (636) with respect to this template direction (B; D), and that the plurality of sections (679) will be and/or is determined and/or described in a plurality of secondary data packets and that through printing processes that are executed by means of the at least one printing unit (200) in which in each case output data (646) based on at least one of the secondary data packets are processed, the plurality of sections (679) of the at least one complete printed image (636) are generated on the printing material (02).

2. The method according to claim 1, **characterized in that** the plurality of sections (679) of the at least one complete printed image (636) are generated on printing material (02).

3. The method according to claim 1 and/or 2, **characterized in that** the at least one complete image dimension is compared to the at least one threshold by a machine control (600) and/or a print data processing (600) of the press (01) itself and/or by a stored algorithm of a machine control (600) and or print data processing (600) of the press (01).

4. The method according to claim 1 and/or 2 and/or 3, **characterized in that** all of the raster data (647) and/or output data (646) generated from several or all secondary data packets originating from a primary data packet are stored simultaneously in at least one memory.

5. The method according to claim 4, **characterized in that** all of these raster data (647) and/or output data (646) generated from several or all secondary data packets originating from a primary data packet are used in sequence for generation of the sections (679) of the at least one printed complete printed image (636; 637) and/or that all of these raster data (647) and or output data (646) generated from several or all secondary data packets originating from a primary data packet are used in sequence in cyclical repetitions for generation of the sections (679) of the at least one printed complete printed image (636; 637).

6. The method according to claim 1 and/or 2 and/or 3 and/or 4 and/or 5, **characterized in that** every secondary data packet has data that relate to precisely one section (679) of the at least one complete printed image (636) and/or that all data relating to one section (679) of the at least one complete printed image (636) are contained in precisely one secondary data packet.

7. The method according to claim 1 and/or 2 and/or 3 and/or 4 and/or 5 and/or 6, **characterized in that** the secondary data packets are at least in some cases loaded in sequence in at least one memory and/or that the secondary data packets are at least in some cases processed in sequence by means of at least one raster image processor (603) and/or that the secondary data packets are at least in some cases read out in sequence from at least one memory.

8. The method according to claim 1 and/or 2 and/or 3 and/or 4 and/or 5 and/or 6 and/or 7, **characterized in that** the primary data packet has page description data and/or that the printed image data within the secondary data packet are present at least initially in the form of at least one vector-based page description.

9. The method according to claim 1 and/or 2 and/or 3 and/or 4 and/or 5 and/or 6 and/or 7 and/or 8, **characterized in that** the sections (679) each have a width that corresponds to the width of the at least one complete printed image (636; 637) and/or the sections (679) each have a length that arises from the division into secondary data packets and/or from a maximum processed size of secondary data packets.

10. The method according to claim 1 and/or 2 and/or 3 and/or 4 and/or 5 and/or 6 and/or 7 and/or 8 and/or 9, **characterized in that** at least occasionally at least two of the sections (679) of the at least one complete printed image (636; 637) at least occasionally are generated simultaneously on the same printing material (02) and/or that at least occasionally output data (646) based on at least two different secondary data packets are simultaneously used in each case to generate a part of the section of the complete printed image (636; 637) on the same printing material (02).

11. The method according to claim 1 and/or 2 and/or 3 and/or 4 and/or 5 and/or 6 and/or 7 and/or 8 and/or 9 and/or 10, **characterized in that** the secondary data packets have a same type of data as the primary data packet.

12. The method according to claim 1 and/or 2 and/or 3 and/or 4 and/or 5 and/or 6 and/or 7 and/or 8 and/or 9 and/or 10 and/or 11, **characterized in that** the secondary data packets and/or raster data (647) obtained therefrom are processed in sequence in order to generate output data (646) according to which the printed image is generated and/or that the secondary data packets and/or raster data (647) obtained therefrom are processed in sequence in order to generate output data (646) according to which coating agents are extruded from nozzles.

13. The method according to claim 1 and/or 2 and/or 3 and/or 4 and/or 5 and/or 6 and/or 7 and/or 8 and/or 9 and/or 10 and/or 11 and/or 12, **characterized in that** the secondary data packets and/or packets of raster data (647) based on different secondary data packets are in each case stored as a whole in at least one memory and/or that the secondary data packets and/or packets of raster data (647) in each case based on different secondary data packets are each read out as a whole from the at least one memory at least occasionally in sequence.

14. The method according to claim 1 and/or 2 and/or 3 and/or 4 and/or 5 and/or 6 and/or 7 and/or 8 and/or 9 and/or 10 and/or 11 and/or 12 and/or 13, **characterized in that** the at least one printing unit (211) is an inkjet printing unit (211) and/or that the press (01) is an inkjet press (01) and/or that the at least one component determining at least one shape of printed images of the at least first printing unit (200) is at least an inkjet print head (212) of the at least first printing unit (212) of the press (01) and/or that the respective output data (646) are control data of nozzles of print heads (212) of at least one inkjet printing unit (211) of the press (01) and/or that the output data (646) for actuating nozzles of print heads (212) of the least one first printing unit (200) of the press (01) are generated from saved template image data (641; 642; 643; 644) of the at least one complete printed image (636), according to which an extrusion of coating agents is brought about by these nozzles of print heads (212) for generation of the at least one printed complete printed image (636).

15. The method according to claim 1 and/or 2 and/or 3 and/or 4 and/or 5 and/or 6 and/or 7 and/or 8 and/or 9 and/or 10 and/or 11 and/or 12 and/or 13 and/or 14, **characterized in that** the creation of the secondary data packets occurs by means of at least one image data computer (611) and after that the creation of the raster data (647) occurs from the secondary data packets by means of at least one raster data computer (612).

## Revendications

1. Procédé d'impression d'un support d'impression (02) en forme de bande au moyen d'au moins un groupe d'impression (211) d'une machine à imprimer rotative (01), où des données de sortie (646) sont générées à partir de données d'image originale (641 ; 642 ; 643 ; 644) mémorisées d'au moins une image d'impression globale (636) pour la commande d'au moins un composant d'au moins une première unité d'impression (200) de la machine à imprimer (01) fixant au moins une forme d'images d'impression pour la production d'au moins une image d'impression globale (636) imprimée, et où ladite au moins une image d'impression globale (636) sera et/ou est définie et/ou décrite dans un paquet de données primaire et où au moins une dimension d'image globale mesurée dans une direction originale (B ; D) est associée à ladite au moins une image d'impression globale (636) dans les données d'image originale (641 ; 642 ; 643 ; 644) et/ou dans le paquet de données primaire, **caractérisé en ce que** ladite au moins une dimension d'image globale est comparée à au moins une valeur limite, et **en ce qu'**en cas de dépassement de ladite au moins une valeur limite par ladite au moins une dimension d'image globale de ladite au moins une image d'impression globale (636), ladite au moins une image d'impression globale (636) est partagée en une pluralité de parties (679) de ladite au moins une image d'impression globale (636) par rapport à ladite direction originale (B ; D), et **en ce que** la pluralité de parties (679) sera et/ou est définie et/ou décrite dans une pluralité de paquets de données secondaires, et **en ce que** la pluralité de parties (679) de ladite au moins une image d'impression globale (636) est générée sur le support d'impression (02) par des processus d'impression exécutés au moyen de ladite au moins une première unité d'impression (200) et où sont traitées des données de sortie (646) reposant respectivement sur au moins un des paquets de données secondaires.

2. Procédé selon la revendication 1, **caractérisé en ce que** la pluralité de parties (679) de ladite au moins une image d'impression globale (636) est générée sur le même support d'impression (02).

3. Procédé selon la revendication 1 et/ou 2, **caractérisé en ce que** ladite au moins une dimension d'image globale est comparée à ladite au moins une valeur limite par une commande de machine (600) et/ou un traitement de données d'image (600) de la machine à imprimer (01) en tant que telle et/ou par au moins un algorithme mémorisé d'une commande de machine (600) et/ou d'un traitement de données d'image (600) de la machine à imprimer (01).

4. Procédé selon la revendication 1 et/ou 2 et/ou 3, **caractérisé en ce que** toutes les données de trame (647) et/ou données de sortie (646) générées à partir de plusieurs ou de tous les paquets de données secondaires provenant d'un paquet de données primaire sont stockées simultanément dans au moins une mémoire.

5. Procédé selon la revendication 4, **caractérisé en ce que** toutes ces données de trame (647) et/ou données de sortie (646) générées à partir de plusieurs ou de tous les paquets de données secondaires provenant dudit paquet de données primaire sont exploitées successivement pour la génération des parties (679) de ladite au moins une image d'impression globale (636 ; 637) imprimée et/ou **en ce que** toutes ces données de trame (647) et/ou données de sortie (646) générées à partir de plusieurs ou de tous les paquets de données secondaires provenant dudit paquet de données primaire sont exploitées successivement par répétitions cycliques pour la génération des parties (679) de ladite au moins une image d'impression globale (636 ; 637) imprimée.

6. Procédé selon la revendication 1 et/ou 2 et/ou 3 et/ou 4 et/ou 5, **caractérisé en ce que** chaque paquet de données secondaire comprend des données concernant précisément une partie (679) de ladite au moins une image d'impression globale (636) et/ou **en ce que** toutes les données concernant une partie (679) de ladite au moins une image d'impression globale (636) sont contenues précisément dans un paquet de données secondaire.

7. Procédé selon la revendication 1 et/ou 2 et/ou 3 et/ou 4 et/ou 5 et/ou 6, **caractérisé en ce que** les paquets de données secondaires sont successivement chargés au moins en partie dans au moins une mémoire et/ou **en ce que** les paquets de données secondaires sont successivement traités au moins en partie au moyen d'au moins un processeur de trame graphique (603) et/ou **en ce que** les paquets de données secondaires sont successivement extraits au moins en partie d'au moins une mémoire.

8. Procédé selon la revendication 1 et/ou 2 et/ou 3 et/ou 4 et/ou 5 et/ou 6 et/ou 7, **caractérisé en ce que** le paquet de données primaire comprend des données de description de page et/ou **en ce que** les données de description de page sont présentées à l'intérieur des paquets de données secondaires au moins initialement sous la forme d'au moins une description de page vectorielle.

9. Procédé selon la revendication 1 et/ou 2 et/ou 3 et/ou 4 et/ou 5 et/ou 6 et/ou 7 et/ou 8, **caractérisé en ce que** les parties (679) présentent chacune une largeur correspondant à la largeur de ladite au moins une image d'impression globale (636 ; 637) et/ou les parties (679) présentent chacune une longueur résultant du partage en paquets de données secondaires et/ou d'une grandeur traitable maximale des paquets de données secondaires.

10. Procédé selon la revendication 1 et/ou 2 et/ou 3 et/ou 4 et/ou 5 et/ou 6 et/ou 7 et/ou 8 et/ou 9, **caractérisé en ce qu'**au moins temporairement, au moins deux des parties (679) de ladite au moins une image d'impression globale (636 ; 637) sont générées simultanément au moins en partie sur le même support d'impression (02) et/ou **en ce qu'**au moins temporairement, des données de sortie (646) reposant sur au moins deux paquets de données secondaires différents sont simultanément exploitées pour générer respectivement une fraction d'une des parties de l'image d'impression globale (636 ; 637) sur le même support d'impression (02).

11. Procédé selon la revendication 1 et/ou 2 et/ou 3 et/ou 4 et/ou 5 et/ou 6 et/ou 7 et/ou 8 et/ou 9 et/ou 10, **caractérisé en ce que** les paquets de données secondaires comprennent des données de même type que le paquet de données primaire.

12. Procédé selon la revendication 1 et/ou 2 et/ou 3 et/ou 4 et/ou 5 et/ou 6 et/ou 7 et/ou 8 et/ou 9 et/ou 10 et/ou 11, **caractérisé en ce que** les paquets de données secondaires et/ou les données de trame (647) obtenues à partir de ceux-ci sont traités successivement pour générer des données de sortie (646) suivant lesquelles l'image d'impression est générée et/ou **en ce que** les paquets de données secondaires et/ou les données de trame (647) obtenues à partir de ceux-ci sont traités successivement pour générer des données de sortie (646) suivant lesquelles un agent de revêtement est projeté par des buses.

13. Procédé selon la revendication 1 et/ou 2 et/ou 3 et/ou 4 et/ou 5 et/ou 6 et/ou 7 et/ou 8 et/ou 9 et/ou 10 et/ou 11 et/ou 12, **caractérisé en ce que** les paquets de données secondaires et/ou les paquets de données de trame (647) reposant sur différents paquets de données secondaires respectifs sont stockés chacun comme un ensemble dans au moins une mémoire et/ou **en ce que** les paquets de données secondaires et/ou les paquets de données de trame (647) reposant sur différents paquets de données secondaires respectifs sont extraits successivement chacun comme un ensemble, au moins en partie de ladite au moins une mémoire.

14. Procédé selon la revendication 1 et/ou 2 et/ou 3 et/ou 4 et/ou 5 et/ou 6 et/ou 7 et/ou 8 et/ou 9 et/ou 10 et/ou 11 et/ou 12 et/ou 13, **caractérisé en ce que** ledit au moins un groupe d'impression (211) est un groupe d'impression à jet d'encre (211) et/ou **en ce que** la machine à imprimer (01) est une machine à imprimer à jet d'encre (01) et/ou **en ce que** ledit composant de ladite au moins une première unité d'impression (200) fixant au moins une forme d'images d'impression est au moins une tête d'impression à jet d'encre (212) de ladite au moins une première unité d'impression (212) de la machine à imprimer (01) et/ou **en ce que** les données de sortie (646) respectives sont des données de commande de buses à mettre respectivement en service de têtes d'impression (212) d'au moins un groupe d'impression à jet d'encre (211) de la machine à imprimer (01) et/ou **en ce que** des données de sortie (646) pour la commande de buses de têtes d'impression (212) de ladite au moins une première unité d'impression (200) de la machine à imprimer (01) sont générées à partir des données d'image originale (641 ; 642 ; 643 ; 644) mémorisées de ladite au moins une image d'impression globale (636), suivant lesquelles est effectuée une projection d'agent de revêtement par lesdites buses des têtes d'impression (212) pour la génération de ladite au moins une image d'impression globale (636) imprimée.

15. Procédé selon la revendication 1 et/ou 2 et/ou 3 et/ou 4 et/ou 5 et/ou 6 et/ou 7 et/ou 8 et/ou 9 et/ou 10 et/ou 11 et/ou 12 et/ou 13 et/ou 14, **caractérisé en ce que** la création des paquets de données secondaires est effectuée au moyen d'au moins un calculateur (611) de données d'images et **en ce que** la création de données de trame (647) est ensuite effectuée à partir des paquets de données secondaires au moyen d'au moins un calculateur (612) de données de trame.
